(19) Europäisches Patentamt
European Patent Office
Office européen des brevets

(11) **EP 2 602 561 B1**

(12) **EUROPEAN PATENT SPECIFICATION**

(45) Date of publication and mention of the grant of the patent:
**18.03.2020 Bulletin 2020/12**

(21) Application number: **10855570.7**

(22) Date of filing: **04.08.2010**

(51) Int Cl.:
*F24F 1/0029* (2019.01)    *F24F 1/0007* (2019.01)
*F24F 1/0033* (2019.01)    *F24F 1/0011* (2019.01)
*F24F 11/79* (2018.01)    *F24F 11/77* (2018.01)
*F24F 11/72* (2018.01)    *F24F 11/74* (2018.01)
*F24F 13/24* (2006.01)

(86) International application number:
**PCT/JP2010/004905**

(87) International publication number:
**WO 2012/017478 (09.02.2012 Gazette 2012/06)**

(54) **INDOOR UNIT FOR AIR CONDITIONER AND AIR CONDITIONER**

INNENRAUMEINHEIT FÜR KLIMAANLAGE UND KLIMAANLAGE

UNITÉ INTÉRIEURE POUR CLIMATISEUR ET CLIMATISEUR

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.06.2013 Bulletin 2013/24**

(73) Proprietor: **Mitsubishi Electric Corporation Tokyo 100-8310 (JP)**

(72) Inventors:
• **YAMADA, Shoji**
  **Tokyo 100-8310 (JP)**
• **FUKUI, Tomoya**
  **Tokyo 100-8310 (JP)**
• **SAKODA, Kenichi**
  **Tokyo 100-8310 (JP)**
• **KAGA, Kunihiko**
  **Tokyo 100-8310 (JP)**
• **MICHIHATA, Satoshi**
  **Tokyo 100-8310 (JP)**
• **MORI, Takeshi**
  **Tokyo 100-8310 (JP)**
• **SUZUKI, Shinichi**
  **Tokyo 100-8310 (JP)**

• **TAKAMORI, Akira**
  **Tokyo 100-8310 (JP)**
• **MUKOYAMA, Takuya**
  **Tokyo 100-8310 (JP)**
• **SHIROTA, Mitsuhiro**
  **Tokyo 100-8310 (JP)**
• **TANIKAWA, Yoshinori**
  **Tokyo 100-8310 (JP)**
• **MATSUMOTO, Takashi**
  **Tokyo 100-8310 (JP)**

(74) Representative: **Sajda, Wolf E. et al
Meissner Bolte Patentanwälte
Rechtsanwälte Partnerschaft mbB
Postfach 86 06 24
81633 München (DE)**

(56) References cited:
CN-Y- 201 129 832    JP-A- 2000 356 362
JP-A- 2001 116 451    JP-A- 2002 257 382
JP-A- 2004 263 922    JP-A- 2005 003 244
JP-A- 2007 147 120    JP-B1- 40 009 384
JP-U- H 051 914    JP-U- H0 569 521
JP-U- 51 046 460    JP-U- 55 154 965
JP-U- 62 092 912

**Description**

Technical Field

The present invention relates to an indoor unit that houses a fan and a heat exchanger in a casing and an air-conditioning apparatus including this indoor unit.

Background Art

There has been an air-conditioning apparatus that houses a fan and a heat exchanger in a casing. As an example of such an air-conditioning apparatus, "an air-conditioning apparatus including a body casing having an air inlet and an air outlet and a heat exchanger disposed within the body casing, wherein a fan unit including a plurality of small propeller fans provided side by side in the widthwise direction of the air outlet is disposed at the air outlet" has been proposed (for example, see Patent Literature 1).

In this air-conditioning apparatus, the fan unit is disposed at the air outlet so that the direction of airflow may be easily controlled, and, another fan unit having the same configuration as that of the fan unit disposed at the air outlet is also disposed at the air inlet so as to increase the amount of airflow, thereby improving the performance of the heat exchanger.

Citation List

Patent Literature

Patent Literature 1: Japanese Unexamined Patent Application Publication JP-A-2005-003 244 (paragraphs [0012], [0013], [0018] to [0021], and FIGs. 5 and 6)

Summary of the Invention

Technical Problem

Such an air-conditioning apparatus as that in Patent Literature 1 has the heat exchanger provided on the upstream side of the fan unit (air-sending device). Therefore, since a movable fan unit is provided on the air outlet side, changes in the air passage associated with the movability of the fan and the instability of the flow due to asymmetrical suction cause a decrease in the air volume, back flow, and the like. Furthermore, the air with a disturbed flow flows into the fan unit.

Therefore, the drawback of such an air-conditioning apparatus as that in Patent Literature 1 is that the flow of air flowing into the perimeter of a blade part (propeller) of the fan unit in which the flow rate is increased is disturbed and the fan unit itself becomes a noise source (causes an increase in noise). In addition, another drawback is that it is difficult to improve the function of the air-conditioning apparatus by an improvement of air flow controllability, avoidance of a whine, and an improvement of the effect of a noise cancellation mechanism.

The present invention has been made to solve at least one of the problems described above, and an object thereof is to obtain an indoor unit that can improve air flow controllability and an air-conditioning apparatus provided with such an indoor unit.

Solution to the Problem

According to the invention, the problem is solved by means of an indoor unit as defined in independent claim 1. Advantageous further developments of the indoor unit according to the invention are set forth in the subclaims. Other additional exemplary embodiments of the invention, not included in the scope of the protection of the appended claims, are described in the following to better clarify the operating functions of the invention.

Moreover, the air-conditioning apparatus according to the present invention includes the indoor unit described above.

Advantageous Effects of Invention

In the present invention, since an air-sending device is provided on the upstream side of a heat exchanger, the disturbance of the flow of air flowing into the air-sending device is suppressed. Moreover, in the present invention, the air-sending device is formed of a plurality of air-sending devices provided in parallel, and, since it is possible to make the air volumes of these air-sending devices different from one another, air flow controllability can be improved.

Brief Description of the Drawings

FIG. 1　is a vertical sectional view showing an indoor unit of an air-conditioning apparatus according to Embodiment 1 of the present invention.

FIG. 2　is a perspective view of an appearance of the indoor unit of the air-conditioning apparatus according to Embodiment 1 of the present invention.

FIG. 3　is a perspective view showing the indoor unit, viewed from the right side of a front, according to Embodiment 1 of the present invention.

FIG. 4　is a perspective view showing the indoor unit, viewed from the right side of a back, according to Embodiment 1 of the present invention.

FIG. 5　is a perspective view showing the indoor unit, viewed from the left side of the front, according to Embodiment 1 of the present invention.

FIG. 6　is a perspective view showing a drain pan according to Embodiment 1 of the present invention.

FIG. 7　is a vertical sectional view showing a condensation occurrence position in the indoor unit according to Embodiment 1 of the present invention.

FIG. 8　is a block diagram showing a signal processor according to Embodiment 1 of the present invention.

FIG. 9　is a vertical sectional view showing another example of the indoor unit of the air-conditioning apparatus according to Embodiment 1 of the present invention.

FIG. 10　is a front view showing an example of a fan according to Embodiment 2 of the present invention.

FIG. 11　is a diagram describing the relationship between the installation configuration of blades (such as installation positions and the number of installed blades) and aerodynamic performance.

FIG. 12　is a front view showing another example of the fan according to Embodiment 2 of the present invention.

FIG. 13　is a front view showing yet another example of the fan according to Embodiment 2 of the present invention.

FIG. 14　is a vertical sectional view showing an example of a fan according to Embodiment 3 of the present invention.

FIG. 15　is a front view showing an example of a fan according to Embodiment 4 of the present invention.

FIG. 16　is a front view showing another example of the fan according to Embodiment 4 of the present invention.

FIG. 17　is a front view showing an example of a fan according to Embodiment 5 of the present invention.

FIG. 18　is a front view showing another example of the fan according to Embodiment 5 of the present invention.

FIG. 19　is a vertical sectional view showing an example of a fan according to Embodiment 6 of the present invention.

FIG. 20　is a diagram showing the general structure of an example of a fan according to Embodiment 7 of the present invention.

FIG. 21　is a diagram showing the general structure of another example of the fan according to Embodiment 7 of the present invention.

FIG. 22    is an enlarged view of the main part (a vertical sectional view) showing an example of a convex portion according to Embodiment 7 of the present invention.

FIG. 23    is an enlarged view of the main part (a vertical sectional view) showing another example of the convex portion according to Embodiment 7 of the present invention.

FIG. 24    is an enlarged view of the main part (a vertical sectional view) showing yet another example of the convex portion according to Embodiment 7 of the present invention.

FIG. 25    is a diagram describing an example of an air flow that causes a decrease in fan efficiency, the air flow being generated in an area surrounding a blade.

FIG. 26    is an enlarged view of the main part (a vertical sectional view) showing another example of the tip of the convex portion according to Embodiment 7 of the present invention.

FIG. 27    is an enlarged view of the main part (a vertical sectional view) showing an example of an air-sending device according to Embodiment 8 of the present invention.

FIG. 28    is an enlarged view of the main part (a vertical sectional view) showing another example of the air-sending device according to Embodiment 8 of the present invention.

FIG. 29    is an enlarged view of the main part (a vertical sectional view) showing yet another example of the air-sending device according to Embodiment 8 of the present invention.

FIG. 30    is an enlarged view of the main part (a vertical sectional view) showing an example of a fan according to Embodiment 9 of the present invention.

FIG. 31    is an enlarged view of the main part (a vertical sectional view) showing an example of a fan according to Embodiment 10 of the present invention.

FIG. 32    is a vertical sectional view of a fan according to Embodiment 11 of the present invention.

FIG. 33    is a sectional front view showing another example of the fan according to Embodiment 11 of the present invention.

FIG. 34    is a vertical sectional view showing yet another example of the fan according to Embodiment 11 of the present invention.

FIG. 35    is a sectional front view showing yet another example of the fan according to Embodiment 11 of the present invention.

FIG. 36    is a vertical sectional view showing a fan according to Embodiment 12 of the present invention.

FIG. 37    is a vertical sectional view showing a fan according to Embodiment 13 of the present invention.

FIG. 38    is a vertical sectional view showing a fan according to Embodiment 14 of the present invention.

FIG. 39    is a vertical sectional view showing an indoor unit according to Embodiment 15 of the present invention.

FIG. 40    is a vertical sectional view showing an indoor unit according to Embodiment 16 of the present invention.

FIG. 41    is a vertical sectional view showing another example of the indoor unit according to Embodiment 16 of the present invention.

FIG. 42    is a front view showing an example of a motor stay according to Embodiment 16 of the present invention (or a plan view when the motor stay is attached to the indoor unit).

FIG. 43    is a perspective view showing an example of attaching a fan motor to a fixing member of the motor stay according to Embodiment 16 of the present invention.

FIG. 44 is a perspective view showing an example of attaching the fan motor to the fixing member of the motor stay according to Embodiment 16 of the present invention.

FIG. 45 is a perspective view showing an example of attaching the fan motor to fixing members of the motor stay according to Embodiment 16 of the present invention.

FIG. 46 is a perspective view showing an example of attaching the fan motor to fixing members of the motor stay according to Embodiment 16 of the present invention.

FIG. 47 is a vertical sectional view showing an indoor unit according to Embodiment 17 of the present invention.

FIG. 48 is a perspective view of an appearance of the indoor unit according to Embodiment 17 of the present invention.

FIG. 49 is a vertical sectional view showing an indoor unit according to Embodiment 18 of the present invention.

FIG. 50 is a vertical sectional view showing an indoor unit according to Embodiment 19 of the present invention.

FIG. 51 is a perspective view showing the indoor unit according to Embodiment 19 of the present invention.

FIG. 52 is a vertical sectional view showing an indoor unit according to Embodiment 20 of the present invention.

FIG. 53 is a perspective view showing an indoor unit according to Embodiment 21 of the present invention.

FIG. 54 is a perspective view showing an indoor unit according to Embodiment 22 of the present invention.

FIG. 55 is a perspective view showing an indoor unit according to Embodiment 23 of the present invention.

FIG. 56 is a vertical sectional view showing the indoor unit according to Embodiment 23 of the present invention.

FIG. 57 is a vertical sectional view showing another example of the indoor unit according to Embodiment 23 of the present invention.

FIG. 58 is a perspective view showing an indoor unit according to Embodiment 24 of the present invention.

FIG. 59 is a vertical sectional view showing an indoor unit according to Embodiment 25 of the present invention.

FIG. 60 is a perspective view showing the indoor unit according to Embodiment 25 of the present invention.

FIG. 61 is a vertical sectional view showing an indoor unit according to Embodiment 26 of the present invention.

FIG. 62 is a perspective view showing an indoor unit according to Embodiment 27 of the present invention.

FIG. 63 is a perspective view showing an indoor unit according to Embodiment 28 of the present invention.

FIG. 64 is a vertical sectional view showing the indoor unit according to Embodiment 28 of the present invention.

FIG. 65 is a vertical sectional view showing another example of the indoor unit according to Embodiment 28 of the present invention.

FIG. 66 is a perspective view showing an indoor unit according to Embodiment 29 of the present invention.

FIG. 67 is a perspective view showing an indoor unit according to Embodiment 30 of the present invention.

FIG. 68 is a diagram describing the relationship between a fan rotation direction and an air flow generated in a casing in the indoor unit according to Embodiment 30 of the present invention.

FIG. 69    is a sectional plan view showing the indoor unit according to Embodiment 30 of the present invention.

FIG. 70    is a sectional plan view showing the indoor unit according to Embodiment 30 of the present invention.

FIG. 71    is a sectional plan view showing an indoor unit according to Embodiment 31 of the present invention.

FIG. 72    is a sectional plan view showing an indoor unit according to Embodiment 32 of the present invention.

FIG. 73    is a sectional plan view showing an indoor unit according to Embodiment 33 of the present invention.

FIG. 74    is a vertical sectional view showing an indoor unit according to Embodiment 34 of the present invention.

FIG. 75    is a diagram describing an example of a wind speed distribution of an air outlet in an indoor unit according to Embodiment 35 of the present invention.

FIG. 76    is a diagram describing another example of the wind speed distribution of the air outlet in the indoor unit according to Embodiment 35 of the present invention.

FIG. 77    is an enlarged view of the main part (a sectional front view) showing a part in the vicinity of the air outlet of the indoor unit according to Embodiment 35 of the present invention.

FIG. 78    is a diagram describing a wind speed distribution of an air outlet when the air volume of each fan is the same in an indoor unit according to Embodiment 36 of the present invention.

FIG. 79    is a diagram describing an example of a wind speed distribution of the air outlet when the indoor unit according to Embodiment 36 of the present invention operates in a low air volume mode.

FIG. 80    is a diagram showing the characteristics of a relation between an air volume reduction ratio of a fan at a middle portion and a noise reduction effect with the same air volume in the indoor unit according to Embodiment 36 of the present invention.

FIG. 81    is a diagram describing an example of a wind speed distribution of an air outlet in an indoor unit according to Embodiment 37 of the present invention.

FIG. 82    is a vertical sectional view of an indoor unit according to Embodiment 39 of the present invention.

FIG. 83    is a vertical sectional view showing an indoor unit according to Embodiment 40 of the present invention.

FIG. 84    is a vertical sectional view showing an indoor unit according to Embodiment 41 of the present invention.

FIG. 85    is a vertical sectional view showing an indoor unit according to Embodiment 42 of the present invention.

FIG. 86    is a vertical sectional view showing an indoor unit according to Embodiment 43 of the present invention.

FIG. 87    is a vertical sectional view showing an indoor unit according to Embodiment 44 of the present invention.

FIG. 88    is a vertical sectional view showing an indoor unit according to Embodiment 45 of the present invention.

FIG. 89    is a vertical sectional view showing an indoor unit according to Embodiment 46 of the present invention.

FIG. 90    is a vertical sectional view showing an indoor unit according to Embodiment 47 of the present invention.

FIG. 91    is a vertical sectional view showing an indoor unit according to Embodiment 48 of the present invention.

FIG. 92    is a schematic view describing an example of structure of a heat exchanger 50.

FIG. 93    is a vertical sectional view showing an indoor unit according to Embodiment 49 of the present invention.

FIG. 94    is a vertical sectional view showing an indoor unit according to Embodiment 50 of the present invention.

FIG. 95    is a vertical sectional view showing an indoor unit according to Embodiment 51 of the present invention.

FIG. 96    is a diagram describing changes in temperature of a refrigerant and air that exchange heat with each other in the heat exchanger at the time of cooling operation in the indoor unit according to Embodiment 51 of the present invention.

FIG. 97    is a diagram describing changes in temperature of a refrigerant and air that exchange heat with each other in the heat exchanger at the time of heating operation in the indoor unit according to Embodiment 51 of the present invention.

FIG. 98    is a diagram (vertical sectional view) describing heat transfer pipes to be placed in a windward area, an intermediate area, and a leeward area in the heat exchanger according to Embodiment 51 of the present invention.

FIG. 99    is a vertical sectional view showing an indoor unit according to Embodiment 52 of the present invention.

FIG. 100    is a vertical sectional view showing an indoor unit according to Embodiment 53 of the present invention.

FIG. 101    is a vertical sectional view showing another example of the indoor unit according to Embodiment 53 of the present invention.

FIG. 102    is a vertical sectional view showing another example of the indoor unit according to Embodiment 53 of the present invention.

FIG. 103    is a vertical sectional view showing an indoor unit according to Embodiment 54 of the present invention.

FIG. 104    is a vertical sectional view showing an indoor unit according to Embodiment 55 of the present invention.

FIG. 105    is a vertical sectional view showing another example of an indoor unit according to Embodiment 55 of the present invention.

FIG. 106    is a vertical sectional view showing an indoor unit according to Embodiment 56 of the present invention.

FIG. 107    is a diagram (vertical sectional view) describing an air flow occurring inside the indoor unit according to Embodiment 55 of the present invention.

FIG. 108    is a diagram (vertical sectional view) describing an air flow occurring inside the indoor unit according to Embodiment 55 of the present invention.

FIG. 109    is a vertical sectional view showing an indoor unit according to Embodiment 57 of the present invention.

FIG. 110    is a sectional front view showing an indoor unit according to Embodiment 59 of the present invention.

FIG. 111    is a perspective view showing the indoor unit according to Embodiment 59 of the present invention.

FIG. 112    is a diagram describing a light distribution viewing angle of each light-receiving element of an infrared sensor according to Embodiment 59 of the present invention.

FIG. 113    is a perspective view showing a cabinet for accommodating the infrared sensor according to Embodiment 59 of the present invention.

FIG. 114    is a diagram describing a moving state of the infrared sensor according to Embodiment 59 of the present invention.

FIG. 115    is a diagram describing a vertical light distribution viewing angle of a vertical section of the infrared sensor according to Embodiment 59 of the present invention.

FIG. 116    is a diagram showing an example of thermal imagery data obtained by the infrared sensor according to Embodiment 59.

FIG. 117    is a diagram showing an example when the indoor unit according to Embodiment 59 sections an indoor floor surface area into a plurality of area sections.

FIG. 118    is a sectional front view showing an indoor unit according to Embodiment 60 of the present invention.

FIG. 119    is a perspective view showing the indoor unit according to Embodiment 60 of the present invention.

FIG. 120    is a sectional front view showing an indoor unit according to Embodiment 61 of the present invention.

FIG. 121    is a perspective view showing the indoor unit according to Embodiment 61 of the present invention.

FIG. 122    is a vertical sectional view showing an indoor unit according to Embodiment 62 of the present invention.

FIG. 123    is a diagram (a vertical sectional view) describing an air flow control operation of the indoor unit according to Embodiment 62 of the present invention.

FIG. 124    is a diagram (a vertical sectional view) describing an air flow control operation of the indoor unit according to Embodiment 62 of the present invention.

FIG. 125    is a vertical sectional view showing an indoor unit according to Embodiment 63 of the present invention.

FIG. 126    is a vertical sectional view showing the indoor unit according to Embodiment 63 of the present invention.

FIG. 127    is a vertical sectional view showing an indoor unit according to Embodiment 64 of the present invention.

FIG. 128    is a vertical sectional view showing the indoor unit according to Embodiment 64 of the present invention.

FIG. 129    is a vertical sectional view showing an indoor unit according to Embodiment 65 of the present invention.

FIG. 130    is a vertical sectional view showing the indoor unit according to Embodiment 65 of the present invention.

FIG. 131    is a refrigerant circuit diagram showing an example of a refrigerant circuit of an air-conditioning apparatus including the indoor unit according to Embodiment 65 of the present invention.

FIG. 132    is a refrigerant circuit diagram showing an example of a refrigerant circuit of the air-conditioning apparatus including the indoor unit according to Embodiment 65 of the present invention.

FIG. 133    is a refrigerant circuit diagram showing another example of a refrigerant circuit of the air-conditioning apparatus including the indoor unit according to Embodiment 65 of the present invention.

FIG. 134    is a refrigerant circuit diagram showing another example of a refrigerant circuit of the air-conditioning apparatus including the indoor unit according to Embodiment 65 of the present invention.

FIG. 135    is a perspective view showing an indoor unit according to Embodiment 66 of the present invention.

FIG. 136    is a vertical sectional view showing an indoor unit according to Embodiment 67 of the present invention.

FIG. 137    is a diagram (a vertical sectional view) describing an air flow control operation of the indoor unit according to Embodiment 67 of the present invention.

FIG. 138    is a diagram (a vertical sectional view) describing an air flow control operation of the indoor unit according to Embodiment 67 of the present invention.

FIG. 139    is an enlarged view of the main part showing an example of a moving mechanism for moving

EP 2 602 561 B1

the position of a rotation shaft of an auxiliary up/down vane 71 according to Embodiment 64 of the present invention.

| | |
|---|---|
| FIG. 140 | is an enlarged view of the main part showing another example of the moving mechanism for moving the position of the rotation shaft of the auxiliary up/down vane 71 according to Embodiment 64 of the present invention. |
| FIG. 141 | is a perspective view showing an example of a drain pan according to Embodiment 68 of the present invention. |
| FIG. 142 | is a perspective view showing an example of a drain pan according to Embodiment 68 of the present invention. |
| FIG. 143 | is a vertical sectional view showing an example of an indoor unit according to Embodiment 69 of the present invention. |
| FIG. 144 | is a vertical sectional view showing another example of the indoor unit according to Embodiment 69 of the present invention. |
| FIG. 145 | is a perspective view showing another example of the indoor unit, viewed from the front side right, according to Embodiment 69 of the present invention. |
| FIG. 146 | is a perspective view showing another example of the indoor unit, viewed from the back side right, according to Embodiment 69 of the present invention. |
| FIG. 147 | is a perspective view showing another example of the indoor unit, viewed from the front side left, according to Embodiment 69 of the present invention. |
| FIG. 148 | is a perspective view showing a drain pan provided in another example of the indoor unit according to Embodiment 69 of the present invention. |
| FIG. 149 | is a diagram (vertical sectional view) describing an air flow in a nozzle of the indoor unit according to Embodiment 1 of the present invention. |
| FIG. 150 | is a vertical sectional view showing an indoor unit according to Embodiment 70 of the present invention. |
| FIG. 151 | is a vertical sectional view showing another example of the indoor unit according to Embodiment 70 of the present invention. |
| FIGs. 152(a) | to 152(c) are diagrams describing an air flow that is generated inside the indoor unit according to Embodiment 1 of the present invention. |
| FIG. 153 | is a diagram describing an air flow that is generated inside the indoor unit according to Embodiment 1 of the present invention. |
| FIGs. 154(a) | and 154(b) are diagrams describing an example of the shape of a nozzle of an indoor unit according to Embodiment 71 of the present invention. |
| FIG. 155 | is a diagram describing another example of the shape of the nozzle of the indoor unit according to Embodiment 71 of the present invention. |
| FIG. 156 | is a diagram describing yet another example of the shape of the nozzle of the indoor unit according to Embodiment 71 of the present invention. |
| FIG. 157 | is a sectional plan view showing an indoor unit according to Embodiment 72 of the present invention. |

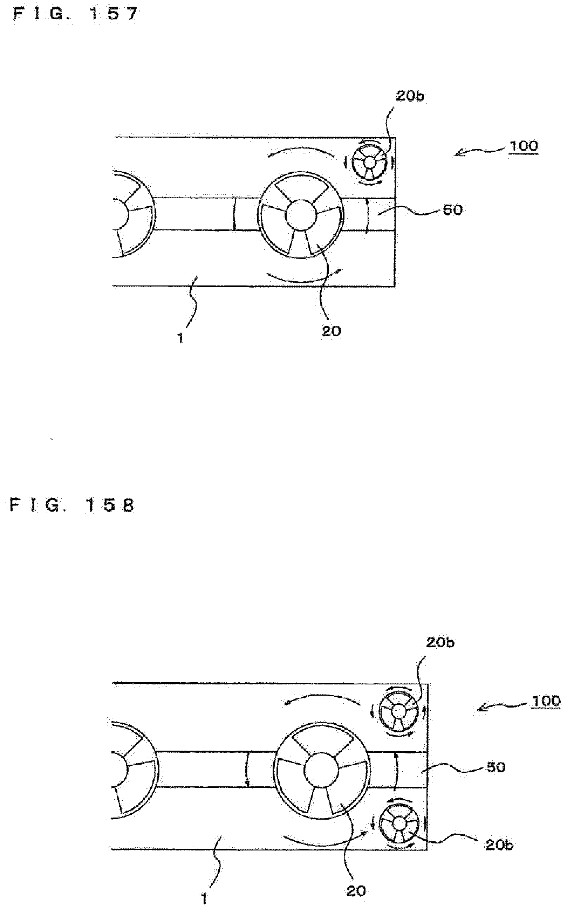

FIG. 158      is a sectional plan view showing another example of the indoor unit according to Embodiment 72 of the present invention.

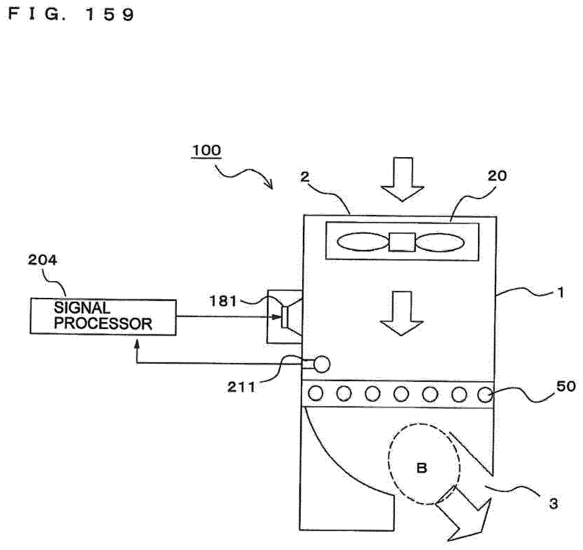

FIG. 159      is a vertical sectional view showing an indoor unit according to Embodiment 73 of the present invention.

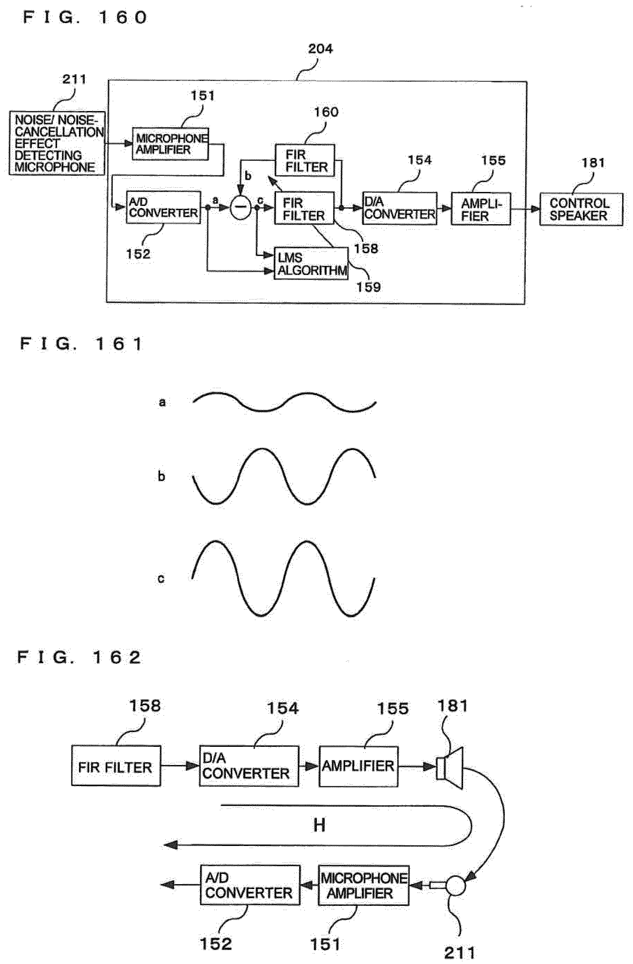

FIG. 160      is a block diagram showing a signal processor according to Embodiment 73 of the present invention.

FIG. 161      is a diagram showing the waveforms for describing a method of calculating noise to be deadened from sound after interference.

FIG. 162      is a block diagram describing a method of estimating control sound according to Embodiment 73 of the present invention.

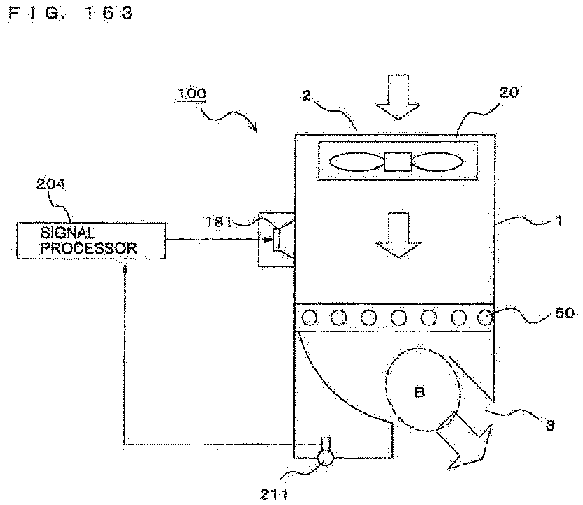

FIG. 163      is a vertical sectional view showing another example of the indoor unit according to Embodiment 73 of the present invention.

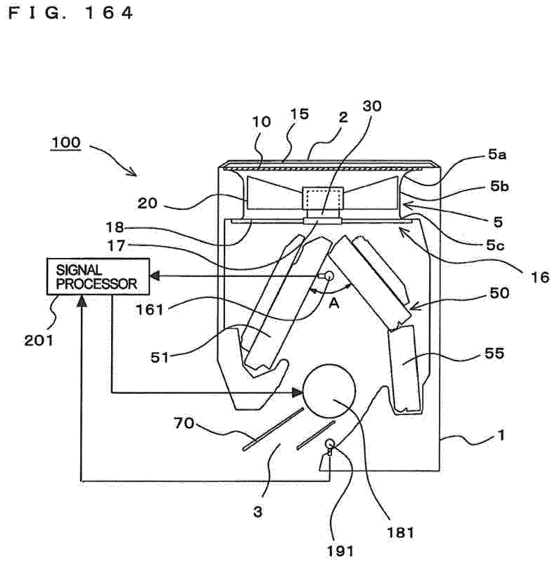

FIG. 164      is a vertical sectional view showing an indoor unit according to Embodiment 74 of the present invention.

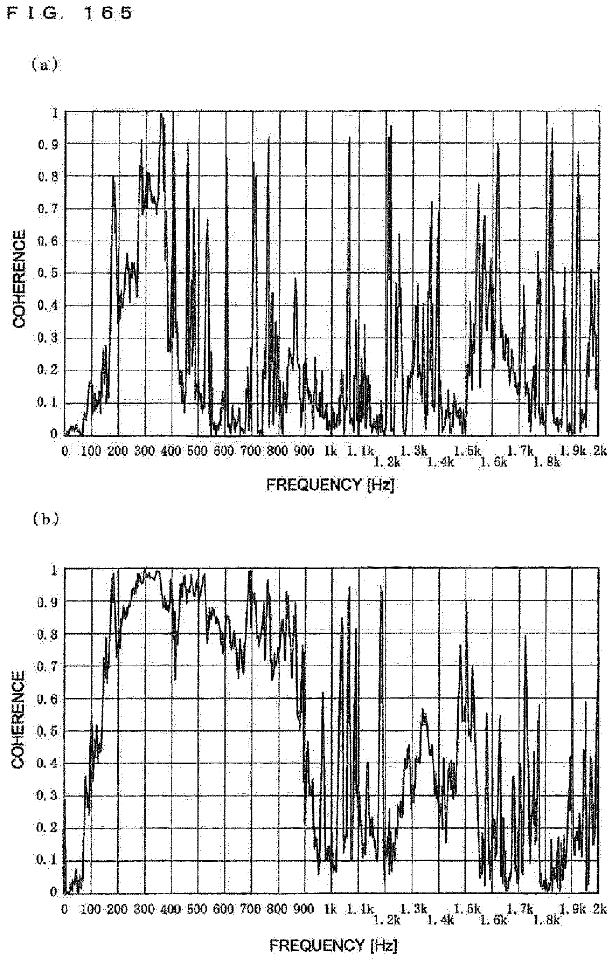

FIGs. 165(a) and 165(b)      are diagrams showing coherence properties between a noise detecting microphone and a noise-cancellation effect detecting microphone with respect to installation positions of the microphones.

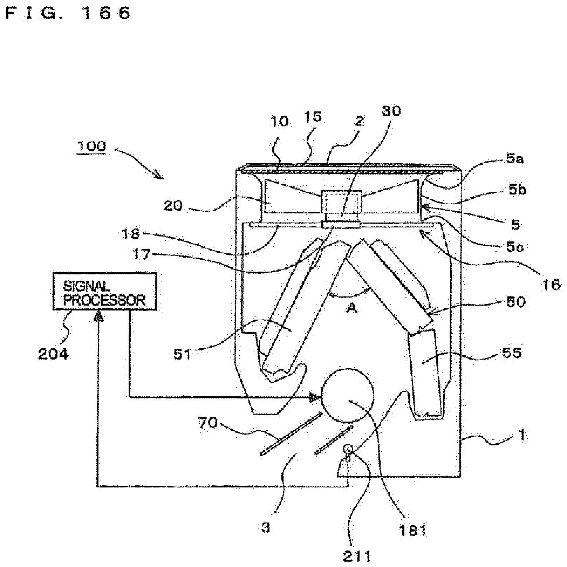

FIG. 166      is a vertical sectional view showing an indoor unit according to Embodiment 75 of the present invention.

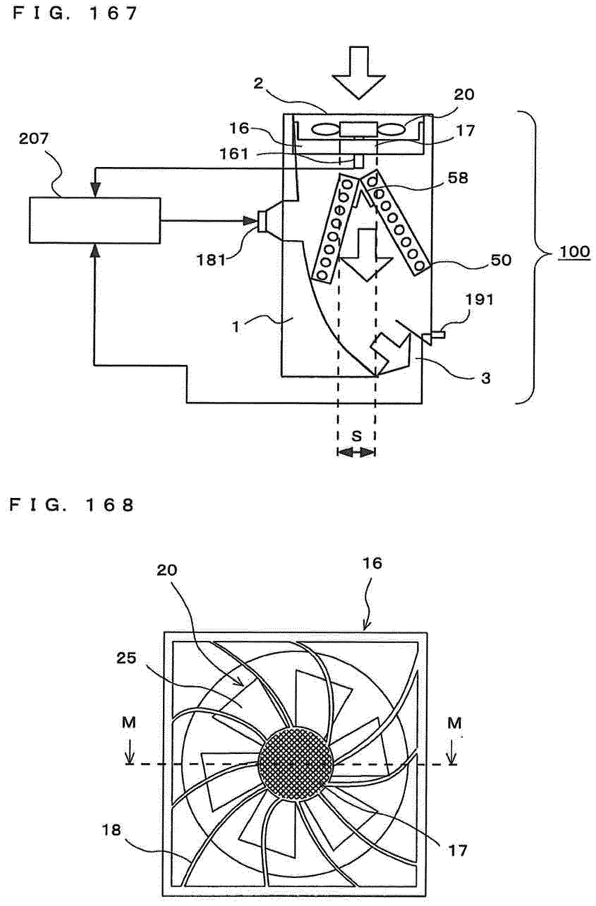

FIG. 167      is a vertical sectional view showing an indoor unit according to Embodiment 76 of the present invention.

FIG. 168      is a bottom view showing a fan (viewed from the lower side of FIG. 167) according to Embodiment 76 of the present invention.

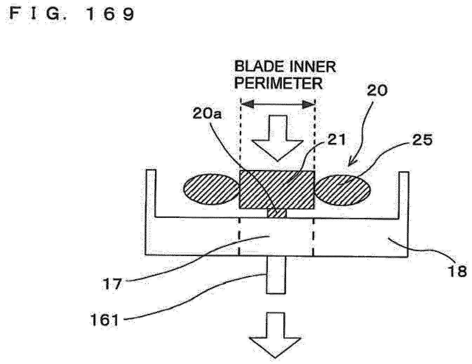

FIG. 169      is a sectional view taken along the M-M line in FIG. 168.

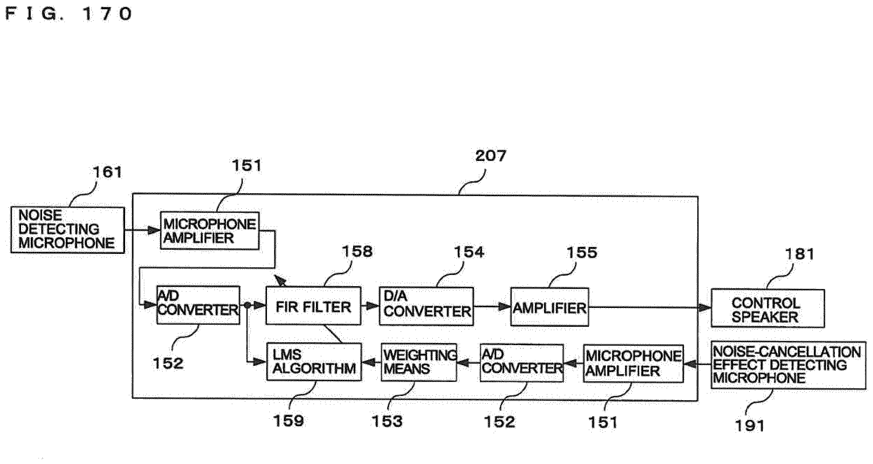

FIG. 170      is a block diagram showing a signal processor according to Embodiment 76 of the present invention.

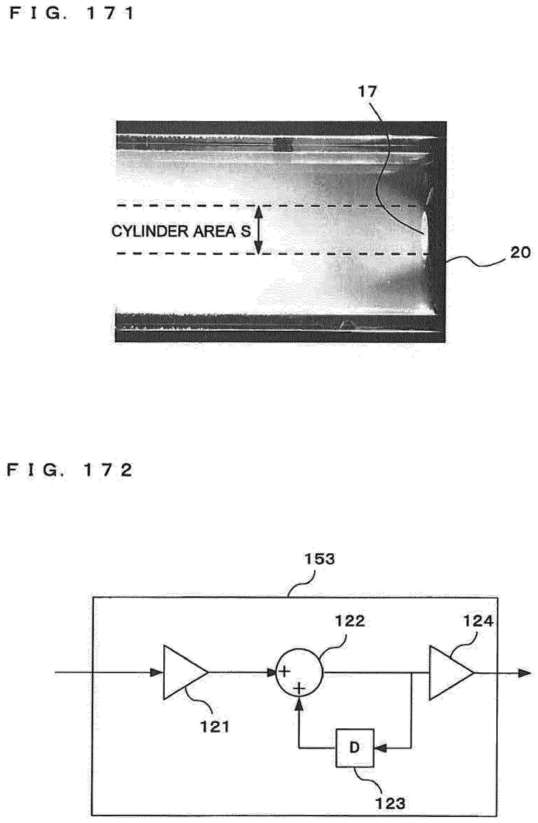

FIG. 171      is a diagram showing an experiment result visualizing an air flow that is blown from the fan according to Embodiment 76 of the present invention.

FIG. 172      is a block diagram showing a weighting means circuit according to Embodiment 76 of the present invention.

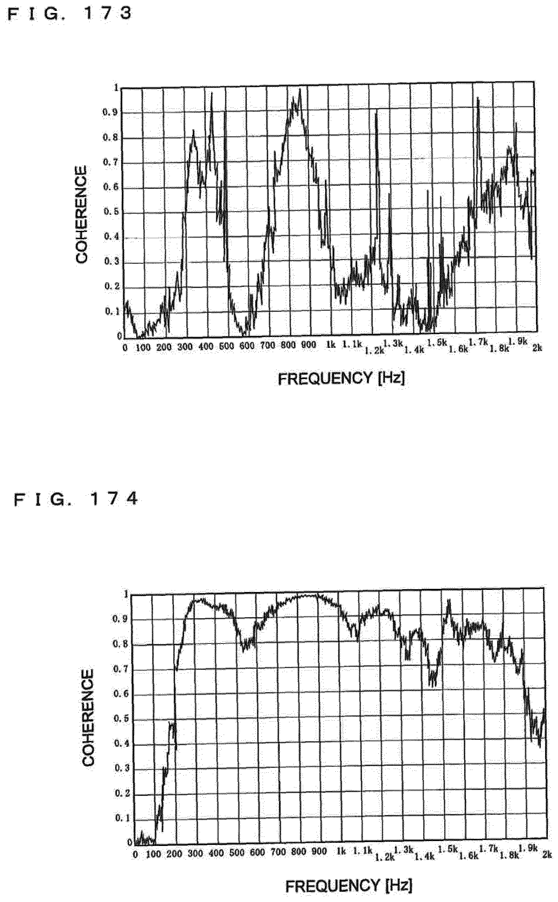

FIG. 173      is a diagram showing a coherence property between a detected sound by a noise detecting microphone 161 and a detected sound by a noise-cancellation effect detecting microphone 191 when a fan 20 is driven with the noise detecting microphone 161 being installed outside of a cylinder area S.

FIG. 174      is a diagram showing a coherence property between a detected sound by the noise detecting microphone 161 and a detected sound by the noise-cancellation effect detecting microphone 191 when the fan 20 is driven with the microphone being installed inside of the cylinder area S.

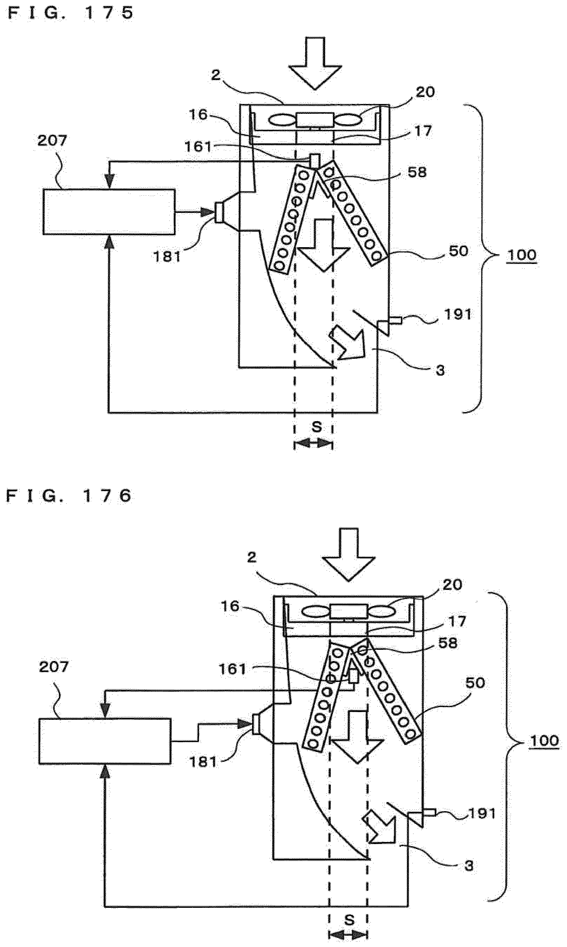

FIG. 175      is a vertical sectional view showing another example of the indoor unit according to Embodiment 76 of the present invention.

FIG. 176      is a vertical sectional view showing yet another example of the indoor unit according to Embodiment 76 of the present invention.

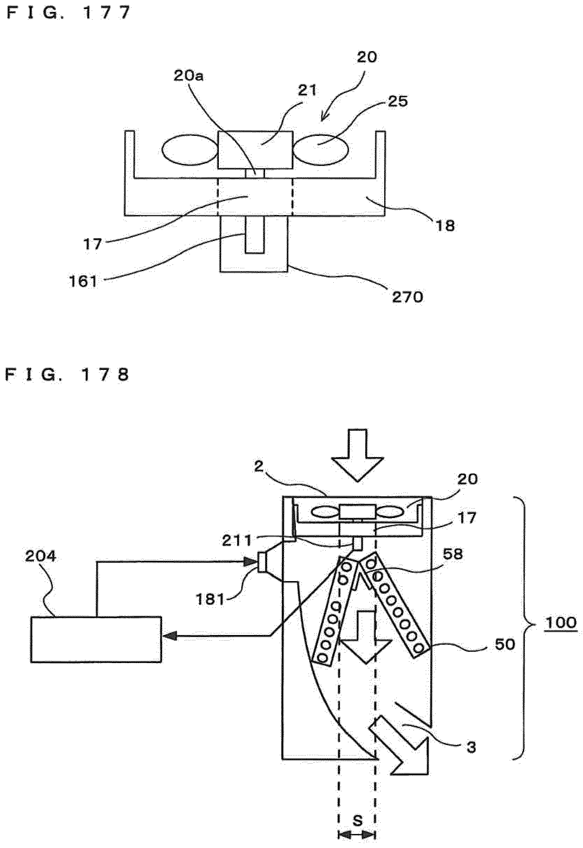

FIG. 177 | is a sectional view showing another example of installation of the noise detecting microphone according to Embodiment 76 of the present invention.

FIG. 178 | is a vertical sectional view showing an indoor unit according to Embodiment 77 of the present invention.

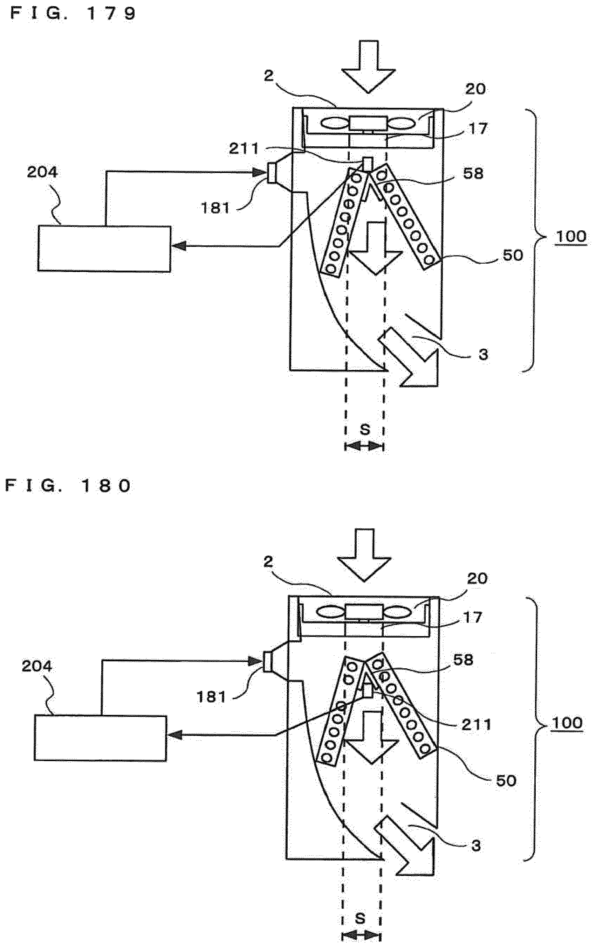

FIG. 179 | is a vertical sectional view showing another example of the indoor unit according to Embodiment 77 of the present invention.

FIG. 180 | is a vertical sectional view showing yet another example of the indoor unit according to Embodiment 77 of the present invention.

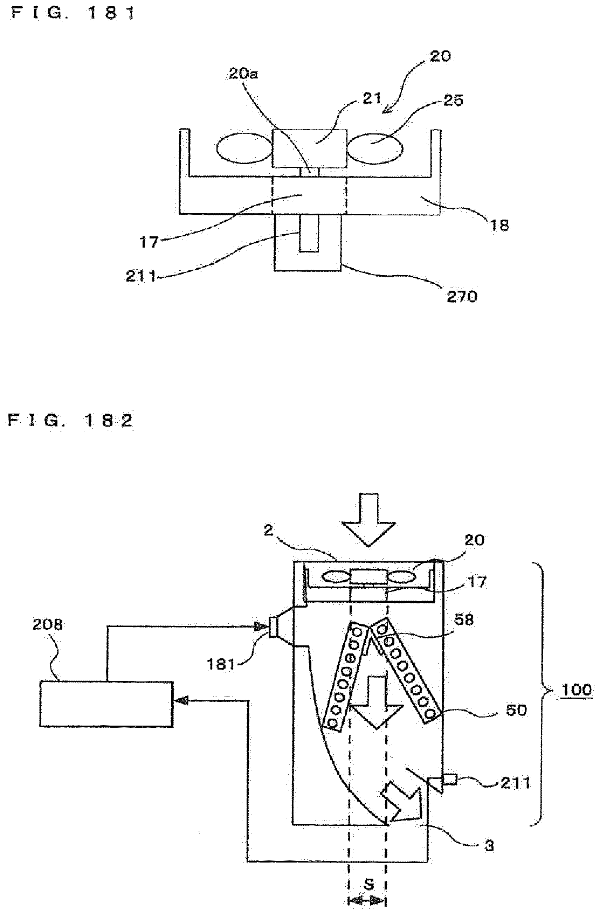

FIG. 181 | is a sectional view showing another attachment example of a noise detecting microphone in Embodiment 77.

FIG. 182 | is a vertical sectional view showing an indoor unit according to Embodiment 78 of the present invention.

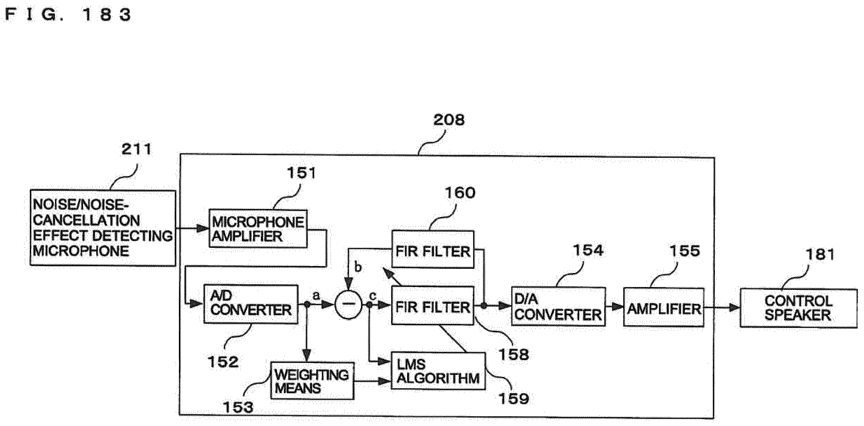

FIG. 183 | is a block diagram showing a signal processor according to Embodiment 78 of the present invention.

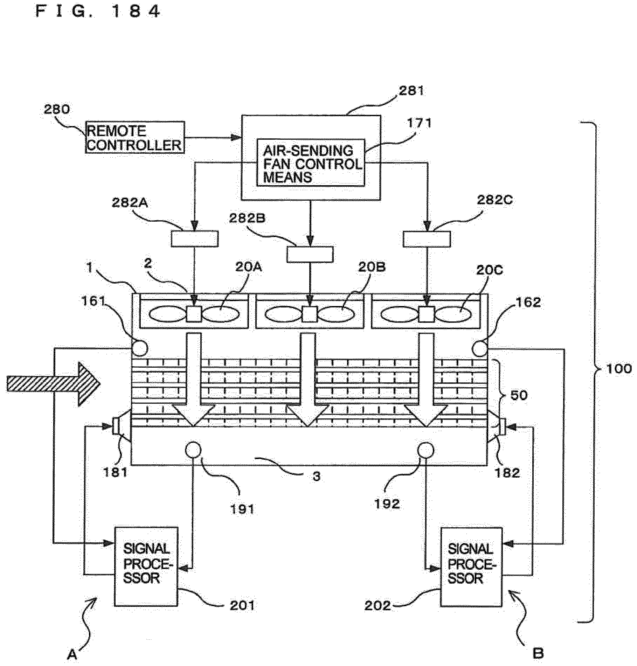

FIG. 184 | is a front view showing an indoor unit according to Embodiment 79 of the present invention.

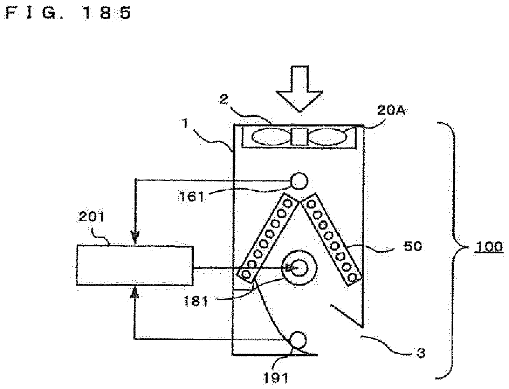

FIG. 185 | is a side view showing the indoor unit according to Embodiment 79 of the present invention.

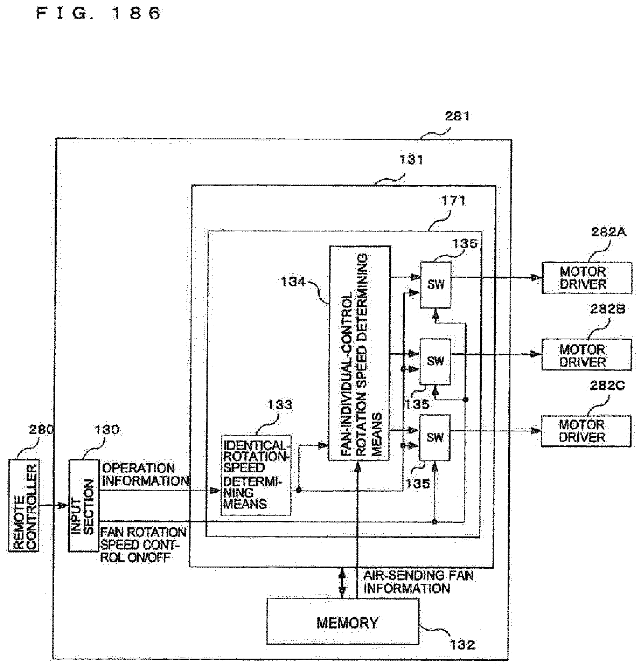

FIG. 186 | is a block diagram showing a controller according to Embodiment 79 of the present invention.

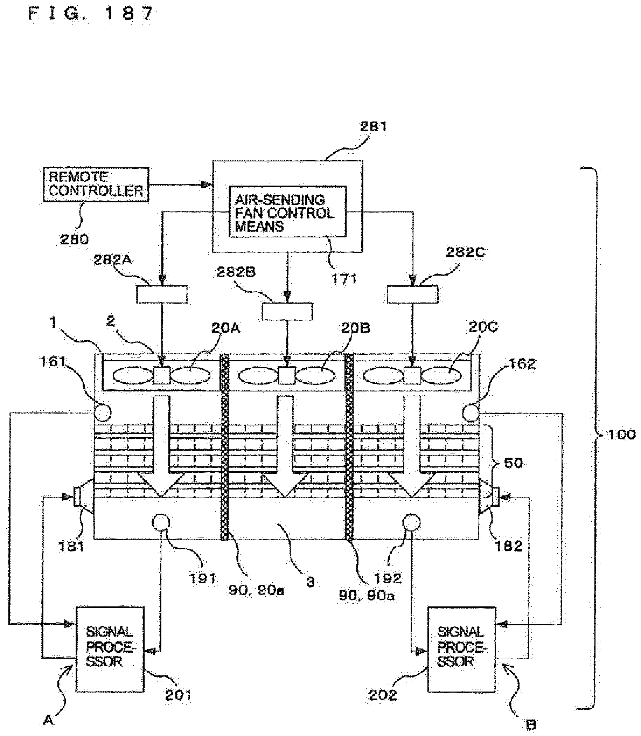

FIG. 187 | is a front view showing another example of the indoor unit according to Embodiment 79 of the present invention.

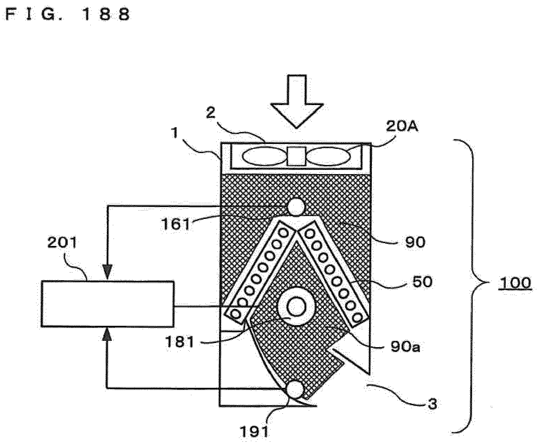

FIG. 188 | is a left side view showing the indoor unit shown in FIG. 187.

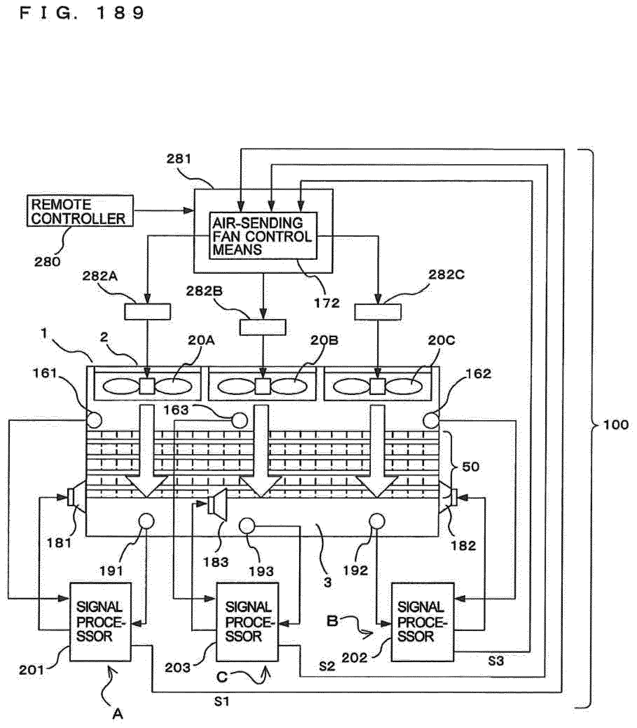

FIG. 189 | is a front view showing an indoor unit according to Embodiment 80 of the present invention.

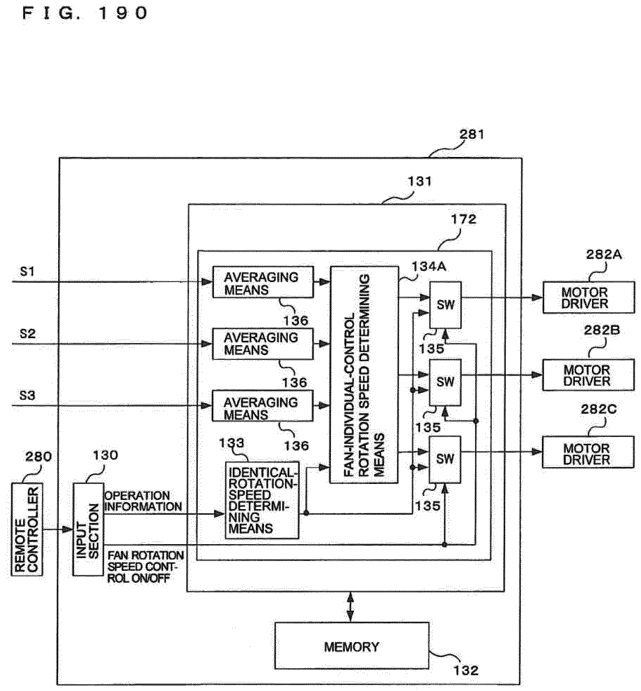

FIG. 190 | is a block diagram showing a controller according to Embodiment 80 of the present invention.

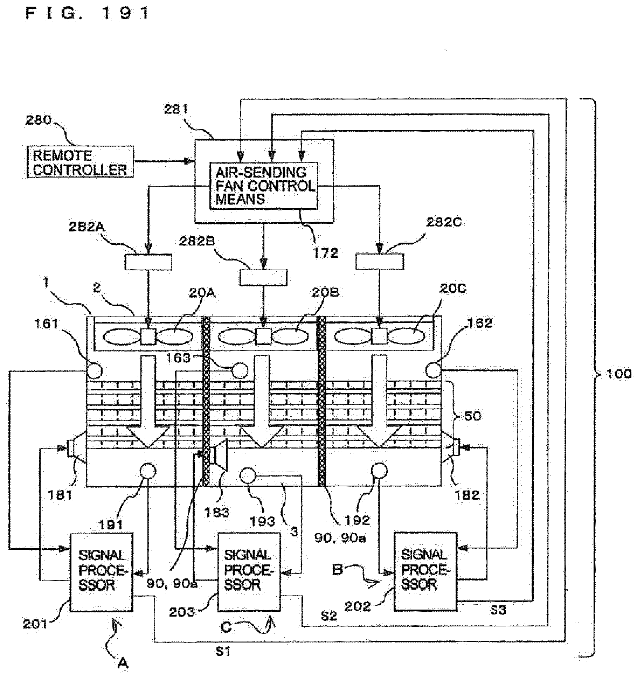

FIG. 191 | is a front view showing another example of the indoor unit according to Embodiment 80 of the present invention.

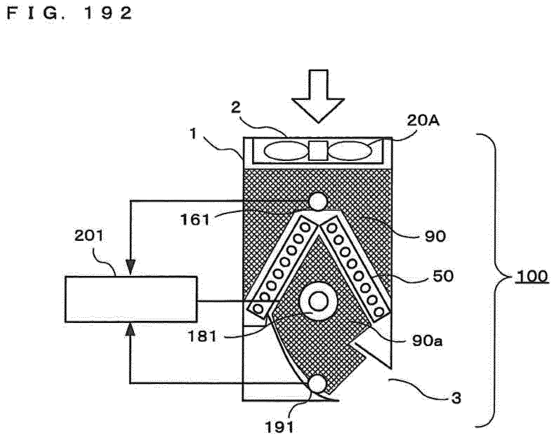

FIG. 192 | is a left side view showing the indoor unit shown in FIG. 191.

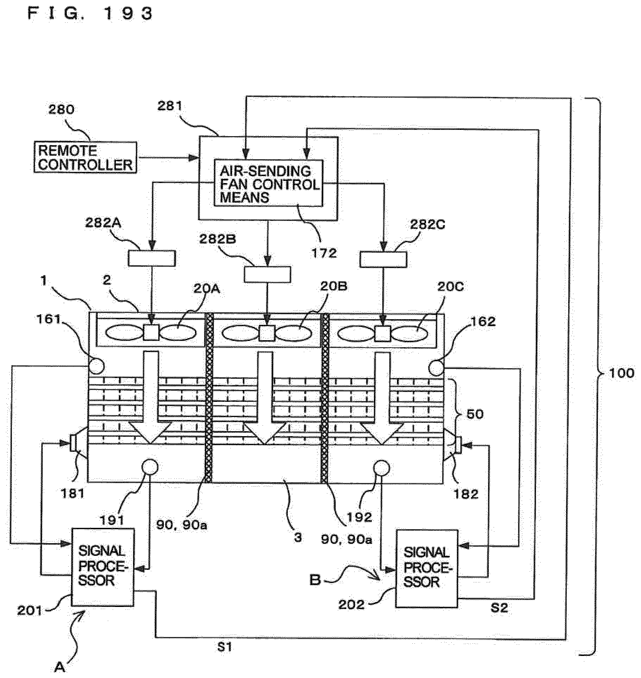

FIG. 193 | is a front view showing yet another example of the indoor unit according to Embodiment 80 of the present invention.

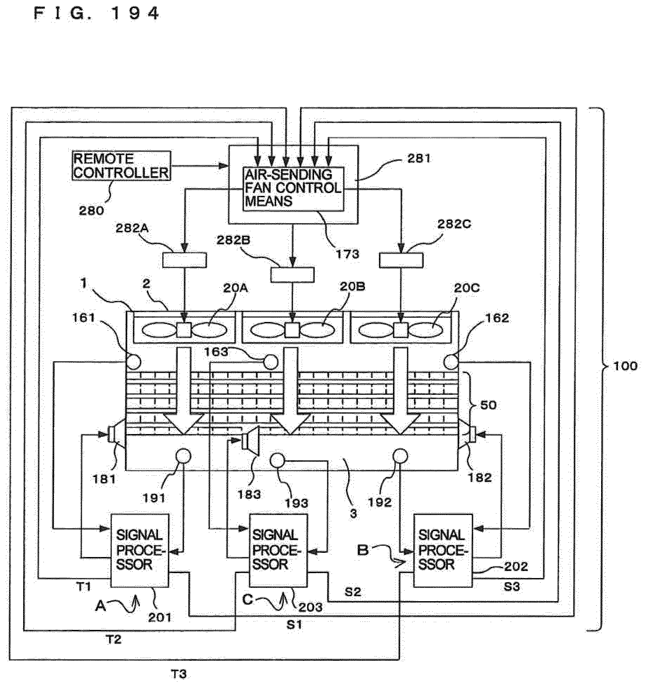

FIG. 194 | is a front view showing an indoor unit according to Embodiment 81 of the present invention.

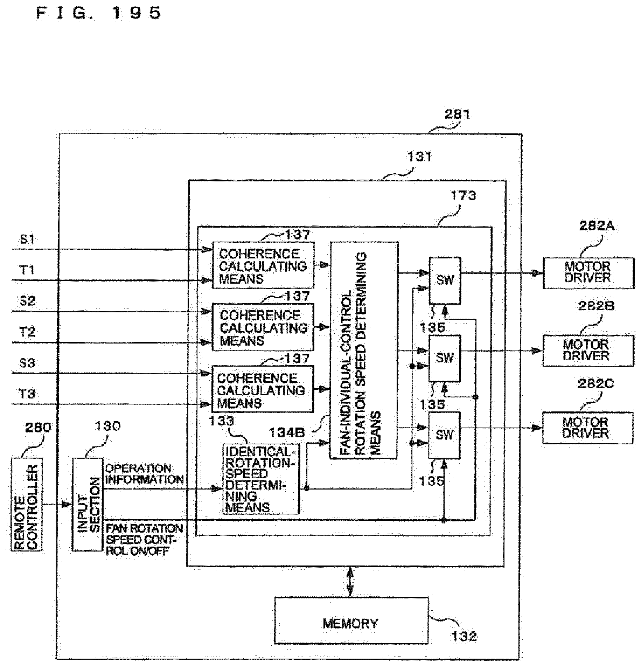

FIG. 195 | is a block diagram showing a controller according to Embodiment 81 of the present invention.

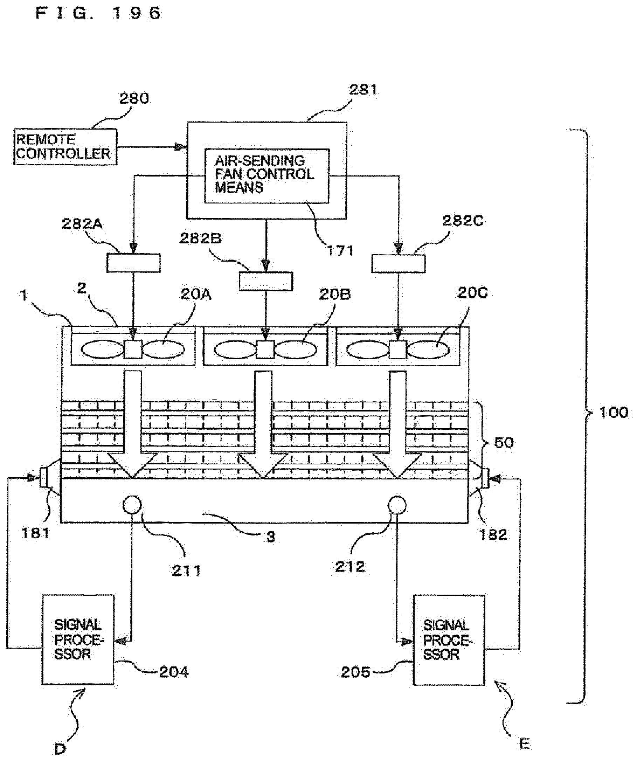

FIG. 196 | is a front view showing an indoor unit according to Embodiment 82 of the present invention.

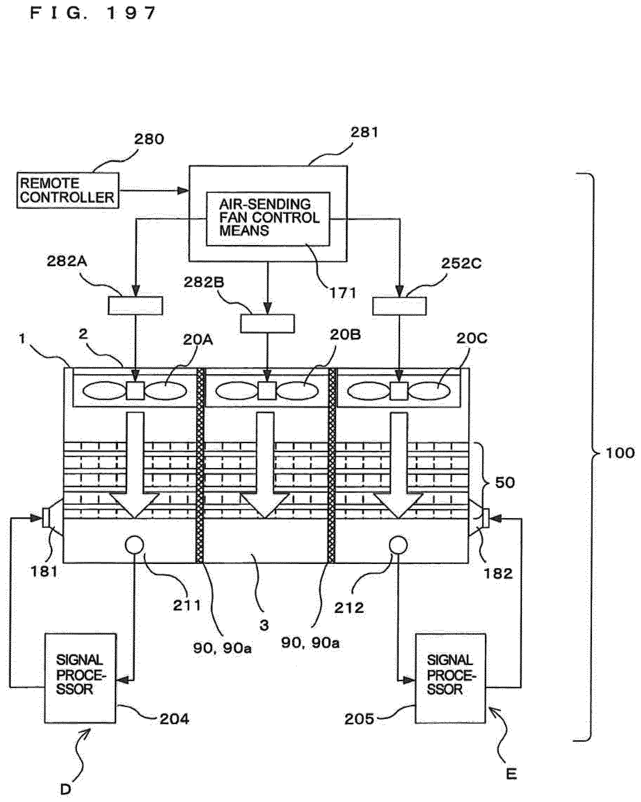

FIG. 197 | is a front view showing another example of the indoor unit according to Embodiment 82 of the present invention.

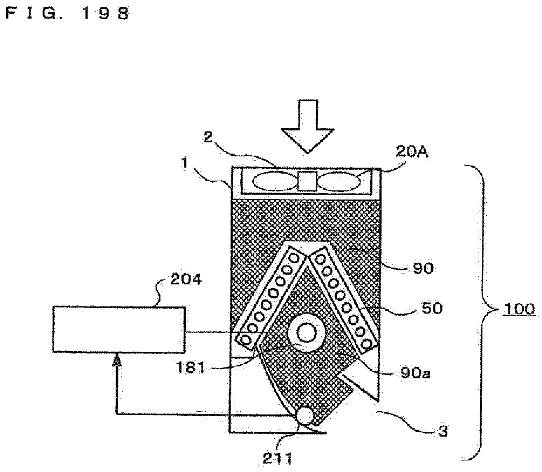

FIG. 198 | is a left side view of the indoor unit shown in FIG. 197.

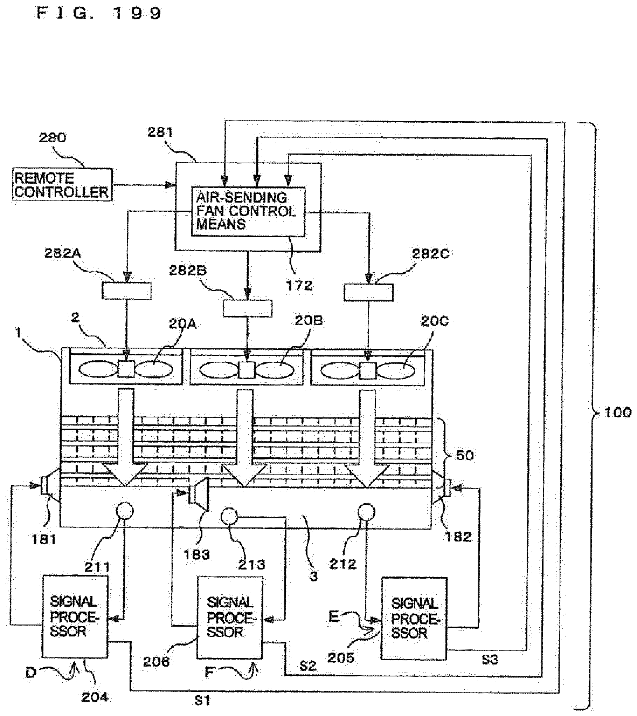

FIG. 199 | is a front view showing an indoor unit according to Embodiment 83 of the present invention.

| FIG. 200 | is a front view showing another example of the indoor unit according to Embodiment 83 of the present invention. |
| FIG. 201 | is a left side view of the indoor unit shown in FIG. 200. |
| FIG. 202 | is a front view showing yet another example of the indoor unit according to Embodiment 83 of the present invention. |
| FIG. 203 | is a front view showing an indoor unit according to Embodiment 86 of the present invention. |
| FIG. 204 | is a block diagram showing a controller according to Embodiment 86 of the present invention. |
| FIG. 205 | is a block diagram showing a noise cancellation amount calculating means according to Embodiment 86 of the present invention. |
| FIG. 206 | is a front view showing an indoor unit according to Embodiment 87 of the present invention. |
| FIG. 207 | is a perspective view showing an indoor unit according to Embodiment 88 of the present invention. |
| FIG. 208 | is a perspective view showing an air passage module of the indoor unit according to Embodiment 88 of the present invention. |
| FIG. 209 | is a perspective view showing another example of the air passage module according to Embodiment 88 of the present invention. |
| FIG. 210 | is a perspective view showing an air passage module according to Embodiment 89 of the present invention. |
| FIG. 211 | is a perspective view showing another example of the air passage module according to Embodiment 89 of the present invention. |

## Description of Embodiments

Hereinafter, specific embodiments of an air-conditioning apparatus (more specifically, an indoor unit of an air-conditioning apparatus) according to the present invention will be described. Incidentally, in Embodiment 1, the basic structure of each of the units constituting the indoor unit of the air-conditioning apparatus will be described. Moreover, in Embodiment 2 and subsequent embodiments, the specific structure or another example of each unit will be described. Furthermore, in the following embodiments, the present invention will be described by focusing a wall-mounted indoor unit as an example. In addition, in the drawings used in the embodiments, the shape, size, etc. of each unit (or a component of each unit) in one drawing may differ slightly from those in the other drawings.

## Embodiment 1

### Basic structure

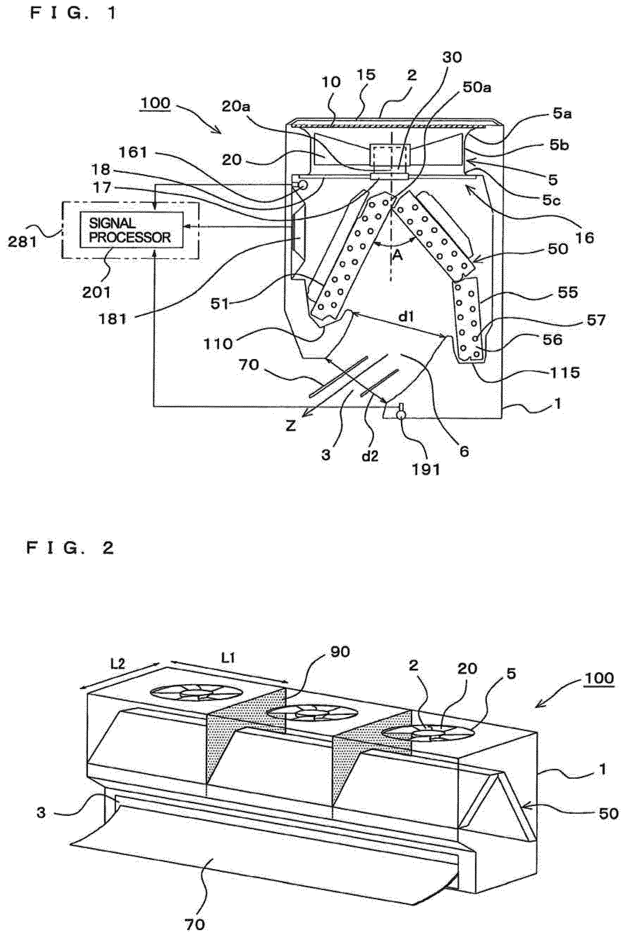

FIG. 1 is a vertical sectional view showing an indoor unit (referred to as an indoor unit 100) of an air-conditioning apparatus according to Embodiment 1 of the present invention. Moreover, FIG. 2 is a perspective view of an appearance of the indoor unit. Incidentally, in Embodiment 1 and embodiments which will be described later, the descriptions assume that the left side of FIG. 1 is the front side of the indoor unit 100. Hereinafter, based on FIGs. 1 and 2, the structure of the indoor unit 100 will be described.

### Overall structure

The indoor unit 100 supplies air-conditioned air to an air-conditioned area such as the interior of a room by using a refrigeration cycle that circulates a refrigerant. The indoor unit 100 has mainly a casing 1 in which an air inlet 2 for sucking the room air into the inside and an air outlet 3 for supplying the air-conditioned air to the air-conditioned area are formed, a fan 20 that is housed in the casing 1 and sucks the room air through the air inlet 2 and blows the air-conditioned air out of the air outlet 3, and a heat exchanger 50 that is placed in an air passage from the fan 20 to the air outlet 3 and generates the air-conditioned air by heat exchange between the refrigerant and the room air. In addition, these components form an air passage (an arrow Z) in the casing 1.

The air inlet 2 is formed as an opening in a top portion of the casing 1. The air outlet 3 is formed as an opening in a bottom portion of the casing 1 (more specifically, on the bottom side of a front part of the casing 1). The fan 20 is provided on the downstream side of the air inlet 2 and on the upstream side of the heat exchanger 50, and is formed as an axial flow fan or a diagonal flow fan, for example.

Moreover, the indoor unit 100 includes a controller 281 that controls the rotation speed of the fan 20, the orientations (angles) of an up/down vane 70 and a left/right vane 80 (including an auxiliary up/down vane 71 when the auxiliary up/down vane 71, which will be described later, is provided), and the like, the vane 70 and the left/right vane 80 being described later. Incidentally, in the drawings shown in Embodiment 1 and the embodiments which will be described later, sometimes the controller 281 is not shown.

In the indoor unit 100 structured as described above, since the fan 20 is provided on the upstream side of the heat exchanger 50, as compared to an indoor unit of a conventional air-conditioning apparatus in which the fan 20 is provided in the air outlet 3, it is possible to suppress the generation of a spiral flow of air blown out of the air outlet 3 and the occurrence of variations in the wind speed distribution.

This makes it possible to send comfortable air to the air-conditioned area. Moreover, since there is no complicated structure such as a fan in the air outlet 3, it is easy to take measures against condensation that occurs at the boundary between the warm air and the cold air at the time of cooling operation. Furthermore, since a fan motor 30 is not exposed to the cold air or the warm air which is the air-conditioned air, it is possible to extend an operating life.

Fan

Since restrictions are generally imposed on the space in which the indoor unit of the air-conditioning apparatus is installed, the size of the fan cannot be increased in many cases. For this reason, to obtain a desired air volume, a plurality of fans with an adequate size are disposed in parallel. In the indoor unit 100 according to Embodiment 1, as shown in FIG. 2, three fans 20 are disposed in parallel in the longitudinal direction of the casing 1 (in other words, the longitudinal direction of the air outlet 3).

To obtain desired heat exchange capacity with the dimensions of an indoor unit of a current common air-conditioning apparatus, the number of fans 20 is preferably about two to four. In the indoor unit according to Embodiment 1, all the fans 20 are configured to have the same shape, and, by operating all of them at the same operating rotation speed, it is possible to obtain roughly the same volume of sent air in all the fans 20.

With such a structure, by combining the number, shape, size, etc. of the fans 20 in accordance with the required air volume and the air flow resistance in the indoor unit 100, it is possible to design an optimum fan corresponding to the indoor unit 100 with various specifications.

Bellmouth

In the indoor unit 100 according to Embodiment 1, a bellmouth 5 above a duct is placed around the fan 20. The bellmouth 5 is provided for smoothly guiding the air sucked into the fan and the exhaust air from the fan. As shown in FIG. 1, the bellmouth 5 according to Embodiment 1 is substantially circular in a top view. Moreover, in a vertical section, the bellmouth 5 according to Embodiment 1 has the following shape. A top portion 5a has a substantially arc shape formed as a result of an end thereof spreading upward. A middle portion 5b forms a straight portion in which the bellmouth has a constant diameter. A bottom portion 5c has a substantially arc shape formed as a result of an end thereof spreading downward. In addition, the end (an arc shape portion on the suction side) of the top portion 5a of the bellmouth 5 forms the air inlet 2.

The bellmouth 5 shown in FIG. 1 of Embodiment 1 has a shape of a duct that is higher than a bladed wheel of the fan 20, but the shape is not limited thereto. The bellmouth 5 may be a semiopen bellmouth that is lower than the bladed wheel of the fan 20. Furthermore, the bellmouth 5 may be formed only of 5a and 5c, each being an end, without the straight portion of 5b shown in FIG. 1.

Incidentally, the bellmouth 5 may be formed integrally with, for example, the casing 1 for reduction in the number of parts and for higher strength. Moreover, for example, the bellmouth 5, the fan 20, the fan motor 30, etc. may be modularized such that these components can be attached to and detached from the casing 1 to enhance ease of maintenance.

Furthermore, in Embodiment 1, the end (the arc shape portion on the suction side) of the top portion 5a of the bellmouth 5 is formed to have a uniform shape with respect to the circumferential direction of an opening plane of the bellmouth 5. That is, the bellmouth 5 does not have structures such as a notch and a rib with respect to the rotation direction about a rotation shaft 20a of the fan 20 and has a uniform axisymmetric shape.

With such a structure of the bellmouth 5, since the end (the arc shape portion on the suction side) of the top portion 5a of the bellmouth 5 has a uniform shape with respect to the rotation of the fan 20, a uniform flow is achieved as a suction flow of the fan 20. This makes it possible to reduce noise caused by a drift in the suction flow of the fan 20.

Regarding partition plate

As shown in FIG. 2, the indoor unit 100 according to Embodiment 1 has partition plates 90 provided between the adjacent fans 20. These partition plates 90 are placed in-between the heat exchanger 50 and the fans 20. That is, the air passage between the heat exchanger 50 and the fans 20 is divided into a plurality of air passages (three air passages in Embodiment 1). Since each partition plate 90 is placed between the heat exchanger 50 and the fans 20, an end thereof on the side making contact with the heat exchanger 50 has a shape along the heat exchanger 50.

More specifically, as shown in FIG. 1, the heat exchanger 50 is placed to be substantially inverted V shape in a vertical section from the front side to the back side of the indoor unit 100 (that is, a vertical section of the indoor unit 100 viewed from the right side. This section will be referred to below as a right side vertical section). As a result, an end of the partition plate 90 on the heat exchanger 50 side is also substantially inverted V shape.

Incidentally, the position of an end of the partition plate 90 on the fan 20 side may be determined as follows, for example. When the adjacent fans 20 are adequately away from each other to the extent that the adjacent fans 20 do not have an influence on each other on the suction side, it is necessary simply to extend the end of the partition plate 90 on the fan 20 side to the exit plane of the fan 20.

However, when the adjacent fans 20 are closer to each other to the extent that the adjacent fans 20 have an influence on each other on the suction side and when the shape of the end (the arc shape portion on the suction side) of the top portion 5a of the bellmouth 5 can be formed to be adequately large, the end of the partition plate 90 on the fan 20 side may be extended to the upstream side (the suction side) of the fan 20 so as not to affect an adjacent air passage (in such a way that the adjacent fans 20 do not have an influence on each other on the suction side).

Moreover, the partition plate 90 can be formed of various materials. For example, the partition plate 90 may be formed of metal such as steel or aluminum. Furthermore, for example, the partition plate 90 may be formed of resin or the like. However, since the temperature of the heat exchanger 50 becomes high at the time of heating operation, when the partition plate 90 is formed of a material of low-melting point such as resin, advisably, a small space is created between the partition plate 90 and the heat exchanger 50.

When the partition plate 90 is formed of a material of high-melting point such as aluminum or steel, the partition plate 90 may be placed in such a way as to be in contact with the heat exchanger 50. When the heat exchanger 50 is, for example, a finned tube heat exchanger, the partition plate 90 may be inserted between the fins of the heat exchanger 50.

As described above, the air passage between the heat exchanger 50 and the fans 20 is divided into a plurality of air passages (three air passages in Embodiment 1). It is also possible to reduce noise generated in the duct by providing a sound absorbing material in the air passages, that is, on the partition plates 90, the casing 1, and the like.

Moreover, each of the air passages obtained by forming a substantially quadrilateral shape having a side L1 and a side L2, in a top view. That is, the widths of each of the air passages obtained by division are L1 and L2. Therefore, for example, the air volume generated by the fan 20 placed in a substantially quadrilateral shape with L1 and L2 reliably passes through the heat exchanger 50 in an area surrounded with L1 and L2, the area located in a downstream part of the fan 20.

By dividing the air passage in the casing 1 into a plurality of air passages in this manner, even when the flow field generated downstream by the fan 20 includes a spiral component, the air blown out of each fan 20 is not allowed to move freely in the longitudinal direction (the direction orthogonal to the paper surface in FIG. 1) of the indoor unit 100. This makes it possible to cause the air blown out of the fan 20 to pass through the heat exchanger 50 in an area surrounded with L1 and L2, the area located in a downstream part of the fan 20.

As a result, it is possible to suppress variations in the distribution of the air volume flowing into the whole of the heat exchanger 50 in the longitudinal direction (the direction orthogonal to the paper surface in FIG. 1) of the indoor unit 100 and obtain high heat exchange performance. Moreover, by dividing the inside of the casing 1 with the partition plates 90, it is possible to prevent an interference between the spiral flows generated by the adjacent fans 20, in the fans 20 adjacent to each other. This makes it possible to reduce a loss of fluid energy caused by the interference between the spiral flows and improve the wind speed distribution and reduce a pressure loss of the indoor unit 100.

Incidentally, each partition plate 90 does not necessarily have to be formed of one plate and may be formed of a plurality of plates. For example, the partition plate 90 may be divided into two parts: a part on the side where a front side heat exchanger 51 is located and a part on the side where a back side heat exchanger 55 is located. It goes without saying that it is preferable that no gap be left at a joint between the plates constituting the partition plate 90. By dividing the partition plate 90 into a plurality of parts, the partition plate 90 can be installed more easily.

Fan motor

The fan 20 is rotated by the fan motor 30. The used fan motor 30 may be an inner rotor-type fan motor or an outer rotor-type fan motor. In the case of the outer rotor-type fan motor 30, a fan motor in which the rotor is integrated with a boss 21 of the fan 20 (the boss 21 is made to hold the rotor) is also used. Moreover, by making the dimensions of the fan motor 30 smaller than the dimensions of the boss 21 of the fan 20, it is possible to prevent a loss to the air flow generated by the fan 20. Furthermore, by providing the motor inside the boss 21, it is also possible to make the size in the axial direction smaller. With a structure that allows the fan motor 30 and the fan 20 to be easily attached to each other and removed from each other, ease of maintenance is also enhanced.

Incidentally, by using a relatively high cost DC brushless motor as the fan motor 30, it is possible to improve efficiency, increase longevity, and achieve better controllability. However, it goes without saying that, even when a motor of another type is adopted, a primary function as an air-conditioning apparatus is satisfied. Moreover, a circuit for driving the fan motor 30 may be integrated with the fan motor 30 or can be provided outside with dust and fire prevention measures.

The fan motor 30 is attached to the casing 1 by a motor stay 16. Furthermore, by forming the fan motor 30 as a box-type (in which the fan 20, a cabinet, the fan motor 30, the bellmouth 5, the motor stay 16, and the like are integrally modularized) that is used, for example, to cool a CPU and allowing it to be attached to and removed from the casing 1, ease of maintenance is enhanced and the accuracy of tip clearance of the fan 20 can also be increased. In general, narrower tip clearance is preferable because this enhances air-sending performance.

Incidentally, a circuit that drives the fan motor 30 may be provided inside the fan motor 30 or may be provided outside.

Motor stay

The motor stay 16 includes a fixing member 17 and a support member 18. The fixing member 17 is a member to which the fan motor 30 is attached. The support member 18 is a member for securing the fixing member 17 to the casing 1. The support member 18 is, for example, a rod-shaped member and is provided in such a way as to extend from the perimeter of the fixing member 17 in a radial fashion, for example. As shown in FIG. 1, the support member 18 according to Embodiment 1 is provided in such a way as to extend in a nearly horizontal direction. Incidentally, the support member 18 may provide a stator blade effect by being formed into a blade-like shape or a plate-like shape.

Heat exchanger

The heat exchanger 50 of the indoor unit 100 according to Embodiment 1 is placed on the leeward side of the fans 20. As the heat exchanger 50, a finned tube heat exchanger, for example, can be used. As shown in FIG. 1, the heat exchanger 50 is divided by a symmetric line 50a in the right side vertical section. The symmetric line 50a divides an installation range of the heat exchanger 50 in this section into left and right, substantially in the middle portion. That is, the front side heat exchanger 51 is placed on the front side (on the left side on the paper surface in FIG. 1) with respect to the symmetric line 50a, and the back side heat exchanger 55 is placed on the back side (on the right side on the paper surface in FIG. 1) with respect to the symmetric line 50a.

In addition, the front side heat exchanger 51 and the back side heat exchanger 55 are placed inside the casing 1 in such a way that the space between the front side heat exchanger 51 and the back side heat exchanger 55 spreads with respect to the direction of the flow of air, that is, the cross-sectional shape of the heat exchanger 50 is substantially inverted V shape in the right side vertical section. In other words, the front side heat exchanger 51 and the back side heat exchanger 55 are placed in such a way as to be inclined with respect to the direction of the flow of air supplied from the fans 20.

Furthermore, the feature of the heat exchanger 50 is that the air passage area of the back side heat exchanger 55 is greater than the air passage area of the front side heat exchanger 51. That is, in the heat exchanger 50, the air volume of the back side heat exchanger 55 is larger than the air volume of the front side heat exchanger 51. In Embodiment 1, the length in the longitudinal direction of the back side heat exchanger 55 is longer than the length in the longitudinal direction of the front side heat exchanger 51 in the right side vertical section.

As a result, the air passage area of the back side heat exchanger 55 is greater than the air passage area of the front side heat exchanger 51. Incidentally, the front side heat exchanger 51 and the back side heat exchanger 55 are the same in other structures (such as the length in a depth direction in FIG. 1). That is, the heat transfer area of the back side heat exchanger 55 is greater than the heat transfer area of the front side heat exchanger 51. Moreover, the rotation shaft 20a of the fan 20 is placed above the symmetric line 50a.

With such a structure of the heat exchanger 50, as compared to the indoor unit of the conventional air-conditioning apparatus in which the fan is provided in the air outlet, it is possible to suppress the generation of a spiral flow of air blown out of the air outlet 3 and the occurrence of the wind speed distribution. Moreover, with such a structure of the heat exchanger 50, the air volume of the back side heat exchanger 55 is larger than the air volume of the front side heat exchanger 51.

In addition, due to this difference in air volume, when the air that has passed through the front side heat exchanger 51 and the air that has passed through the back side heat exchanger 55 meet, the resultant air bends toward the front side (the air outlet 3 side). This eliminates the need for sharply bending the air flow in the vicinity of the air outlet 3, thereby reducing a pressure loss in the vicinity of the air outlet 3.

Moreover, in the indoor unit 100 according to Embodiment 1, the direction of the flow of air flowing from the back side heat exchanger 55 is the flow from the back side to the front side. As a result, the indoor unit 100 according to Embodiment 1 bends the flow of air that has passed through the heat exchanger 50 more easily as compared to a case in which the heat exchanger 50 is placed to be substantially V shape in the right side vertical section.

Since the indoor unit 100 has a plurality of fans 20, the indoor unit 100 tends to be heavy in weight. When the indoor unit 100 becomes heavy, the strength of the wall surface on which the indoor unit 100 is installed is required, which imposes restrictions on installation. Therefore, it is preferable to reduce the weight of the heat exchanger 50. Moreover, in the indoor unit 100, since the fans 20 are placed on the upstream side of the heat exchanger 50, the indoor unit 100 becomes higher, which tends to impose restrictions on installation. As a result, it is preferable to reduce the weight of the heat exchanger 50. Moreover, it is preferable to make the heat exchanger 50 smaller.

Therefore, in Embodiment 1, as the heat exchanger 50 (the front side heat exchanger 51 and the back side heat exchanger 55), a finned tube heat exchanger is used to make the heat exchanger 50 smaller. More specifically, the heat exchanger 50 according to Embodiment 1 includes a plurality of fins 56 stacked with a predetermined space and a plurality of heat transfer pipes 57 penetrating these fins 56. In Embodiment 1, the fins 56 are stacked in the left/right direction (the direction orthogonal to the paper surface in FIG. 1) of the casing 1.

That is, the heat transfer pipes 57 penetrate the fins 56 in the left/right direction (the direction orthogonal to the paper surface in FIG. 1) of the casing 1. Moreover, in Embodiment 1, to improve the heat exchange efficiency of the heat exchanger 50, two lines of heat transfer pipes 57 are placed in the air flow direction (the width direction of the fins 56) of the heat exchanger 50. These heat transfer pipes 57 are placed in a nearly staggered arrangement in the right side vertical section.

Furthermore, the heat transfer pipes 57 are formed as small-diameter (diameter: about 3 to 7 mm) circular pipes and R32 is used as the refrigerant flowing through the heat transfer pipes 57 (the refrigerant used in the indoor unit 100 and the air-conditioning apparatus provided with the indoor unit 100), whereby the heat exchanger 50 is made smaller. That is, the heat exchanger 50 allows the refrigerant flowing through the heat transfer pipes 57 and the room air to exchange heat via the fins 56. Therefore, when the heat transfer pipes 57 are made to be thin, as compared to a heat exchanger with large-diameter heat transfer pipes, the pressure loss of the refrigerant is increased at the same refrigerant circulation volume.

However, the latent heat of evaporation of R32 is greater than the latent heat of evaporation of R410A at the same temperature, and R32 can display the same ability as that of R410A at a lower refrigerant circulation volume. Therefore, by using R32, it is possible to reduce the amount of used refrigerant and reduce a pressure loss in the heat exchanger 50. Thus, by forming the heat transfer pipes 57 as thin circular pipes and using R32 as the refrigerant, it is possible to make the heat exchanger 50 smaller.

Moreover, in the heat exchanger 50 according to Embodiment 1, the fins 56 and the heat transfer pipes 57 are formed of aluminum or an aluminum alloy, whereby the weight of the heat exchanger 50 is reduced. Incidentally, when the weight of the heat exchanger 50 does not impose restrictions on installation form, of course the heat transfer pipes 57 may be formed of copper.

Finger guard and filter

Furthermore, in the indoor unit 100 according to Embodiment 1, a finger guard 15 and a filter 10 are provided in the air inlet 2. The finger guard 15 is provided to make it impossible for a hand to touch the rotating fan 20. Therefore, the finger guard 15 may have any shape as long as the shape makes it impossible for a hand to touch the fan 20. For example, the finger guard 15 may be lattice-shaped or may have a circular shape formed of a large number of different large and small rings.

Moreover, the finger guard 15 may be formed of a material such as resin or a metal material. When strength is required, it is desirable that the finger guard 15 be formed of metal. In addition, from the viewpoint of reducing the air flow resistance and retaining strength, it is preferable that the finger guard 15 be as thin as possible, be formed of a strong material, and have a strong shape.

The filter 10 is provided to prevent dust from flowing into the indoor unit 100. The filter 10 is detachably provided in the casing 1. Moreover, though not shown in the drawing, the indoor unit 100 according to Embodiment 1 may be provided with an automatic cleaning mechanism that automatically cleans the filter 10.

Air direction control vane

Furthermore, the indoor unit 100 according to Embodiment 1 is provided with, in the air outlet 3, the up/down vane 70 and the left/right vane (not shown) which serve as a mechanism controlling the direction in which the air flow is blown.

Drain pan

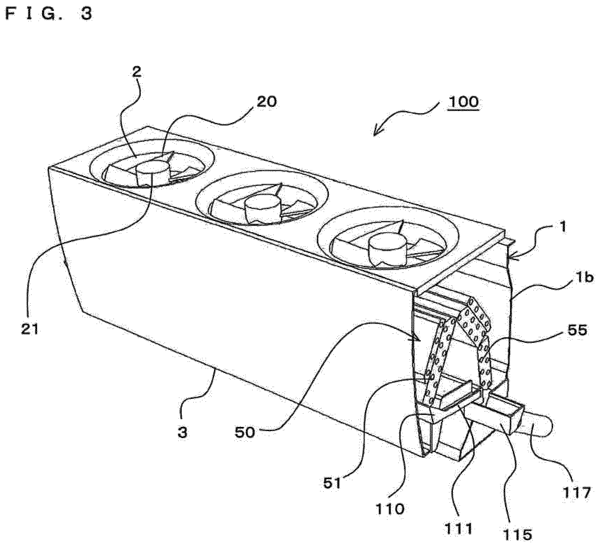

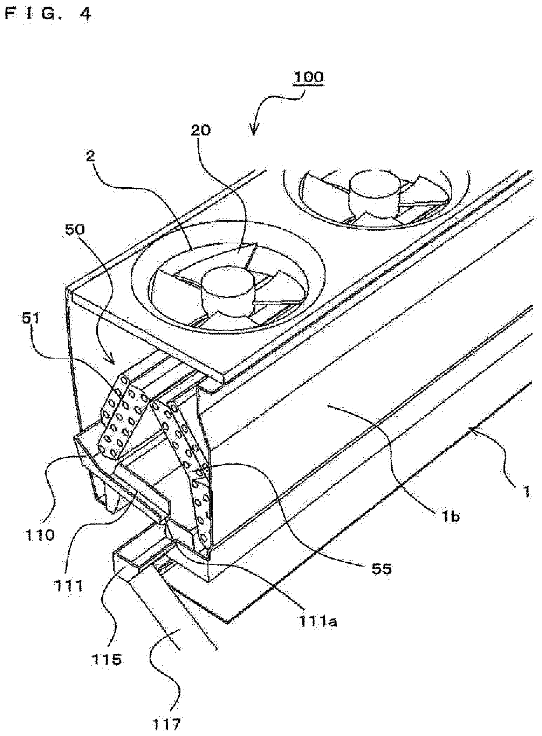

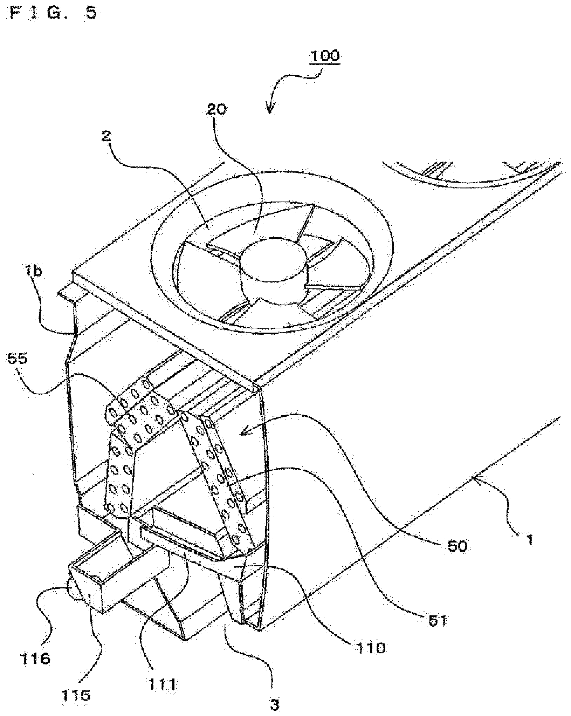

FIG. 3 is a perspective view showing the indoor unit, viewed from the right side of a front, according to Embodiment 1 of the present invention. FIG. 4 is a perspective view showing the indoor unit viewed from the right side of a back. FIG. 5 is a perspective view showing the indoor unit viewed from the left side of the front.

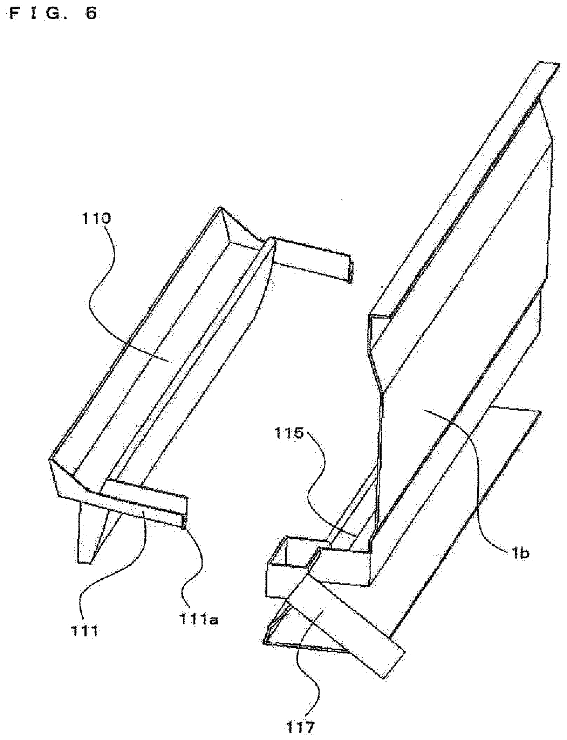

Moreover, FIG. 6 is a perspective view showing a drain pan according to Embodiment 1 of the present invention. Incidentally, to facilitate the understanding of the shape of the drain pan, in FIGs. 3 and 4, the right side of the indoor unit 100 is shown in cross section, and, in FIG. 5, the left side of the indoor unit 100 is shown in cross section.

Below a lower end of the front side heat exchanger 51 (a front side end of the front side heat exchanger 51), a front side drain pan 110 is provided. Below a lower end of the back side heat exchanger 55 (a back side end of the back side heat exchanger 55), a back side drain pan 115 is provided. Incidentally, in Embodiment 1, the back side drain pan 115 and a back part 1b of the casing 1 are formed integrally. In the back side drain pan 115, at both of a left side end and a right side end, connection openings 116 to which a drain hose 117 is connected are provided.

Incidentally, it is not necessary to connect the drain hose 117 to both of the connection openings 116, and it is necessary simply to connect the drain hose 117 to one of the connection openings 116. For example, when it is necessary to draw the drain hose 117 to the right side of the indoor unit 100 at the time of the installation of the indoor unit 100, the drain hose 117 is connected to the connection opening 116 provided at the right side end of the back side drain pan 115, and, advisably, the connection opening 116 provided at the left side end of the back side drain pan 115 is closed with a rubber cap or the like.

The front side drain pan 110 is placed in a position higher than the back side drain pan 115. Moreover, between the front side drain pan 110 and the back side drain pan 115, discharge passages 111 serving as drain movement passages are provided at both of the left side end and the right side end. The front side ends of the discharge passages 111 are connected to the front side drain pan 110 and are provided to be inclined downward from the front side drain pan 110 to the back side drain pan 115. Moreover, ligulate parts 111a are formed at the back side ends of the discharge passages 111. The back side ends of the discharge passages 111 are placed to hang over the top face of the back side drain pan 115.

When the room air is cooled by the heat exchanger 50 in cooling operation, condensation occurs in the heat exchanger 50. Then, the dew adhering to the front side heat exchanger 51 drops from the lower end of the front side heat exchanger 51 and is received by the front side drain pan 110. The dew adhering to the back side heat exchanger 55 drops from the lower end of the back side heat exchanger 55 and is received by the back side drain pan 115.

Moreover, in Embodiment 1, since the front side drain pan 110 is provided in a position higher than the back side drain pan 115, the drain recovered by the front side drain pan 110 flows through the discharge passages 111 toward the back side drain pan 115. Then, the drain drops from the ligulate parts 111a of the discharge passages 111 into the back side drain pan 115 and is recovered by the back side drain pan 115. The drain recovered by the back side drain pan 115 passes through the drain hose 117 and is discharged to the outside of the casing 1 (the indoor unit 100).

As in Embodiment 1, by providing the front side drain pan 110 in a position higher than the back side drain pan 115, it is possible to collect the drain received by both drain pans in the back side drain pan 115 (the drain pan placed in a position closest to the back side of the casing 1). Therefore, by providing the back side drain pan 115 with the connection openings 116 for the drain hose 117, it is possible to discharge the drain recovered by the front side drain pan 110 and the back side drain pan 115 to the outside of the casing 1.

This eliminates the need for attaching or removing, for example, the drain pan to which the drain hose 117 is connected when, for example, maintenance of the indoor unit 100 (such as cleaning of the heat exchanger 50) is performed by opening the front part or the like of the casing 1, and improves the workability of maintenance or the like.

Moreover, since the discharge passages 111 are provided at both the left side end and the right side end, even when the indoor unit 100 is installed in an inclined state, the drain recovered by the front side drain pan 110 can be reliably guided to the back side drain pan 115. Furthermore, since the connection openings to which the drain hose 117 is connected are provided at both the left side end and the right side end, it is possible to choose the direction in which the hose is drawn in accordance with the installation conditions of the indoor unit 100. This improves workability at the time of installation of the indoor unit 100. In addition, since the discharge passages 111 are placed to hang over the back side drain pan 115 (that is, since a connection mechanism is not required between the discharge passages 111 and the back side drain pan 115), the front side drain pan 110 can be easily attached and removed, which further enhances ease of maintenance.

Incidentally, the discharge passages 111 may be placed in such a way that the front side drain pan 110 hangs over the discharge passages 111 by connecting the back side ends of the discharge passages 111 to the back side drain pan 115. With such a structure, it is possible to obtain the same effects as those of the structure in which the discharge passages 111 are placed to hang over the back side drain pan 115. Moreover, the front side drain pan 110 does not necessarily have to be higher than the back side drain pan 115. Even when the front side drain pan 110 and the back side drain pan 115 are the same in height, it is possible to discharge the drain recovered by both drain pans from the drain hose connected to the back side drain pan 115.

Nozzle

Furthermore, the indoor unit 100 according to Embodiment 1 is configured such that, in the right side vertical section, the entrance-side opening length d1 of the nozzle 6 (the length d1 of an aperture between the drain pans that is defined as the distance between the front side drain pan 110 and the back side drain pan 115) is longer than the exit-side opening length d2 of the nozzle 6 (the length of the air outlet 3). That is, in the nozzle 6 of the indoor unit 100, d1 > d2 holds (see FIG. 1).

The reason to have d1 > d2 in the nozzle 6 is as follows. Incidentally, since d2 has an influence on ease of arrival of an air flow, which is one of the basic features of the indoor unit, the descriptions below assume that d2 of the indoor unit 100 according to Embodiment 1 is nearly equal in length to the air outlet of the conventional indoor unit.

By making the shape of the nozzle 6 in a vertical section d1 > d2, the air passage is widened, and it is possible to increase the angle A (the angle which the front side heat exchanger 51 forms with the back side heat exchanger 55 on the downstream side of the heat exchanger 50) of the heat exchanger 50 placed on the upstream side. As a result, the wind speed distribution generated in the heat exchanger 50 is alleviated and it is possible to form a wide air passage in a downstream part of the heat exchanger 50, making it possible to reduce the pressure loss of the whole of indoor unit 100. Furthermore, it is possible to uniformize, by the effect of a contracted flow, the uneven distribution of wind speed that was generated near the entrance of the nozzle 6 and guide the air to the air outlet 3.

For example, in the case of d1 = d2, the uneven distribution of wind speed that was generated near the entrance of the nozzle 6 (for example, the flow that tends to move toward the back side) still remains as the uneven distribution of wind speed in the air outlet 3. That is, in the case of d1 = d2, the air is blown out of the air outlet 3 with the uneven distribution of wind speed. Moreover, for example, in the case of d1 < d2, when the air that has passed through the front side heat exchanger 51 meet with the air that has passed through the back side heat exchanger 55 near the entrance of the nozzle 6, a contracted flow loss becomes large. Therefore, in the case of d1 < d2, if the diffuse effect of the air outlet 3 is not obtained, a loss corresponding to a contracted flow loss is produced.

ANC

Moreover, in the indoor unit 100 according to Embodiment 1, an active noise cancellation mechanism is installed as shown in FIG. 1.

More specifically, the noise cancellation mechanism of the indoor unit 100 according to Embodiment 1 is formed of a noise detecting microphone 161, a control speaker 181, a noise-cancellation effect detecting microphone 191, and a signal processor 201. The noise detecting microphone 161 is a noise detecting device that detects operation sound (noise) of the indoor unit 100, the operation sound including air-sending sound of the fans 20. The noise detecting microphone 161 is disposed between the fans 20 and the heat exchanger 50. In Embodiment 1, the noise detecting microphone 161 is provided in the front part in the casing 1.

The control speaker 181 is a control sound output device that outputs control sound for the noise. The control speaker 181 is disposed below the noise detecting microphone 161 and above the heat exchanger 50. In Embodiment 1, the control speaker 181 is provided in the front part in the casing 1 in such a way as to face the middle of the air passage. The noise-cancellation effect detecting microphone 191 is a noise cancellation effect detection device that detects the noise cancellation effect of the control sound. The noise-cancellation effect detecting microphone 191 is provided near the air outlet 3 to detect the noise from the air outlet 3.

Moreover, the noise-cancellation effect detecting microphone 191 is attached in a position that stays out of a wind flow in such a way that the noise-cancellation effect detecting microphone 191 is not exposed to the air blown out of the air outlet 3. The signal processor 201 is a control sound generation device that makes the control speaker 181 output the control sound based on the detection results of the noise detecting microphone 161 and the noise-cancellation effect detecting microphone 191. The signal processor 201 is housed in the controller 281, for example.

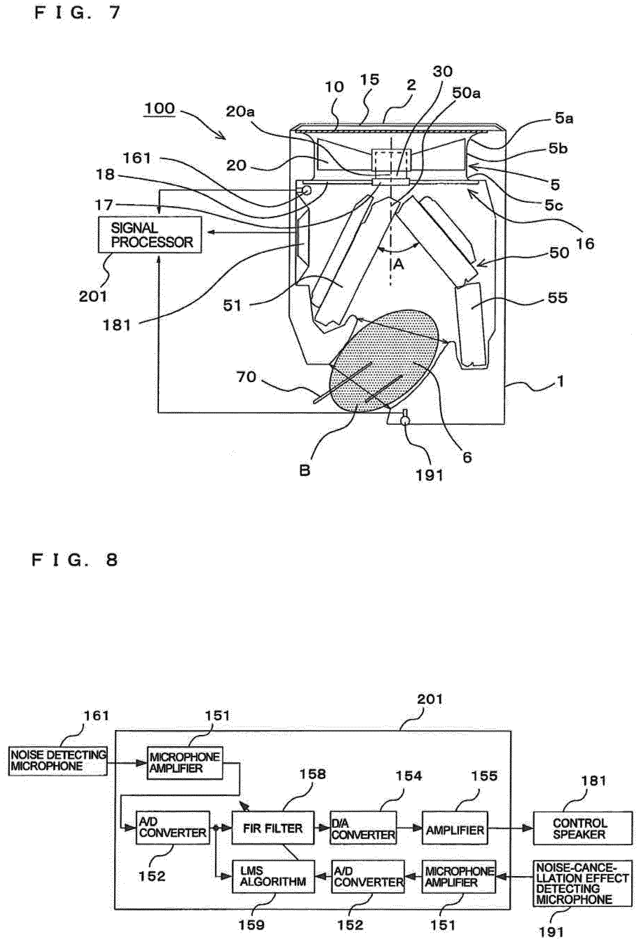

FIG. 8 is a block diagram showing the signal processor according to Embodiment 1 of the present invention. The electric signal that is input from the noise detecting microphone 161 and the noise-cancellation effect detecting microphone 191 is amplified by a microphone amplifier 151 and is converted from an analog signal to a digital signal by an A/D converter 152. The digital signal obtained by conversion is input to an FIR filter 158 and an LMS algorithm 159.

The FIR filter 158 generates a control signal corrected so that the noise detected by the noise detecting microphone 161 has the same amplitude and reversed phase as compared with when that noise arrives at a place in which the noise-cancellation effect detecting microphone 191 is installed. Then, the control signal is converted from a digital signal to an analog signal by a D/A converter 154, amplified by an amplifier 155, and emitted as control sound from the control speaker 181.

When, for example, the air-conditioning apparatus performs cooling operation, as shown in FIG. 7, since the temperature of an area B between the heat exchanger 50 and the air outlet 3 decreases due to the cold air, condensation by which water vapor in the air appears as water droplets occurs. It is for this reason that a water pan or the like (not shown) for preventing the water droplets from coming out of the air outlet 3 is attached to the indoor unit 100 in a position near the air outlet 3. Incidentally, since an area in which the noise detecting microphone 161 and the control speaker 181 are disposed, and which is an upstream part of the heat exchanger 50, is an upstream part of the area which is cooled by the cold air, condensation does not occur.

Next, a method for suppressing the operation sound of the indoor unit 100 will be described. The operation sound (noise) including air-sending sound of the fans 20 in the indoor unit 100 is detected by the noise detecting microphone 161 attached between the fans 20 and the heat exchanger 50, becomes a digital signal via the microphone amplifier 151 and the A/D converter 152, and is input to the FIR filter 158 and the LMS algorithm 159.

The tap coefficient of the FIR filter 158 is sequentially updated by the LMS algorithm 159. The tap coefficient is updated by the LMS algorithm 159 in accordance with Expression (1): $h(n + 1) = h(n) + 2 \cdot \mu \cdot e(n) \cdot x(n)$. Then, an optimum tap coefficient is updated so that an error signal "e" approaches zero.

Incidentally, "h" is the tap coefficient of a filter, "e" is an error signal, "x" is a filter input signal, and $\mu$ is a step size parameter, and the step size parameter $\mu$ controls the amount of updates of a filter coefficient for each sampling.

As described above, the digital signal that has passed through the FIR filter 158 whose tap coefficient is updated by the LMS algorithm 159 is converted to an analog signal by the D/A converter 154, is amplified by the amplifier 155, and is emitted, as control sound, into the air passage in the indoor unit 100 from the control speaker 181 attached between the fans 20 and the heat exchanger 50.

On the other hand, the noise-cancellation effect detecting microphone 191 attached at a lower end of the indoor unit 100 in the direction of an outer side wall of the air outlet 3 in such a way as not to be exposed to the wind released from the air outlet 3 detects the sound obtained by making the control sound emitted from the control speaker 181 interfere with the noise that has propagated from the fans 20 through the air passage and has been produced from the air outlet 3.

Since the sound detected by the noise-cancellation effect detecting microphone 191 is entered in the error signal of the LMS algorithm 159 described above, the tap coefficient of the FIR filter 158 is updated to make the sound after interference approach zero. This makes it possible to suppress the noise near the air outlet 3 by the control sound that has passed through the FIR filter 158.

As described above, in the indoor unit 100 to which the active noise cancellation method is applied, the noise detecting microphone 161 and the control speaker 181 are disposed between the fans 20 and the heat exchanger 50, and the noise-cancellation effect detecting microphone 191 is attached in a position that is not exposed to a wind flow from the air outlet 3. This eliminates the need for attaching parts necessary for active noise cancellation in the area B in which condensation occurs, which makes it possible to prevent water droplets from adhering to the control speaker 181, the noise detecting microphone 161, and the noise-cancellation effect detecting microphone 191 and prevent noise cancellation performance degradation and a breakdown of a speaker or a microphone.

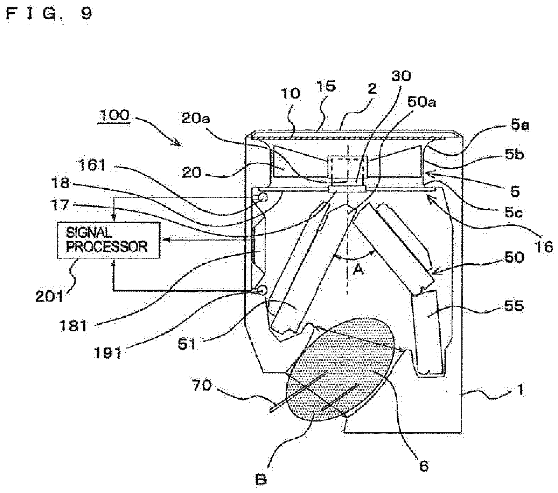

Incidentally, the installation positions of the noise detecting microphone 161, the control speaker 181, and the noise-cancellation effect detecting microphone 191 shown in Embodiment 1 are mere examples. For example, as shown in FIG. 9, along with the noise detecting microphone 161 and the control speaker 181, the noise-cancellation effect detecting microphone 191 may be disposed between the fans 20 and the heat exchanger 50. Moreover, the microphone has been taken up as an example of detection means for detecting noise or a noise cancellation effect after noise is cancelled out by the control sound; instead, the detection means may be formed of an acceleration sensor or the like that senses the vibration of the casing.

Furthermore, by treating sound as disturbance of an air flow, noise or a noise cancellation effect after noise is cancelled out by the control sound may be detected as disturbance of an air flow. That is, as detection means for detecting noise or a noise cancellation effect after noise is cancelled out by the control sound, a flow rate sensor, a hot wire probe, or the like that detects an air flow may be used. It is also possible to detect an air flow by increasing the gain of a microphone.

Moreover, in Embodiment 1, the FIR filter 158 and the LMS algorithm 159 are used in the signal processor 201. However, it is sufficient that the signal processor 201 is an adaptive signal processing circuit that makes the sound detected by the noise-cancellation effect detecting microphone 191 approach zero and may be a signal processor using a filtered-X algorithm which is commonly used in the active noise cancellation method. Furthermore, the signal processor 201 may be configured to generate control sound by a fixed tap coefficient, not by adaptive signal processing. Moreover, the signal processor 201 may be an analog signal processing circuit, not digital signal processing.

Furthermore, Embodiment 1 deals with a case in which the heat exchanger 50 performing cooling of air by which condensation occurs is disposed. However, Embodiment 1 can also be applied to a case in which the heat exchanger 50 inside which no condensation occurs is disposed, and, in this case, it is possible to prevent performance degradation of the noise detecting microphone 161, the control speaker 181, the noise-cancellation effect detecting microphone 191, and the like without consideration of the presence or absence of the occurrence of condensation by the heat exchanger 50.

Embodiment 2

Fan and fan motor

In Embodiment 2 to Embodiment 14, examples of the fan 20 provided in the indoor unit 100 according to Embodiment 1 will be described.

The fan 20 provided in the indoor unit 100 according to Embodiment 1 may be structured as follows, for example. Functions and structures in Embodiment 2 that are the same as in Embodiment 1 are given the same reference characters in the following description.

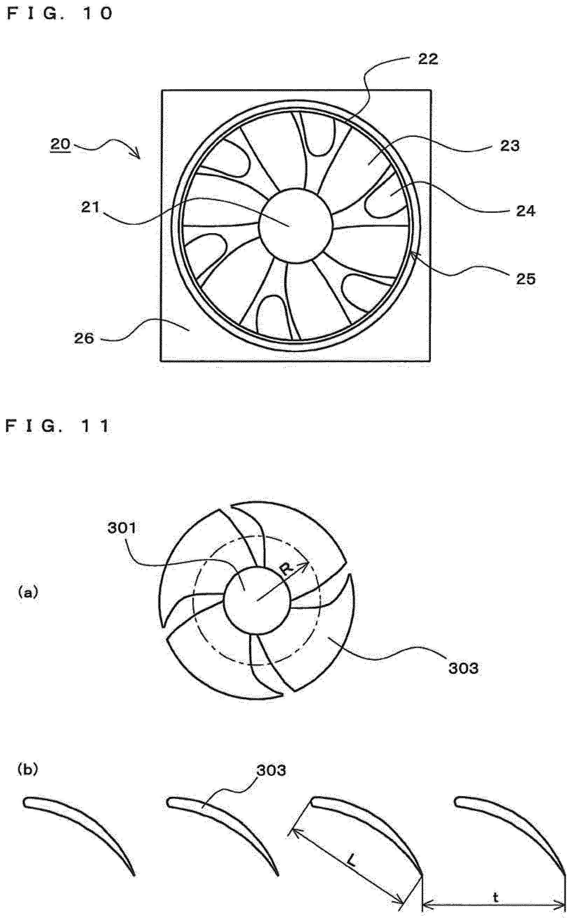

FIG. 10 is a front view showing an example of a fan according to Embodiment 2 of the present invention. Incidentally, in the drawings showing the fan 20 in the following descriptions, the fan 20 observed when the indoor unit 100 is viewed in a top view in a state in which the fan 20 is provided in the indoor unit 100 is assumed to be a front view of the fan 20.

The fan 20 according to Embodiment 2 is an axial flow fan, a diagonal flow fan, or the like in which a plurality of blades are provided on the outer periphery of a boss which is the center of rotation. The fan 20 includes a bladed wheel 25 and a cabinet 26.

The bladed wheel 25 includes a boss 21 which is the center of rotation, a plurality of blades 23 (main blades) supported on the outer periphery of the boss 21, and an annular member 22 provided on the perimeter side of the blades 23. Moreover, the bladed wheel 25 according to Embodiment 2 includes a plurality of sub-blades 24 supported by the annular member 22 toward the inner perimeter side (toward the boss 21). These sub-blades 24 are not supported on the outer periphery of the boss 21. This increases the number of blades (the number of blades 23 + the number of sub-blades 24) provided in the fan 20.

On the perimeter side of the bladed wheel 25, the cabinet 26 is provided with a predetermined gap left between the cabinet 26 and the perimeter of the bladed wheel 25. That is, the bladed wheel 25 is housed in the cabinet 26. The boss 21 of the bladed wheel 25 is connected to a fan motor 30 (not shown), and the bladed wheel 25 is rotated by the driving force of the fan motor.

Here, an advantage of increasing the number of blades of the fan 20 by the structure shown in Embodiment 2 will be described. FIG. 11 is a diagram describing the relationship between the installation configuration of blades (such as installation positions and the number of installed blades) and aerodynamic performance. Incidentally, FIG. 11(a) is a front view showing a common bladed wheel used in the axial flow fan or the diagonal flow fan. Moreover, FIG. 11(b) is a sectional view of a cascade of blades showing a planar development of a cylindrical section in a position indicated by dot-and-dash lines in FIG. 11(a).

The aerodynamic performance of a cascade of blades is related to a chord-pitch ratio $\sigma = L/t$ defined by a chord length L and the interval "t" between the adjacent blades. Here, the chord length L is the length of a straight line connecting a leading edge and a trailing edge of a blade 303. In general, it is known that cascades of blades having similar figures with a constant chord-pitch ratio $\sigma$ can obtain roughly the same aerodynamic performance. That is, to obtain the same aerodynamic performance as that of a blade with a long chord length L with a blade with a short chord length L, it is necessary simply to increase the number of blades.

However, increasing the number of blades in a conventional structure means increasing the number of blades 303 supported on the outer periphery of a boss 301. Since restrictions and limitations for production and strength are imposed on a reduction in the thickness of a blade, an increase in the number of blades 303 results in a blockage of the air passage in an area surrounding the boss 301. Therefore, when the number of blades 303 is increased in the conventional structure, the air volume in an area surrounding the boss 301 is decreased.

Moreover, as a structure in which the chord length L is shortened without an increase in the number of blades 303, a structure in which the mounting angle of the blade 303 is changed might be an option. However, when the mounting angle of the blade 303 is changed, the angle of attack at which the blade 303 is inclined from the air flow is changed. As a result, in the fan, the efficient operating air volume is changed, which impairs compatibility with the conventional fan.

On the other hand, when the number of blades of the fan 20 (the bladed wheel 25) is increased by the structure shown in Embodiment 2, there is no need to increase the number of blades supported by the boss 21. This is because the sub-blades 24 are connected to the annular member 22, that is, the component other than the boss 21. Therefore, the chord length L can be shortened without a decrease in the air volume in an area surrounding the boss 21. Moreover, it is not necessary to change the angle of attack of the blade 23 and the sub-blade 24.

As described above, in the fan 20 structured in this manner, it is possible to shorten the chord length L of the blades 23 in a range in which the sub-blades 24 are placed while maintaining the fan efficiency of the fan 20. This makes it possible to reduce the thickness of the fan 20 (make the size of the bladed wheel 25 in the direction of a rotation shaft smaller) while maintaining fan efficiency.

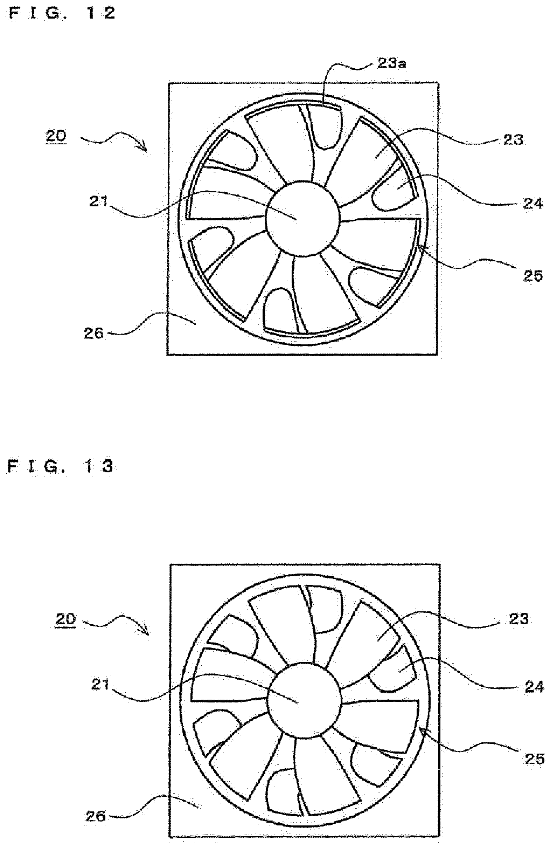

Incidentally, the structure for supporting the sub-blades 24 is not limited to the structure of FIG. 10. FIG. 12 is a front view showing another example of the fan according to Embodiment 2 of the present invention.

The fan 20 shown in FIG. 12 is provided with a projecting piece 23a on the perimeter of the blade 23. In addition, the sub-blades 24 are supported by the projecting pieces 23a toward the inner perimeter side (the boss 21 side). That is, the fan 20 has a structure in which the annular member 22 is divided into a plurality of parts.

FIG. 13 is a front view showing yet another example of the fan according to Embodiment 2 of the present invention. The fans 20 shown in FIGs. 10 and 12 are supported by respective members (the annular member 22 and the projecting pieces 23a) provided in the blades 23. On the other hand, in the fan 20 shown in FIG. 13, the sub-blades 24 are directly supported by the blades 23.

That is, it is sufficient that the sub-blades 24 are supported by any component other than the boss 21. When the sub-blades 24 are supported by the component other than the boss 21, it is possible to shorten the chord length L of the blades 23 in a range in which the sub-blades 24 are placed while maintaining the fan efficiency of the fan. This makes it possible to reduce the thickness of the fan 20 (make the size of the bladed wheel 25 in the direction of a rotation shaft smaller) while maintaining fan efficiency.

Embodiment 3

As described in Embodiment 2, various structures can be adopted as a structure that supports the sub-blades 24. Of these structures, the structure that supports the sub-blades 24 with the annular member 22 can obtain the following effects. Items in Embodiment 3 that are not particularly described are the same as in Embodiment 2, and functions and structures that are the same as in Embodiment 2 are given the same reference characters in the following description.

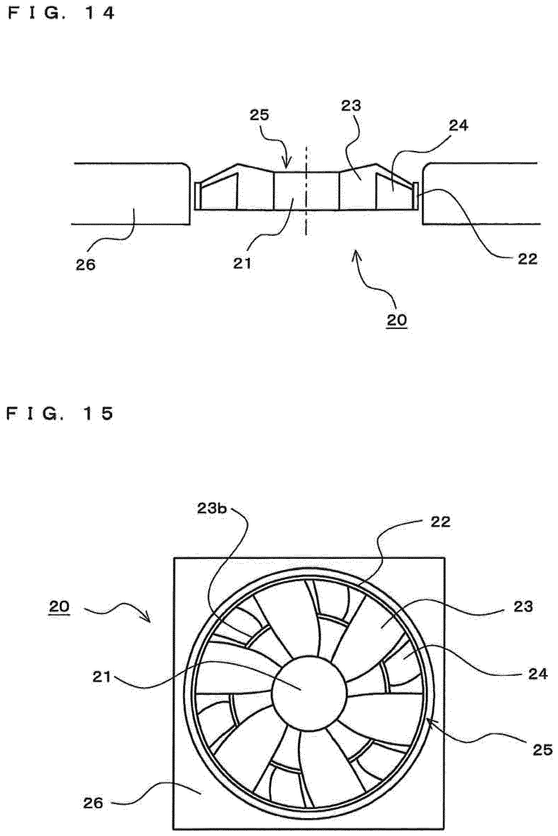

FIG. 14 is a vertical sectional view showing an example of a fan according to Embodiment 3 of the present invention. As is the case with the fan 20 shown in FIG. 10 of Embodiment 2, the fan 20 according to Embodiment 3 supports the sub-blades 24 with the annular member 22. That is, the perimeters of the blades 23 are connected by the annular member 22. In other words, the blades 23 are supported not only by the boss 21 but also by the annular member 22.

Since centrifugal force acts on the blades 23 supported by the boss 21 by the rotation of the bladed wheel 25, it is necessary to take measures to improve the strength of the junction with the boss 21. This makes it necessary to lengthen the chord length by making a blade on the inner perimeter side (toward the boss 21) thicker and imposes a restriction in design that necessitates a reduction of the weight of the blade 23 on the perimeter side (toward the cabinet 26).

However, in the fan 20 according to Embodiment 3, the centrifugal force acting on the blades 23 by the rotation of the bladed wheel 25 is supported also by the annular member 22. This makes it possible to increase design flexibility of the blade 23 such as the thickness thereof at the junction with the boss 21 and the chord length.

Incidentally, in FIG. 14, the shape of the blade 23 and the shape of the sub-blade 24 are different from each other, but the shapes (more specifically, the shapes except for the junction) of the blade 23 and the sub-blade 24 may be made equal to each other.

Embodiment 4

For example, the sub-blades 24 described in Embodiment 2 and Embodiment 3 can be supported in the following manner. Items in Embodiment 4 that are not particularly described are the same as in Embodiment 2 or Embodiment 3, and functions and structures that are the same as in Embodiment 2 or Embodiment 3 are given the same reference characters in the following description.

FIG. 15 is a front view showing an example of a fan according to Embodiment 4 of the present invention.

The fan 20 according to Embodiment 4 is obtained by adding an annular member 23b to the fan 20 shown in FIG. 10. The annular member 23b is provided in such a way as to connect the blades 23 roughly in the middle portion thereof. In addition, the sub-blades 24 are supported not only by the annular member 22 provided on the perimeter of the blades 23 but also by the annular member 23b.

In the fan 20 structured in this manner, since the sub-blades 24 can be supported in two places, it is possible to suppress the vibration of the sub-blades 24 and increase the strength of the sub-blades 24.

Incidentally, the structure that supports the sub-blades 24 is not limited to the structure of FIG. 15.

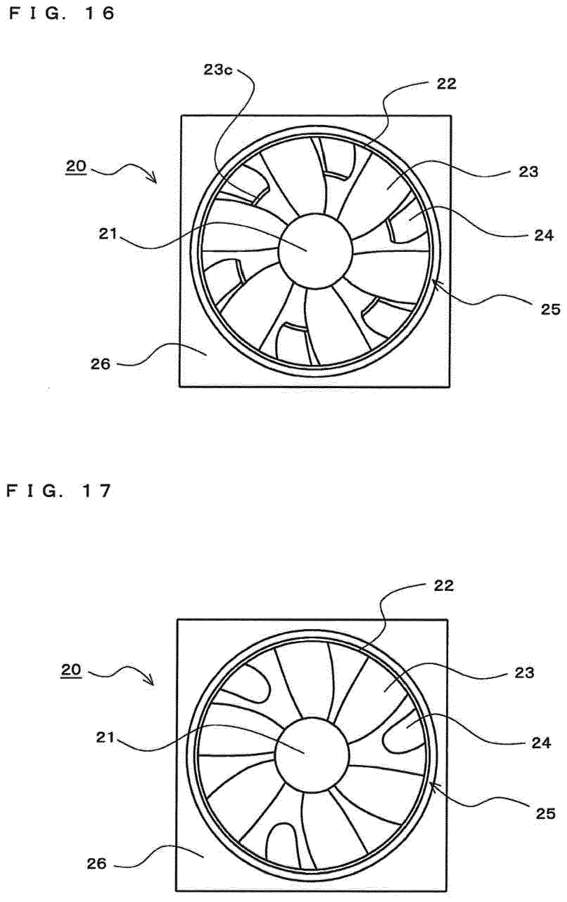

FIG. 16 is a front view showing another example of the fan according to Embodiment 4 of the present invention.

The fan 20 shown in FIG. 16 is obtained by adding a projecting piece 23c to the fan 20 shown in FIG. 10. The projecting piece 23c is provided roughly in the middle portion of each blade 23. In addition, the sub-blades 24 are supported not only by the annular member 22 provided on the perimeter of the blades 23 but also by the projecting pieces 23c. That is, the fan 20 has a structure in which the annular member 23b of the fan 20 is divided into a plurality of parts.

Moreover, for example, a structure in which the sub-blades 24 are supported in two places by providing the fan 20 shown in FIG. 12 with the annular member 23b or the projecting pieces 23c may be adopted. Furthermore, for example, a structure in which the sub-blades 24 are supported in two places by providing the fan 20 shown in FIG. 13 with the annular member 22 or the projecting pieces 23a shown in Embodiment 2 may be adopted. In addition, for example, the sub-blades 24 of the fans 20 shown in FIGs. 15 and 16 may be directly supported by the adjacent blades 23. With this structure, it is possible to support the sub-blades 24 in two or more places.

That is, it is sufficient that the sub-blades 24 are supported in more than one place. When the sub-blades 24 are supported in more than one place, it is possible to suppress the vibration of the sub-blades 24 and increase the strength of the sub-blades 24.

Embodiment 5

In Embodiment 2 to Embodiment 4, the blades 23 and the sub-blades 24 are the same in number and are disposed alternately in the rotation direction. However, the configuration is not limited to the above configuration, and the blades 23 and the sub-blades 24 can be disposed in the following manner, for example. Items in Embodiment 5 that are not particularly described are the same as in Embodiment 2 to Embodiment 4, and functions and structures that are the same as in Embodiment 2 to Embodiment 4 are given the same reference characters in the following description.

FIG. 17 is a front view showing an example of a fan according to Embodiment 5 of the present invention.

In the fan 20 shown in FIG. 17, while three sub-blades 24 are provided, six blades 23 are provided. In addition, as viewed in the rotation direction of the bladed wheel 25, one sub-blade 24 is provided after two blades 23 are provided. As for these blades 23 and sub-blades 24, the intervals (the intervals in a circumferential direction) between the adjacent blades are nearly uniform.

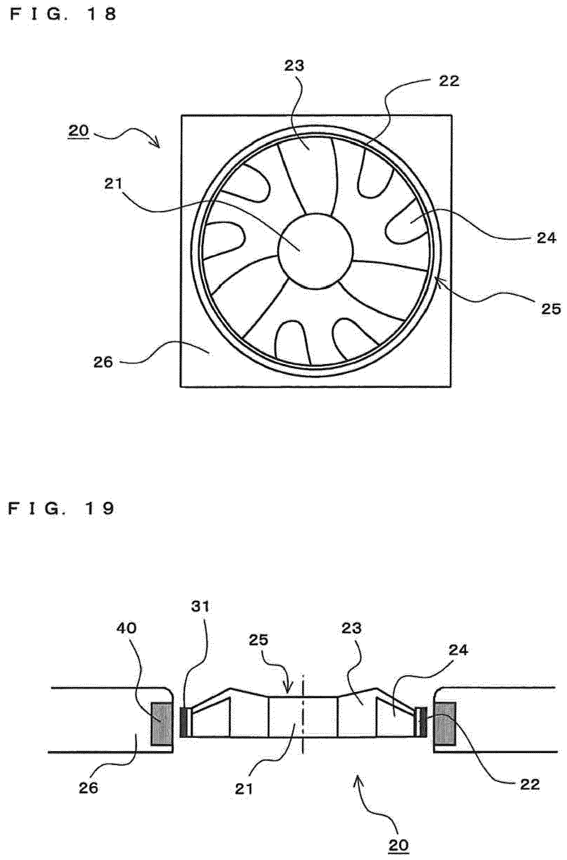

FIG. 18 is a front view showing another example of the fan according to Embodiment 5 of the present invention.

In the fan 20 shown in FIG. 18, while six sub-blades 24 are provided, three blades 23 are provided. In addition, as viewed in the rotation direction of the bladed wheel 25, two sub-blades 24 are provided after one blade 23 is provided. As for these blades 23 and sub-blades 24, the intervals (the intervals in a circumferential direction) between the adjacent blades are nearly uniform.

By setting the number of sub-blades 24 at a divisor or a multiple of the number of blades 23 and making the intervals (the intervals in a circumferential direction) between the blades 23 and the sub-blades 24 nearly uniform as described above, it is possible to obtain a bladed wheel that can maintain dynamic balance while it is rotated and operate stably in a bladed wheel with various design specifications.

Embodiment 6

In Embodiment 2 to Embodiment 5, the fan motor 30 that is externally driven is connected to the boss 21 to rotate the bladed wheel 25. However, the configuration is not limited to the above configuration, and the bladed wheel 25 may be rotated by the fan motor 30 with the following structure, for example. Items in Embodiment 6 that are not particularly described are the same as in Embodiment 2 to Embodiment 5, and functions and structures that are the same as in Embodiment 2 to Embodiment 5 are given the same reference characters in the following description. Moreover, in the following description, a case in which the fan motor 30 according to Embodiment 6 is adopted in the fan 20 described in Embodiment 3 is described.

FIG. 19 is a vertical sectional view showing an example of a fan according to Embodiment 6 of the present invention.

The fan 20 according to Embodiment 6 differs from the fan 20 described in Embodiment 3 in the following respects. First, the fan 20 according to Embodiment 6 is not provided with the fan motor 30 (the motor connected to the boss 21) that is externally driven, and that is provided in the fan 20 of Embodiment 3. In addition, in place of the fan motor 30 that is externally driven, a fan motor 30 provided with a rotor 31 and a stator 40, which will be described later, is provided.

More specifically, the rotor 31 is provided on the perimeter of the bladed wheel 25. Since the fan 20 according to Embodiment 6 is provided with the annular member 22 on the perimeter thereof, the rotor 31 is provided on the perimeter of the annular member 22. Moreover, the stator 40 is provided (placed) in the cabinet 26 in such a way as to face the rotor 31. In addition, the bladed wheel 25 is rotated by the driving force of the fan motor 30 provided with the rotor 31 and the stator 40.

In the fan 20 structured in this manner, a pace in which the fan motor that is externally driven is placed becomes unnecessary. This makes it possible to make the fan 20 thinner. Moreover, since the fan motor 30 can be formed in a large-diameter place, it is easy to generate large torque even by the generation of an equal magnetic attractive force (equal motor power consumption). As a result, it is possible to increase efficiency at equal cost, or it becomes possible to form a motor of equal performance by using low-cost magnet and armature, whereby a small and low-cost fan 20 can also be obtained.

Incidentally, in Embodiment 6, an example in which the fan motor 30 according to Embodiment 6 is adopted in the fan 20 according to Embodiment 3 has been described. However, it goes without saying that the fan motor 30 according to Embodiment 6 may be adopted in the fans 20 according to Embodiment 2, Embodiment 4, and Embodiment 5.

Embodiment 7

When the fan 20 is provided with the annular member 22 or the like, the fan 20 may be structured as in Embodiment 7, for example. Functions and structures in Embodiment 7 that are the same as in Embodiment 2 to Embodiment 6 are given the same reference characters in the following description.

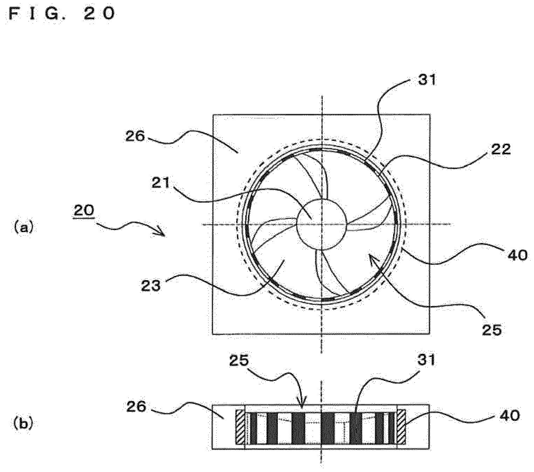

FIG. 20 is a diagram showing the general structure of an example of a fan according to Embodiment 7 of the present invention. Incidentally, FIG. 20(a) is a front view of the fan, and FIG. 20(b) is a side sectional view of the fan.

The fan 20 shown in FIG. 20 is an axial flow fan, a diagonal flow fan, or the like in which a plurality of blades 23 are provided on the outer periphery of a boss 21 which is the center of rotation. The fan 20 includes a bladed wheel 25 and a cabinet 26.

The bladed wheel 25 includes the boss 21, the plurality of blades 23 provided on the outer periphery of the boss 21, and a rotor 31 provided on the perimeter side of the blades 23. For example, the rotor 31 is formed by providing an annular member 22 or the like on the perimeter side of the blades 23 and forming the annular member 22 by using a magnetic material. Moreover, for example, the rotor 31 is formed by providing the annular member 22 or the like on the perimeter side of the blades 23 and attaching or embedding a magnet to or in the perimeter side of the annular member 22.

The bladed wheel 25 is housed in the cabinet 26. The cabinet 26 is provided with a stator 40 in a face (hereinafter, referred to as an inner perimeter) facing the perimeter side of the bladed wheel 25 (more specifically, the perimeter side of the rotor 31). That is, the rotor 31 and the stator 40 are disposed in such a way as to face each other. The bladed wheel 25 is rotated by the driving force of the fan motor 30 formed of the rotor 31 and the stator 40.

Incidentally, the fan 20 shown in FIG. 20 is an example of the fan described in Embodiment 7 of the present invention. The fan according to Embodiment 7 may be the following fan, for example.

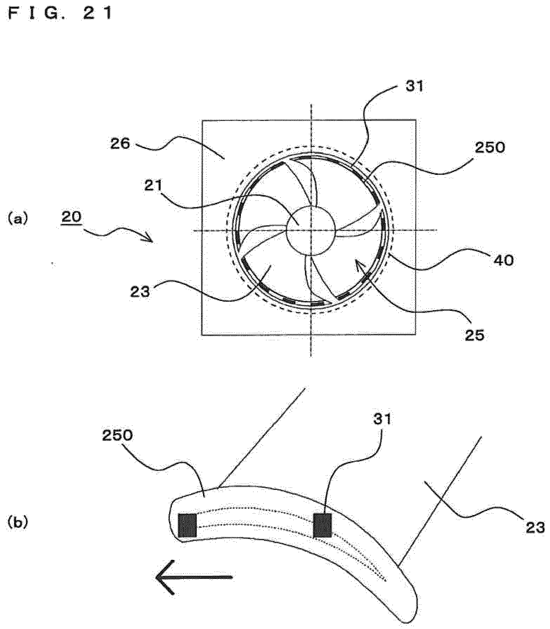

FIG. 21 is a diagram showing the general structure of another example of the fan according to Embodiment 7 of the present invention. Incidentally, FIG. 21(a) is a front view of the fan, and FIG. 21(b) is a perspective view showing the perimeter of the blade of the fan. Moreover, an arrow shown in FIG. 21(b) indicates the rotation direction of the blade.

The fan 20 shown in FIG. 21 is provided with a small wing 250 such as a winglet on the perimeter (the outer circumferential end) of the blade 23. For example, the rotor 31 is formed by forming the small wing 250 by using a magnetic material. Moreover, for example, the rotor 31 is formed by attaching or embedding a magnet to or in the perimeter side of the small wing 250.

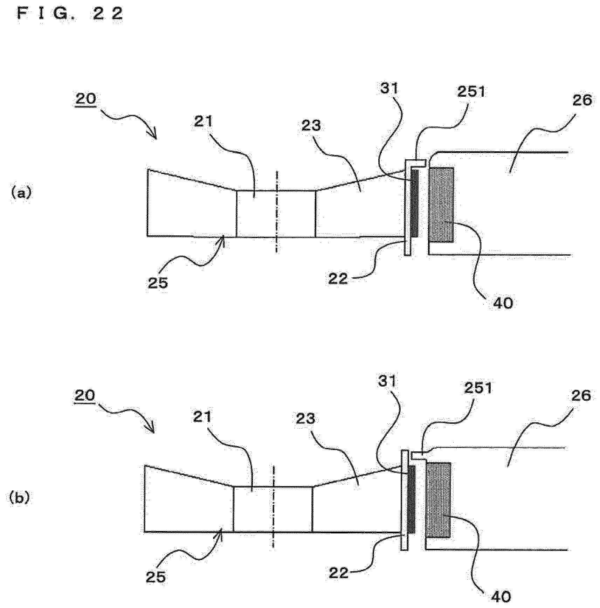

The fan 20 according to Embodiment 7 structured in this manner is provided with a convex portion 251 to increase fan efficiency. Incidentally, in FIGs. 22 to 24 showing an installation example (formation example) of the convex portion 251, a description will be given by focusing on the fan 20 provided with the annular member 22 on the perimeter of the blades 23 as an example.

For example, as shown in FIG. 22, the convex portion 251 may be provided in a position that is the air suction side. Moreover, as shown in FIG. 22(a), the convex portion 251 may be provided on the perimeter of the bladed wheel 25 (for example, the perimeter of the annular member 22). Furthermore, for example, as shown in FIG. 22(b), the convex portion 251 may be provided on the inner perimeter of the cabinet 26.

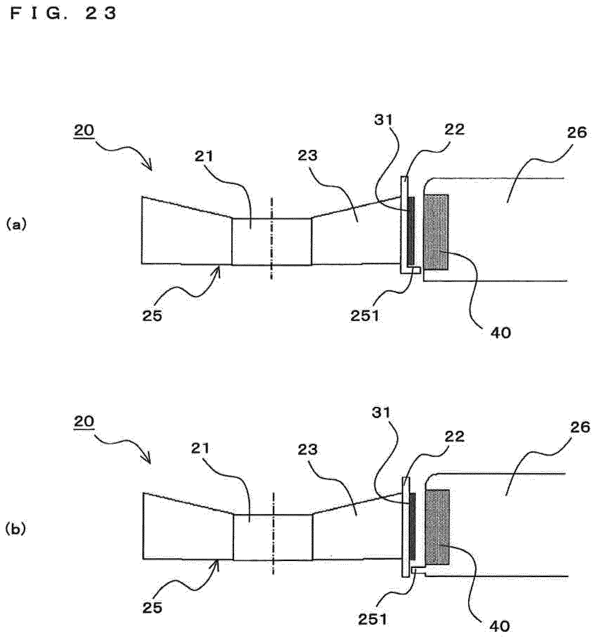

In addition, for example, as shown in FIG. 23, the convex portion 251 may be provided in a position that is the air discharge side. Moreover, as shown in FIG. 23(a), the convex portion 251 may be provided on the perimeter of the bladed wheel 25 (for example, the perimeter of the annular member 22). Furthermore, for example, as shown in FIG. 23(b), the convex portion 251 may be provided on the inner perimeter of the cabinet 26.

In addition, the convex portion 251 shown in FIGs. 22 and 23 may be provided on both of the perimeter of the bladed wheel 25 (for example, the perimeter of the annular member 22) and the inner perimeter of the cabinet 26. That is, the convex portions 251 provided on both of the perimeter of the bladed wheel 25 and the inner perimeter of the cabinet 26 may be provided in such a way as to face each other.

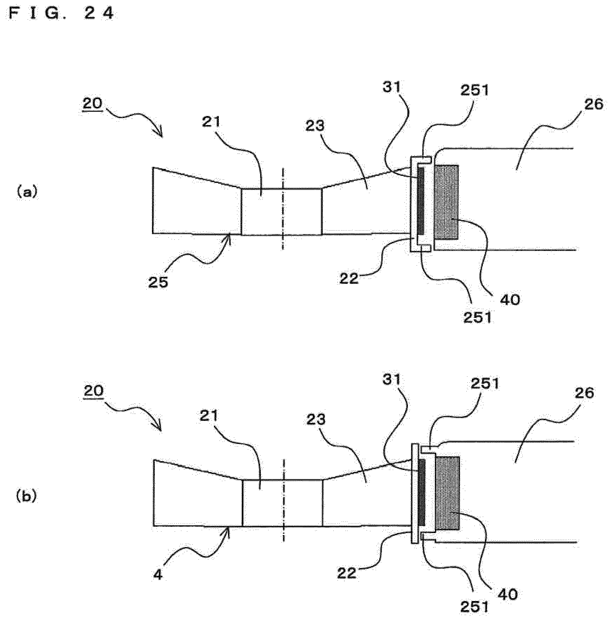

Moreover, for example, as shown in FIG. 24, the convex portion 251 may be provided on both of the air suction side and the air discharge side. Furthermore, as shown in FIG. 24(a), these convex portions 251 may be provided on the perimeter of the bladed wheel 25 (for example, the perimeter of the annular member 22). Furthermore, for example, as shown in FIG. 24(b), these convex portions 251 may be provided on the inner perimeter of the cabinet 26.

In addition, the convex portions 251 shown in FIG. 24 may be provided on both of the perimeter of the bladed wheel 25 (for example, the perimeter of the annular member 22) and the inner perimeter of the cabinet 26. For example, the convex portions 251 on the air suction side may be provided on the perimeter of the bladed wheel 25 (for example, the perimeter of the annular member 22), and the convex portions 251 on the air discharge side may be provided on the perimeter of the bladed wheel 25. It goes without saying that these formation positions may be reversed.

As described above, in the fan 20 structured in this manner, by providing the convex portion 251, it is possible to make the shortest distance between the bladed wheel 25 and the cabinet 26 shorter than the distance between the rotor 31 and the stator 40. As a result, the followings effects can be obtained.

For an increase in the efficiency of the motor, a shorter distance between the rotor and the stator is preferable (a smaller gap left between the rotor and the stator is preferable). However, in the conventional fan in which the rotor is provided on the perimeter of the bladed wheel and the stator is provided on the cabinet side, when the distance between the rotor and the stator is made shorter, a magnetic force generated between the rotor and the stator causes the bladed wheel to vibrate. Moreover, this vibrations cause noise. When the distance between the rotor and the stator is increased to prevent such vibration and noise, an air flow causing a decrease in fan efficiency is generated in an area surrounding the blade.

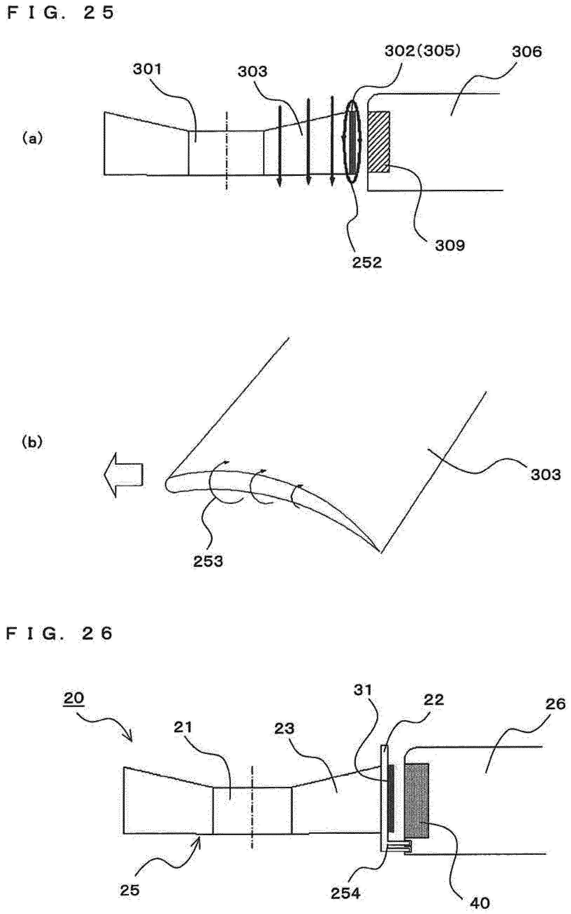

FIG. 25 is a diagram describing an example of an air flow that causes a decrease in fan efficiency, the air flow being generated in an area surrounding a blade. Incidentally, solid arrows shown in FIG. 25(a) and FIG. 25(b) indicate the air flow direction. Moreover, an outline arrow shown in FIG. 25(b) indicates the rotation direction of a blade 303.

For example, in the case of a conventional fan motor in which an annular member 302 and a rotor 305 are provided on the perimeter of the blades 303 formed in a boss 301, when the distance between the rotor 305 and a stator 309 is increased, a recirculation flow 252 shown in FIG. 25(a) is generated and fan efficiency is decreased. More specifically, between the rotor 305 and the stator 309, the air flows from the air discharge side which is at high pressure to the air suction side which is at low pressure. Then, the air is discharged again. As a result, the recirculation flow 252 that circulates around the annular member 302 and the rotor 305 is generated, and fan efficiency is decreased.

Moreover, for example, in the case of a conventional fan in which a small wing is formed on the perimeter of the blades 303 or a conventional fan in which an annular member, a small wing, and the like are not provided on the perimeter of the blades 303, when the distance between the rotor and the stator is increased, a leak flow 253 shown in FIG. 25(b) is generated and fan efficiency is decreased. More specifically, from the air discharge side which is at high pressure to the air suction side which is at low pressure, the leak flow 253 is generated on the outer circumferential end side of the blade 303, and fan efficiency is decreased.

However, the fan 20 according to Embodiment 7 makes the shortest distance between the bladed wheel 25 and the cabinet 26 shorter than the distance between the rotor 31 and the stator 40 by providing the convex portion 251. This makes it possible to set the distance between the rotor 31 and the stator 40 at a distance at which the vibration of the bladed wheel 25 and noise caused by this vibration can be suppressed. Moreover, by making the distance between the bladed wheel 25 and the cabinet 26 shorter, it is possible to suppress the recirculation flow 252 and the leak flow 253. That is, the fan 20 according to Embodiment 7 can increase fan efficiency independently of the distance between the rotor 31 and the stator 40, the distance which is a matter related to the design of a motor.

Moreover, by providing the convex portion 251 on both the perimeter of the bladed wheel 25 (for example, the perimeter of the annular member 22) and the inner perimeter of the cabinet 26, the sealing performance between the bladed wheel 25 and the cabinet 26 is enhanced, making it possible to further increase the fan efficiency of the fan 20.

Incidentally, the tip of the convex portion 251 shown in FIGs. 22 to 24 may have a labyrinth structure as shown in FIG. 26. FIG. 26 depicts a convex portion whose tip has a labyrinth structure as a convex portion 254. Moreover, FIG. 26 shows an example in which the convex portion 254 is provided on the air discharge side of the bladed wheel 25. Furthermore, the above-described convex portion 251 and convex portion 254 may be provided seamlessly on the perimeter of the bladed wheel 25 or the inner perimeter of the cabinet 26 or may be provided intermittently at predetermined intervals.

Embodiment 8

With a structure which is described in Embodiment 8, as is the case with Embodiment 7, it is possible to make the shortest distance between the bladed wheel 25 and the cabinet 26 shorter than the distance between the rotor 31 and the stator 40. Items in Embodiment 8 that are not particularly described are the same as in Embodiment 7, and functions and structures that are the same as in Embodiment 7 are given the same reference characters in the following description.

A fan 20 according to Embodiment 8 is a fan in which, for example, an annular member 22 and a small wing 250 are formed on the perimeter of the blades 23 and the rotor 31 is provided on the perimeter of these components. That is, the basic structure of the fan 20 is the same as the fan 20 according to Embodiment 7 and the basic structure of the fan 20. The fan 20 according to Embodiment 8 is provided with an insulating layer 257 such as resin, for example, provided on at least one of the perimeter of the rotor 31 and the inner perimeter of the stator 40 in place of the convex portion 251 and the convex portion 254 described in Embodiment 7.

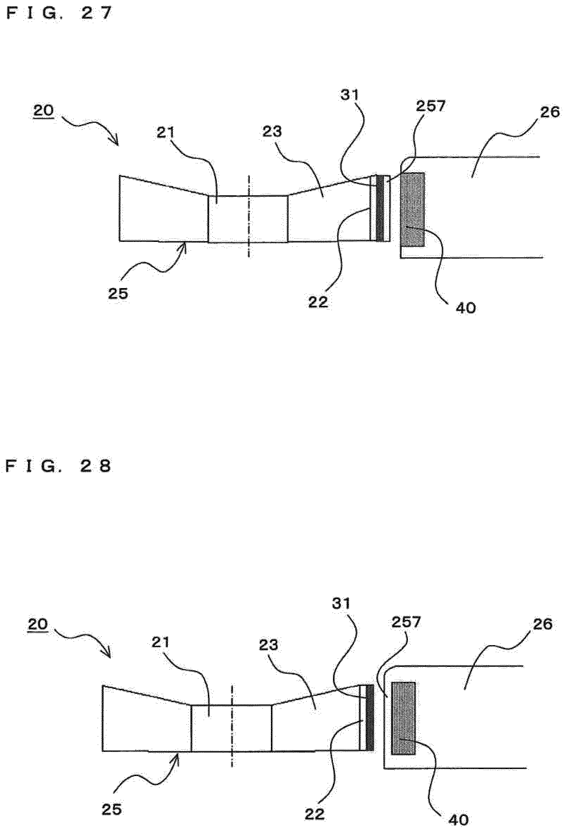

The insulating layer 257 is provided in the following manner, for example. Incidentally, in FIGs. 27 to 29 depicting installation examples (formation examples) of the insulating layer 257, a description will be given by focusing the fan 20 provided with the annular member 22 on the perimeter of the blades 23 as an example.

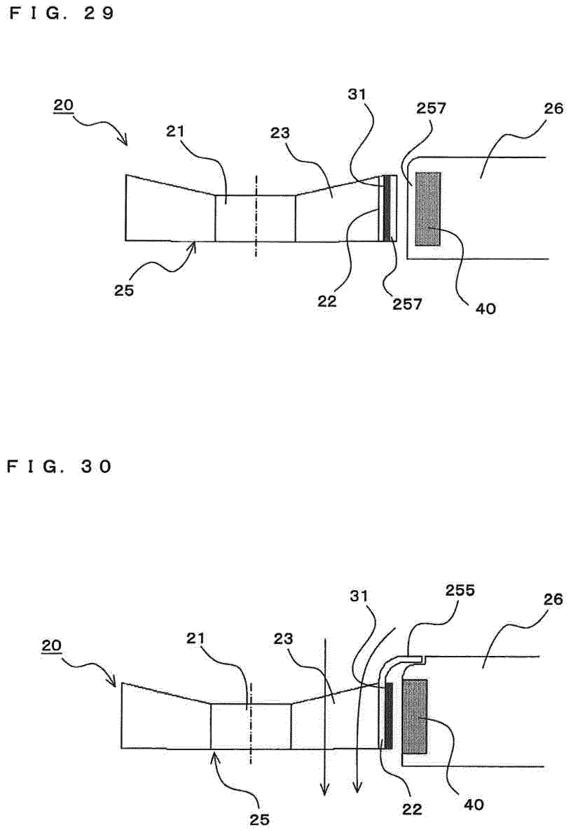

For example, as shown in FIG. 27, the insulating layer 257 may be provided on the perimeter of the rotor 31. Moreover, for example, as shown in FIG. 28, the insulating layer 257 may be provided on the inner perimeter of the stator 40. Furthermore, for example, as shown in FIG. 29, the insulating layer 257 may be provided on both the perimeter of the rotor 31 and the inner perimeter of the stator 40.

As described above, in the fan 20 structured in this manner, as is the case with Embodiment 7, it is possible to make the shortest distance between the bladed wheel 25 and the cabinet 26 shorter than the distance between the rotor 31 and the stator 40. As a result, as is the case with Embodiment 7, it is possible to increase fan efficiency independently of the distance between the rotor 31 and the stator 40, the distance which is a matter related to the design of a motor.

Moreover, in the fan 20 structured in this manner, it is possible to make the shortest distance between the bladed wheel 25 and the cabinet 26 shorter than the distance between the rotor 31 and the stator 40 without providing projections and depressions in a gap between the bladed wheel 25 and the cabinet 26. This makes it possible to increase ease of assembly at the time of production and prevent accumulation of dust or the like. In particular, by providing the insulating layer 257 on the inner perimeter of the stator 40, it becomes possible to cover a coil wound around the stator 40 with the insulating layer 257 and the cabinet 26. By covering the coil having complicated projections and depressions, it is possible to further prevent accumulation of dust or the like.

Embodiment 9

The convex portion provided on the perimeter of the bladed wheel 25 may be structured as follows. Items in Embodiment 9 that are not particularly described are the same as in Embodiment 7 or Embodiment 8, and functions and structures that are the same as in Embodiment 7 or Embodiment 8 are given the same reference characters in the following description.

FIG. 30 is an enlarged view of the main part (a vertical sectional view) showing an example of a fan according to Embodiment 9 of the present invention. Moreover, solid arrows shown in FIG. 30 indicate the air flow direction.

A fan 20 according to Embodiment 9 is provided with a suction side guide 255 on the suction side on the perimeter of the bladed wheel 25. The suction side guide 255 is an example of the convex portion provided on the perimeter of the bladed wheel 25 and is formed integrally with the annular member 22, for example.

The tip of the suction side guide 255 has a shape projecting to the perimeter side, not the inner perimeter, of the cabinet 26. Moreover, the suction side guide 255 has a shape in which the diameter thereof is increased toward the air flow upstream side. That is, the distance between the bladed wheel 25 and the cabinet 26 which becomes closest to each other is the distance in the direction of the rotation shaft of the bladed wheel 25. More specifically, the distance between the tip of the suction side guide 255 and the cabinet 26 is the distance between the bladed wheel 25 and the cabinet 26 which becomes closest to each other.

Incidentally, in FIG. 30, in the cabinet 26 in a range in which the cabinet 26 faces the tip of the suction side guide 255, a step is formed.

As described above, in the fan 20 structured in this manner, as is the case with Embodiment 7 and Embodiment 8, it is possible to make the shortest distance between the bladed wheel 25 and the cabinet 26 shorter than the distance between the rotor 31 and the stator 40. As a result, as is the case with Embodiment 7 and Embodiment 8, it is possible to increase fan efficiency independently of the distance between the rotor 31 and the stator 40, the distance which is a matter related to the design of a motor.

Moreover, in the fan 20 structured in this manner, the shape of the suction side guide 255 in which the diameter thereof is increased toward the air flow upstream side makes the air flow guided to the bladed wheel 25 smooth. This further increases the fan efficiency of the fan 20.

Furthermore, since the distance between the bladed wheel 25 and the cabinet 26 which becomes closest to each other is the distance in the direction of the rotation shaft of the bladed wheel 25, even when the tip of the suction side guide 255 is made to have a labyrinth structure, the fan 20 can be assembled easily. In general, when the bladed wheel 25 is attached to the cabinet 26, the bladed wheel 25 is inserted into the cabinet 26 in the direction of the rotation shaft of the bladed wheel 25.

At this time, with the structure of Embodiment 9, when the bladed wheel 25 is inserted into the cabinet 26 in the direction of the rotation shaft of the bladed wheel 25, it is possible to cause the engagement between the projections and depressions at the tip of the suction side guide 255, while the projections and depressions forming a labyrinth structure, and the projections and depressions on the cabinet 26 side.

Embodiment 10

The convex portion provided on the perimeter of the bladed wheel 25 may be structured as follows. Items in Embodiment 10 that are not particularly described are the same as in Embodiment 7 to Embodiment 9, and functions and structures that are the same as in Embodiment 7 to Embodiment 9 are given the same reference characters in the following description.

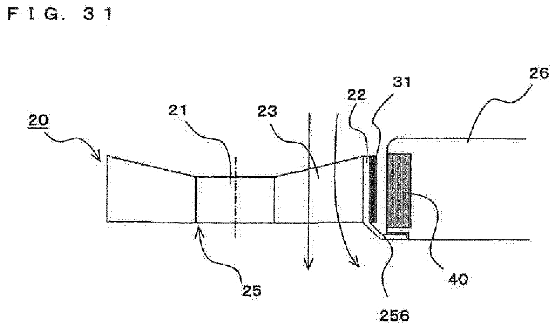

FIG. 31 is an enlarged view of the main part (a vertical sectional view) showing an example of a fan according to Embodiment 10 of the present invention. Moreover, solid arrows shown in FIG. 31 indicate the air flow direction.

A fan 20 according to Embodiment 10 is provided with a discharge side guide 256 on the discharge side on the perimeter of the bladed wheel 25. The discharge side guide 256 is an example of the convex portion provided on the perimeter of the bladed wheel 25 and is formed integrally with the annular member 22, for example.

The tip of the discharge side guide 256 has a shape projecting to the perimeter side, not the inner perimeter, of the cabinet 26. Moreover, the discharge side guide 256 has a shape in which the diameter thereof is increased toward the air flow downstream side. That is, the distance between the bladed wheel 25 and the cabinet 26 which becomes closest to each other is the distance in the direction of the rotation shaft of the bladed wheel 25. More specifically, the distance between the tip of the discharge side guide 256 and the cabinet 26 is the distance between the bladed wheel 25 and the cabinet 26 which becomes closest to each other.

Incidentally, in FIG. 31, in the cabinet 26 in a range in which the cabinet 26 faces the tip of the discharge side guide 256, a step is formed.

As described above, in the fan 20 structured in this manner, as is the case with Embodiment 7 to Embodiment 9, it is possible to make the shortest distance between the bladed wheel 25 and the cabinet 26 shorter than the distance between the rotor 31 and the stator 40. As a result, as is the case with Embodiment 7 to Embodiment 9, it is possible to increase fan efficiency independently of the distance between the rotor 31 and the stator 40, the distance which is a matter related to the design of a motor.

Moreover, in the fan 20 structured in this manner, due to the shape of the discharge side guide 256 in which the diameter thereof is increased toward the air flow downstream side, the air discharged from the bladed wheel 25 reduces speed while spreading in a radial direction and restores static pressure. This further increases the fan efficiency of the fan 20.

Incidentally, when the suction side guide 255 of Embodiment 9 is also provided on the suction side on the perimeter of the bladed wheel 25, the fan efficiency of the fan 20 is further increased. Moreover, since the distance between the bladed wheel 25 and the cabinet 26 which becomes closest to each other is the distance in the direction of the rotation shaft of the bladed wheel 25, even when the tip of the discharge side guide 256 is made to have a labyrinth structure, the fan 20 can be assembled easily. In general, when the bladed wheel 25 is attached to the cabinet 26, the bladed wheel 25 is inserted into the cabinet 26 in the direction of the rotation shaft of the bladed wheel 25.

At this time, with the structure of Embodiment 10, when the bladed wheel 25 is inserted into the cabinet 26 in the direction of the rotation shaft of the bladed wheel 25, it is possible to cause the engagement between the projections and depressions at the tip of the discharge side guide 256, while the projections and depressions forming a labyrinth structure, and the projections and depressions on the cabinet 26 side.

Embodiment 11

By making the cabinet 26 of the fan 20 function as a noise cancellation mechanism, it is also possible to reduce noise generated from the fan 20. Functions and structures in Embodiment 11 that are the same as in Embodiment 2 to Embodiment 10 are given the same reference characters in the following description.

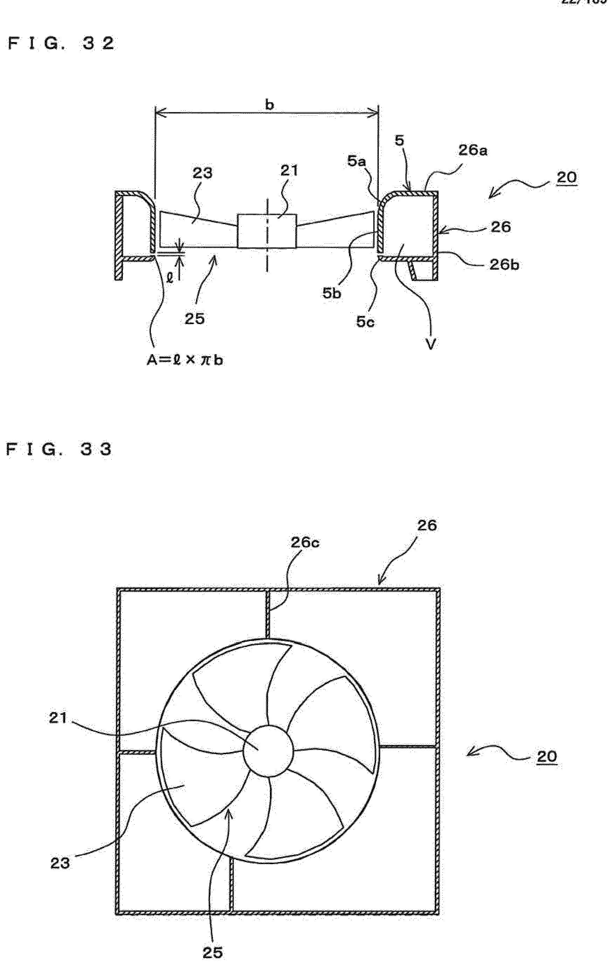

FIG. 32 is a vertical sectional view of a fan according to Embodiment 11 of the present invention.

A cabinet 26 of a fan 20 according to Embodiment 11 is divided into an upper cabinet 26a and a lower cabinet 26b. The upper cabinet 26a is formed of a top face part of the cabinet 26, a top portion 5a of a bellmouth 5, and a middle portion 5b of the bellmouth 5. Moreover, the lower cabinet 26b is formed of the perimeter of the cabinet 26, a bottom face part of the cabinet 26, and a bottom portion 5c of the bellmouth 5. In a state in which the upper cabinet 26a and the lower cabinet 26b are assembled together, the cabinet 26 has a hollow structure inside.

Furthermore, in a state in which the upper cabinet 26a and the lower cabinet 26b are assembled together, a gap having a length of "l" is formed between the middle portion 5b and the bottom portion 5c of the bellmouth 5. This gap communicates with the inside of the cabinet 26 and is formed in the circumferential direction of the bellmouth 5, for example. That is, in Embodiment 11, the gap having a length of "l" has a slit-like shape.

When the bladed wheel 25 of the fan 20 is rotated, a whine (noise) offensive to the ear, the whine having a peak at a frequency which is the integral multiple of "the product of the number of blades 23 and the rotation speed of the bladed wheel 25", is sometimes generated. Therefore, the fan 20 according to Embodiment 11 reduces the noise of the fan 20 (the sound of rotation of the bladed wheel 25) by providing the cabinet 26 with a hollow structure to make it function as a Helmholtz silencer.

With this structure, it is possible to deaden the sound at a frequency "f" expressed by Expression (2) below.

$$f = (a/2\pi)\cdot(A/l\cdot V)^{1/2} \qquad \dots (2).$$

Incidentally, "f" is the frequency of noise, "a" is the velocity of sound, A is the area of the gap (that is, in Embodiment 11, the length "l" of the gap $\times$ the length of a circumference of the middle portion 5b of the bellmouth 5), "l" is the length of the gap, and V is the volume of the space inside the cabinet 26.

Incidentally, by dividing the space (hollow space) inside the cabinet 26 as in FIG. 33, it is possible to deaden noise at more frequencies.

FIG. 33 is a sectional front view showing another example of the fan according to Embodiment 11 of the present invention.

As shown in FIG. 33, the inside of the cabinet 26 of the fan 20 is divided into a plurality of spaces (four spaces in FIG. 33) by ribs 26c. By making these spaces have different volumes (V in Expression 2 above), it becomes possible to deaden noise at more frequencies at the same time. By adjusting the length "l" of the gap communicating with the spaces shown in FIG. 33, it is also possible to adjust the frequency at which noise cancellation is performed.

Incidentally, in Embodiment 11, the gap (the gap having a length of "l") communicating with the cabinet 26 is formed between the middle portion 5b and the bottom portion 5c of the bellmouth 5, but the gap (the gap having a length of "l") may be formed in any position. For example, the gap (the gap having a length of "l") communicating with the cabinet 26 may be formed between the top portion 5a and the middle portion 5b of the bellmouth 5.

Moreover, for example, the middle portion 5b of the bellmouth 5 may be divided and the gap (the gap having a length of "l") communicating with the cabinet 26 may be formed between the middle portions 5b obtained by this division. Furthermore, for example, a plurality of gaps may be formed, for example, between the top portion 5a and the middle portion 5b of the bellmouth 5, between the middle portion 5b and the bottom portion 5c of the bellmouth 5 and so on.

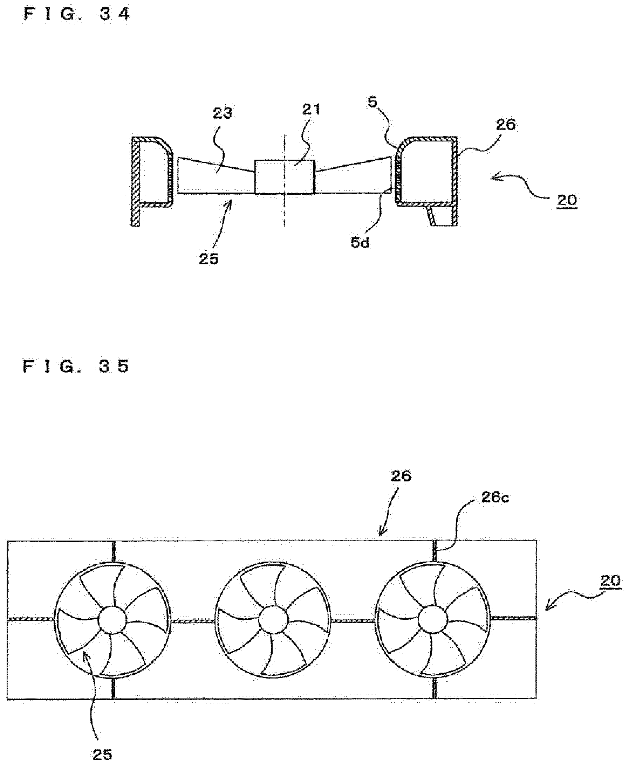

Moreover, to make the cabinet 26 of the fan 20 function as a Helmholtz silencer, it is necessary simply to provide a communication path communicating with the inside of the cabinet 26. Therefore, the fan 20 may be structured as shown in FIG. 34, for example.

FIG. 34 is a vertical sectional view showing yet another example of the fan according to Embodiment 11 of the present invention.

In place of the gap having a length of "l" and communicating with the cabinet 26, in the fan 20 shown in FIG. 34, a plurality of through holes 5d communicating with the space inside the cabinet 26 are formed in the middle portion 5b of the bellmouth 5. With such a configuration of the fan 20, it is possible to make the cabinet 26 of the fan 20 function as a Helmholtz silencer.

Moreover, by forming the communication path communicating with the inside of the cabinet 26 as the plurality of through holes, it is possible to reduce variations in pressure generated by the fan 20. This makes it possible to further reduce the noise generated from the fan 20. Incidentally, in place of forming the plurality of through holes 5d, the bellmouth 5 may be formed of porous material.

Furthermore, in the case of the fan 20 in which a plurality of bladed wheels 25 are placed in the cabinet 26, as shown in FIG. 35, the space inside the cabinet 26 may be divided by ribs 26c. With such a structure, it is possible to increase the volume of the space formed in the cabinet 26 and deaden also the noise in a low frequency area.

Embodiment 12

When the cabinet 26 of the fan 20 is made to function as a Helmholtz silencer, by structuring the fan 20 as in Embodiment 12, it is also possible to enhance the air-sending performance of the fan 20. Items in Embodiment 12 that are not particularly described are the same as in Embodiment 11, and functions and structures that are the same as in Embodiment 11 are given the same reference characters in the following description.

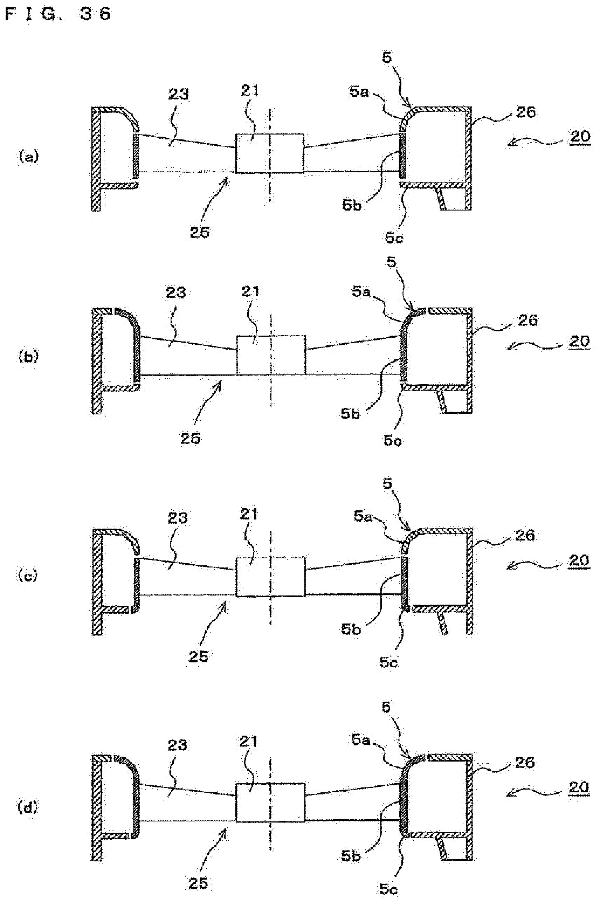

FIG. 36 is a vertical sectional view showing a fan according to Embodiment 12 of the present invention.

In a fan 20 according to Embodiment 12, at least part of the bellmouth 5 is formed integrally with the blade 23 of the bladed wheel 25. Incidentally, the part of the bellmouth 5 which is formed integrally with the blade 23 of the bladed wheel 25 is not limited to a particular part. For example, as shown in FIG. 36(a), the middle portion 5b of the bellmouth 5 may be formed integrally with the blade 23 of the bladed wheel 25. Moreover, for example, as shown in FIG. 36(b), the top portion 5a and the middle portion 5b of the bellmouth 5 may be formed integrally with the blade 23 of the bladed wheel 25.

Furthermore, for example, as shown in FIG. 36(c), the middle portion 5b and the bottom portion 5c of the bellmouth 5 may be formed integrally with the blade 23 of the bladed wheel 25. In addition, for example, as shown in FIG. 36(d), the entire part (the top portion 5a, the middle portion 5b, and the bottom portion 5c) of the bellmouth 5 may be formed integrally with the blade 23 of the bladed wheel 25.

With such a structure of the fan 20, it is possible to prevent, for example, a leak flow (a flow from a blade pressure surface side to a blade suction surface side) that is generated in a gap between the blade 23 of the bladed wheel 25 and the bellmouth 5. This makes it possible to maintain a pressure difference between the air inlet side and the air outlet side of the fan 20 and enhance air-sending performance. Moreover, since the prevention of the leak flow or the like results in a reduction in noise generated from the fan 20, it is also possible to obtain a further noise cancellation effect in addition to the noise cancellation effect obtained by making the cabinet 26 of the fan 20 function as a Helmholtz silencer.

Embodiment 13

When the cabinet 26 of the fan 20 is made to function as a Helmholtz silencer, it is also possible to make efficient use of the space inside the cabinet 26 as follows. Items in Embodiment 13 that are not particularly described are the same as in Embodiment 11 or Embodiment 12, and functions and structures that are the same as in Embodiment 11 or Embodiment 12 are given the same reference characters in the following description.

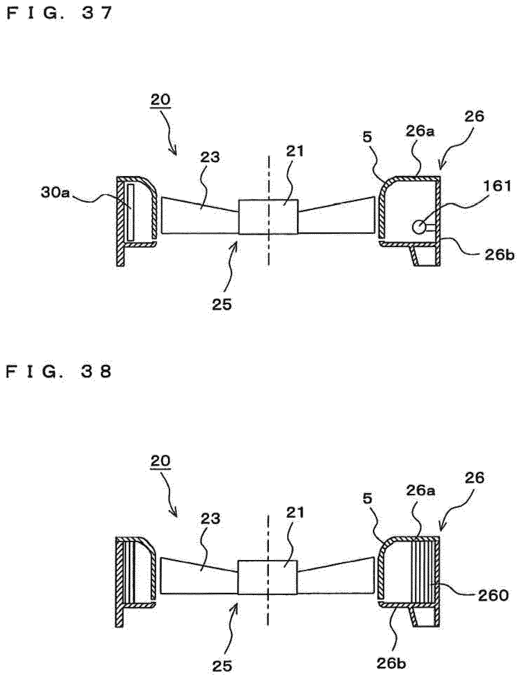

FIG. 37 is a vertical sectional view showing a fan according to Embodiment 13 of the present invention.

As shown in FIG. 37, in a fan 20 according to Embodiment 13, a circuit board 30a and a noise detecting microphone 161 of a noise cancellation mechanism are placed in the space inside a cabinet 26. The circuit board 30a is, for example, a circuit board on which a circuit and the like for controlling a fan motor 30 and the like are mounted.

With such a structure of the fan 20, the space efficiency of the inside of the indoor unit 100 is increased, it is possible to make the indoor unit smaller and reduce an air passage loss, and power efficiency can be increased.

Incidentally, when there is no need to make the cabinet 26 function as a Helmholtz silencer, it is not necessary to provide a communication path communicating with the space inside the cabinet 26. By detecting the noise of the fan 20 that propagates via the cabinet 26 with the noise detecting microphone 161, it is possible to reduce the noise generated from the fan 20 by the active noise cancellation method described in Embodiment 1. In this case, it could be said that the cabinet 26 functions as part of the active noise cancellation mechanism.

Moreover, what is placed in the space inside the cabinet 26 is not limited to the circuit board 30a and the noise detecting microphone 161, and, for example, a sensor for measurement of temperature may be placed.

Embodiment 14

Furthermore, when the cabinet 26 of the fan 20 is made to function as a Helmholtz silencer, by structuring the fan 20 as follows, it is possible to reduce noise that is generated in wide frequency bands. Items in Embodiment 14 that are not particularly described are the same as in Embodiment 11 to Embodiment 13, and functions and structures that are the same as in Embodiment 11 to Embodiment 13 are given the same reference characters in the following description.

FIG. 38 is a vertical sectional view showing a fan according to Embodiment 14 of the present invention.

As shown in FIG. 38, in a fan 20 according to Embodiment 14, a sound absorbing material 260 is provided in a space inside the cabinet 26. The sound absorbing material 260 is formed of, for example, urethane, porous resin, or porous aluminum.

With such a structure of the fan 20, the variations in pressure generated by the fan 20 are absorbed by the sound absorbing material 260. As a result, in addition to the noise cancellation effect obtained by making the cabinet 26 of the fan 20 function as a Helmholtz silencer, a noise cancellation effect that makes it possible to reduce the noise that is generated in wide frequency bands by the sound absorbing material 260 can also be obtained.

Embodiment 15

By providing the fans 20 described in Embodiment 2 to Embodiment 14 in the indoor unit 100 described in Embodiment 1, the following effects can be obtained.

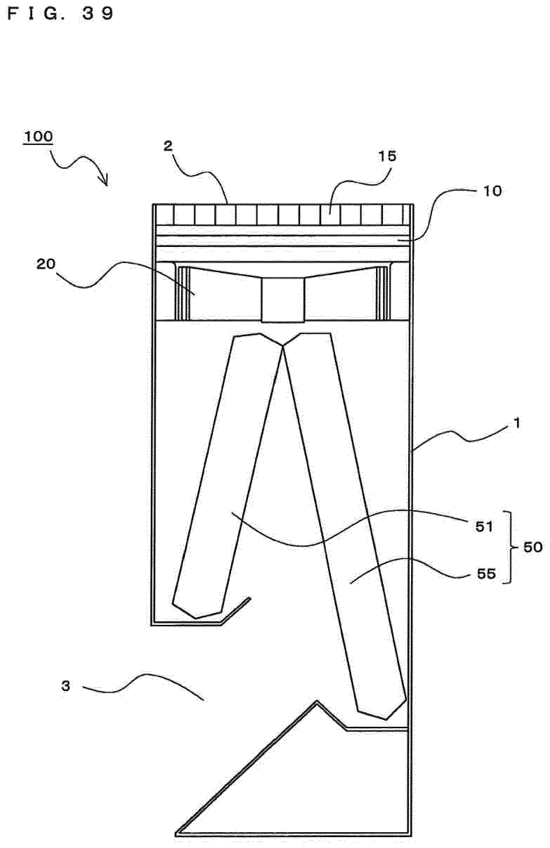

FIG. 39 is a vertical sectional view showing an indoor unit according to Embodiment 15 of the present invention. FIG. 39 shows an example in which the fan 20 described in any one of Embodiment 2 to Embodiment 14 is used in the indoor unit 100. Moreover, in FIG. 39, the left side of the drawing corresponds to the front side of the indoor unit 100.

In the indoor unit 100 structured in this manner, the fan 20 that can be made smaller (thinner) and can achieve cost reduction is used. As a result, the indoor unit 100 according to Embodiment 15 can be made smaller (thinner). Moreover, the cost of the indoor unit 100 can be reduced. Furthermore, in the indoor unit 100 structured in this manner, the fan 20 that is made smaller (thinner) while maintaining fan efficiency is used. As a result, when indoor units of the same size are produced, it is possible to obtain an indoor unit with a larger air volume than the conventional indoor unit.

Embodiment 16

Motor supporting structure

Noise can be suppressed by, for example, attaching the fan 20 to the casing 1 using a motor stay 16 as described below. Functions and structures in Embodiment 16 that are the same as in Embodiment 1 to Embodiment 15 are given the same reference characters in the following description.

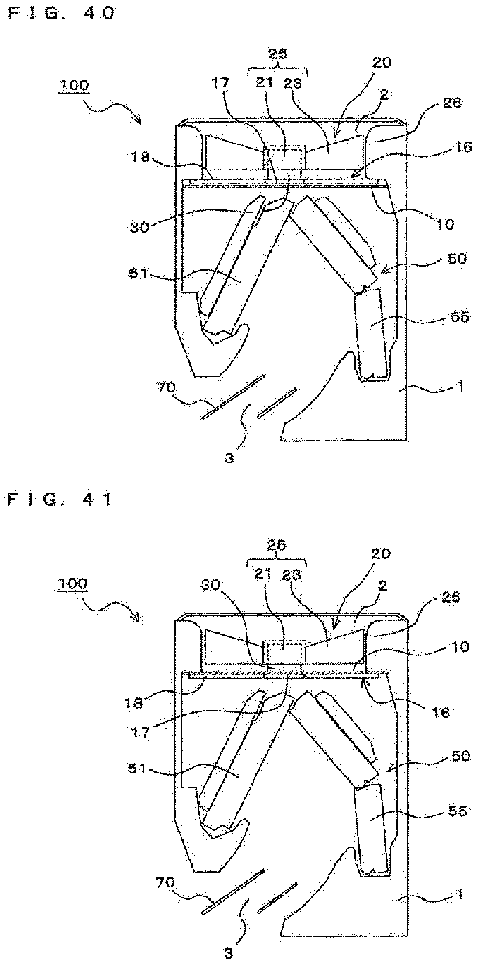

FIG. 40 is a vertical sectional view showing an indoor unit according to Embodiment 16 of the present invention.

The indoor unit 100 according to Embodiment 16 has the fan 20 in which the fan motor 30 is connected to the boss 21. The fan motor 30 is attached to the casing 1 with the motor stay 16. The motor stay 16 includes the fixing member 17 and the support member 18. The fixing member 17 is a component to which the fan motor 30 is attached. The support member 18 is a component used to fix the fixing member 17 to the casing 1. The support member 18 is, for example, a bar-shaped component that extends, for example, radially from the perimeter of the fixing member 17.

As shown in FIG. 40, in the indoor unit 100 according to Embodiment 16, the filter 10 is disposed on the downstream side of the fan 20. In the indoor unit 100 according to Embodiment 16, the motor stay 16 and the filter 10 are closely disposed so as to, for example, make contact with each other. The support member 18 may be blade-like or plate-like to obtain a stator blade effect.

An air flow discharged from the fan 20 has a speed distribution. When the air flow with a speed distribution strikes a structure in the downstream (for example, the motor stay 16), noise in sync with the product of the rotation speed and the number of blades of the fan 20 is caused. On the other hand, when a component with an air flow resistance is placed downstream of the fan 20, as the air flow approaches the component with an air flow resistance, the speed distribution of the air flow discharged from the fan 20 is reduced due to the air flow resistance.

Therefore, the filter 10 (the component with an air flow resistance) is disposed downstream of the fan 20 in Embodiment 16. In addition, the motor stay 16, which is a major structure of a noise source, is disposed in the vicinity of the filter 10. Since the air flow with a less speed distribution strikes the motor stay 16, variations in load applied to the motor stay 16 become smaller, thereby enabling the suppression of noise generated from the motor stay 16.

The above description "the motor stay 16 is disposed in the vicinity of the filter 10" in Embodiment 16 means the state described below.

A sharp low-speed area (area in which the flow rate is low) is generated in a downstream flow (air flow on the downstream side) of the motor stay 16. The length in the air flow direction of the low-speed area is approximately the same as the dimension of the motor stay 16 projected in the air flow direction. Since the speed of an air flow greatly changes in the low-speed area, a vortex with a strong air flow or a disturbance of an air flow is generated in the low-speed area due to a shearing force caused by differences in the speed of an air flow. Along with the generation of a vortex with a strong air flow or a disturbance of an air flow, the amount of generated noise increases.

Since the downstream flow (air flow on the downstream side) of the fan 20 has a complicated flow rate distribution, air flows strike the motor stay 16 in various directions. Accordingly, when the support member 18 of the motor stay 16 is cut by a section orthogonal to the longitudinal direction of the support member 18 and the maximum dimension of the projected dimensions of the section is assumed to be the maximum projected dimension, the length of the maximum low-speed area is substantially the same as the maximum projected dimension.

That is, if the distance between the motor stay 16 and the filter 10 is smaller than the maximum projected dimension, noise caused by a disturbance of an air flow or other factors in the low-speed area can be suppressed. Accordingly, "the motor stay 16 is disposed in the vicinity of the filter 10" in Embodiment 16 means that the motor stay 16 is disposed on the upstream side of the filter 10 so that the distance between the motor stay 16 and the filter 10 becomes smaller than the maximum projected dimension.

The filter 10 is disposed below (that is, on the downstream side) the motor stay 16 in FIG. 40, but the filter 10 may be disposed above (that is, on the upstream side) the motor stay 16 as shown in FIG. 41. When the filter 10 is disposed above the motor stay 16, the motor stay 16 does not need to be close to the filter 10. Since an air flow that passed through the filter has a small speed distribution, noise generated from the motor stay 16 can be suppressed in the same way described above.

When the filter 10 is detachable in the indoor unit 100 according to Embodiment 16, a movement guide for the filter 10 may be formed on the motor stay 16.

In addition, it is desirable that the distance between the filter 10, which is an air flow resistance, and the fan 20 equals 25 % or more of the diameter of the fan 20.

Noise generated from the motor stay 16 can be further suppressed by, for example, using the motor stay 16 of the following shape.

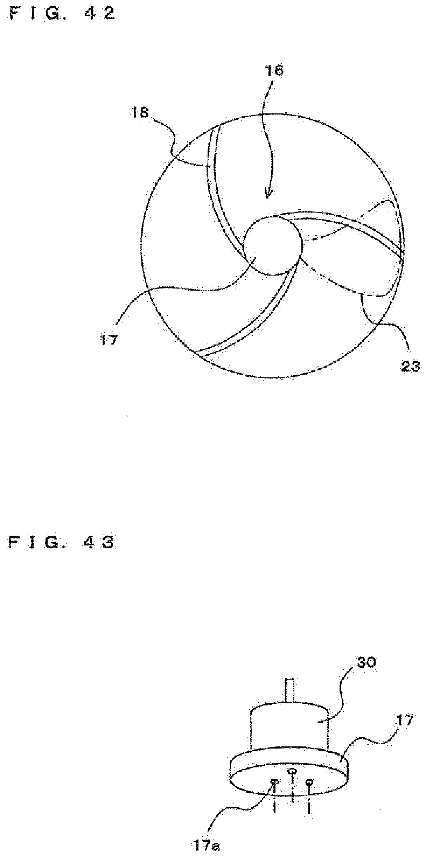

FIG. 42 is a front view showing an example of a motor stay according to Embodiment 16 of the present invention (or a plan view when the motor stay is attached to the indoor unit).

In the motor stay 16 shown in FIG. 42, the bar-shaped support member 18 extends radially from the fixing member 17, which is substantially circular. The shape of the support member 18 is shaped so as not to match the shape of the trailing edge of the blade 23 of the fan 20. The support member 18 is curved in FIG. 42, but the shape of the support member 18 may be linear, of course. Such a structure prevents a large load being applied to the support member 18 when the shape of the support member 18 matches the shape of the trailing edge of the blade 23 of the fan 20, further suppressing noise generated from the motor stay 16.

The number of support members 18 of the motor stay 16 and the number of blades 23 of the fan 20 may be relatively prime numbers. Such a structure of the motor stay 16 prevents all of the support members 18 being placed in the maximum load state (state where the maximum value of variable load is applied to the support members 18), further suppressing noise generated from the motor stay 16.

In addition, if the shape of the cross-section of the motor stay 16 is obtuse in the air flow direction, which is unlikely to cause the air flow to get away, noise generated from the motor stay 16 can be further suppressed. If furry material is disposed on the motor stay 16, variations in pressure on the surface of the motor stay 16 can be suppressed and the generation of noise can be further reduced.

When noise suppression effects (effects of suppressing noise generated from the motor stay 16) as described in Embodiment 16 are obtained, the structure in which the fan motor 30 is attached to the fixing member 17 is not particularly limited, but it is desirable to attach the fan motor 30 to the fixing member 17 as shown in FIG. 43.

FIGs. 43 to 46 are perspective views showing examples of attaching the fan motor to the fixing member of the motor stay according to Embodiment 16 of the present invention.

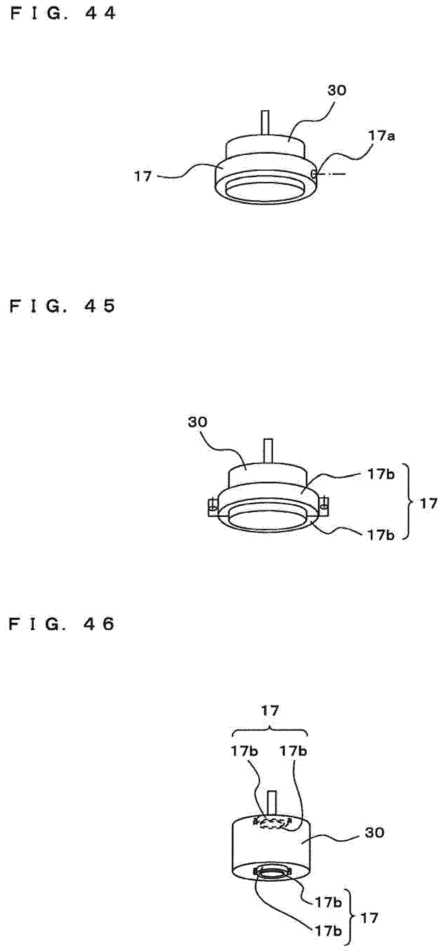

For example, as shown in FIG. 43, the fan motor 30 may be secured by retaining the fan motor 30 with screws inserted into through holes 17a disposed in the fixing member 17 in the vertical direction. When the fan motor 30 is retained with screws, the fan motor 30 may be retained with screws by inserting the fan motor 30 into the fixing member 17 and forming the through hole 17a on the side of the fixing member 17, as shown in FIG. 44.

In addition, for example, two fixing members 17b, which are created by dividing a ring member, may constitute the fixing member as shown in FIG. 45. The fan motor 30 may be secured to the fixing member 17 by clamping the fan motor 30 with the fixing members 17b and holding the fixing members 17b together with screws. Securing the fan motor 30 to the fixing member 17 in this way can improve the strength of the shell, which is the weakest part in the fan motor 30. Since the shell, which is the weakest part in the fan motor 30, emits motor noise, noise emitted from the fan motor 30 can be suppressed by improving the strength of the shell.

In addition, for example, the fan motor 30 may be secured to the fixing member 17 by combining some of the securing structures shown in FIGs. 43 to 45. In FIG. 46, the fan motor 30 is secured to the fixing member 17 using the two securing structure shown in FIG. 45. If the fan motor 30 is secured at two points as shown in this figure, it is possible to obtain effects of suppressing the swing rotation of the fan motor 30 due to vibrations or rotation imbalances.

It will be appreciated that disposing of vibration absorption material on the fixing members 17 shown in FIGs. 43 to 46 to attenuate vibrations transferred to the casing 1.

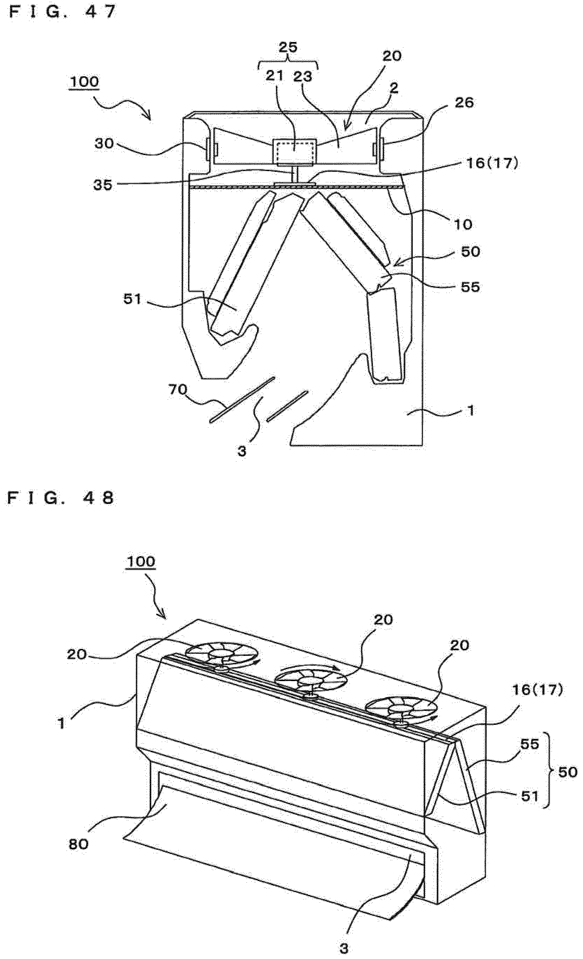

The indoor unit 100 including the fan 20 in which the fan motor 30 is connected to the boss 21 is described in Embodiment 16, but the indoor unit 100 may include the fan 20 in which the fan motor 30 is connected between the blade 23 and the cabinet 26. In this case, the supporting structure 35 (see FIG. 47 later) rotatably attached to the boss 21 only needs to be secured to the fixing member of the motor stay 16.

Alternatively, the motor stay 16 may be used as a reinforcing member for the filter 10 by integrally forming the motor stay 16 and the filter 10. Since this eliminates the need for a reinforcing member disposed in a conventional filter, the cost of the reinforcing member can be reduced.

Embodiment 17

The motor stay 16 that attaches the fan 20 to the casing 1 may be configured as described below. Items in Embodiment 17 that are not particularly described are the same as in Embodiment 16, and functions and structures that are the same as in Embodiment 16 are given the same reference characters in the following description.

FIG. 47 is a vertical sectional view showing an indoor unit according to Embodiment 17 of the present invention. FIG. 48 is a perspective view of an appearance of the indoor unit. FIG. 48 is a view penetrating the casing 1. In addition, in FIGs. 47 and 48, the indoor unit 100 includes the fan 20 in which the fan motor 30 is disposed between the blade 23 and the cabinet 26.

The motor stay 16 according to Embodiment 17 includes the fixing member 17 disposed along the longitudinal direction of the indoor unit 100. Both ends in the longitudinal direction of the fixing member 17 are secured to the casing 1. The supporting structures 35, which rotatably support bosses 21 of the fans 20, of the three fans 20 are secured to the fixing member 17. The fixing member 17 is disposed above a gradient change part at which the gradient of placement of the heat exchanger 50 changes (that is, a connection point at which the front side heat exchanger 51 and the back side heat exchanger 55 are connected each other).

The motor stay 16 according to Embodiment 17 does not have the support member 18, but the fixing member 17 may be secured to the casing 1 using the support member 18, of course.

As shown in FIGs. 47 and 48, when the front side heat exchanger 51 and the back side heat exchanger 55 are placed so that their gradients of placement change at the gradient change part, a gap is present at the gradient change part. Since an air flow passing through the gap does not exchange heat (or exchanges heat slightly), the air conditioning capacity for the same air volume is reduced.

However, since the motor stay 16 (more specifically, the fixing member 17) is disposed above the gradient change part in Embodiment 17, an air flow passing through the gap is not generated, thereby preventing the air conditioning capacity for the same air volume from being reduced. In addition, since the support member 18 is not present in the vicinity of the air outlet of the fan 20 when the motor stay 16 without the support member 18 is configured, noise generated from the motor stay 16 can be further suppressed.

Embodiment 18

The motor stay 16 that attaches the fan 20 to the casing 1 may be configured as described below. Items in Embodiment 17 that are not particularly described are the same as in Embodiment 16 or Embodiment 17, and functions and structures that are the same as in Embodiment 16 or Embodiment 17 are given the same reference characters in the following description.

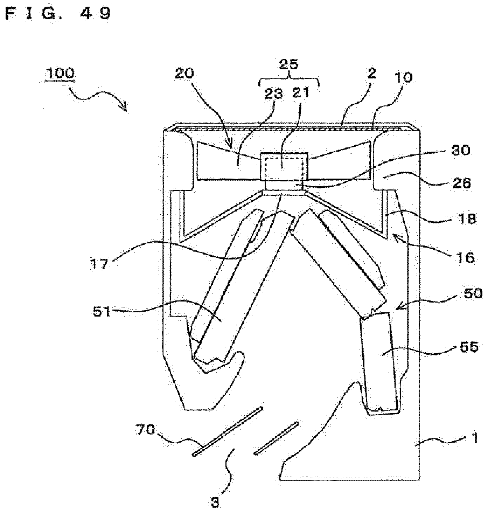

FIG. 49 is a vertical sectional view showing an indoor unit according to Embodiment 18 of the present invention.

The support member 18 of the motor stay 16 according to Embodiment 18 is configured so that the distance in a side view between the support member 18 and the trailing edge of the blade 23 of the fan 20 increases toward the tip (the perimeter of the blade wheel 25) of the blade 23.

An air flow generated by the fan 20 increases toward the tip (the perimeter of the blade wheel 25) of the blade 23. That is, when the distance between the support member 18 and the trailing edge of the blade 23 is the same among the root and the tip of the blade 23, variations in the load applied to the motor stay 16 increases toward the tip (the perimeter of the blade wheel 25) of the blade 23.

However, since the distance between the support member 18 and the trailing edge of the blade 23 of the fan 20 increases toward the tip (the perimeter of the blade wheel 25) of the blade 23 in Embodiment 18, variations in the load applied to the motor stay 16 can be suppressed. Accordingly, if the motor stay 16 of the structure described in Embodiment 18 is used, noise generated from the motor stay 16 can be further suppressed than in the motor stay 16 in which the distance between the support member 18 and the trailing edge of the blade 23 is the same among the root and the tip of the blade 23.

Embodiment 19

Partition plate

Examples of installing a partition plate for dividing the air passage in the casing 1 in Embodiment 19 to Embodiment 24 will be described. Functions and structures in Embodiment 19 that are the same as in Embodiment 1 to Embodiment 18 are given the same reference characters in the following description.

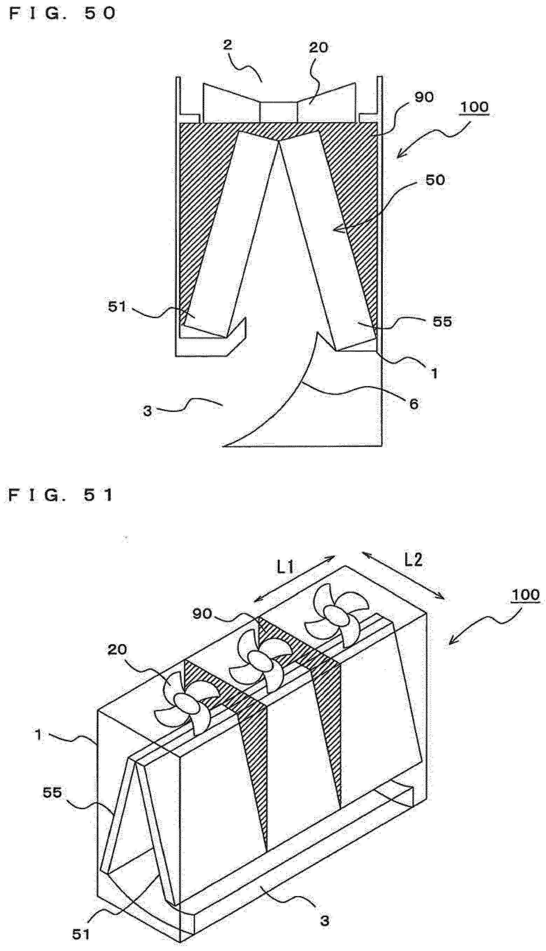

FIG. 50 is a vertical sectional view showing an indoor unit according to Embodiment 19 of the present invention. FIG. 51 is a perspective view showing the indoor unit. In FIG. 51, the casing 1 and the partition plate 90 are indicated transparently to facilitate understanding of the drawing.

In the indoor unit 100 according to Embodiment 19, the partition plate 90 is disposed between adjacent fans 20. The two partition plates 90 are disposed in Embodiment 19. The partition plates 90 are disposed between the heat exchanger 50 and the fan 20. That is, the air passage between the heat exchanger 50 and the fan 20 is divided into a plurality of (three in the case of Embodiment 19) air passages. Since the partition plate 90 is placed between the heat exchanger 50 and the fan 20, the end in contact with the heat exchanger 50 is shaped according to the heat exchanger 50. More specifically, since the placement of the heat exchanger 50 is inverted V shape, the end of the partition plate 90 on the heat exchanger 50 side is also inverted V shape.

The end of the partition plate 90 on the fan 20 side extends to the exit plane of the fan 20 when adjacent fans 20 are distant enough not to have effects each other on the suction side. When adjacent fans 20 are close enough to have effects each other on the suction side, if the end (the arc part on the suction side) of the top portion 5a of the bellmouth 5 can be formed into a sufficiently large shape, the end of the partition plate 90 on the fan 20 side can extend to the upstream side (suction side) of the fan 20 so as not to affect the adjacent air passage (so that adjacent fans 20 do not have effects each other on the suction side). In Embodiment 19, the end of the partition plate 90 on the fan 20 side is placed in the vicinity of the exit plane of the fan 20.

The partition plate 90 may be formed of various types of material. For example, the partition plate 90 may be formed of metal such as steel or aluminum. Alternatively, the partition plate 90 may be formed of, for example, resin etc.

However, since the heat exchanger 50 is heated to high temperatures during heating operation, when the partition plate 90 is formed of material of low-melting point such as resin, it is desirable to form a little space between the partition plate 90 and the heat exchanger 50. When the partition plate 90 is formed of material of high-melting point such as aluminum or steel, the partition plate 90 may be placed so as to be in contact with the heat exchanger 50. When the heat exchanger 50 is, for example, a finned tube heat exchanger, the partition plate 90 may be inserted into fins of the heat exchanger 50.

As described above, the air passage between the heat exchanger 50 and the fan 20 is divided into a plurality of (three in Embodiment 19) air passages. The divided air passages are formed into substantially a rectangle with sides L1 and L2 in a top view. That is, the widths of the divided air passage are L1 and L2.

Accordingly, for example, air sent by the fan 20 disposed within substantially the rectangle with sides L1 and L2 in a top view surely passes through the heat exchanger 50, which is downstream of the fan 20, in an area surrounded by L1 and L2.

As described above, by dividing the inside of the casing 1 with the partition plate 90, even if a flow field created by the fan 20 in the downstream side has spiral components, free movement in the longitudinal direction (the direction orthogonal to the paper surface in FIG. 50) of the indoor unit 100 is disabled. Accordingly, the air sent by the fan 20 disposed within substantially the rectangle with sides L1 and L2 in a top view can surely pass through the heat exchanger 50, which is disposed downstream of the fan 20 (disposed in an area surrounded by L1 and L2).

Accordingly, it is possible to make the wind speed distribution in the longitudinal direction (the direction orthogonal to the paper surface in FIG. 50) of the indoor unit 100 of air flowing into the entire heat exchanger 50 substantially even (the position-dependent unevenness of the speed of air passing through the heat exchanger 50 can be suppressed).

In addition, division of the casing 1 with the partition plate 90 prevents a spiral flow of the fan 20 (particularly, a spiral flow on the downstream side of the fan 20) from interfering with a spiral flow of an adjacent fan 20 (particularly, a spiral flow on the downstream side of the adjacent fan 20). This can suppress an energy loss of a vortex etc. caused by interference of spiral flows. Accordingly, a pressure loss in the indoor unit 100 (more specifically, in the air passage in the casing 1) can be reduced together with improvement of wind speed distribution.

It is desirable that the partition plate 90 has a sound insulation effect for preventing sound caused by the fan 20 from passing through the adjacent air passage. To obtain the sound insulation effect, the partition plate 90 needs to have a weight. Accordingly, when the partition plate 90 is formed of resin etc. with a lower density than metal (such as steel or aluminum), the partition plate 90 is desirably thick.

The partition plate 90 does not need to include only one plate and may include a plurality of plates. For example, the partition plate 90 may be divided into two plates: a plate on the front side heat exchanger 51 and a plate on the back side heat exchanger 55. When there is no gap in a connection part between plates included in the partition plate 90, the same effect as in forming the partition plate 90 with one plate can be obtained. When the partition plate 90 is divided into a plurality of plates, ease of assembly of the partition plate 90 is improved.

A characteristic of the present invention is to place the heat exchanger 50 in the air passage, which is placed on the downstream side of the fan 20. However, even in the indoor unit in which the heat exchanger 50 is placed upstream of the fan 20, the effect of the partition plate can be also obtained, of course.

Embodiment 20

In Embodiment 19, only the air passage between the fan 20 and the heat exchanger 50 is divided by the partition plate 90. In addition to the air passage between the fan 20 and the heat exchanger 50, the air passage on the downstream side of the heat exchanger 50 can also be divided by the partition plate. Items in Embodiment 20 that are not particularly described are the same as in Embodiment 19, and functions and structures that are the same as in Embodiment 19 are given the same reference characters in the following description.

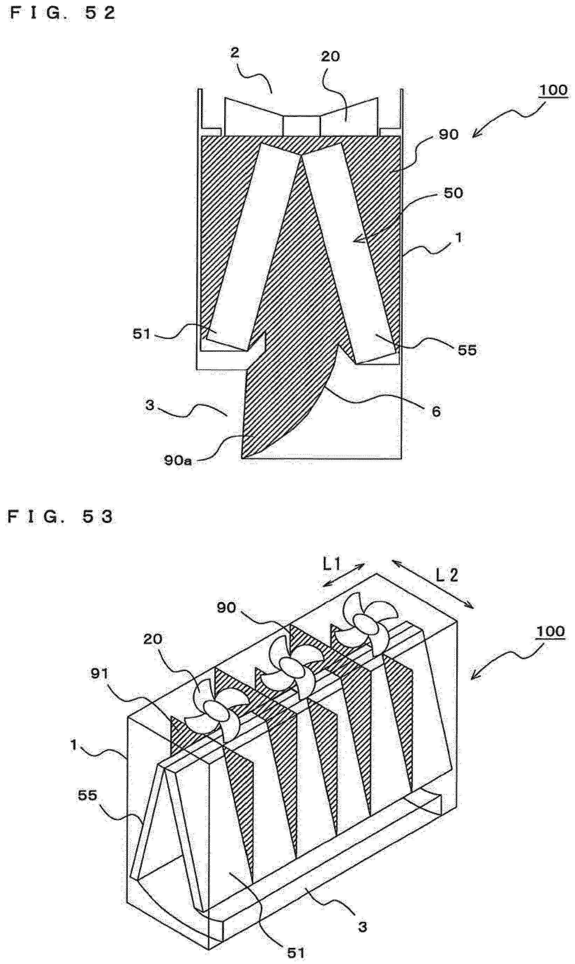

FIG. 52 is a vertical sectional view showing an indoor unit according to Embodiment 20 of the present invention.

In the indoor unit 100 according to Embodiment 20, a partition plate 90a is disposed between the heat exchanger 50 and the air outlet 3. The other structure is the same as that of the indoor unit 100 according to Embodiment 19.

The number of partition plates 90a disposed between the heat exchanger 50 and the air outlet 3 is the same as the number of partition plates 90 disposed between the fan 20 and the heat exchanger 50. The partition plates 90a are disposed below the partition plates 90. More specifically, the partition plates 90a are disposed substantially in parallel with the partition plates 90 in a top view. In addition, the partition plates 90a and the partition plates 90 are disposed so as to be approximately superimposed each other in a top view. This suppresses an air resistance caused by placing the partition plate 90a.

Since the heat exchanger 50 is placed in a A-shape, the end (upper end) of the partition plate 90a on the heat exchanger 50 side is also inverted V shape. In this case, the partition plate 90a is placed so that the heat exchanger 50 does not make contact with the partition plate 90a. During cooling operation, the heat exchanger 50 is cooled to cold temperatures. Accordingly, moisture in the air condenses and water droplets are attached to the surface of the heat exchanger 50. If the heat exchanger 50 is in contact with the partition plate 90a, water droplets attached to the surface of the heat exchanger 50 move to the partition plate 90a.

The water droplets that moved to the partition plate 90a move to the air outlet 3 through the partition plate 90 are scattered around accompanied by the air blown from the air outlet 3. The scattering of water droplets may give a discomfort feeling to the user and is inappropriate for an air-conditioning apparatus. Accordingly, to prevent water droplets attached to the surface of the heat exchanger 50 from scattering from the air outlet 3, the partition plate 90a is placed so that the heat exchanger 50 does not make contact with the partition plate 90a.

In the indoor unit 100 configured as described above, placement of the partition plate 90a can suppress the effect of an air flow from an adjacent air passage between the heat exchanger 50 and the air outlet 3. In other words, placement of the partition plate 90a can prevent a spiral flow of the fan 20 from interfering with a spiral flow of an adjacent fan 20 between the heat exchanger 50 and the air outlet 3. Accordingly, it is possible to suppress an energy loss of vortexes etc. caused by interference between spiral flows between the heat exchanger 50 and the air outlet 3.

In addition, it is possible to obtain the substantially even wind speed distribution in the longitudinal direction (the direction orthogonal to the paper surface in FIG. 52) of the indoor unit 100 of the air-conditioned air blown from the air outlet 3 (the position-dependent unevenness of the speed of air-conditioned air blown from the air outlet 3 can be suppressed). Accordingly, an air-conditioning apparatus (more specifically, an indoor unit) with a lower pressure loss can be obtained.

The lower end of the partition plate 90a extends to the air outlet 3 in Embodiment 20, but the lower end of the partition plate 90a may be placed between the heat exchanger 50 and the air outlet 3, of course. Placement of the partition plate 90a reduces a pressure loss as compared with Embodiment 19.

Embodiment 21

In Embodiment 19 and Embodiment 20, the number of fans 20 equals the number of divisions of the air passage. However, the number of divisions of the air passage may be larger than the number of fans 20. Items in Embodiment 21 that are not particularly described are the same as in Embodiment 19 or Embodiment 20, and functions and structures that are the same as in Embodiment 19 or Embodiment 20 are given the same reference characters in the following description.

FIG. 53 is a perspective view showing an indoor unit according to Embodiment 21 of the present invention. In FIG. 53, the casing 1 and the partition plate 90 are indicated transparently to facilitate understanding of the drawing.

In the indoor unit 100 according to Embodiment 21, a partition plate 91 is disposed between the partition plates 90. That is, in Embodiment 21, the air passage divided in Embodiment 19 is further divided by the partition plate 91. Accordingly, approximately half the air volume generated by the fan 20 flows into the heat exchanger 50 placed in the area surrounded by L1 and L2. The other structure is the same as that of the indoor unit 100 according to Embodiment 19.

The partition plate 91 is placed in a position where the space between the adjacent partition plates 90 can be substantially evenly divided. The partition plates 91 may be formed of various types of material as in the partition plates 90. For example, the partition plate 90 may be formed of metal such as steel or aluminum. Alternatively, the partition plate 90 may be formed of, for example, resin etc. It is desirable that the partition plate 91 also has a sound insulation effect as in the partition plate 90. Accordingly, when the partition plate 91 is formed of resin etc. with a lower density than metal (such as steel or aluminum), the partition plate 91 is desirably thick.

The end of the partition plate 91 on the heat exchanger 50 side is substantially inverted V shape along the heat exchanger 50. When the partition plate 91 is formed of material of low-melting point such as resin, since the heat exchanger 50 is heated to high temperatures during heating operation, it is desirable to form a little space between the partition plate 91 and the heat exchanger 50. When the partition plate 91 is formed of material of high-melting point such as aluminum or steel, the partition plate 91 may be placed so as to be in contact with the heat exchanger 50 or the partition plate 91 may be inserted between fins 56 of the heat exchanger 50.

The end of the partition plate 91 on the fan 20 side is substantially parallel to the exit plane of the fan 20. The partition plate 91 on the fan 20 side may be shaped like a mountain which has a peak positioned near the rotation center of the fan 20 and a ridge gradually falling toward the perimeter.

It is desirable to set the height of the end of the partition plate 91 on the fan 20 side as described below.

When, for example, the fan 20 is close to the heat exchanger 50, if the end of the partition plate 91 on the fan 20 side is placed too close to the fan 20, the partition plate 91 functions as a resistance against an air flow. Accordingly, when the fan 20 is close to the heat exchanger 50, the end of the partition plate 91 on the fan 20 side is desirably placed as far as possible from the fan 20. Accordingly, when the fan 20 is close to the heat exchanger 50, the height of the end of the partition plate 91 on the fan 20 side only needs to be approximately the same as the upper end (the position closest to the fan 20) of the heat exchanger 50. The end of the partition plate 91 on the fan 20 side may be placed halfway on an oblique surface of the heat exchanger 50, of course.

If, for example, there is a sufficient distance between the fan 20 and the heat exchanger 50, the partition plate 91 does not function as a resistance against an air flow. Accordingly, when there is a sufficient distance between the fan 20 and the heat exchanger 50, the height of the end of the partition plate 91 on the fan 20 side only needs to be higher than the upper end (the position closest to the fan 20) of the heat exchanger 50.

In the indoor unit 100 configured as described above, width L1 of the divided air passage can be less than in the indoor unit 100 according to Embodiment 19. Accordingly, the indoor unit 100 according to Embodiment 21 has a less degree of freedom in the width direction of a spiral flow generated by the fan 20 than in the indoor unit 100 according to Embodiment 19. That is, the indoor unit 100 according to Embodiment 21 can further improve degradation in the wind speed distribution (achieve an even wind speed distribution) as compared with the indoor unit 100 according to Embodiment 19.

As in Embodiment 20, an additional partition plate may be disposed in a position below the partition plates 91 in the air passage between the heat exchanger 50 and the air outlet 3. As in Embodiment 20, such a structure can prevent a spiral flow of the fan 20 from interfering with a spiral flow of an adjacent fan 20 between the heat exchanger 50 and the air outlet 3.

Embodiment 22

In Embodiment 21, the partition plate 90 expanding in the front/rear direction of the casing 1 is disposed and the air passage in the casing 1 is divided by the partition plate 91 to increase the number of divisions. The partition plates 91 are placed orthogonally to the exit plane of the fan 20 in Embodiment 21. However, the partition plate 91 is not limited to that in Embodiment 21 and may be placed so that at least the upper end of the partition plate 91 may be slant with respect to the exit plane of the fan 20.

The partition plate 91 as described above can smoothly guide a spiral flow generated by the fan 20 so that the spiral flow enters the heat exchanger 50 on the downstream side. Items in Embodiment 22 that are not particularly described are the same as in Embodiment 19 to Embodiment 21, and functions and structures that are the same as in Embodiment 19 to Embodiment 21 are given the same reference characters in the following description.

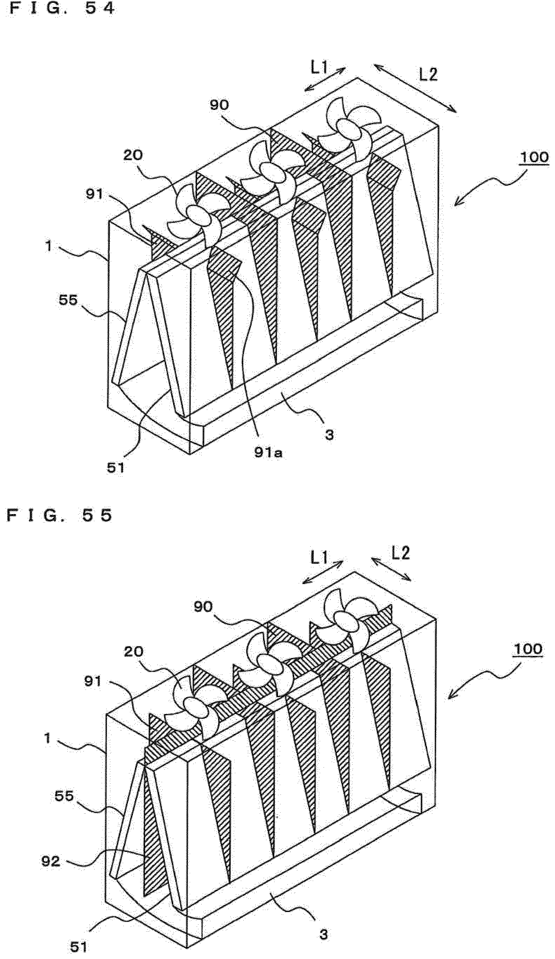

FIG. 54 is a perspective view showing an indoor unit according to Embodiment 22 of the present invention. FIG. 54 is given while penetrating the casing 1 and the partition plate 90 in order to facilitate understanding of the drawing.

The basic structure of the indoor unit 100 according to Embodiment 22 is the same as in the indoor unit 100 according to Embodiment 21. The differences between the indoor unit 100 according to Embodiment 22 and the indoor unit 100 according to Embodiment 21 will be described below.

The upper end 91a of the partition plate 91 of the indoor unit 100 according to Embodiment 22 is bent. The upper end 91a of the partition plate 91 is slanted with respect to the exit plane of the fan 20. This slant direction is the same as the direction of an air flow blown from the fan 20. When the fan 20 attached to the indoor unit 100 is an axial flow fan or diagonal flow fan, the slant direction of the upper end 91a is reversed between the front side and the back side of the indoor unit 100, as shown in FIG. 54.

The shape of the cross-section of the upper end 91a of the partition plate 91 may be linear or curved. In addition, not the upper end 91a but the entire partition plate 91 may be slanted with respect to the exit plane of the fan 20.

In the indoor unit 100 configured as described above, a spiral flow generated by the fan 20 can be smoothly guided so that the spiral flow enters the heat exchanger 50 on the downstream side. This reduces losses due to interference between the spiral flow generated by the fan 20 and the partition plate 91. Accordingly, the indoor unit 100 according to Embodiment 22 can further reduce a pressure loss in the air passage than the indoor unit 100 according to Embodiment 21.

Embodiment 23

In Embodiment 19 to Embodiment 22, partition plates extending in the front/rear direction of the casing 1 are disposed to divide the air passage in the casing 1. A partition plate extending in the left/right direction (longitudinal direction) of the casing 1 can be further disposed to further divide the air passages in the casing 1. Items in Embodiment 23 that are not particularly described are the same as in Embodiment 19 to Embodiment 22, and functions and structures that are the same as in Embodiment 19 to Embodiment 22 are given the same reference characters in the following description.

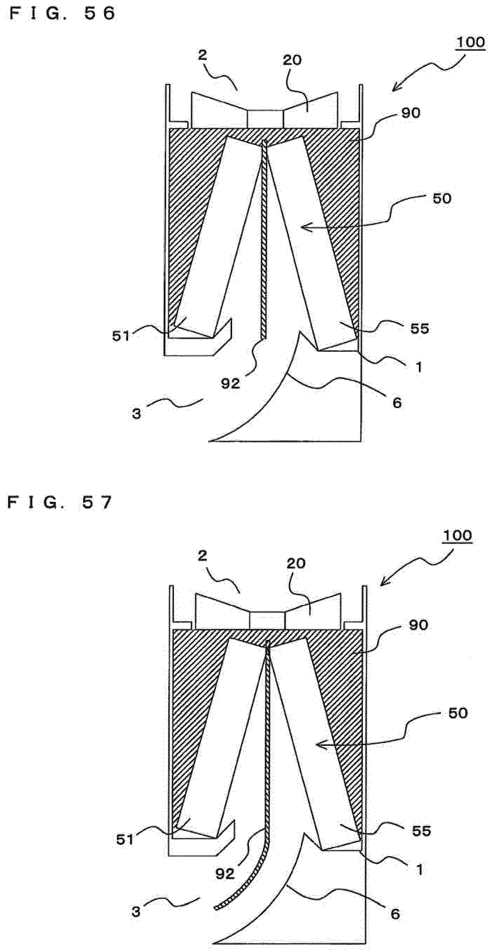

FIG. 55 is a perspective view showing an indoor unit according to Embodiment 23 of the present invention. FIG. 56 is a vertical sectional view showing the indoor unit. In FIG. 55, the casing 1 and the partition plate 90 are indicated transparently to facilitate understanding of the drawing.

The basic structure of the indoor unit 100 according to Embodiment 23 is the same as in the indoor unit 100 according to Embodiment 21. The differences between the indoor unit 100 according to Embodiment 23 and the indoor unit 100 according to Embodiment 21 will be described below.

In the indoor unit 100 in Embodiment 23, a partition plate 92 for dividing the air passages in the casing 1 in the left/right direction is added to the indoor unit 100 according to Embodiment 21. The partition plate 92 is disposed between the front side heat exchanger 51 and the back side heat exchanger 55 so as to intersect the partition plates 90 and 91 at a substantially right angle. Accordingly, approximately one quarter of the air volume generated by the fan 20 flows into the heat exchanger 50 placed in the area surrounded by L1 and L2.

It is desirable that the position of the end on the lower side (the end on the air outlet 3 side) of the partition plate 92 is set as described below.

When, for example, the partition plate 92 is flat as shown in FIG. 56, if the end on the lower side of the partition plate 92 extends downward too much, the area of the air passage is reduced (the air passage is blocked by the partition plate 92), the partition plate 92 functions as a resistance against an air flow. Accordingly, when the partition plate 92 is flat, the end on the lower side of the partition plate 92 needs to be positioned on the windward side of the nozzle 6.

For example, as shown in FIG. 57, when the lower side of the partition plate 92 is curved in accordance with the shape of the nozzle 6, the end on the lower side of the partition plate 92 may extend to the air outlet 3. When the end on the lower side of the partition plate 92 extends to the air outlet 3, the strength of the wind speed at the air outlet 3 can be reduced from within the nozzle 6.

In the indoor unit 100 configured as described above, width L2 of the divided air passage can be less than that of the indoor unit 100 according to Embodiment 19 to Embodiment 22. Accordingly, the indoor unit 100 according to Embodiment 23 has a less degree of freedom in the width direction of a spiral flow generated by the fan 20. That is, the indoor unit 100 according to Embodiment 23 can further improve degradation in the wind speed distribution (achieve an even wind speed distribution) as compared with the indoor unit 100 according to Embodiment 19 to Embodiment 22.

Embodiment 24

Sound absorbing material as described later may be disposed on the surface of the partition plate indicated in Embodiment 19 to Embodiment 23. Alternatively, the partition plate may be formed of sound absorbing material. Items in Embodiment 24 that are not particularly described are the same as in Embodiment 19 to Embodiment 23, and functions and structures that are the same as in Embodiment 19 to Embodiment 23 are given the same reference characters in the following description.

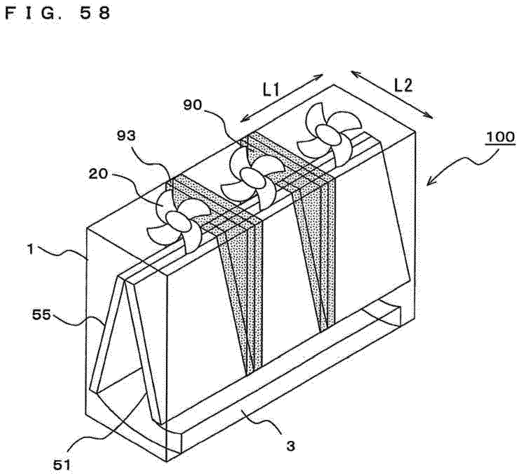

FIG. 58 is a perspective view showing an indoor unit according to Embodiment 24 of the present invention. In FIG. 58, the casing 1 and the partition plate 90 are indicated transparently to facilitate understanding of the drawing.

In the indoor unit 100 according to Embodiment 24, sound absorbing material 93 is disposed on both sides of the partition plate 90. The sound absorbing material 93 is made of urethane, porous resin, porous aluminum, or so on. Such sound absorbing material 93 has a small effect of deadening sound of low frequencies, but it can deaden high frequency sound of, for example, 1 kHz or higher.

The thicker the sound absorbing material 93, the lower the frequency that can be absorbed by the sound absorbing material 93. If the active noise cancellation mechanism is provided, sound of, for example, 1 kHz or lower can be deadened. In this case, the sound absorbing material 93 with a thickness of 20 mm or less, which can absorb, for example, 2 kHz sound, has a sufficient effect.

The partition plate 90 may be formed of various types of material as in Embodiment 19 to Embodiment 23. For example, the partition plate 90 may be formed of metal such as steel or aluminum. Alternatively, the partition plate 90 may be formed of, for example, resin etc. In addition, the partition plate itself may be made of sound absorbing material.

In the indoor unit 100 configured as described above, noise generated by the fan 20 as well as the effect of a spiral flow generated by the fan 20 can be reduced by the partition plate 90 etc.

Embodiment 25

As in Embodiment 19 to Embodiment 24, in the air-conditioning apparatus (more specifically, the indoor unit of the air-conditioning apparatus) that has a plurality of divided air passages in the casing 1, if the active noise cancellation mechanism is disposed as described below, sound (noise) generated by the fans 20 can be deadened more efficiently than before. Items in Embodiment 24 that are not particularly described are the same as in Embodiment 19 to Embodiment 24, and functions and structures that are the same as in Embodiment 19 to Embodiment 24 are given the same reference characters in the following description.

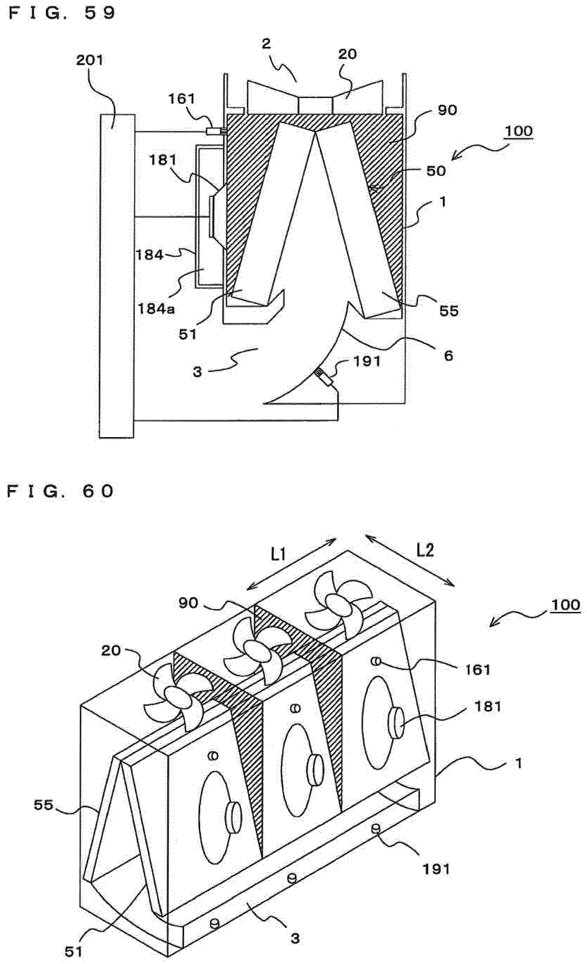

FIG. 59 is a vertical sectional view showing an indoor unit according to Embodiment 25 of the present invention.

The indoor unit 100 according to Embodiment 25 is the indoor unit 100 in Embodiment 19 to which the active noise cancellation mechanism has been added. The noise cancellation mechanism according to Embodiment 25 includes the noise detecting microphone 161, the control speaker 181, and the noise-cancellation effect detecting microphone 191.

The noise cancellation system used in Embodiment 25 is the same as in Embodiment 1. More specifically, this noise cancellation system is a control method that detects sound generated from a noise source and outputs (emits) control sound generated based on the detected result. This control method uses a microphone (equivalent to the noise detecting microphone 161 in Embodiment 25) for detecting sound generated from a noise source, a speaker (equivalent to the control speaker 181 in Embodiment 25) for outputting control sound created based on sound detected by this microphone, and a microphone (equivalent to the noise-cancellation effect detecting microphone 191 in Embodiment 25) that is disposed in an area (referred to below as a quiet area) where stillness needs to be kept to detect sound in the quiet area, and so on.

As shown in FIG. 59, the noise detecting microphone 161 is placed in the vicinity of the fan 20, which is a sound source. In Embodiment 25, the noise detecting microphone 161 is placed on the front side of the casing 1.

The control speaker 181 is placed in an air passage on the downstream side of the noise detecting microphone 161. In Embodiment 25, the control speaker 181 is placed on the front side of the casing 1. In this case, the control speaker 181 is placed so as to be in contact with air in the air passage so that sound output from the control speaker 181 can be emitted within the air passage. The rear (side opposite to the air passage) of the control speaker 181 is covered with a box 184. The space in the box 184 functions as a back chamber 184a, which is required to generate low-frequency sound.

The noise-cancellation effect detecting microphone 191, which detects sound in a quiet area, is placed in the vicinity of the air outlet 3, which is a quiet area.

Next, the internal structure of the indoor unit 100 in Embodiment 25 and the position where the noise cancellation mechanism is placed in the indoor unit 100 will be described in detail with reference to FIG. 60.

FIG. 60 is a perspective view showing the indoor unit according to Embodiment 25 of the present invention. In FIG. 60, the casing 1 and the partition plates 90 are indicated transparently and components such as the box 184 (back chamber 184a) and the signal processor 201 are not shown to facilitate understanding of the drawing.

The noise detecting microphone 161 and the control speaker 181 are disposed in each of the air passages divided by the partition plates 90.

As described above, the air passage between the heat exchanger 50 and the fan 20 is divided into a plurality of (three in the case of Embodiment 25) air passages. Each of the divided air passages is formed into substantially a rectangle with sides L1 and L2 in a top view. That is, the widths of the divided air passage are L1 and L2.

Accordingly, if, for example, L1 is less than L2, when sound generated by the fans 20 passes through the divided air passages, frequency "f" sound with a half-wavelength less than L1 is subjected to plane wave conversion (one-dimensional conversion) during propagation. If, for example, L1 is more than L2, when sound generated by the fan 20 passes through the divided air passages, frequency "f" sound with a half-wavelength less than L2 is subjected to plane wave conversion (one-dimensional conversion) during propagation.

By dividing the air passage in the casing 1 using the partition plates 90, sound with a half-wavelength less than the width on the shorter side of the divided air passages can be subjected to plane wave conversion (one-dimensional conversion). As the number of divisions of the air passage in the casing 1 increases, the frequency that can be subjected to plane wave conversion (one-dimensional conversion) becomes high.

Frequency "f" that can be subjected to plane wave conversion (one-dimensional conversion) is represented by the following expression.

$$f < c/(2*L)$$

In this expression, "c" indicates the velocity of sound. L is L1 or L2, whichever is shorter.

The sound subjected to plane wave conversion among sound generated by the fans 20 is detected by the noise detecting microphone 161 disposed in each of the divided air passages and deadened by control sound with a reversed phase output from the control speaker 181 disposed in each of the divided air passages. In this case, sound subjected to plane wave conversion is effectively deadened because deadening effects due to superposition is easy to be obtained.

On the other hand, sound not subjected to plane wave conversion is propagated to the air outlet 3 while being reflected repeatedly in air passages in the casing 1. Since loops and nodes are positioned randomly in the air passages in the casing 1 for sound not subjected to plane wave conversion, it is difficult to obtain large deadening effects by the active noise cancellation method.

In the indoor unit 100 configured as described above, noise cancellation effects can be obtained at higher frequencies than before by dividing the air passage in the casing 1 with the partition plates 90 and disposing the control speaker 181 in each of the divided air passages. As the number of divisions of the air passage in the casing 1 increases, noise cancellation effects can be obtained at higher frequencies.

In addition, the partition plates 90 also have sound insulation effects for preventing sound generated by the fans 20 from transmitting to adjacent air passages. If a part of sound subjected to plane wave conversion goes in an adjacent air passage, in the air passage in which the sound went, the sound with the same frequency as the sound that went in the air passage becomes a non-plane wave and noise cancellation effects are degraded. To obtain sound insulation effects, the partition plates 90 need to have some weight. Accordingly, when the partition plates 90 are formed of resin etc. with a lower density than metal (such as steel or aluminum), the partition plates 90 are desirably thick.

The noise detecting microphone 161 and the control speaker 181 of the noise cancellation mechanism are placed in an air passage on the windward side of the heat exchanger 50. Accordingly, it is possible to prevent air that is cooled after passing through the heat exchanger 50 during cooling operation from passing through the noise detecting microphone 161 and the control speaker 181. This prevents condensation in the noise detecting microphone 161 and the control speaker 181, thereby improving the reliability of the noise detecting microphone 161 and the control speaker 181.

The noise detecting microphone 161 and the control speaker 181 are placed on the front side of the casing 1 in the indoor unit 100 according to Embodiment 25, but at least one of the noise detecting microphone 161 and the control speaker 181 may be placed on the rear side of the casing 1, of course.

Embodiment 26

The active noise cancellation mechanism may be disposed in the indoor unit 100 in Embodiment 20, of course. Items in Embodiment 26 that are not particularly described are the same as in Embodiment 25, and functions and structures that are the same as in Embodiment 25 are given the same reference characters in the following description.

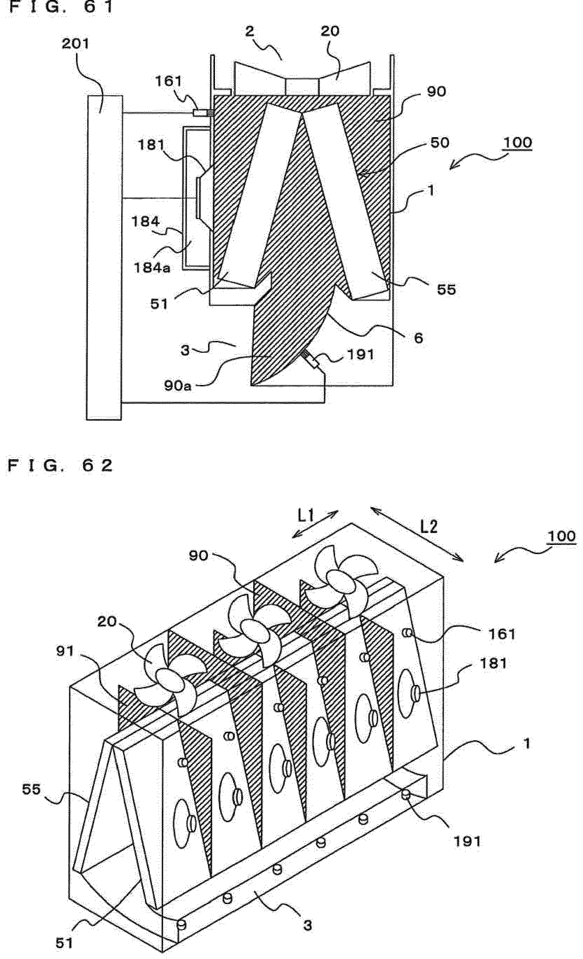

FIG. 61 is a vertical sectional view showing an indoor unit according to Embodiment 26 of the present invention.

The indoor unit 100 according to Embodiment 26 is the indoor unit 100 in Embodiment 20 to which the active noise cancellation mechanism has been added.

In the indoor unit 100 configured as described above, placement of the partition plates 90a enables the plane wave conversion of sound generated by the fans 20 between the heat exchanger 50 and the air outlet 3. This enables the sound that cannot be deadened between the fans 20 and the heat exchanger 50 to be deadened between the heat exchanger 50 and the air outlet 3. Accordingly, the air-conditioning apparatus (more specifically, the indoor unit) with higher deadening effects can be obtained.

The lower end of the partition plate 90a extends to the air outlet 3 in Embodiment 26, but the lower end of the partition plate 90a may be positioned between the heat exchanger 50 and the air outlet 3, of course. Placement of the partition plate 90a improves deadening effects as compared with Embodiment 25.

Embodiment 27

The active noise cancellation mechanism may be disposed in the indoor unit 100 in Embodiment 21 and Embodiment 22, of course. Items in Embodiment 27 that are not particularly described are the same as in Embodiment 25 or Embodiment 26, and functions and structures that are the same as in Embodiment 25 or Embodiment 26 are given the same reference characters in the following description.

FIG. 62 is a perspective view showing an indoor unit according to Embodiment 27 of the present invention. In FIG. 62, the casing 1 and the partition plates 90 are indicated transparently and components such as the box 184 (back chamber 184a) and the signal processor 201 are not shown to facilitate understanding of the drawing.

The indoor unit 100 according to Embodiment 27 is the indoor unit 100 in Embodiment 21 to which the active noise cancellation mechanism has been added. That is, the air passages divided in Embodiment 25 are further divided by the partition plates 91 in Embodiment 27. Accordingly, the indoor unit 100 according to Embodiment 27 includes the same number of noise cancellation mechanisms (noise detecting microphone 161, control speaker 181, and noise-cancellation effect detecting microphone 191) as the number of the divided air passages, and the noise detecting microphone 161 and the control speaker 181 are disposed for each of the divided air passages.

In the indoor unit 100 configured as described above, width L1 of the divided air passages can be less than in the indoor unit 100 according to Embodiment 25. Accordingly, the indoor unit 100 according to Embodiment 27 can perform plane wave conversion and deadening of higher frequency sound than the indoor unit 100 according to Embodiment 25.

As in Embodiment 26, an additional partition plate may be disposed in a position below the partition plates 91 in the air passage between the heat exchanger 50 and the air outlet 3. As in Embodiment 26, such a structure can widen the section in which plane wave conversion of sound generated by the fans 20 is performed, obtaining larger noise cancellation effects.

Embodiment 28

The active noise cancellation mechanism may be disposed in the indoor unit 100 in Embodiment 23, of course. Items in Embodiment 28 that are not particularly described are the same as in Embodiment 25 to Embodiment 27, and functions and structures that are the same as in Embodiment 25 to Embodiment 27 are given the same reference characters in the following description.

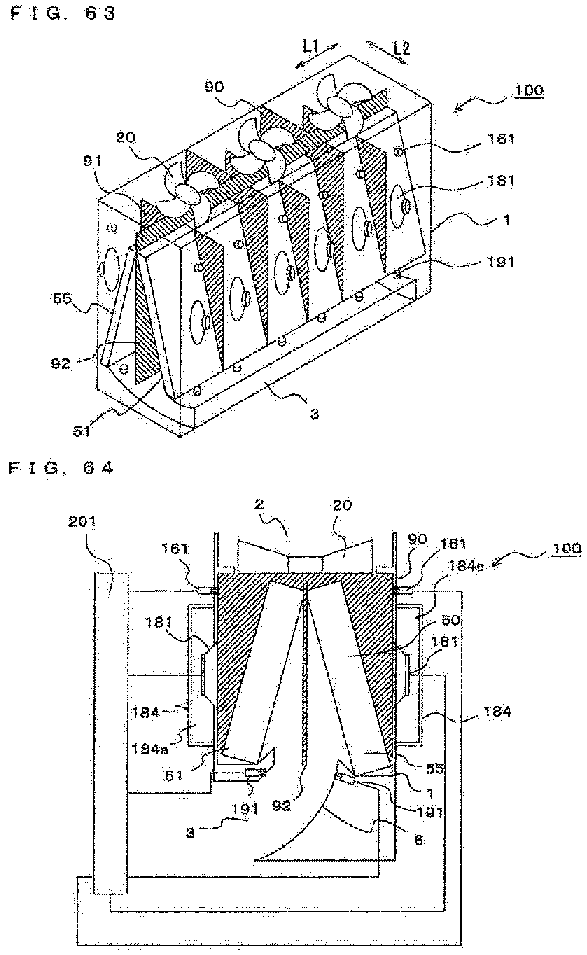

FIG. 63 is a perspective view showing an indoor unit according to Embodiment 28 of the present invention. FIG. 64 is a vertical sectional view showing the indoor unit. FIG. 63 is given while penetrating the casing 1 and the partition plates 90 and components such as the box 184 (back chamber 184a) and the signal processor 201 are not shown to facilitate understanding of the drawing.

The indoor unit 100 according to Embodiment 28 is the indoor unit 100 in Embodiment 23 to which the active noise cancellation mechanism has been added. That is, in the indoor unit 100 according to Embodiment 28, the partition plate 92 for dividing the air passage in the casing 1 in the left/right direction is added to the indoor unit 100 in Embodiment 27. The partition plate 92 is disposed between the front side heat exchanger 51 and the back side heat exchanger 55 so as to intersect the partition plates 90 and 91 at a substantially right angle.

The indoor unit 100 according to Embodiment 28 also includes the same number of noise cancellation mechanisms (noise detecting microphone 161, control speaker 181, and noise-cancellation effect detecting microphone 191) as the number of the divided air passages. That is, disposing of the partition plate 92 also divides the air passage in the casing 1 in the front/rear direction, so the indoor unit 100 according to Embodiment 28 has the noise cancellation mechanism on the rear side of the casing 1 as well as on the front side of the casing 1.

It is desirable that the lower end of the partition plate 92 is positioned as described below.

When, for example, the partition plate 92 is a flat plate as shown in FIG. 64, if the lower end of the partition plate 92 extends downward too much, the area of the air passage is reduced (the air passage is blocked by the partition plate 92) and the partition plate 92 functions as a resistance against an air flow. Accordingly, when the partition plate 92 is a flat plate, the lower end of the partition plate 92 is positioned on the windward side of the nozzle 6.

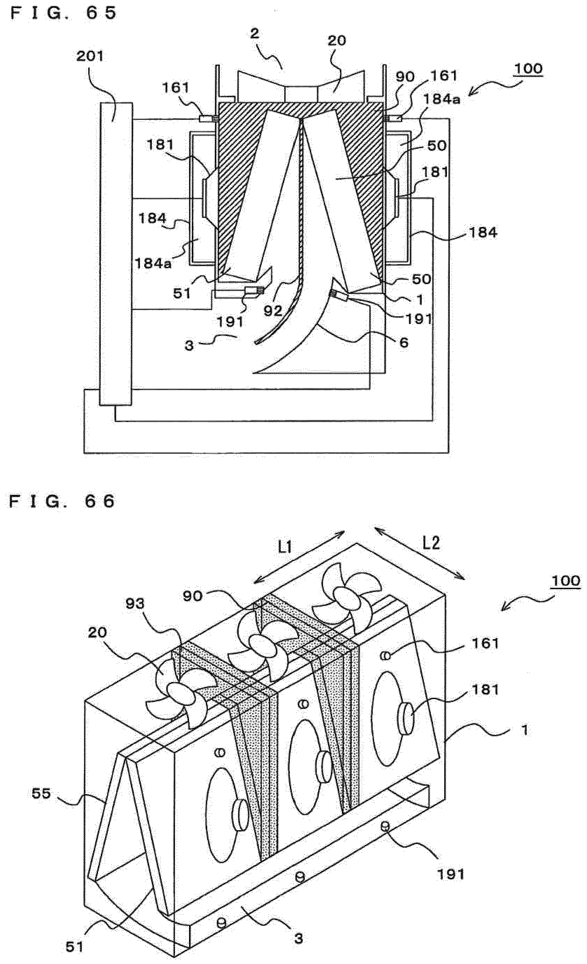

When, for example, the bottom portion of the partition plate 92 is curved in accordance with the shape of the nozzle 6 as shown in FIG. 65, the lower end of the partition plate 92 may extend to the air outlet 3. If the lower end of the partition plate 92 extends to the air outlet 3, the section in which plane wave conversion of sound generated by the fan 20 is performed is widened and larger noise cancellation effects can be obtained.

In the indoor unit 100 configured as described above, width L2 of the divided air passages can be less than in the indoor unit 100 according to Embodiment 25 to Embodiment 27. Accordingly, the indoor unit 100 according to Embodiment 28 can perform plane wave conversion and deadening of higher frequency sound than the indoor unit 100 according to Embodiment 25 to Embodiment 27.

Embodiment 29

The active noise cancellation mechanism may be disposed in the indoor unit 100 in Embodiment 24, of course. Items in Embodiment 29 that are not particularly described are the same as in Embodiment 25 to Embodiment 28, and functions and structures that are the same as in Embodiment 25 to Embodiment 28 are given the same reference characters in the following description.

FIG. 66 is a perspective view showing an indoor unit according to Embodiment 29 of the present invention. In FIG. 66, the casing 1 and the partition plates 90 are indicated transparently and components such as the box 184 (back chamber 184a) and the signal processor 201 are not shown to facilitate understanding of the drawing.

The indoor unit 100 according to Embodiment 29 is the indoor unit 100 in Embodiment 24 to which the active noise cancellation mechanism has been added. That is, in the indoor unit 100 according to Embodiment 29, sound absorbing material 93 is disposed on both sides of each of the partition plates 90 of the indoor unit 100 in Embodiment 25. The sound absorbing material 93 is made of urethane, porous resin, porous aluminum, or so on. Such sound absorbing material 93 has a small effect of deadening sound of low frequencies, but can deaden sound with high frequencies of, for example, 1 kHz or more.

The thicker the sound absorbing material 93, the lower the frequency that can be absorbed by the sound absorbing material 93. However, the indoor unit 100 with the noise cancellation mechanism can deaden sound with frequencies of, for example, 1 kHz or less. Accordingly, the sound absorbing material 93 with a thickness of 20 mm or less, which can absorb, for example, 2 kHz sound, has a sufficient effect.

In the indoor unit 100 configured as described above, low frequency sound can be deadened efficiently by the active noise cancellation method. High frequency sound that cannot be deadened by the active noise cancellation method can be also deadened by the sound absorbing material 93.

Embodiment 30

Partition less example

In Embodiment 1 etc., effects of spiral flows of adjacent fans 20 are suppressed by dividing the air passage in the casing 1 with partition plates (such as partition plates 90). Since the indoor unit 100 according to the present invention includes a plurality of the fans 20, if the rotation directions of the fans 20 are set as described below, effects of spiral flows of the adjacent fans 20 can be suppressed without using the partition plates 90. Functions and structures in Embodiment 30 that are the same as in Embodiment 1 to Embodiment 29 are given the same reference characters in the following description.

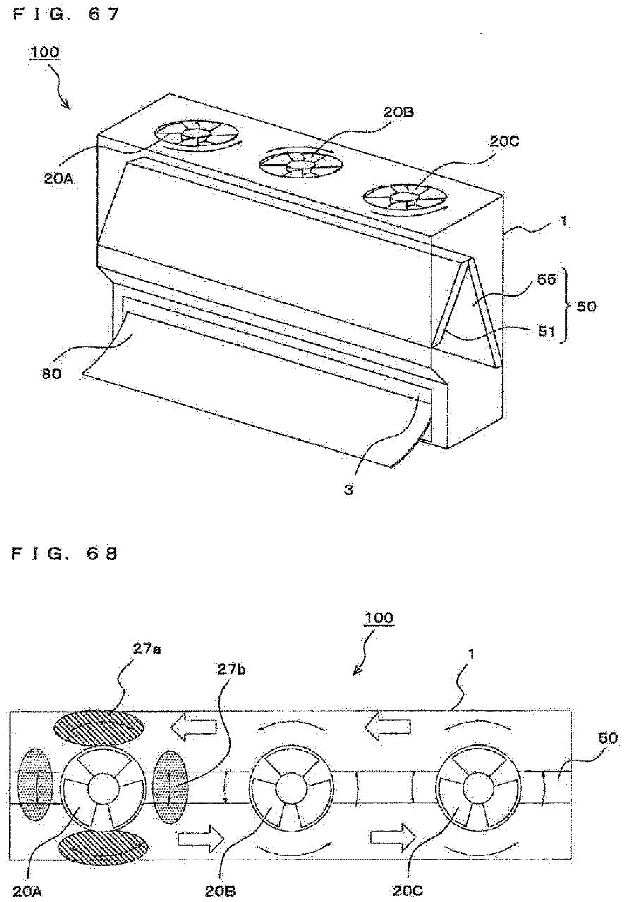

FIG. 67 is a perspective view showing an indoor unit according to Embodiment 30 of the present invention.

As in the indoor unit 100 according to Embodiment 1, the indoor unit 100 according to Embodiment 30 includes a plurality of the fans 20. In the indoor unit 100 according to Embodiment 30, three fans 20 are disposed along the left/right direction (longitudinal direction) of the casing 1 as shown in FIG. 67. The three fans 20 have the same specifications (such as a fan shape). The indoor unit 100 according to Embodiment 30 has a structure in which no partition plates (such as partition plates 90) are disposed in the casing 1. When each of the fans 20 needs to be identified for convenience of explanation, the fans 20 are referred to as the fan 20A, the fan 20B, and the fan 20C in order from left to right in the casing 1.

In Embodiment 30, the rotation directions of the fans 20 (fan 20A to fan 20C) are set as described below.

FIG. 68 is a diagram describing the relationship between a fan rotation direction and an air flow generated in the casing in the indoor unit according to Embodiment 30 of the present invention. FIG. 68 is a sectional plan view of the indoor unit 100 and the lower side of FIG. 68 corresponds to the front side of the indoor unit 100. FIG. 68 shows only the upper end of the heat exchanger 50. In Embodiment 30 to Embodiment 34, the gradient change part (for example, the connection part between the front side heat exchanger 51 and the back side heat exchanger 55) located at the top portion of the heat exchanger 50 is also referred to as the upper end.

When all of the fan 20A to fan 20C rotate in the same direction as shown in FIG. 68, air flows are generated in the casing 1 as described below. In FIG. 68, the fan 20A to fan 20C rotate counterclockwise in a top view of the indoor unit 100. When the fan 20A to fan 20C rotate in the same direction, the directions of air flows generated in the areas 27a (areas that are present in the direction substantially orthogonal to the direction of arrangement of the fans 20 in a top view of the fans 20 disposed in the casing 1) of the fans 20 are the same.

Accordingly, the speed of air flows generated in the areas 27a increases, thereby generating a flow field as indicated by outline arrows in FIG. 68 in the casing 1. This causes large variations in the wind speed distribution of air flowing into the heat exchanger 50 placed in a downstream position when the fan 20A to fan 20C rotate in the same direction.

For example, in the case shown in FIG. 68, much air flows into the front right side (lower right side in FIG. 68) and the back left side (upper left side in FIG. 68) of the heat exchanger 50. In the case shown in FIG. 68, air flowing into the front left side (lower left side in FIG. 68) and the back right side (upper right side in FIG. 68) of the heat exchanger 50 becomes insufficient.

Particularly, in the indoor unit 100 according to Embodiment 30 in which the fans 20 are disposed above the upper end of the heat exchanger 50, if a sufficient distance cannot be kept between the fans 20 and the upper end of the heat exchanger 50, the speed of air flows in the areas 27b (areas that are present in the direction of arrangement of the fans 20 in a top view of the fans 20 disposed in the casing 1) is lower than in the areas 27a.

Accordingly, in the indoor unit 100 according to Embodiment 30 in which the fans 20 are disposed above the upper end of the heat exchanger 50, the speed of air flows in the areas 27a becomes higher and variations in the wind speed distribution of air flowing into the heat exchanger 50 become larger.

Accordingly, in the indoor unit 100 according to Embodiment 30, the rotation directions of fans 20 (fan 20A to fan 20C) are set so that adjacent fans 20 rotate in mutually opposite directions.

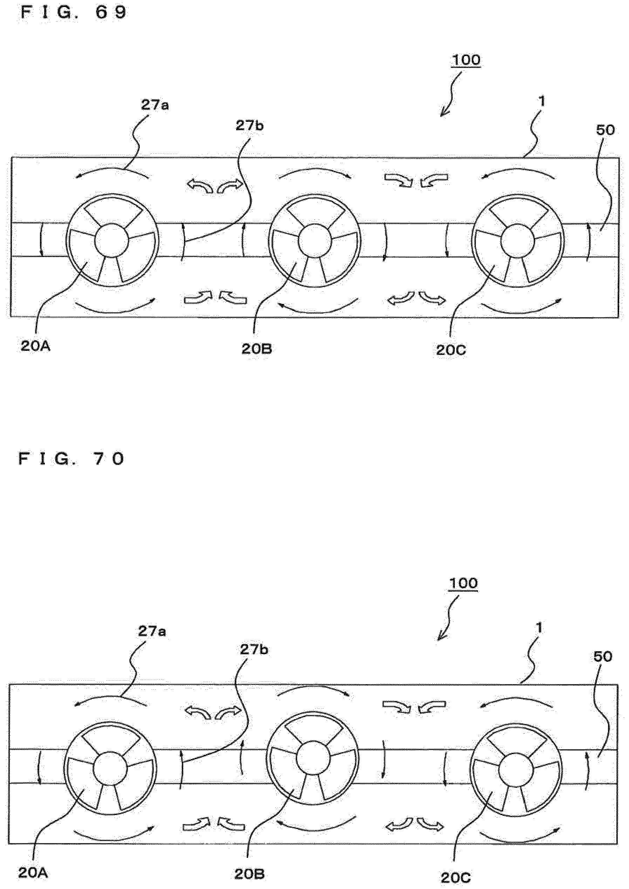

FIG. 69 is a sectional plan view showing the indoor unit according to Embodiment 30 of the present invention.

As shown in FIG. 69, adjacent fans 20 rotate in mutually opposite directions. In Embodiment 30, the fan 20A rotates counterclockwise in a top view of the indoor unit 100. The fan 20B, which is adjacent to the fan 20A, rotates clockwise, which is opposite to the rotation direction of the fan 20A. The fan 20C, which is adjacent to the fan 20B, rotates counterclockwise, which is opposite to the rotation direction of the fan 20B. The rotation directions of the fans 20 are not limited to those shown in FIG. 69. Adjacent fans 20 only need to rotate in mutually opposite directions.

By setting the rotation directions of adjacent fans 20 to mutually opposite directions as described above, a flow field as indicated by the outline arrows in FIG. 69 is generated in the casing 1. That is, between adjacent fans 20, air flows in the areas 27a strike each other between adjacent fans 20 (flow in mutually opposite directions) and directly flow into the heat exchanger 50 placed in a downstream position.

By setting the rotation directions of adjacent fans 20 to mutually opposite directions, variations in the wind speed distribution of air flowing into the heat exchanger 50 can be improved as compared with the case where the fans 20 rotate in the same direction (FIG. 68). Accordingly, by setting the rotation directions of adjacent fans 20 to mutually opposite directions, a pressure loss of the indoor unit 100 can be reduced and the heat exchange performance of the heat exchanger 50 can be improved.

In addition, since the indoor unit 100 according to Embodiment 30 does not use partition plates (such as partition plates 90), the component cost and manufacturing cost (such as man hours for attaching partition plates to the casing) can be reduced.

The direction of arrangement of the fans 20 does not need to be in parallel with the left/right direction of the casing 1 strictly. For example, each of the fans 20 may be displaced slightly in the front/rear direction of the casing 1 as shown in FIG. 70, of course.

Embodiment 31

A plurality of fans 20 may be arranged along the front/rear direction of the casing 1. In this case, it is desirable to set the rotation directions of the fans 20 adjacent to each other in the front/rear direction of the casing 1 as described below, for example. Items in Embodiment 31 that are not particularly described are the same as in Embodiment 30, and functions and structures that are the same as in Embodiment 30 are given the same reference characters in the following description.

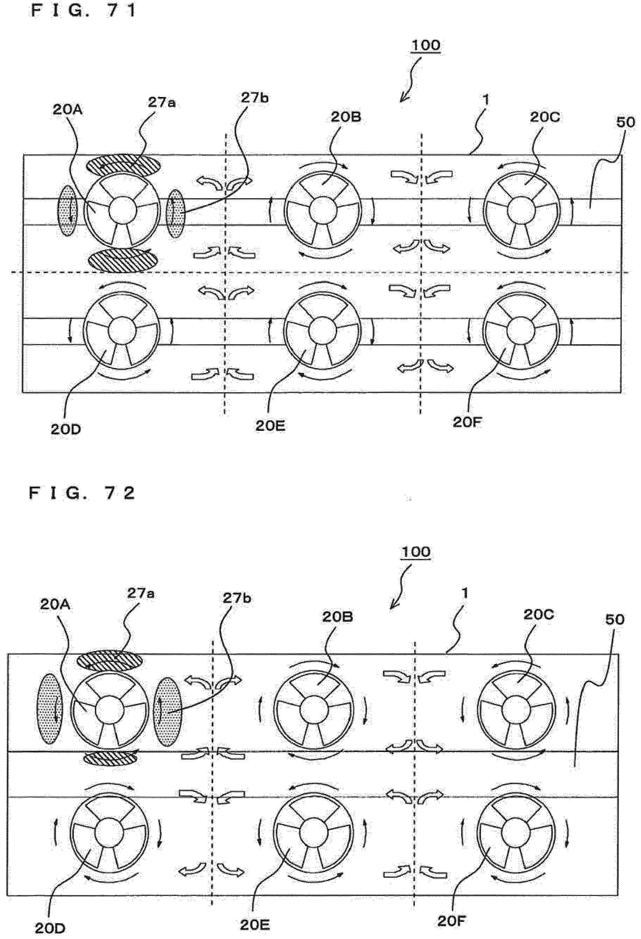

FIG. 71 is a sectional plan view showing an indoor unit according to Embodiment 31 of the present invention. The lower side of FIG. 71 corresponds to the front side of the indoor unit 100. FIG. 71 shows only the upper ends of the heat exchanger 50.

The indoor unit 100 according to Embodiment 31 includes six fans 20. More specifically, three fans 20 are arranged along the left/right direction on the back side of the casing 1. In addition, three fans 20 are arranged along the left/right direction on the front side of the casing 1. The fans 20 arranged on the front side of the casing 1 are displaced from the fans 20 arranged on the back side of the casing 1 in the front/rear direction of the casing 1. These six fans 20 have the same specifications (such as a fan shape).

The indoor unit 100 according to Embodiment 31 has a structure in which no partition plates (such as partition plates 90) are disposed in the casing 1. When each of the fans 20 needs to be identified for convenience of explanation, the fans 20 arranged on the back side of the casing 1 are referred to as the fan 20A, the fan 20B, and the fan 20C in order from left to right and the fans 20 arranged on the front side of the casing 1 are referred to as the fan 20D, the fan 20E, and the fan 20F in order from left to right.

The indoor unit 100 according to Embodiment 31 is provided with the heat exchanger 50 having two upper ends. The heat exchanger 50 having two upper ends is, for example, a heat exchanger 50 that is substantially N shape, substantially horizontally flipped N shape, or substantially M shape in the right side vertical section. These types will be described later. The fan 20A, the fan 20B, and the fan 20C arranged on the back side of the casing 1 are disposed above the upper ends on the back side of the heat exchanger 50, and the fan 20D, the fan 20E, and the fan 20F arranged on the front side of the casing 1 are disposed above the upper ends on the front side of the heat exchanger 50.

In the indoor unit 100 according to Embodiment 31, the rotation directions of the fans 20 are set as described below.

In the fans 20 arranged in the left/right direction of the casing 1, adjacent fans 20 rotate in mutually opposite directions. In the fans 20 (the fan 20A and the fan 20D, the fan 20B and the fan 20E, and the fan 20C and the fan 20F) arranged in the front/rear direction of the casing 1, the rotation directions of adjacent fans 20 are set to the same direction.

By setting the rotation directions of the fans 20 as described above, a flow field as indicated by the outline arrows in FIG. 71 is generated in the casing 1. That is, between fans 20 adjacent to each other in the left/right direction, air flows in the areas 27a strike each other between the adjacent fans 20 (in areas indicated by vertical dotted lines in FIG. 71) and directly flow into the heat exchanger 50 placed in a downstream position. By setting the rotation directions of fans 20 adjacent to each other in the left/right direction to mutually opposite directions, variations in the wind speed distribution of air flowing into the heat exchanger 50 can be improved as in Embodiment 30.

Accordingly, by setting the rotation directions of fans 20 adjacent to each other in the left/right direction to mutually opposite directions, a pressure loss of the indoor unit 100 can be reduced and the heat exchange performance of the heat exchanger 50 can be improved. Since the fans 20 are disposed above the upper ends of the heat exchanger 50 in Embodiment 31, air flows in the areas 27a have a wind speed higher than air flows in the areas 27b.

In addition, since the rotation directions of fans 20 adjacent to each other in the front/rear direction are the same in the indoor unit 100 according to Embodiment 31, air flows in the areas 27a strike each other between the adjacent fans 20 and directly flow into the heat exchanger 50 placed in a downstream position. Accordingly, the same effects (reduction in a pressure loss by the improved wind speed distribution and improvement of heat exchange performance) as in the case where partitions plates are used can be obtained also in the front/rear direction.

The direction of arrangement of the fans 20 along the left/right direction of the casing 1 does not need to be in parallel with the left/right direction of the casing 1 strictly. Each of the fans 20 may be slightly displaced in the front/rear direction of the casing 1, of course. The direction of arrangement of the fans 20 along the front/rear direction of the casing 1 does not need to be in parallel with the front/rear direction of the casing 1 strictly. Each of the fans 20 may be slightly displaced in the left/right direction of the casing 1, of course.

Embodiment 32

When the fans 20 are also arranged in the front/rear direction of the casing 1, the rotation directions of fans 20 adjacent to each other in the front/rear direction of the casing 1 may be set as described below, for example. Items in Embodiment 32 that are not particularly described are the same as in Embodiment 30 or Embodiment 31, and functions and structures that are the same as in Embodiment 30 or Embodiment 31 are given the same reference characters in the following description.

FIG. 72 is a sectional plan view showing an indoor unit according to Embodiment 32 of the present invention. The lower side of FIG. 72 indicates the front side of the indoor unit 100. FIG. 72 shows only the upper end of the heat exchanger 50.

The indoor unit 100 according to Embodiment 32 includes six fans 20 as in the indoor unit 100 according to Embodiment 31. These six fans 20 have the same specifications (such as a fan shape). The indoor unit 100 according to Embodiment 32 has a structure in which no partition plates (such as partition plates 90) are disposed in the casing 1. When each of the fans 20 needs to be identified for convenience of explanation, the fans 20 arranged on the back side of the casing 1 are referred to as the fan 20A, the fan 20B, and the fan 20C in order from left to right and the fans 20 arranged on the front side of the casing 1 are referred to as the fan 20D, the fan 20E, and the fan 20F in order from left to right.

However, in the indoor unit 100 according to Embodiment 32, the settings of the rotation directions of fans 20 adjacent to each other in the front/rear direction are different from the settings for the indoor unit 100 according to Embodiment 31. That is, in the fans 20 (the fan 20A and the fan 20D, the fan 20B and the fan 20E, and the fan 20C and the fan 20F) arranged in the front/rear direction of the casing 1, the rotation directions of adjacent fans 20 are set to mutually opposite directions.

The heat exchanger 50 disposed in the indoor unit 100 according to Embodiment 32 is provided with the heat exchanger 50 having one upper end, which is different from the heat exchanger 50 disposed in the indoor unit 100 according to Embodiment 31. That is, the fans 20A to 20C arranged on the back side of the casing 1 are disposed closer to the back side than the upper end on the back side of the heat exchanger 50, and the fans 20D to 20F arranged on the front side of the casing 1 are disposed closer to the front side than the upper end on the front side of the heat exchanger 50.

The heat exchanger 50 having one upper end is, for example, a heat exchanger that is substantially inverted V shape in the right side vertical section, which is described in Embodiment 1, Embodiment 30, etc. The heat exchanger 50 is not limited to a heat exchanger 50 that is substantially inverted V shape in the right side vertical section and may has any shape in the right side vertical section as long as the heat exchanger 50 has one upper end.

By setting the rotation directions of the fans 20 as described above, a flow field as indicated by the outline arrows in FIG. 72 is generated in the casing 1. That is, between fans 20 adjacent to each other in the left/right direction, air flows in the areas 27a strike each other between the adjacent fans 20 (in areas indicated by vertical dotted lines in FIG. 72) and directly flow into the heat exchanger 50 placed in a downstream position.

By setting the rotation directions of fans 20 adjacent to each other in the left/right direction to mutually opposite directions, variations in the wind speed distribution of air flowing into the heat exchanger 50 can be improved as in Embodiment 30 and Embodiment 31. Accordingly, by setting the rotation directions of fans 20 adjacent to each other in the left/right direction to mutually opposite directions, a pressure loss of the indoor unit 100 can be reduced and the heat exchange performance of the heat exchanger 50 can be improved.

Since the fans 20 are disposed closer to the front side or the back side than the upper end of the heat exchanger 50 in the indoor unit 100 according to Embodiment 32, the areas 27a are positioned above the upper end of the heat exchanger 50. Accordingly, air flows in the areas 27b have a wind speed higher than air flows in the areas 27a. Accordingly, even when the rotation directions of fans 20 adjacent to each other in the front/rear direction are not the same, a pressure loss of the indoor unit can be reduced and the heat exchange performance of the heat exchanger 50 can be improved.

That is, by displacing the installation positions of the fans 20 from the upper end of the heat exchanger 50, even if the rotation directions of fans 20 adjacent to each other in the front/rear direction are not restricted, in a top view of the casing 1, a pressure loss of the indoor unit 100 can be reduced and the heat exchange performance of the heat exchanger 50 can be improved.

The direction of arrangement of the fans 20 along the left/right direction of the casing 1 does not need to be in parallel with the left/right direction of the casing 1 strictly. Each of the fans 20 may be slightly displaced in the front/rear direction of the casing 1, of course. The direction of arrangement of the fans 20 along the front/rear direction of the casing 1 does not need to be in parallel with the front/rear direction of the casing 1 strictly. Each of the fans 20 may be slightly displaced in the left/right direction of the casing 1, of course.

Embodiment 33

In addition, the following fans 20 can be arranged. Items in Embodiment 33 that are not particularly described are the same as in Embodiment 30 to Embodiment 32, and functions and structures that are the same as in Embodiment 30 to Embodiment 32 are given the same reference characters in the following description.

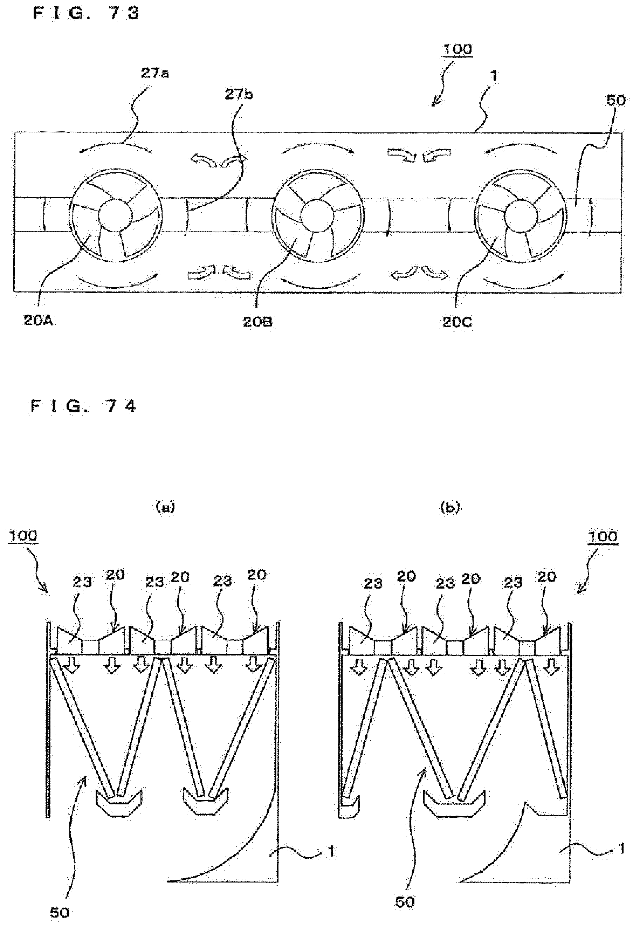

FIG. 73 is a sectional plan view showing an indoor unit according to Embodiment 33 of the present invention. The lower side of FIG. 73 indicates the front side of the indoor unit 100. FIG. 73 shows only the upper end of the heat exchanger 50.

The basic structure of the indoor unit 100 according to Embodiment 33 is the same as in the indoor unit 100 according to Embodiment 30. That is, the three fans 20 (fan 20A to fan 20C) are arranged in the left/right direction of the casing 1. Adjacent fans 20 of these fans 20 rotate in mutually opposite directions. In addition, a heat exchanger having substantially inverted V shape in the right side vertical section is disposed as the heat exchanger 50. The indoor unit 100 has a structure in which no partition plates are disposed in the casing 1.

However, the specifications of the fans 20 in the indoor unit 100 according to Embodiment 33 are different from those of the fans 20 in the indoor unit 100 according to Embodiment 30. That is, each of the fans 20 in Embodiment 33 has different specifications (for example, a bladed wheel diameter, boss ratio, blade mounting angle, etc.). The fans 20 in Embodiment 33 can rotate only in one direction, so the fans 20 are different from those in Embodiment 30 to Embodiment 32. That is, the fan 20A and the fan 20C rotate only counterclockwise in a top view of the indoor unit 100. The fan 20B rotates only clockwise in a top view of the indoor unit 100.

Some of the fans 20 may have the same specifications, of course. The fans 20 are not arranged in the front/rear direction of the casing 1 in Embodiment 33, but fans 20 may be arranged in the front/rear direction of the casing 1, of course. In addition, the heat exchanger 50 may have any shape other than a substantially A-shape in the right side vertical section.

In such a structure, the optimal design of the fans 20 can be performed individually depending on the rotation direction, enabling reduction of noise as compared with Embodiment 30 to Embodiment 32. In addition, the design flexibility of the indoor unit 100 can be improved when the air volume and wind speed distribution at the air outlet 3 are adjusted by individually setting the air volumes and wind speeds of the fans 20 as described later.

Embodiment 34

When the fans 20 are arranged in the front/rear direction, it is desirable that the fans 20 are placed, for example, in the following positions. Items in Embodiment 34 that are not particularly described are the same as in Embodiment 30 to Embodiment 33, and functions and structures that are the same as in Embodiment 30 to Embodiment 33 are given the same reference characters in the following description.

FIG. 74 is a vertical sectional view showing an indoor unit according to Embodiment 34 of the present invention. FIG. 74(a) shows the indoor unit 100 including the heat exchanger 50 that is substantially W shape in the right side vertical section. FIG. 74(b) shows the indoor unit 100 including the heat exchanger 50 that is substantially M shape in the right side vertical section.

In the indoor unit 100 according to Embodiment 34, a plurality of the fans 20 are arranged along the front/rear direction of the casing 1. In Embodiment 34, three fans 20 are arranged along the front/rear direction of the casing 1. In the positions of the fans 20 that are displaced in the front/rear direction, the fans 20 may be arranged along the left/right direction (the direction orthogonal to the paper surface in FIG. 74) of the casing 1, of course.

When the upper end of the heat exchanger 50 is positioned below the blades 23 of the fans 20, air with a high flow rate strikes the upper end of the heat exchanger 50. This increases a pressure loss in the heat exchanger 50 and causes variations in the wind speed distribution of air flowing into the heat exchanger.

Accordingly, in Embodiment 34, the fans 20 and the heat exchanger 50 are placed so that the upper end of the heat exchanger 50 is not positioned below the blades 23 of the fans 20.

Such a structure of the indoor unit 100 allows flows (outline arrows in FIG. 74) on the downstream side of the fans 20 to provide at a minimum an air passage blocked by the upper end of the heat exchanger 50. Accordingly, a pressure loss of the heat exchanger 50 can be reduced and the wind speed distribution of air flowing into the heat exchanger 50 can be improved.

Embodiment 35

Fan individual control

As described above, the indoor unit 100 according to the present invention includes the plurality of fans 20. By individually controlling each of these fans 20, air direction controllability of the indoor unit 100 and others can be improved.

In Embodiment 35, an example of a specific embodiment of individually controlling the air volume of each fan 20 will be described. In Embodiment 35, an example of the indoor unit 100 in which three fans 20 are arranged along a left/right direction (a longitudinal direction) of the casing 1 will be described.

Also, if it is required for convenience of description to separately describe each fan 20, the fans are referred to as a fan 20A, a fan 20B, and a fan 20C from the left of the casing 1. Functions and structures in Embodiment 35 that are the same as in Embodiment 1 to Embodiment 34 are given the same reference characters in the following description. It goes without saying that the invention in Embodiment 35 can be established even when the number of fans arranged in the indoor unit 100 is other than 3.

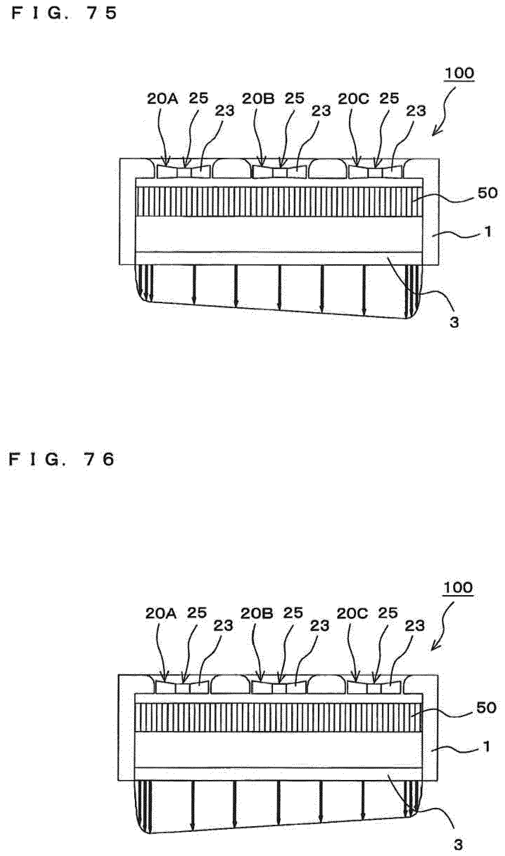

FIG. 75 is a diagram describing an example of a wind speed distribution of an air outlet in an indoor unit according to Embodiment 35 of the present invention. FIG. 75 is a front view of the indoor unit 100.

The indoor unit 100 according to Embodiment 35 has three fans 20 provided in a left/right direction (a longitudinal direction) of the casing 1. When the air volumes of these fans 20 are sequentially increased from the fan 20 on the left of FIG. 75, the wind speed distribution at the air outlet 3 of the indoor unit 100 is as shown by arrows in FIG. 75.

That is, when the air volumes of the fan 20A to the fan 20C are the fan 20A < the fan 20B < the fan 20C, the wind speed distribution at the air outlet 3 of the indoor unit 100 is as shown by the arrows in FIG. 75. A direction of each arrow shown in FIG. 75 indicates a direction of the air flow, and the magnitude of each arrow in FIG. 75 shows the magnitude of the wind speed. That is, each arrow in FIG. 75 shows that the longer the length, the faster the wind speed (in other words, the more the air volume).

FIG. 76 is a diagram describing another example of the wind speed distribution of the air outlet in the indoor unit according to Embodiment 35 of the present invention. FIG. 76 is a front view of the indoor unit 100.

When the air volumes of the fans 20 are sequentially increased from the fan 20 on the right of FIG. 75, the wind speed distribution at the air outlet 3 of the indoor unit 100 is as shown by arrows in FIG. 76. That is, when the air volumes of the fan 20A to the fan 20C are the fan 20A > the fan 20B > the fan 20C, the wind speed distribution at the air outlet 3 of the indoor unit 100 is as shown by the arrows in FIG. 76.

A direction of each arrow shown in FIG. 76 indicates a direction of the air flow, and the magnitude of each arrow in FIG. 76 shows the magnitude of the wind speed. That is, each arrow in FIG. 76 shows that the longer the length, the faster the wind speed (in other words, the more the air volume).

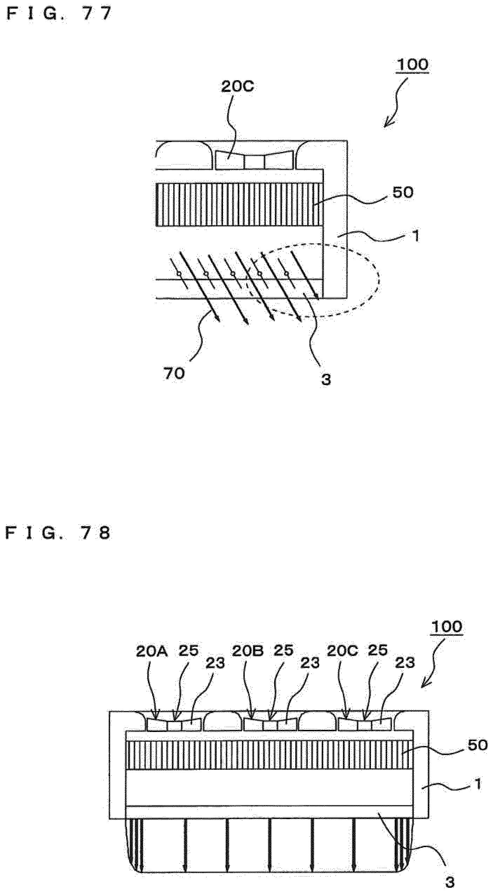

FIG. 77 is an enlarged view of the main part (a sectional front view) showing a part in the vicinity of the air outlet of the indoor unit according to Embodiment 35 of the present invention. FIG. 77 shows left/right vanes 80 when the air flow blown from the air outlet 3 is controlled to a right direction in FIG. 77.

As shown in FIG. 77, the air flow bent by the left/right vanes 80 collides with a side wall part of the casing 1 in the vicinity of the air outlet 3, causing an air flow loss. In this case, as shown in FIG. 76, it is desirable to generate the air volume of each fan 20 so that the wind speed of the right side end of the air outlet 3 is decreased (see FIG. 76). When the entire air volume of the air outlet 3 is set to be the same as the air volume of a conventional indoor unit (an indoor unit provided with only one fan or an indoor unit with the air volume of each of a plurality of fans not controlled), by individually controlling the air volumes of the fans 20, an air flow loss due to collision of the air flow with the side wall part of the casing 1 can be reduced.

The inventors have studied the influence of the wind speed distribution of the air outlet 3 (a difference in air volume for each fan 20) on heat exchange performance and found that the influence on heat exchange performance is small if a difference in air volume between adjacent fans 20 is equal to or smaller than approximately 20 %. In addition, the inventors have found that the influence on heat exchange performance is further smaller if the difference in air volume between adjacent fans 20 is equal to or smaller than approximately 10 %.

Accordingly, when the air volume is individually controlled for each fan 20, the difference in air volume between adjacent fans 20 is preferably equal to or smaller than approximately 20 %. Also, when the air volume is individually controlled for each fan 20, the difference in air volume between adjacent fans 20 is more preferably equal to or smaller than approximately 10 %.

The effect of individually controlling the air volume of each fan 20 is not restricted to the air flow loss reduction effect. For example, if there is a place desired to be air-conditioned in a concentrated manner (when spot air conditioning is performed), it is sufficient that the air volume of each fan 20 is individually controlled so that the air flow reaching this place is large. For example, if there is a place where an air-conditioned air flow is avoided (when windbreak mild air conditioning is performed), it is sufficient that the air volume of each fan 20 is individually controlled so that the air flow reaching this place is small (or the air flow does not reach this place).

In Embodiment 35, the plurality of fans 20 with the same shape (the same specifications) are provided and the rotation speed of each fan 20 is changed, thereby individually controlling the air volume of each fan 20. In this case, it is desirable that "the product of the number of blades 23 of the fan 20 and the rotation speed of the bladed wheel 25 of the fan 20" be approximately 10 Hz away from each other among the fans 20. With this, an effect of suppressing a whine occurring from each fan 20 (a whine generated due to interference of blade passing frequency (BPF) noise) can also be expected.

Embodiment 36

The air volume of each fan 20 may be individually controlled as described below. Items in Embodiment 36 that are not particularly described are the same as in Embodiment 35, and functions and structures that are the same as in Embodiment 35 are given the same reference characters in the following description.

FIG. 78 is a diagram describing a wind speed distribution of an air outlet when the air volume of each fan 20 is the same in an indoor unit according to Embodiment 36 of the present invention. FIG. 78 is a front view of the indoor unit 100. A direction of each arrow shown in FIG. 78 indicates a direction of the air flow, and the magnitude of each arrow in FIG. 78 shows the magnitude of the wind speed. That is, each arrow in FIG. 78 shows that the longer the length, the faster the wind speed (in other words, the more the air volume).

As shown in FIG. 78, when the air volume generated by each fan 20 is the same, it can be found that the wind speed is decreased in the vicinity of both ends of the air outlet 3. The wind speed is decreased because of air flow friction occurring on the side wall of the casing 1 forming the air passage or others. Accordingly, when the indoor unit 100 is operated in a low air volume (low capacity) mode, a back flow may occur in this speed decreasing area (in the vicinity of both ends of the air outlet 3). This back flow may cause an unusual sound like a breathing sound. At the time of cooling operation, this back flow causes an inconvenience such as condensation due to mixture of warm air and cold air.

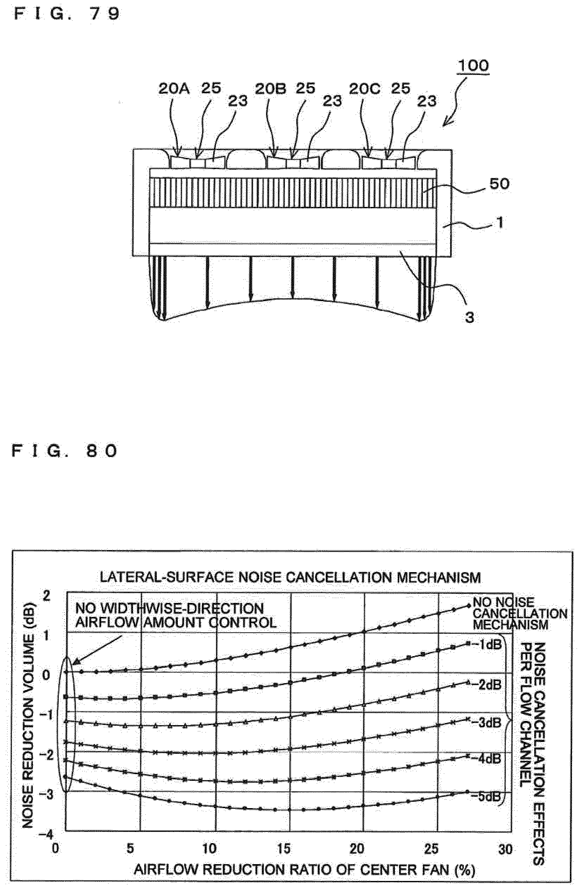

To prevent this, the indoor unit 100 according to Embodiment 36 controls the air volume of each fan 20 as shown in FIG. 79 when the indoor unit 100 is operated in the low air volume (low capacity) mode.

FIG. 79 is a diagram describing an example of a wind speed distribution of the air outlet when the indoor unit according to Embodiment 36 of the present invention operates in the low air volume mode.

When operating in the low air volume (low capacity) mode, the indoor unit 100 according to Embodiment 36 increases the air volumes of the fan 20A and the fan 20C placed at both ends more than the air volume of the fan 20B arranged at the middle portion so that the wind speed is large in the vicinity of both ends of the air outlet 3. When the entire air volume of the air outlet 3 in the low air volume (low capacity) mode is set to be the same as the air volume of a conventional indoor unit (an indoor unit provided with only one fan or an indoor unit with the air volume of each of a plurality of fans not controlled), by controlling the air volume of each fan 20 in this manner, the problems occurring in the low air volume (low capacity) mode can be solved.

The inventors have studied the influence of the wind speed distribution of the air outlet 3 (a difference in air volume for each fan 20) on heat exchange performance and found that the influence on heat exchange performance is small if a difference in air volume between adjacent fans 20 is equal to or smaller than approximately 20 %. Also, the inventors have found that the influence on heat exchange performance is further smaller if the difference in air volume between adjacent fans 20 is equal to or smaller than approximately 10 %.

Accordingly, when the air volume is individually controlled for each fan 20, the difference in air volume between adjacent fans 20 is preferably equal to or smaller than approximately 20 %. Also, when the air volume is individually controlled for each fan 20, the difference in air volume between adjacent fans 20 is more preferably equal to or smaller than approximately 10 %.

For example, as with Embodiment 35, if there is a place desired to be air-conditioned in a concentrated manner (when spot air conditioning is performed), the air volume of each fan 20 may further be individually controlled so that the air flow reaching this place is large. For example, if there is a place where an air-conditioned air flow is avoided (when windbreak mild air conditioning is performed), the air volume of each fan 20 may further be individually controlled so that the air flow reaching this place is small (or the air flow does not reach this place).

When the noise cancellation mechanism described above or a noise cancellation mechanism described below (for example, the use of a sound absorbing material, a cabinet 26 of the fan 20 functioning as a Helmholtz silencer, or an active noise cancellation mechanism) is provided in the indoor unit 100, by combining a structure of individually controlling the air volume of each fan 20 with any of these noise cancellation mechanism, the noise cancellation effect is further improved.

For example, when the active noise cancellation mechanism is provided in the indoor unit 100, it is preferable to provide a noise cancellation mechanism according to the number of sound sources (the number of fans 20). However, there may be the case in which the noise cancellation mechanism cannot be provided according to the number of sound sources (the number of fans 20) due to limitations in dimension of the indoor unit 100 or limitations in cost. Even in this case, by combining the structure of individually controlling the air volume of each fan 20, the noise cancellation effect can be sufficiently obtained.

FIG. 80 is a diagram showing the characteristics of a relation between an air volume reduction ratio of the fan at a middle portion and the noise reduction effect with the same air volume in the indoor unit according to Embodiment 36 of the present invention. FIG. 80 shows a noise reduction volume when the air volume of the fan 20b placed at the middle portion is reduced with the same entire air volume of the air outlet 3. In FIG. 80, -1 dB, -2 dB, -3 dB, -4 dB, and -5 dB each represent a noise cancellation effect with respect to noise most related to sound detected by this noise cancellation detecting device.

The noise detecting microphone 161 of the noise cancellation mechanism and the control speaker used to obtain the results of FIG. 80 were placed inside a mechanical box (a box where a control board and others are stored, not shown) provided on each of both left and right side surface parts of the casing 1 so as not to influence the air flow in the air passage. Accordingly, -1 dB, -2 dB, -3 dB, -4 dB, and -5 dB shown in FIG. 80 each represent a noise cancellation effect with respect to noise produced from the fan 20A and the fan 20C.

For example, when a noise cancellation mechanism with a noise cancellation effect of -5 dB is provided in the indoor unit 100, noise emitted from the fan 20A and the fan 20B in the vicinity of both ends is reduced by 5 dB each. On the other hand, noise emitted from the fan 20B placed at the middle portion does not have the effect of a noise cancellation mechanism, and therefore a noise cancellation effect of 2.7 dB in total can be obtained in the entire indoor unit 100.

As shown in Embodiment 36, if the air volume of the fan 20B at the middle portion is reduced by approximately 15 %, the air volumes of the fan 20A and the fan 20B placed in the vicinity of both ends are each increased by 7.5 % to obtain the same air volume. As such, by individually controlling the air volume of each fan 20, noise emitted from the fan 20A and the fan 20B placed in the vicinity of both ends is increased by 1.9 dB, and noise emitted from the fan 20B placed at the middle portion is reduced by 2 dB. As a result, a noise cancellation effect of 3.5 dB in total is obtained in the entire indoor unit 100, and the noise cancellation effect is improved more than the effect before the air volume of each fan 20 is individually controlled.

In Embodiment 36, the plurality of fans 20 with the same shape (the same specifications) are provided and the rotation speed of each fan 20 is changed, thereby individually controlling the air volume of each fan 20. In this case, it is desirable that "the product of the number of blades 23 of the fan 20 and the rotation speed of the bladed wheel 25 of the fan 20" be approximately 10 Hz away from each other among the fans 20. With this, an effect of suppressing a whine occurring from each fan 20 (a whine generated due to interference of blade passing frequency (BPF) noise) can also be expected.

Embodiment 37

The air volume of each fan 20 may be individually controlled as described below. Items in Embodiment 37 that are not particularly described are the same as in Embodiment 35 or Embodiment 36, and functions and structures that are the same as in Embodiment 35 or Embodiment 36 are given the same reference characters in the following description.

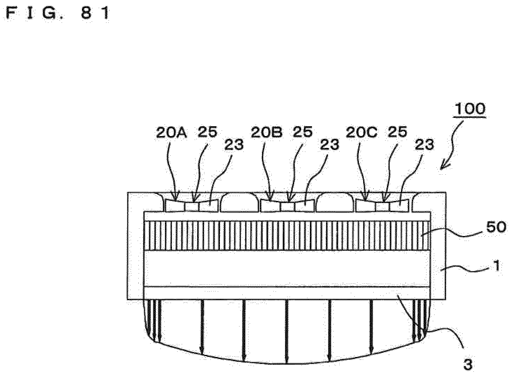

FIG. 81 is a diagram describing an example of a wind speed distribution of an air outlet in an indoor unit according to Embodiment 37 of the present invention. FIG. 81 is a front view of the indoor unit 100. A direction of each arrow shown in FIG. 81 indicates a direction of the air flow, and the magnitude of each arrow in FIG. 81 shows the magnitude of the wind speed. That is, each arrow in FIG. 81 shows that the longer the length, the faster the wind speed (in other words, the more the air volume).

In the indoor unit 100 according to Embodiment 37, the air volume of the fan 20B placed at the middle portion is larger than the air volumes of the fan 20A and the fan 20C placed at both ends so that the wind speed of the middle portion of the air outlet 3 is larger than the wind speed in the vicinity of both ends.

The speed energy of the air flow blown from the air outlet 3 is gradually decreased at a position in contact with low speed or stationary indoor air, and the speed of the air flow in the middle portion is eventually decreased. Accordingly, by setting the air flow blown from the air outlet 3 as in Embodiment 37, the flow rate of the air flow in the middle portion at the time of occurrence of the same air volume can be larger than that of a conventional indoor unit (an indoor unit provided with only one fan or an indoor unit with the air volume of each of a plurality of fans not controlled), and ease of arrival of an air flow can be improved.

The inventors have studied the influence of the wind speed distribution of the air outlet 3 (a difference in air volume for each fan 20) on heat exchange performance and found that the influence on heat exchange performance is small if a difference in air volume between adjacent fans 20 is equal to or smaller than approximately 20 %. In addition, the inventors have found that the influence on heat exchange performance is further smaller if the difference in air volume between adjacent fans 20 is equal to or smaller than approximately 10 %.

Accordingly, when the air volume is individually controlled for each fan 20, the difference in air volume between adjacent fans 20 is preferably equal to or smaller than approximately 20 %. Also, when the air volume is individually controlled for each fan 20, the difference in air volume between adjacent fans 20 is more preferably equal to or smaller than approximately 10 %.

As with Embodiment 35, for example, if there is a place desired to be air-conditioned in a concentrated manner (when spot air conditioning is performed), the air volume of each fan 20 may further be individually controlled so that the air flow reaching this place is large. For example, if there is a place where an air-conditioned air flow is avoided (when windbreak mild air conditioning is performed), the air volume of each fan 20 may further be individually controlled so that the air flow reaching this place is small (or the air flow does not reach this place).

In Embodiment 37, the plurality of fans 20 with the same shape (the same specifications) are provided and the rotation speed of each fan 20 is changed, thereby individually controlling the air volume of each fan 20. In this case, it is desirable that "the product of the number of blades 23 of the fan 20 and the rotation speed of the bladed wheel 25 of the fan 20" be approximately 10 Hz away from each other among the fans 20. With this, an effect of suppressing a whine occurring from each fan 20 (a whine generated due to interference of blade passing frequency (BPF) noise) can also be expected.

Embodiment 38

In Embodiment 35 to Embodiment 37, the plurality of fans 20 with the same shape (the same specifications) are provided and the rotation speed of each fan 20 is changed, thereby individually controlling the air volume of each fan 20. This is not restrictive, and the effects similar to the effects of Embodiment 35 to Embodiment 37 can be obtained by using fans 20 with different air-sending capacities (for example, fans 20 with different fan diameters, different boss ratios, or different wing mounting angles). By using a plurality of fans 20 with different air-sending capacities, improvement in packing density of the fans 20, finer control over the wind speed distribution inside the indoor unit 100 (the casing 1), and other effects that cannot be obtained in Embodiment 35 to Embodiment 37 can further be obtained.

To achieve both of preventing a decrease in heat exchange performance by setting a difference in air volume between adjacent fans 20 equal to or smaller than approximately 20 % (more preferably, equal to or smaller than approximately 10 %) and preventing a whine by setting "the product of the number of blades 23 of the fan 20 and the rotation speed of the bladed wheel 25 of the fan 20" approximately 10 Hz away from each other among the fans 20, the use of the fans 20 with different numbers of blades 23 is effective.

Embodiment 39

Heat exchanger

One feature of the present invention is to arrange the fans 20 on an upstream side of the heat exchanger 50. With this, the occurrence of a spiral flow of air blown from the air outlet 3 and the occurrence of a wind speed distribution are suppressed more than the indoor unit of a conventional air-conditioning apparatus with a fan provided to an air outlet. Therefore, the heat exchanger 50 is not restricted to have the shape shown in Embodiment 1 and, for example, may have a shape as described below. Functions and structures in Embodiment 39 that are the same as in Embodiment 1 to Embodiment 38 are given the same reference characters in the following description.

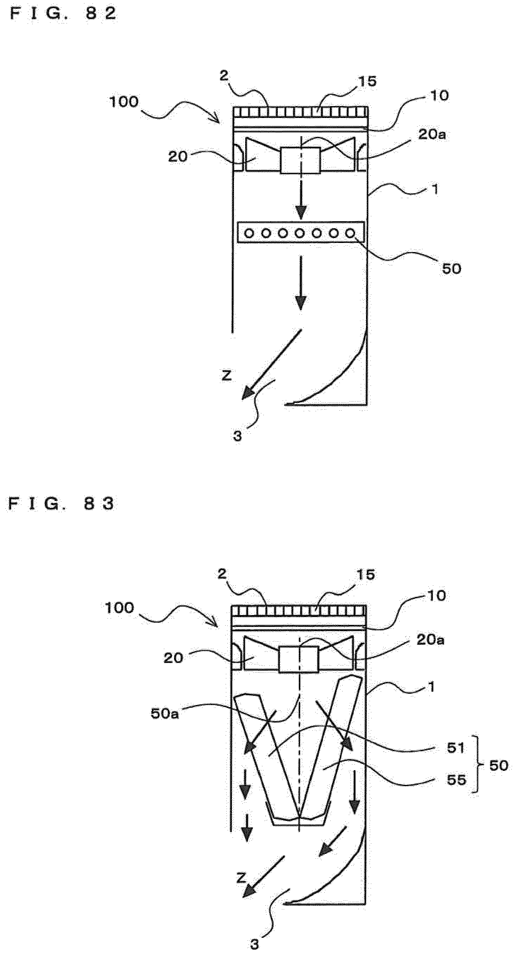

FIG. 82 is a vertical sectional view of an indoor unit according to Embodiment 39 of the present invention.

In the indoor unit 100 according to Embodiment 39, the heat exchanger 50 not divided into a front side heat exchanger 51 and a back side heat exchanger 55 is provided on a downstream side of the fans 20.

In such a structure, the air passing through the filter 10 flows into the fan 20. That is, the air flowing into the fan 20 has a less flow disturbance than the air flowing into the conventional indoor unit (the air passing through the heat exchanger). Accordingly, the air passing through the perimeter of the blades 23 of the fan 20 has less flow disturbance than in the conventional indoor unit. Therefore, the indoor unit 100 according to Embodiment 39 can suppress more noise than the conventional indoor unit.

In addition, since the indoor unit 100 has the fan 20 provided on the upstream side of the heat exchanger 50, the occurrence of a spiral flow of air blown from the air outlet 3 and the occurrence of a wind speed distribution can be suppressed more than the indoor unit of a conventional air-conditioning apparatus with a fan provided to an air outlet. In addition, since a complex structure such as a fan is not present at the air outlet 3, condensation occurring due to a back flow or the like can be easily addressed.

Embodiment 40

By constructing the heat exchanger 50 with the front side heat exchanger 51 and the back side heat exchanger 55, noise can be more suppressed than the indoor unit 100 according to Embodiment 39. The shape of the heat exchanger 50 is not restricted to the shape of the heat exchanger 50 shown in Embodiment 1 and, for example, can be a shape as described below. The following description focuses on items in Embodiment 40 that are different from those in Embodiment 39, and components that are the same as in Embodiment 39 are given the same reference characters.

FIG. 83 is a vertical sectional view showing an indoor unit according to Embodiment 40 of the present invention.

As shown in FIG. 83, the front side heat exchanger 51 and the back side heat exchanger 55 of the heat exchanger 50 are divided by a symmetric line 50a in the right side vertical section. The symmetric line 50a divides the installation range of the heat exchanger 50 in this section into left and right, substantially in the middle portion. That is, the front side heat exchanger 51 is placed on the front side (on the left side on the paper surface) with respect to the symmetric line 50a, and the back side heat exchanger 55 is placed on the back side (on the right side on the paper surface) with respect to the symmetric line 50a.

The front side heat exchanger 51 and the back side heat exchanger 55 are placed in the casing 1 so that a space between the front side heat exchanger 51 and the back side heat exchanger 55 is narrowed with respect to an air flow direction, that is, the cross-sectional shape of the heat exchanger 50 is substantially V shape in the right side vertical section.

That is, the front side heat exchanger 51 and the back side heat exchanger 55 are placed so as to be slanted with respect to a flowing direction of the air supplied from the fan 20. Furthermore, the air passage area of the back side heat exchanger 55 is characterized to be larger than the air passage area of the front side heat exchanger 51. In Embodiment 40, the length in the longitudinal direction of the back side heat exchanger 55 is longer than the length in the longitudinal direction of the front side heat exchanger 51 in the right side vertical section.

With this, the air passage area of the back side heat exchanger 55 is larger than the air passage area of the front side heat exchanger 51. Other structures of the front side heat exchanger 51 and the back side heat exchanger 55 (such as the length in a depth direction in FIG. 83) are the same. That is, the heat transfer area of the back side heat exchanger 55 is larger than the heat transfer area of the front side heat exchanger 51. A rotation shaft 20a of the fan 20 is set above the symmetric line 50a.

In such a structure, since the fan 20 is provided on the upstream side of the heat exchanger 50, effects similar to the effects in Embodiment 39 can be obtained.

In addition, according to the indoor unit 100 of Embodiment 40, the air with a volume according to the air passage area passes through each of the front side heat exchanger 51 and the back side heat exchanger 55. That is, the air volume of the back side heat exchanger 55 is larger than the air volume of the front side heat exchanger 51. With this difference in air volume, when the air flows passing through the front side heat exchanger 51 and the back side heat exchanger 55 merge with each other, this merged air is bent to a front side (toward an air outlet 3).

This eliminates the need for sharply bending the air flow in the vicinity of the air outlet 3, thereby reducing a pressure loss in the vicinity of the air outlet 3. Therefore, the indoor unit 100 according to Embodiment 40 can more suppress noise than the indoor unit 100 according to Embodiment 39. In addition, since the pressure loss of the indoor unit 100 according to Embodiment 40 in the vicinity of the air outlet 3 can be reduced, the power consumption can also be reduced.

Through each of the front side heat exchanger 51 and the back side heat exchanger 55, air with an amount according to the heat transfer area passes. Accordingly, the heat exchange performance of the heat exchanger 50 is improved.

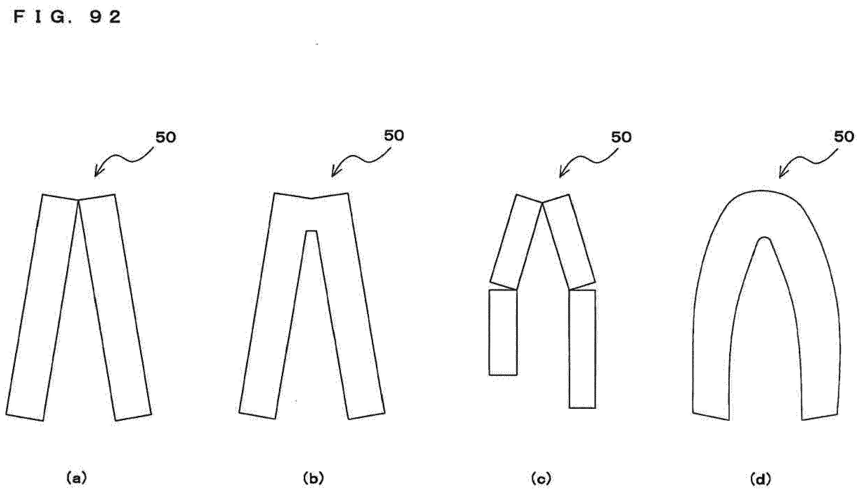

The heat exchanger 50 shown in FIG. 83 is substantially V shape with the front side heat exchanger 51 and the back side heat exchanger 55 formed separately, but the structure is not restricted to this structure. For example, the front side heat exchanger 51 and the back side heat exchanger 55 may be an integrated heat exchanger (see FIG. 92). Alternatively, for example, each of the front side heat exchanger 51 and the back side heat exchanger 55 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers (for example, includes the front side heat exchanger 51 and the back side heat exchanger 55), the heat exchangers do not need to make contact with each other completely at a point where the gradient of placement of the heat exchanger 50 changes (for example, a substantial connecting point between the front side heat exchanger 51 and the back side heat exchanger 55) and there may be a little gap between the heat exchangers.

A part or all of the heat exchanger 50 in the right side vertical section may be curved in shape (see FIG. 92).

FIG. 92 is a schematic view describing an example of structure of a heat exchanger 50. FIG. 92 shows the heat exchanger 50 viewed from the right side vertical section. While the entire heat exchanger 50 shown in FIG. 92 is substantially inverted V shape, this entire shape of the heat exchanger 50 is only an example.

As shown in FIG. 92(a), the heat exchanger 50 may include a plurality of heat exchangers. As shown in FIG. 92(b), the heat exchanger 50 may be an integrated heat exchanger. As shown in 12(c), the heat exchangers included in the heat exchanger 50 may further include a plurality of heat exchangers. As shown in FIG. 92(c), a part of the heat exchangers of the heat exchanger 50 may be placed vertically. As shown in FIG. 92(d), the heat exchanger 50 may be curved in shape.

Embodiment 41

The heat exchanger 50 may be as described below. The following description focuses on items in Embodiment 41 that are different from those in Embodiment 40, and components that are the same as in Embodiment 40 are given the same reference characters.

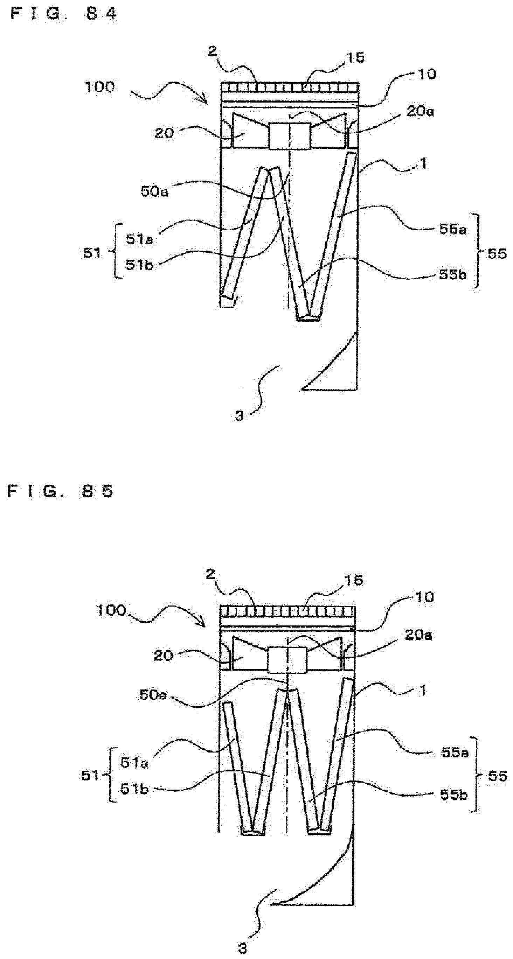

FIG. 84 is a vertical sectional view showing an indoor unit according to Embodiment 41 of the present invention.

The indoor unit 100 of Embodiment 41 is different from the indoor unit 100 of Embodiment 40 in arrangement of the heat exchanger 50.

The heat exchanger 50 according to Embodiment 41 includes three heat exchangers, and these heat exchangers are placed so as to be differently slanted with respect to a flowing direction of the air supplied from the fan 20. The heat exchanger 50 is substantially N shape in the right side vertical section. A heat exchanger 51a and a heat exchanger 51b placed on a front side of a symmetric line 50a are the front side heat exchanger 51, and a heat exchanger 55a and a heat exchanger 55b placed on a back side of the symmetric line 50a are the back side heat exchanger 55.

That is, the heat exchanger 51b and the heat exchanger 55b are an integrated heat exchanger in Embodiment 41. The symmetric line 50a divides the installation range of the heat exchanger 50 in the right side vertical section into left and right, substantially in the middle portion.

In addition, the length in the longitudinal direction of the back side heat exchanger 55 is longer than the length in the longitudinal direction of the front side heat exchanger 51 in the right side vertical section. That is, the air volume of the back side heat exchanger 55 is larger than the air volume of the front side heat exchanger 51. In comparison of length, the sum of the lengths of the heat exchangers included in the front side heat exchanger 51 is compared with the sum of the lengths of the heat exchangers included in the back side heat exchanger 55.

In such a structure, the air volume of the back side heat exchanger 55 is larger than the air volume of the front side heat exchanger 51. Accordingly, as with Embodiment 40, with this difference in air volume, when the air flows passing through the front side heat exchanger 51 and the back side heat exchanger 55 merge with each other, this merged air is bent to a front side (toward an air outlet 3).

This eliminates the need for sharply bending the air flow in the vicinity of the air outlet 3, thereby reducing a pressure loss in the vicinity of the air outlet 3. Therefore, the indoor unit 100 according to Embodiment 41 can further suppress noise more than the indoor unit 100 according to Embodiment 39. Since the pressure loss of the indoor unit 100 in the vicinity of the air outlet 3 can be reduced, the power consumption can also be reduced.

With the heat exchanger 50 being substantially N shape in the right side vertical section, the area passing through the front side heat exchanger 51 and the back side heat exchanger 55 can be increased, and therefore the wind speed passing through each exchanger can be smaller than the wind speed of Embodiment 40. Accordingly, the pressure loss at the front side heat exchanger 51 and the back side heat exchanger 55 can be reduced more than Embodiment 40, and the power consumption and noise can further be reduced.

The heat exchanger 50 shown in FIG. 84 is substantially N shape, with three heat exchangers formed separately, but the structure is not restricted to this structure. For example, the three heat exchangers included in the heat exchanger 50 may be an integrated heat exchanger (see FIG. 92). In addition, for example, each of the three heat exchangers included in the heat exchanger 50 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers, the heat exchangers do not need to make contact with each other completely at a point where the gradient of placement of the heat exchanger 50 changes and there may be a little gap between the heat exchangers.

A part or all of the heat exchanger 50 in the right side vertical section may be curved in shape (see FIG. 92).

Embodiment 42

The heat exchanger 50 may be as described below. The following description focuses on items in Embodiment 42 that are different from those in Embodiment 40 and Embodiment 41, and components that are the same as in Embodiment 40 and Embodiment 41 are given the same reference characters. The example is shown in which the indoor unit is of a wall-mounted type to be mounted on a wall surface of an air conditioned area.

FIG. 85 is a vertical sectional view showing the indoor unit according to Embodiment 42 of the present invention.

The indoor unit 100 of Embodiment 42 is different from the indoor unit shown in Embodiment 40 and Embodiment 41 in arrangement of the heat exchanger 50.

The heat exchanger 50 according to Embodiment 42 includes four heat exchangers, and these heat exchangers are each placed so as to be differently slanted with respect to a flowing direction of the air supplied from the fan 20. The heat exchanger 50 is substantially W shape in the right side vertical section. The heat exchanger 51a and the heat exchanger 51b placed on a front side of the symmetric line 50a are the front side heat exchanger 51, and the heat exchanger 55a and the heat exchanger 55b placed on a back side of the symmetric line 50a are the back side heat exchanger 55. The symmetric line 50a divides the installation range of the heat exchanger 50 in the right side vertical section into left and right, substantially in the middle portion.

In addition, the length in the longitudinal direction of the back side heat exchanger 55 is longer than the length in the longitudinal direction of the front side heat exchanger 51 in the right side vertical section. That is, the air volume of the back side heat exchanger 55 is larger than the air volume of the front side heat exchanger 51. In comparison of length, the sum of the lengths of the heat exchangers included in the front side heat exchanger 51 is compared with the sum of the lengths of the heat exchangers included in the back side heat exchanger 55.

In such a structure, the air volume of the back side heat exchanger 55 is larger than the air volume of the front side heat exchanger 51. Accordingly, as with Embodiment 40 and Embodiment 41, with the difference in air volume, when the air flows passing through the front side heat exchanger 51 and the back side heat exchanger 55 merge with each other, this merged air is bent to a front side (toward an air outlet 3). This eliminates the need for sharply bending the air flow in the vicinity of the air outlet 3, thereby reducing a pressure loss in the vicinity of the air outlet 3. Therefore, the indoor unit 100 according to Embodiment 42 can further suppress noise more than the indoor unit 100 according to Embodiment 39. Since the pressure loss of the indoor unit 100 in the vicinity of the air outlet 3 can be reduced, the power consumption can also be reduced.

With the heat exchanger 50 being substantially W shape in the right side vertical section, the area passing through the front side heat exchanger 51 and the back side heat exchanger 55 can be increased, and therefore the wind speed passing through each exchanger can be smaller than the wind speed of Embodiment 40 and Embodiment 41. Accordingly, the pressure loss at the front side heat exchanger 51 and the back side heat exchanger 55 can be reduced more than Embodiment 40 and Embodiment 41, and the power consumption and noise can further be reduced.

The heat exchanger 50 shown in FIG. 85 is substantially W shape, with four heat exchangers formed separately, but the structure is not restricted to this structure. For example, the four heat exchangers included in the heat exchanger 50 may be an integrated heat exchanger (see FIG. 92). In addition, for example, each of the four heat exchangers included in the heat exchanger 50 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers, the heat exchangers do not need to make contact with each other completely at a point where the gradient of placement of the heat exchanger 50 changes and there may be a little gap between the heat exchangers.

A part or all of the heat exchanger 50 in the right side vertical section may be curved in shape (see FIG. 92).

Embodiment 43

The heat exchanger 50 may be as described below, as shown in Embodiment 1. The following description focuses on items in Embodiment 43 that are different from those in Embodiment 40 to Embodiment 42, and components that are the same as in Embodiment 40 to Embodiment 42 are given the same reference characters. The example is shown in which the indoor unit is of a wall-mounted type to be mounted on a wall surface of an air conditioned area.

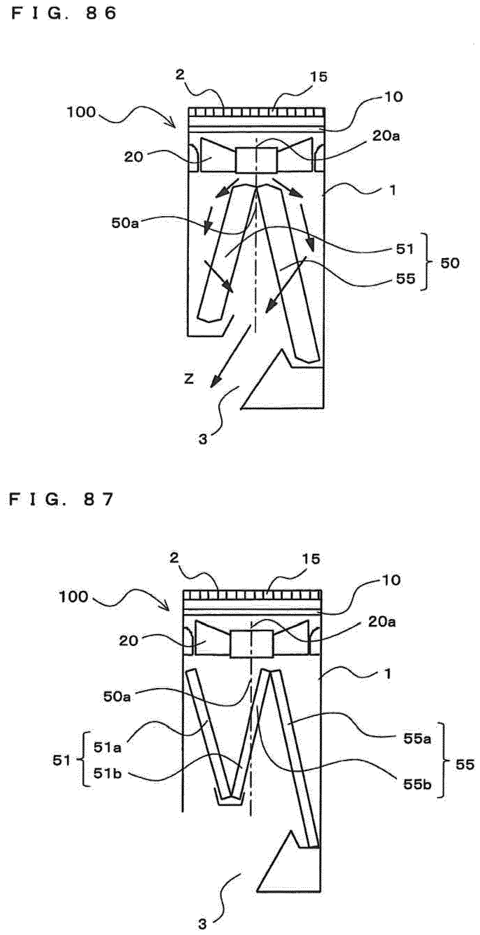

FIG. 86 is a vertical sectional view showing an indoor unit according to Embodiment 43 of the present invention.

The indoor unit 100 of Embodiment 43 is different from the indoor unit shown in Embodiment 40 to Embodiment 42 in arrangement of the heat exchanger 50.

More specifically, as with Embodiment 40, the indoor unit 100 of Embodiment 43 includes two heat exchangers (the front side heat exchanger 51 and the back side heat exchanger 55). However, the arrangement of the front side heat exchanger 51 and the back side heat exchanger 55 is different from the arrangement of the indoor unit 100 shown in Embodiment 40.

That is, the front side heat exchanger 51 and the back side heat exchanger 55 are placed so as to be differently slanted with respect to a flow direction of the air supplied from the fan 20. Also, the front side heat exchanger 51 is placed on a front side of the symmetric line 50a, and the back side heat exchanger 55 is placed on a back side of the symmetric line 50a. The heat exchanger 50 is substantially inverted V shape in the right side vertical section.

The symmetric line 50a divides the installation range of the heat exchanger 50 in the right side vertical section into left and right, substantially in the middle portion.

In addition, the length in the longitudinal direction of the back side heat exchanger 55 is longer than the length in the longitudinal direction of the front side heat exchanger 51 in the right side vertical section. That is, the air volume of the back side heat exchanger 55 is larger than the air volume of the front side heat exchanger 51. In comparison of length, the sum of the lengths of the heat exchangers included in the front side heat exchanger 51 is compared with the sum of the lengths of the heat exchangers included in the back side heat exchanger 55.

In the indoor unit 100 in such a structure, an internal flow of air is as described below.

First, the room air flows into the indoor unit 100 (the casing 1) by the fan 20 from the air inlet 2 formed on the top portion of the casing 1. Here, dust included in the air is removed by a filter 10. When passing through the heat exchanger 50 (the front side heat exchanger 51 and the back side heat exchanger 55), this room air is heated or cooled by a refrigerant conducting in the heat exchanger 50 to become air-conditioned air. The air passing through the front side heat exchanger 51 flows from the front side to the back side of the indoor unit 100. The air passing through the back side heat exchanger 55 flows from the back side to the front side of the indoor unit 100.

The air-conditioned air passing through the heat exchanger 50 (the front side heat exchanger 51 and the back side heat exchanger 55) is blown out from the air outlet 3 formed at a bottom portion of the casing 1 to the outside of the indoor unit 100, that is, an air-conditioned area.

In such a structure, the air volume of the back side heat exchanger 55 is larger than the air volume of the front side heat exchanger 51. Accordingly, as with Embodiment 40 to Embodiment 42, with the difference in air volume, when the air flows passing through the front side heat exchanger 51 and the back side heat exchanger 55 merge with each other, this merged air is bent to a front side (toward an air outlet 3).

This eliminates the need for sharply bending the air flow in the vicinity of the air outlet 3, thereby reducing a pressure loss in the vicinity of the air outlet 3. Therefore, the indoor unit 100 according to Embodiment 43 can further suppress noise more than the indoor unit 100 according to Embodiment 39. Since the pressure loss of the indoor unit 100 in the vicinity of the air outlet 3 can be reduced, the power consumption can also be reduced.

In the indoor unit 100 according to Embodiment 43, the flow direction of the air flowing out from the back side heat exchanger 55 becomes a flow from the back side to the front side. Accordingly, the indoor unit 100 according to Embodiment 43 is more prone to bend the flow of air after passing through the heat exchanger 50.

That is, the indoor unit 100 according to Embodiment 43 can perform air flow control of the air blown from the air outlet 3 more easily than the indoor unit 100 according to Embodiment 40. Therefore, in the indoor unit 100 according to Embodiment 43, the need for sharply bending the air flow in the vicinity of the air outlet 3 is more eliminated than the indoor unit 100 according to Embodiment 40, and the power consumption and noise can further be reduced.

The heat exchanger 50 shown in FIG. 86 is substantially inverted V shape with the front side heat exchanger 51 and the back side heat exchanger 55 formed separately, but the structure is not restricted to this structure. For example, the front side heat exchanger 51 and the back side heat exchanger 55 may be an integrated heat exchanger (see FIG. 92). Alternatively, for example, each of the front side heat exchanger 51 and the back side heat exchanger 55 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers, the heat exchangers do not need to make contact with each other completely at a point where the gradient of placement of the heat exchanger 50 changes and there may be a little gap between the heat exchangers.

A part or all of the heat exchanger 50 in the right side vertical section may be curved in shape (see FIG. 92).

Embodiment 44

The heat exchanger 50 may be as described below. The following description focuses on items in Embodiment 44 that are different from those in Embodiment 40 to Embodiment 43, and components that are the same as in Embodiment 40 to Embodiment 43 are given the same reference characters.

FIG. 87 is a vertical sectional view showing an indoor unit according to Embodiment 44 of the present invention.

The indoor unit 100 of Embodiment 44 is different from the indoor unit shown in Embodiment 40 to Embodiment 43 in arrangement of the heat exchanger 50.

More specifically, as with Embodiment 41, the indoor unit 100 of Embodiment 44 includes three heat exchangers. However, the arrangement of these three heat exchangers is different from the arrangement in the indoor unit 100 shown in Embodiment 41.

That is, each of the three heat exchangers included in the heat exchanger 50 is placed so as to be differently slanted with respect to a flow direction of the air supplied from the fan 20. The heat exchanger 50 is substantially horizontally flipped N shape in the right side vertical section. The heat exchanger 51a and the heat exchanger 51b placed on the front side of the symmetric line 50a are the front side heat exchanger 51, and the heat exchanger 55a and the heat exchanger 55b placed on the back side of the symmetric line 50a are the back side heat exchanger 55.

That is, the heat exchanger 51b and the heat exchanger 55b are an integrated heat exchanger in Embodiment 44. The symmetric line 50a divides the installation range of the heat exchanger 50 in the right side vertical section into left and right, substantially in the middle portion.

In addition, the length in the longitudinal direction of the back side heat exchanger 55 is longer than the length in the longitudinal direction of the front side heat exchanger 51 in the right side vertical section. That is, the air volume of the back side heat exchanger 55 is larger than the air volume of the front side heat exchanger 51. In comparison of length, the sum of the lengths of the heat exchangers included in the front side heat exchanger 51 is compared with the sum of the lengths of the heat exchangers included in the back side heat exchanger 55.

In such a structure, the air volume of the back side heat exchanger 55 is larger than the air volume of the front side heat exchanger 51. Accordingly, as with Embodiment 40 to Embodiment 43, with the difference in air volume, when the air flows passing through the front side heat exchanger 51 and the back side heat exchanger 55 merge with each other, this merged air is bent to a front side (toward an air outlet 3).

This eliminates the need for sharply bending the air flow in the vicinity of the air outlet 3, thereby reducing a pressure loss in the vicinity of the air outlet 3. Therefore, the indoor unit 100 according to Embodiment 44 can further suppress noise more than the indoor unit 100 according to Embodiment 39. Since the pressure loss of the indoor unit 100 in the vicinity of the air outlet 3 can be reduced, the power consumption can also be reduced.

In the indoor unit 100 according to Embodiment 44, the flow direction of the air flowing out from the back side heat exchanger 55 becomes a flow from the back side to the front side. Accordingly, the indoor unit 100 according to Embodiment 44 is more prone to bend the flow of air after passing through the heat exchanger 50. That is, the indoor unit 100 according to Embodiment 44 can perform air flow control of the air blown from the air outlet 3 more easily than the indoor unit 100 according to Embodiment 41. Therefore, in the indoor unit 100 according to Embodiment 44, the need for sharply bending the air flow in the vicinity of the air outlet 3 is more eliminated than the indoor unit 100 according to Embodiment 41, and the power consumption and noise can further be reduced.

With the heat exchanger 50 being substantially horizontally flipped N shape in the right side vertical section, the area passing through the front side heat exchanger 51 and the back side heat exchanger 55 can be increased, and therefore the wind speed passing through each exchanger can be smaller than the wind speed of Embodiment 43. Therefore, the pressure loss at the front side heat exchanger 51 and the back side heat exchanger 55 can be reduced more than Embodiment 43, and the power consumption and noise can further be reduced.

The heat exchanger 50 shown in FIG. 87 is substantially horizontally flipped N shape, with three heat exchangers formed separately, but the structure is not restricted to this structure. For example, the three heat exchangers included in the heat exchanger 50 may be an integrated heat exchanger (see FIG. 92). In addition, for example, each of the three heat exchangers included in the heat exchanger 50 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers, the heat exchangers do not need to make contact with each other completely at a point where the gradient of placement of the heat exchanger 50 changes and there may be a little gap between the heat exchangers.

A part or all of the heat exchanger 50 in the right side vertical section may be curved in shape (see FIG. 92).

Embodiment 45

The heat exchanger 50 may be as described below. The following description focuses on items in Embodiment 45 that are different from those in Embodiment 40 to Embodiment 44, and components that are the same as in Embodiment 40 to Embodiment 44 are given the same reference characters.

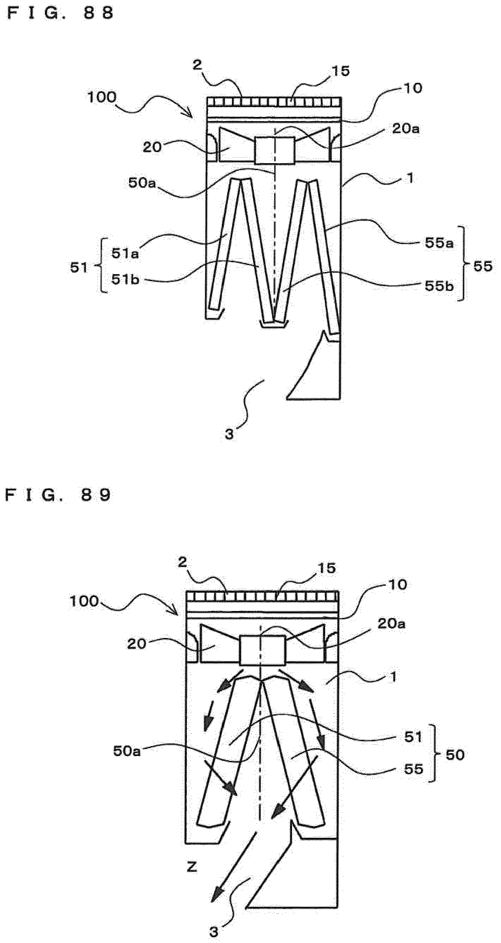

FIG. 88 is a vertical sectional view showing an indoor unit according to Embodiment 45 of the present invention.

The indoor unit 100 of Embodiment 45 is different from the indoor unit shown in Embodiment 40 to Embodiment 44 in arrangement of the heat exchanger 50.

More specifically, as with Embodiment 42, the indoor unit 100 of Embodiment 45 includes four heat exchangers. However, the arrangement of these four heat exchangers is different from the arrangement in the indoor unit 100 shown in Embodiment 42.

That is, the four heat exchangers included in the heat exchanger 50 are placed so as to be differently slanted with respect to a flowing direction of the air supplied from the fan 20. The heat exchanger 50 is substantially M shape in the right side vertical section. The heat exchanger 51a and the heat exchanger 51b placed on the front side of the symmetric line 50a are the front side heat exchanger 51, and the heat exchanger 55a and the heat exchanger 55b placed on the back side of the symmetric line 50a are the back side heat exchanger 55. The symmetric line 50a divides the installation range of the heat exchanger 50 in the right side vertical section into left and right, substantially in the middle portion.

In addition, the length in the longitudinal direction of the back side heat exchanger 55 is longer than the length in the longitudinal direction of the front side heat exchanger 51 in the right side vertical section. That is, the air volume of the back side heat exchanger 55 is larger than the air volume of the front side heat exchanger 51. In comparison of length, the sum of the lengths of the heat exchangers included in the front side heat exchanger 51 is compared with the sum of the lengths of the heat exchangers included in the back side heat exchanger 55.

In such a structure, the air volume of the back side heat exchanger 55 is larger than the air volume of the front side heat exchanger 51. Accordingly, as with Embodiment 40 to Embodiment 44, with the difference in air volume, when the air flows passing through the front side heat exchanger 51 and the back side heat exchanger 55 merge with each other, this merged air is bent to a front side (toward an air outlet 3).

This eliminates the need for sharply bending the air flow in the vicinity of the air outlet 3, thereby reducing a pressure loss in the vicinity of the air outlet 3. Therefore, the indoor unit 100 according to Embodiment 45 can further suppress noise more than the indoor unit 100 according to Embodiment 39. Since the pressure loss of the indoor unit 100 in the vicinity of the air outlet 3 can be reduced, the power consumption can also be reduced.

In the indoor unit 100 according to Embodiment 45, the flow direction of the air flowing out from the back side heat exchanger 55 becomes a flow from the back side to the front side. Accordingly, the indoor unit 100 according to Embodiment 45 is more prone to bend the flow of air after passing through the heat exchanger 50.

That is, the indoor unit 100 according to Embodiment 45 can perform air flow control of the air blown from the air outlet 3 more easily than the indoor unit 100 according to Embodiment 42. Therefore, in the indoor unit 100 according to Embodiment 45, the need for sharply bending the air flow in the vicinity of the air outlet 3 is more eliminated than the indoor unit 100 according to Embodiment 42, and the power consumption and noise can further be reduced.

With the heat exchanger 50 being substantially M shape in the right side vertical section, the area passing through the front side heat exchanger 51 and the back side heat exchanger 55 can be increased, and therefore the wind speed passing through each exchanger can be smaller than the wind speed of Embodiment 43 and Embodiment 44. Therefore, the pressure loss at the front side heat exchanger 51 and the back side heat exchanger 55 can be reduced more than Embodiment 43 and Embodiment 44, and the power consumption and noise can further be reduced.

The heat exchanger 50 shown in FIG. 88 is substantially M shape, with four heat exchangers formed separately, but the structure is not restricted to this structure. For example, the four heat exchangers included in the heat exchanger 50 may be an integrated heat exchanger (see FIG. 92). In addition, for example, each of the four heat exchangers included in the heat exchanger 50 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers, the heat exchangers do not need to make contact with each other completely at a point where the gradient of placement of the heat exchanger 50 changes and there may be a little gap between the heat exchangers.

A part or all of the heat exchanger 50 in the right side vertical section may be curved in shape (see FIG. 92)

Embodiment 46

The heat exchanger 50 may be as described below. The following description focuses on items in Embodiment 46 that are different from those in Embodiment 40 to Embodiment 45, and components that are the same as in Embodiment 40 to Embodiment 45 are given the same reference characters.

FIG. 89 is a vertical sectional view showing an indoor unit according to Embodiment 46 of the present invention.

The indoor unit 100 of Embodiment 46 is different from the indoor unit shown in Embodiment 40 to Embodiment 45 in arrangement of the heat exchanger 50.

More specifically, as with Embodiment 43, the indoor unit 100 of Embodiment 46 includes two heat exchangers (the front side heat exchanger 51 and the back side heat exchanger 55), and is substantially inverted V shape in the right side vertical section. However, in Embodiment 46, by setting the pressure loss of the front side heat exchanger 51 and the pressure loss of the back side heat exchanger 55 as being different from each other, the air volume of the front side heat exchanger 51 and the air volume of the back side heat exchanger 55 are as being different from each other.

That is, the front side heat exchanger 51 and the back side heat exchanger 55 are placed so as to be differently slanted with respect to a flowing direction of the air supplied from the fan 20. The front side heat exchanger 51 is placed on the front side of the symmetric line 50a, and the back side heat exchanger 55 is placed on the back side of the symmetric line 50a. The heat exchanger 50 is substantially inverted V shape in the right side vertical section.

That is, in the right side vertical section, the length in the longitudinal direction of the back side heat exchanger 55 equals the length in the longitudinal direction of the front side heat exchanger 51. The specifications of the front side heat exchanger 51 and the back side heat exchanger 55 are determined so that the pressure loss of the back side heat exchanger 55 is smaller than the pressure loss of the front side heat exchanger 51.

When a finned tube heat exchanger is used as the front side heat exchanger 51 and back side heat exchanger 55, for example, it is desirable to set the length in a short direction of the back side heat exchanger 55 in the right side longitudinal section (a width of the fin 56 of the back side heat exchanger 55) shorter than the length in a short direction of the front side heat exchanger 51 in the right side longitudinal section (a width of the fin 56 of the front side heat exchanger 51).

In addition, for example, it is desirable to set a distance between fins 56 of the back side heat exchanger 55 larger than a distance between fins 56 of the front side heat exchanger 51. In addition, for example, it is desirable to set the diameter of a heat transfer pipe 57 of the back side heat exchanger 55 smaller than the diameter of the heat transfer pipe 57 of the front side heat exchanger 51. In addition, for example, it is desirable to set the number of heat transfer pipes 57 of the back side heat exchanger 55 smaller than the number of heat transfer pipes 57 of the front side heat exchanger 51.

The symmetric line 50a divides the installation range of the heat exchanger 50 in the right side vertical section into left and right, substantially in the middle portion.

In such a structure, since the fan 20 is provided on the upstream side of the heat exchanger 50, effects similar to the effects of Embodiment 39 can be obtained.

Also, according to the indoor unit 100 of Embodiment 46, through each of the front side heat exchanger 51 and the back side heat exchanger 55, air with a volume according to the pressure loss passes. That is, the air volume of the back side heat exchanger 55 is larger than the air volume of the front side heat exchanger 51. With this difference in air volume, when the air flows passing through the front side heat exchanger 51 and the back side heat exchanger 55 merge with each other, this merged air is bent to a front side (toward an air outlet 3).

This eliminates the need for sharply bending the air flow in the vicinity of the air outlet 3, thereby reducing a pressure loss in the vicinity of the air outlet 3. Therefore, the indoor unit 100 according to Embodiment 46 can further suppress noise more than the indoor unit 100 according to Embodiment 39 without increasing the length of the back side heat exchanger 55 in the right side vertical section. Since the pressure loss of the indoor unit 100 in the vicinity of the air outlet 3 can be reduced, the power consumption can also be reduced.

The heat exchanger 50 shown in FIG. 89 is substantially inverted V shape with the front side heat exchanger 51 and the back side heat exchanger 55 formed separately, but the structure is not restricted to this structure. For example, the heat exchanger 50 in the right side vertical section may be substantially V shape, substantially N shape, substantially W shape, substantially horizontally flipped N shape, or substantially M shape. In addition, for example, the front side heat exchanger 51 and the back side heat exchanger 55 may be an integrated heat exchanger (see FIG. 92).

Alternatively, for example, each of the front side heat exchanger 51 and the back side heat exchanger 55 may be a combination of a plurality of heat exchangers (see FIG. 92). In the case of the integrated heat exchanger, the front side of the symmetric line 50a corresponds to the front side heat exchanger 51 and the back side of the symmetric line 50a corresponds to the back side heat exchanger 55. That is, it is sufficient that the pressure loss of the heat exchanger placed on the back side of the symmetric line 50a is smaller than the pressure loss of the heat exchanger placed on the front side of the symmetric line 50a.

When each of the front side heat exchanger 51 and the back side heat exchanger 55 is a combination of a plurality of heat exchangers, the sum of the pressure losses of the plurality of heat exchangers included in the front side heat exchanger 51 equals the pressure loss of the front side heat exchanger 51. The sum of the pressure losses of the plurality of heat exchangers included in the back side heat exchanger 55 equals the pressure loss of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers (for example, includes the front side heat exchanger 51 and the back side heat exchanger 55), the heat exchangers do not need to make contact with each other completely at a point where the gradient of placement of the heat exchanger 50 changes (for example, a substantial connecting point between the front side heat exchanger 51 and the back side heat exchanger 55) and there may be a little gap between the heat exchangers.

A part or all of the heat exchanger 50 in the right side vertical section may be curved in shape (see FIG. 92).

Embodiment 47

The fan 20 may be placed as described below in Embodiment 40 to Embodiment 46. The following description focuses on items in Embodiment 47 that are different from those in Embodiment 40 to Embodiment 46, and components that are the same as in Embodiment 40 to Embodiment 46 are given the same reference characters.

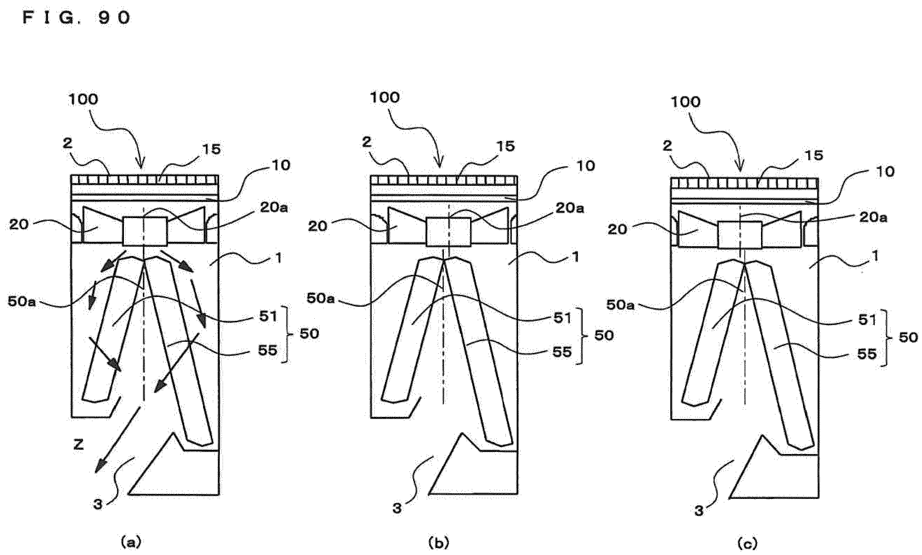

FIG. 90 is a vertical sectional view showing an indoor unit according to Embodiment 47 of the present invention. The arrangement of the fan 20 in the indoor unit 100 will be described based on FIGs. 90(a) to 90(c).

The heat exchanger 50 of the indoor unit 100 according to Embodiment 47 is placed similarly to the indoor unit 100 of Embodiment 43. However, in the indoor unit 100 according to Embodiment 47, the arrangement of the fan 20 is different from the arrangement in the indoor unit 100 of Embodiment 43.

That is, in the indoor unit 100 according to Embodiment 47, the arrangement position of the fan 20 is determined according to the air volume and the heat transfer area of each of the front side heat exchanger 51 and the back side heat exchanger 55.

For example, in the state shown in FIG. 90(a) (in the state in which the rotation shaft 20a of the fan 20 substantially matches the symmetric line 50a in position in the right side vertical section), the air volume of the back side heat exchanger 55 with a larger heat transfer area than the front side heat exchanger 51 may become insufficient. As such, if the air volume of the back side heat exchanger 55 becomes insufficient, the heat exchanger 50 (the front side heat exchanger 51 and the back side heat exchanger 55) may not achieve a desired heat exchange performance. In this case, as shown in FIG. 90(b), it is desirable to move the arrangement position of the fan 20 to a back direction.

In such a structure, the air volume can be distributed based on the heat transfer areas of the front side heat exchanger 51 and the back side heat exchanger 55, and the heat exchange performance of the heat exchanger 50 (the front side heat exchanger 51 and the back side heat exchanger 55) is improved.

For example, in the state shown in FIG. 90(a), the air volume of the back side heat exchanger 55 may become insufficient when the pressure loss of the back side heat exchanger 55 is large. In addition, due to space constraints in the casing 1, the angle of the air merged after passing through each of the front side heat exchanger 51 and the back side heat exchanger 55 may not be able to be adjusted at a desired angle by only adjusting the air volume with the structures of the front side heat exchanger 51 and the back side heat exchanger 55.

As such, if the air volume of the back side heat exchanger 55 becomes insufficient, the air merged after passing through the front side heat exchanger 51 and the back side heat exchanger 55 may not be bent at an angle more than a desired angle. In this case, as shown in FIG. 90(b), it is desirable to move the arrangement position of the fan 20 to the back direction.

In such a structure, the air volume of each of the front side heat exchanger 51 and the back side heat exchanger 55 can be finely controlled, and the air merged after passing through the front side heat exchanger 51 and the back side heat exchanger 55 can be bent at a desired angle. Accordingly, the flow direction of the air merged after passing through the front side heat exchanger 51 and the back side heat exchanger 55 can be adjusted to a suitable direction according to the position of forming the air outlet 3.

For example, the heat transfer area of the front side heat exchanger 51 may be larger than the heat transfer area of the back side heat exchanger 55. In this case, as shown in FIG. 90(c), it is desirable to move the arrangement position of the fan 20 to the front direction.

In such a structure, the air volume can be distributed according to the heat transfer area of each of the front side heat exchanger 51 and the back side heat exchanger 55, and the heat exchange performance of the heat exchanger 50 (the front side heat exchanger 51 and the back side heat exchanger 55) is improved.

For example, in the state shown in FIG. 90(a), the air volume of the back side heat exchanger 55 may be increased more than required. Also, due to space constraints in the casing 1, the angle of the air merged after passing through each of the front side heat exchanger 51 and the back side heat exchanger 55 may not be able to be adjusted at a desired angle by only adjusting the air volume with the structures of the front side heat exchanger 51 and the back side heat exchanger 55. Accordingly, the air merged after passing through the front side heat exchanger 51 and the back side heat exchanger 55 may be bent at an angle more than a desired angle. In this case, as shown in FIG. 90(c), it is desirable to move the arrangement position of the fan 20 to the front direction.

In such a structure, the air volume of each of the front side heat exchanger 51 and the back side heat exchanger 55 can be finely controlled, and the air merged after passing through the front side heat exchanger 51 and the back side heat exchanger 55 can be bent at a desired angle. Accordingly, the flow direction of the air merged after passing through the front side heat exchanger 51 and the back side heat exchanger 55 can be adjusted to a suitable direction according to the position of forming the air outlet 3.

The heat exchanger 50 shown in FIG. 90 is substantially inverted V shape with the front side heat exchanger 51 and the back side heat exchanger 55 formed separately, but the structure is not restricted to this structure. For example, the heat exchanger 50 in the right side vertical section may be substantially V shape, substantially N shape, substantially W shape, substantially horizontally flipped N shape, or substantially M shape. In addition, for example, the front side heat exchanger 51 and the back side heat exchanger 55 may be an integrated heat exchanger (see FIG. 92). Alternatively, for example, each of the front side heat exchanger 51 and the back side heat exchanger 55 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

In addition, when the heat exchanger 50 includes a plurality of heat exchangers (for example, includes the front side heat exchanger 51 and the back side heat exchanger 55), the heat exchangers do not need to make contact with each other completely at a point where the gradient of placement of the heat exchanger 50 changes (for example, a substantial connecting point between the front side heat exchanger 51 and the back side heat exchanger 55) and there may be a little gap between the heat exchangers.

A part or all of the heat exchanger 50 in the right side vertical section may be curved in shape (see FIG. 92).

Embodiment 48

The fan 20 in Embodiment 40 to Embodiment 46 may be as described below. The following description focuses on items in Embodiment 48 that are different from those in Embodiment 40 to Embodiment 47, and components that are the same as in Embodiment 40 to Embodiment 47 are given the same reference characters.

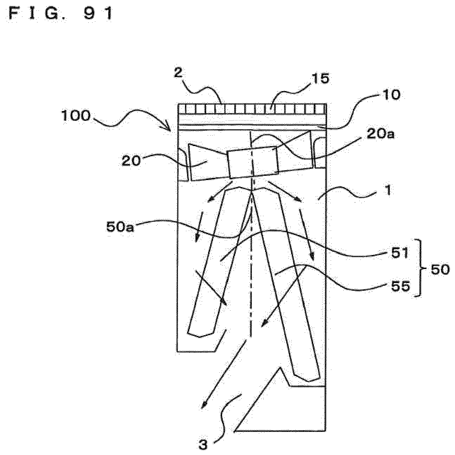

FIG. 91 is a vertical sectional view showing an indoor unit according to Embodiment 48 of the present invention.

The heat exchanger 50 of the indoor unit 100 according to Embodiment 48 is placed similarly to the indoor unit 100 of Embodiment 43. However, the arrangement of the fan 20 in the indoor unit 100 according to Embodiment 47 is different from the indoor unit 100 of Embodiment 43 in arrangement of the fan 20.

That is, in the indoor unit 100 according to Embodiment 48, the inclination of the fan 20 depends on the air volume and the heat transfer area of the front side heat exchanger 51 and the back side heat exchanger 55.

For example, the air volume of the back side heat exchanger 55 with a larger heat transfer area than the front side heat exchanger 51 may become insufficient. In addition, due to space constraints in the casing 1, the air volume may not be adjusted by moving the fan 20 to a front/rear direction. As such, if the air volume of the back side heat exchanger 55 becomes insufficient, the heat exchanger 50 (the front side heat exchanger 51 and the back side heat exchanger 55) may not achieve a desired heat exchange performance. In this case, as shown in FIG. 91, it is desirable to incline the fan 20 to a back side heat exchanger 55 side in the right side vertical section.

In such a structure, even if the fan 20 cannot be moved in the front/rear direction, the air volume can be distributed based on the heat transfer areas of the front side heat exchanger 51 and the back side heat exchanger 55, and the heat exchange performance of the heat exchanger 50 (the front side heat exchanger 51 and the back side heat exchanger 55) is improved.

For example, the air volume of the back side heat exchanger 55 may become insufficient when the pressure loss of the back side heat exchanger 55 is large. In addition, due to space constraints in the casing 1, the angle of the air merged after passing through each of the front side heat exchanger 51 and the back side heat exchanger 55 may not be able to be adjusted at a desired angle by only adjusting the air volume with the structures of the front side heat exchanger 51 and the back side heat exchanger 55.

Furthermore, due to space constrains in the casing 1, the air volume may not be able to be adjusted by moving the fan 20 in a front/rear direction. As such, if the air volume of the back side heat exchanger 55 becomes insufficient, the air merged after passing through the front side heat exchanger 51 and the back side heat exchanger 55 may not be bent at an angle more than a desired angle. In this case, as shown in FIG. 91, it is desirable to incline the fan 20 to a back side heat exchanger 55 side in the right side vertical section.

In such a structure, even if the fan 20 cannot be moved in the front/rear direction, the air volume of each of the front side heat exchanger 51 and the back side heat exchanger 55 can be finely controlled, and the air merged after passing through the front side heat exchanger 51 and the back side heat exchanger 55 can be bent at a desired angle. Accordingly, the flow direction of the air merged after passing through the front side heat exchanger 51 and the back side heat exchanger 55 can be adjusted to a suitable direction according to the position of forming the air outlet 3.

The heat exchanger 50 shown in FIG. 91 is substantially inverted V shape with the front side heat exchanger 51 and the back side heat exchanger 55 formed separately, but the structure is not restricted to this structure. For example, the heat exchanger 50 in the right side vertical section may be substantially V shape, substantially N shape, substantially W shape, substantially horizontally flipped N shape, or substantially M shape. In addition, for example, the front side heat exchanger 51 and the back side heat exchanger 55 may be an integrated heat exchanger (see FIG. 92). Alternatively, for example, each of the front side heat exchanger 51 and the back side heat exchanger 55 may be a combination of a plurality of heat exchangers (see FIG. 92).

In the case of the integrated heat exchanger, the front side of the symmetric line 50a corresponds to the front side heat exchanger 51 and the back side of the symmetric line 50a corresponds to the back side heat exchanger 55. That is, it is sufficient that the length in the longitudinal direction of the heat exchanger placed on the back side of the symmetric line 50a is longer than the length in the longitudinal direction of the heat exchanger placed on the front side of the symmetric line 50a.

When each of the front side heat exchanger 51 and the back side heat exchanger 55 is a combination of a plurality of heat exchangers, the sum of the lengths in the longitudinal direction of the plurality of heat exchangers included in the front side heat exchanger 51 equals the length in the longitudinal direction of the front side heat exchanger 51. The sum of the lengths in the longitudinal direction of the plurality of heat exchangers included in the back side heat exchanger 55 equals the length in the longitudinal direction of the back side heat exchanger 55.

It is not necessary that all heat exchangers included in the heat exchanger 50 are slanted in the right side vertical section and some heat exchangers included in the heat exchanger 50 may be placed vertically in the right side vertical section (see FIG. 92).

When the heat exchanger 50 includes a plurality of heat exchangers (for example, includes the front side heat exchanger 51 and the back side heat exchanger 55), the heat exchangers do not need to make contact with each other completely at a point where the gradient of placement of the heat exchanger 50 changes (for example, a substantial connecting point between the front side heat exchanger 51 and the back side heat exchanger 55) and there may be a little gap between the heat exchangers.

A part or all of the heat exchanger 50 in the right side vertical section may be curved in shape (see FIG. 92).

Embodiment 49

Flat pipe

In each of the embodiments including Embodiment 1, each heat transfer pipe 57 is a circular pipe. This is not restrictive, and the heat transfer pipe 57 may be a flat pipe, of course. The following description focuses on items in Embodiment 49 that are different from those in Embodiment 1, and components that are the same as in Embodiment 1 are given the same reference characters.

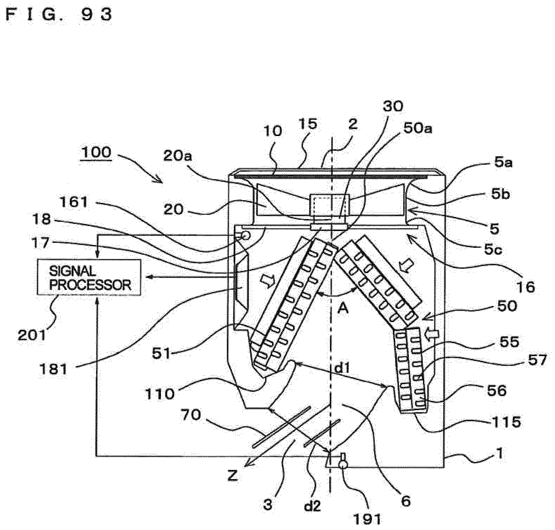

FIG. 93 is a vertical sectional view showing an indoor unit according to Embodiment 49 of the present invention.

In the heat exchanger 50 according to Embodiment 49, each heat transfer pipe 57 is a flat pipe. Other structures are the same as in the heat exchanger 50 shown in Embodiment 1. Also, in Embodiment 49, as with Embodiment 1, a refrigerant flowing through the heat transfer pipes 57 (a refrigerant for use in the indoor unit 100 and an air conditioning apparatus including the indoor unit 100) is denoted as R32.

The heat exchanger 50 using the flat-pipe-shaped heat transfer pipes 57 has a refrigerant flow passage narrower than that of a heat exchanger using a circular-pipe-shaped heat transfer pipes. Accordingly, the heat exchanger 50 using the flat-pipe-shaped heat transfer pipes 57 has a pressure loss of the refrigerant larger than that of a heat exchanger using a circular-pipe-shaped heat transfer pipes with the same refrigerant circulation volume.

However, R32 has a latent heat of evaporation larger than that of R410A at the same temperature, and can achieve the same capacity with a less refrigerant circulation volume. Accordingly, with the use of R32, the refrigerant amount for use can be reduced, and the pressure loss in the heat exchanger 50 can be reduced. Therefore, with each heat transfer pipe 57 being a flat pipe and R32 being used as a refrigerant, the size of the heat exchanger 50 can be decreased.

In Embodiment 49, the heat exchanger 50 is placed so that the long side direction of the heat transfer pipe 57 is along an air flow direction. More specifically, when the fan 20 is driven, the air flow direction of the heat exchanger 50 (a direction of air flowing through the heat exchanger 50) is as shown by an outline arrow in FIG. 93. In Embodiment 49, the heat exchanger 50 is placed so that the long side direction of the heat transfer pipe 57 is along this air flow direction.

With this, the air flow resistance of the heat exchanger 50 is decreased, and therefore the motive power of the fan 20 can be suppressed to be small and the power consumption of the fan 20 can be reduced. Also, since the air flow resistance of the heat exchanger 50 is decreased, a space between adjacent heat transfer pipes 57 can be made small (narrow). Accordingly, the size of the heat exchanger 50 can be more decreased.

Also in the heat exchanger 50 according to Embodiment 49, it is desirable that the fins 56 and the heat transfer pipes 57 are made of aluminum or an aluminum alloy. With this, the weight of the heat exchanger 50 can be reduced.

Embodiment 50

Heat transfer pipe density

For example, the size of the heat exchanger 50 can also be decreased in the heat exchanger 50 as described below. The following description focuses on items in Embodiment 50 that are different from those in Embodiment 1 and Embodiment 49, and components that are the same as in Embodiment 1 and Embodiment 49 are given the same reference characters.

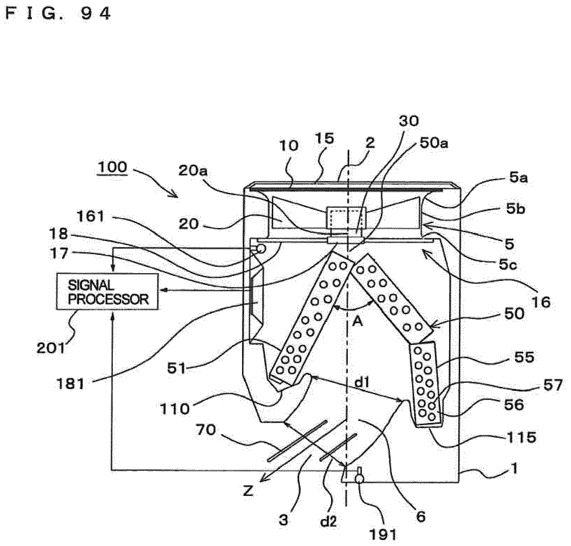

FIG. 94 is a vertical sectional view showing an indoor unit according to Embodiment 50 of the present invention.

The fan 20, which is an axial flow fan or a diagonal flow fan, has a less air volume on a center part side of the fan 20 and a more air volume on a perimeter side of the fan 20. That is, in the heat exchanger 50 in a range facing the fan 20, the air volume that is going to pass through a range facing the center part of the fan 20 is less, and the air volume that is going to pass through a range facing the perimeter side of the fan 20 is more. Thus, in the heat exchanger 50 according to Embodiment 50, the air flow resistance of the range where the air volume that is going to pass is more (the range facing the perimeter side of the fan 20) is set larger than the air flow resistance of the range where the air volume that is going to pass is less (the range facing the center part of the fan 20).

More specifically, in the heat exchanger 50 according to Embodiment 50 where the right side vertical section is substantially inverted V shape, the air flow resistance is gradually increased from an end on a back side of the front side heat exchanger 51 to an end on a front side of the front side heat exchanger 51. Also, the air flow resistance is gradually increased from an end on a front side of the back side heat exchanger 55 to an end on a back side of the back side heat exchanger 55.

In Embodiment 50, the air flow resistance is adjusted by adjusting the space between adjacent heat transfer pipes 57. That is, in the heat exchanger 50 according to Embodiment 50 where the right side vertical section is substantially inverted V shape, the space between adjacent heat transfer pipes 57 is gradually decreased from the end on the back side of the front side heat exchanger 51 to the end on the front side of the front side heat exchanger 51. Also, the space between adjacent heat transfer pipes 57 is gradually decreased from the end on the front side of the back side heat exchanger 55 to the end on the back side of the back side heat exchanger 55.

With this structure of the heat exchanger 50, the wind speed (that is, the air volume) in each range of the heat exchanger 50 is made uniform, and the heat exchange capacity of the heat exchanger 50 is improved. Accordingly, the size of the heat exchanger 50 can be decreased.

While the air flow resistance is adjusted by adjusting the space between adjacent heat transfer pipes 57 in Embodiment 50, the air flow resistance may be adjusted by changing the diameter of each heat transfer pipe 57. That is, in the heat exchanger 50 according to Embodiment 50 where the right side vertical section is substantially inverted V shape, it is sufficient that the diameter of the heat transfer pipe 57 is gradually increased from the end on the back side of the front side heat exchanger 51 to the end on the front side of the front side heat exchanger 51. Also, it is sufficient that the diameter of the heat transfer pipe 57 is gradually increased from the end on the front side of the back side heat exchanger 55 to the end on the back side of the back side heat exchanger 55.

The air flow resistance of the heat exchanger 50 is not required to be gradually increased from the range facing the center part of the fan 20 to the range facing the perimeter side of the fan 20. For example, the air flow resistance of the heat exchanger 50 may be increased stepwise from the range facing the center part of the fan 20 to the range facing the perimeter side of the fan 20. That is, it is sufficient that the air flow resistance in the range facing the perimeter side of the fan 20 is larger than the air flow resistance in the range facing the center part of the fan 20.

Each heat transfer pipe 57 of the heat exchanger 50 according to Embodiment 50 may be a circular pipe having a narrow diameter (a diameter on the order of 3 mm to 7 mm) as shown in Embodiment 1, or a flat pipe as shown in Embodiment 49. By using R32 as a refrigerant, the size of the heat exchanger 50 can be decreased. When the heat transfer pipe 57 is a flat pipe, the heat exchanger 50 is placed so that the long side direction of the flat pipe is along the air flow direction, thereby further decreasing the size of the heat exchanger 50.

Also in the heat exchanger 50 according to Embodiment 50, it is desirable that the fins 56 and the heat transfer pipes 57 are made of aluminum or an aluminum alloy. With this, the weight of the heat exchanger 50 can be reduced.

Embodiment 51

Path of the heat exchanger

The heat exchange performance of the heat exchanger 50 can be improved if a path of the heat exchanger 50 (a flow passage of the refrigerant flowing through the heat exchanger 50) is as described below. Functions and structures in Embodiment 51 that are the same as in Embodiment 1 to Embodiment 50 are given the same reference characters in the following description.

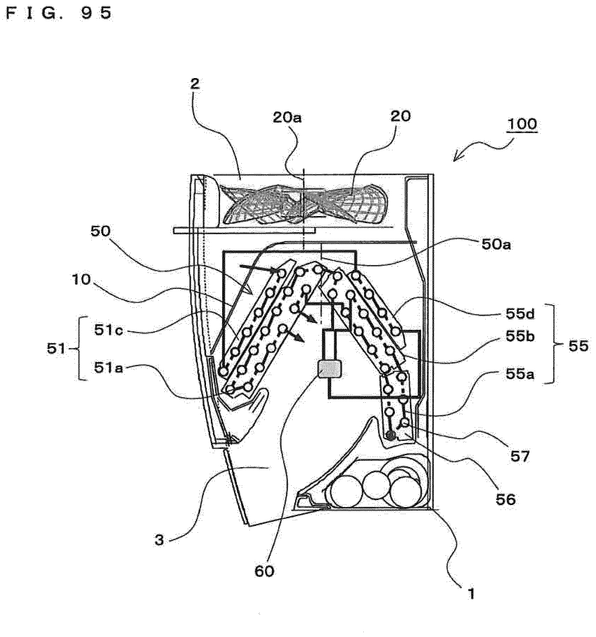

FIG. 95 is a vertical sectional view showing an indoor unit according to Embodiment 51 of the present invention.

The indoor unit 100 according to Embodiment 51 includes the heat exchanger 50 having the right side vertical section being substantially inverted V shape. This heat exchanger 50 has heat exchangers 51a, 55b, and 55a sequentially arranged from the front side of the casing 1, for example, and is substantially inverted V shape. On a windward side of the heat exchanger 51a, a heat exchanger 51c having a heat transfer area equivalent to or smaller than that of the heat exchanger 51a is placed. On a windward side of the heat exchanger 55b, a heat exchanger 55d having a heat transfer area equivalent to or smaller than that of the heat exchanger 55b is placed. These heat exchangers 51a, 51c, 55a, 55b, and 55d are finned tube heat exchangers each including the fins 56 and the heat transfer pipes 57, as shown in Embodiment 1, for example.

While no heat exchanger is placed on a windward side of the heat exchanger 55a in Embodiment 51, a heat exchanger may be placed if there is an additional installation space.

Also the shape of each fin 56 is not restricted to a rectangle as shown in Embodiment 1 and others, and may have a curved line. Also, the fin 56 may be partially cut to form a slit, or may be folded to form a waffle. With this, disturbance in the flow of air passing in the vicinity of the fin 56 is promoted, thereby improving the heat exchange performance of the heat exchanger 50. In Embodiment 51, for example, an aluminum-made fin having a thickness of 0.000095 m is used, and the space between laminated fins is 0.0012 m.

Each heat transfer pipe 57 may be a flat pipe as shown in Embodiment 49, and may be a pipe with an oval cross-section, of course. Also, as the heat transfer pipe 57, a grooved pipe subjected to groove processing on an inner wall of the heat transfer pipe 57 may be used, and a multi-flow pipe with its inside divided into a plurality of sections may be used. Alternatively, this plurality of types of heat transfer pipes 57 may be combined. The material of the heat transfer pipe 57 is not particularly restrictive, and copper or a copper alloy that is inexpensive with high thermal conductivity and excellent processability may be used, and aluminum or an aluminum alloy may be used for lightweight.

When the heat transfer pipe 57 is a circular pipe, in consideration of the pressure loss of the refrigerant passing therethrough, it is desirable that the diameter of the section is on the order of 3 mm to 8 mm. Also when the heat transfer pipe 57 is a pipe other than a circular pipe, it is desirable to use a pipe with a sectional area equivalent to that of the circular pipe. Alternatively, pipes having different sectional areas may be combined. In Embodiment 51, for example, a copper-made heat transfer pipe having a diameter of 7 mm is used as the heat transfer pipe 57.

To obtain the effect shown in Embodiment 51 (an improvement in heat exchange performance of the heat exchanger 50), the refrigerant flowing through the heat exchanger 50 is not particularly restrictive. For example, as shown in Embodiment 1, Embodiment 49, and Embodiment 50, R32 may be used as a refrigerant flowing through the heat exchanger 50. Alternatively, for example, fluorocarbon such as HFC or a natural refrigerant such as carbon dioxide may be used as a refrigerant flowing through the heat exchanger 50.

Next, refrigerant flow passages of the heat exchanger 50 according to Embodiment 51 will be described.

First, prior to the description of the refrigerant flow passages of the heat exchanger 50, the arrangement of the heat transfer pipes 57 and the representation of the refrigerant flow passages are defined as follows.

When the arrangement of the heat transfer pipes 57 is described in the right side vertical section (FIG. 95), a direction along a longitudinal direction of the fins 56 is taken as a layer direction, and a direction along a short direction of the fins 56 is taken as a row direction.

For example, the heat exchanger 51a has seven heat transfer pipes 57 arranged along the longitudinal direction of the fins 56, and these heat transfer pipes 57 are in two rows in the short direction of the fins 56. Accordingly, the arrangement of the heat transfer pipes 57 in the heat exchanger 51a is 2 rows x 7 layers. Similarly, the arrangement of the heat transfer pipes 57 in the heat exchanger 51c is 1 row x 6 layers, the arrangement of the heat transfer pipes 57 in the heat exchanger 55b is 2 rows x 5 layers, the arrangement of the heat transfer pipes 57 in the heat exchanger 55a is 2 rows x 3 layers, and the arrangement of the heat transfer pipes 57 in the heat exchanger 55d is 1 row x 4 layers.

In Embodiment 51, when the heat transfer pipes 57 form two or more rows as in the heat exchangers 51a, 55b, and 55a, the heat transfer pipes 57 are arranged substantially in a staggered manner. Also in Embodiment 51, the distance between the centers of adjacent heat transfer pipes 57 on the same row is uniform, 0.0204 m. The distance between the centers of adjacent heat transfer pipes 57 on the same row is not restrictive, and the distance between the centers of adjacent heat transfer pipes 57 on the same row may be non-uniform, of course.

In the refrigerant flow passages of the heat exchanger 50, a portion with only one refrigerant flow passage is referred to below as a one path, and a portion with two flow passages in parallel to each other is referred to below as two paths. For example, the refrigerant flow passages of the heat exchanger 50 according to Embodiment 51 can be represented as follows.

Bold arrows shown in FIG. 95 each indicate a flow direction of the refrigerant at cooling operation. Bold solid lines connecting the heat transfer pipes 57 each indicate a state in which the heat transfer pipes 57 are connected on a near side of FIG. 95. Bold broken lines connecting the heat transfer pipes 57 each indicate a state in which the heat transfer pipes 57 are connected on a far side of FIG. 95. Accordingly, at cooling operation, a refrigerant flow passage of the refrigerant flowing into the heat exchanger 51c through the heat exchanger 55d to the branch unit 60 has one path.

A refrigerant flow passage branched at the branch unit 60 to be flown out from the heat exchanger 51a has two paths. That is, the heat exchanger 50 according to Embodiment 50 has one-two paths. A flow direction of the refrigerant at heating operation is reversed to the flow direction of the refrigerant at cooling operation (the direction shown in FIG. 95). Although not shown, for example, a refrigerant flow passage going to a one-path part, a two-path part, and a four-path part in sequence is referred to as a one-two-four path. A structure in which the refrigerant flows in from three points and flows out from three points is referred to as a three-three path.

To improve the heat exchange performance of the heat exchanger 50, the following points are required to be considered when the refrigerant flow passages of the heat exchanger 50 are set. Since the fan 20 according to Embodiment 51 is an axial flow fan or a diagonal flow fan, the wind speed distribution is such that the wind speed is increased from the center part to the perimeter side of the fan 20. Accordingly, the heat exchange performance of the heat exchanger 50 is significantly changed depending on the structure of the refrigerant flow passages of the heat exchanger 50. In particular, a change of the heat exchange performance depending on the refrigerant flow passages is more conspicuous when the heat exchanger 50 has two or more rows of the heat transfer pipes 57 as in Embodiment 51.

(1) A difference in temperature between the refrigerant and the air

When the refrigerant and the air exchange heat in the heat exchanger 50, a difference in temperature between the refrigerant and the air is made as uniform as possible irrespectively of the portion. With this, the performance of the heat exchanger 50 can be improved.

In a heat exchanger such as a finned tube heat exchanger used also in Embodiment 51, the refrigerant and the air exchanging heat with each other has a temperature gradient in the course of flowing into and then flowing out from the heat exchanger.

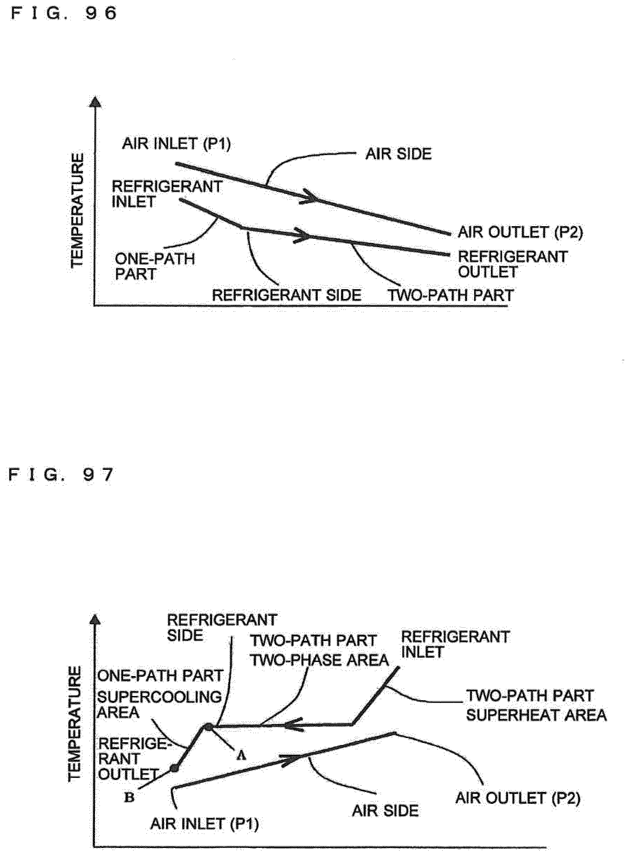

For example, when the indoor unit 100 performs a cooling operation, changes in temperature between the refrigerant and the air exchanging heat with each other in the heat exchanger 50 are as shown in FIG. 96. When the indoor unit 100 performs a cooling operation, the heat exchanger 50 functions as an evaporator. Accordingly, most part of the refrigerant flowing through the heat exchanger 50 becomes a refrigerant in a two-phase gas-liquid state.

Therefore, when the indoor unit 100 performs a cooling operation, as shown in FIG. 96, the refrigerant temperature is approximately monotonously decreased in the course of flowing into and then flowing out from the heat exchanger 50. Similarly, the temperature of the air sent out from the fan 20 is approximately monotonously decreased in the course of flowing into and then flowing out from the heat exchanger 50.

That is, if the flow of the refrigerant and the flow of the air are in the same direction, changes in temperature are substantially parallel to each other, thereby making the difference in temperature between the air and the refrigerant approximately uniform.

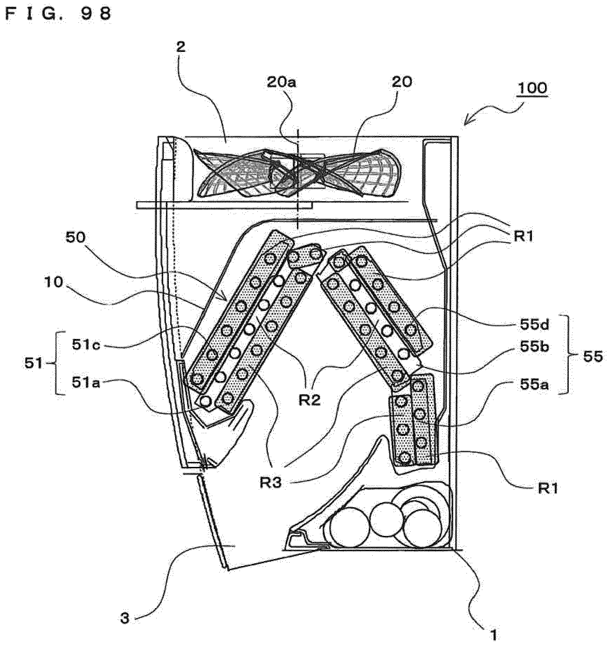

Thus, in the indoor unit according to Embodiment 51, the refrigerant flow passages of the heat exchanger 50 at cooling operation are set so that the refrigerant flows substantially from a windward side toward a leeward side. That is, each heat transfer pipe 57 of the heat exchanger 50 is as shown in FIG. 98 with respect to the air sent out from the fan 20. R1 denotes a heat transfer pipe 57 arranged on the windward side, R3 denotes a heat transfer pipe 57 arranged on the leeward side, and R2 denotes a heat transfer pipe 57 arranged in the middle.

Accordingly, in the indoor unit according to Embodiment 51, the refrigerant flow passages of the heat exchanger 50 at cooling operation are substantially set so that the refrigerant flows through the heat transfer pipe 57 arranged in the windward area R1, the heat transfer pipe 57 arranged in the intermediate area, and the heat transfer pipe 57 arranged in the leeward area R3 in sequence.

On the other hand, when the indoor unit 100 performs a heating operation, changes in temperature between the refrigerant and the air exchanging heat with each other in the heat exchanger 50 are as shown in FIG. 97. When the indoor unit 100 performs a heating operation, the heat exchanger 50 functions as a condenser. Accordingly, the phase of the refrigerant flowing through the heat exchanger 50 is changed in order of a gas refrigerant, a two-phase gas-liquid refrigerant, and a liquid refrigerant. Therefore, when the indoor unit 100 performs a heating operation, the state is as shown in FIG. 97.

That is, the refrigerant temperature is decreased in the course of flowing into and then flowing out from the heat exchanger 50. During the time when the refrigerant is in a two-phase gas-liquid state, the refrigerant temperature stays with little changes. However, when the refrigerant becomes a liquid single phase, the refrigerant temperature is abruptly decreased, which is referred to as a supercooling area. The temperature of the air sent out from the fan 20 is approximately monotonously increased in the course of flowing into and then flowing out from the heat exchanger 50.

That is, if the flow of the refrigerant and the flow of the air are in opposite directions, the difference in temperature between the air and the refrigerant can be made close to be more uniform than the case of the same direction.

Thus, in the indoor unit according to Embodiment 51, the refrigerant flow passages of the heat exchanger 50 at heating operation is set so that the refrigerant flows substantially from a leeward side toward a windward side. That is, in the heat transfer pipe 57 of the heat exchanger 50, the refrigerant flow passages of the heat exchanger 50 at cooling operation are substantially set so that the refrigerant flows through the heat transfer pipe 57 arranged in the leeward area R3, the heat transfer pipe 57 arranged in the intermediate area, and the heat transfer pipe 57 arranged in the windward area R1 in sequence.

As described above, by setting the refrigerant flow passages of the heat exchanger 50 so that the difference in temperature between the refrigerant and the air is as uniform as possible, the heat exchange performance of the heat exchanger 50 can be improved.

(2) Outlet and inlet of the refrigerant

As described above, since the fan 20 according to Embodiment 51 is an axial flow fan or a diagonal flow fan, the wind speed distribution is such that the wind speed is increased from the center part to the perimeter side of the fan 20. Accordingly, by setting an outlet and an inlet of the refrigerant provided in the heat exchanger 50 as follows, the heat exchange performance of the heat exchanger 50 can be improved.

For example, when the indoor unit 100 performs a heating operation (when the heat exchanger 50 functions as a condenser), the refrigerant flow passage in the vicinity of the outlet of the refrigerant is in a supercooling area, and a difference in temperature from the air is relatively small. Accordingly, when the indoor unit 100 performs a heating operation (when the heat exchanger 50 functions as a condenser), the outlet of the refrigerant of the heat exchanger 50 is preferably provided in a range with a small wind speed.

That is, when the indoor unit 100 performs a heating operation (when the heat exchanger 50 functions as a condenser), it is desirable to place the outlet of the refrigerant of the heat exchanger 50 in the vicinity of a part immediately below the center part of the fan 20 (a range with a small wind speed), rather than in a range facing the perimeter side of the fan 20 (in a range with a large wind speed).

Also, for example, when the indoor unit 100 performs a cooling operation (when the heat exchanger 50 functions as an evaporator), the refrigerant in the vicinity of the outlet of the refrigerant has a small difference in temperature from the air. Accordingly, when the indoor unit 100 performs a cooling operation (when the heat exchanger 50 functions as an evaporator), the outlet of the refrigerant of the heat exchanger 50 is preferably provided in a range with a small wind speed.

That is, when the indoor unit 100 performs a cooling operation (when the heat exchanger 50 functions as an evaporator), it is desirable to place the outlet of the refrigerant of the heat exchanger 50 in the vicinity of a portion immediately below the center part of the fan 20 (a range with a small wind speed), rather than in a range facing the perimeter side of the fan 20 (in a range with a large wind speed).

Thus, in Embodiment 51, the heat transfer pipe 57 that is the closest to the rotation shaft 20a of the fan 20 among the heat transfer pipes 57 of the heat exchanger 51c is taken as an inlet of the refrigerant of the heat exchanger 50 at cooling operation (an outlet of the refrigerant of the heat exchanger 50 at heating operation). Also, the heat transfer pipe 57 that is close to the rotation shaft 20a of the fan 20 among the heat transfer pipes 57 of the heat exchanger 51a is taken as an outlet of the refrigerant of the heat exchanger 50 at cooling operation (an inlet of the refrigerant of the heat exchanger 50 at heating operation).

Thus, by setting outlet and inlet of the refrigerant provided to the heat exchanger 50 in the manner as described above, the heat exchange performance of the heat exchanger 50 can be more improved.

(3) Supercooling area

When the indoor unit 100 performs a heating operation (when the heat exchanger 50 functions as a condenser), the heat exchange performance of the heat exchanger 50 is significantly changed depending on which heat transfer pipe 57 is provided to the supercooling area of the refrigerant.

To establish a refrigeration cycle, it is required to provide some degree of supercooling. However, the supercooling area has a heat transfer coefficient lower than that of the two-phase gas-liquid area. Accordingly, by ensuring the degree of supper cooling required by a minimum area (heat transfer pipe length), the heat exchange performance of the heat exchanger 50 can be improved. Also, in the supercooling area, it is important to ensure a flow rate of the refrigerant as much as possible to suppress a decrease in heat transfer coefficient.

Accordingly, when the heat exchanger 50 is caused to function as a condenser, it is desirable that the refrigerant flow passage in the vicinity of the outlet of the refrigerant is not branched as much as possible. Furthermore, the refrigerant temperature in the supercooling area is lower than that in the two-phase gas-liquid area.

Accordingly, if the heat transfer pipe 57 serving as a supercooling area and the heat transfer pipe 57 serving as a two-phase gas-liquid area are placed in a state in which these heat transfer pipes 57 easily exchange heat (for example, when these heat transfer pipes 57 are provided to the same fin), heat exchange occurs inside the heat exchanger, thereby decreasing the heat exchange performance. Accordingly, it is desirable that the heat transfer pipe 57 serving in the supercooling area is separated thermally from the other heat transfer pipes 57.

Thus, in Embodiment 51, the outlet of the refrigerant of the heat exchanger 50 when functioning as a condenser is the heat transfer pipe 57 of the heat exchanger 51c, and the heat exchanger 55d and the heat exchanger 51c have one path of the refrigerant flow passage. With this, even if the supercooling area covers not only the heat transfer pipe 57 of the heat exchanger 51c but also the heat transfer pipe 57 of the heat exchanger 55d, the refrigerant flow passage is a one-path part. Thus, the flow rate of the refrigerant can be ensured, and a decrease in heat transfer coefficient can be suppressed.

In addition, since the heat exchanger 51c and the heat exchanger 55d are separately structured from the other heat exchangers, a heat exchanger inside a heat exchanger can be avoided. While the heat exchangers separately structured (the heat exchanger 51c and the heat exchanger 55d) are applied to the supercooling area in Embodiment 51, a portion substantially thermally separated by making a slit or the like in the fin 56 may be applied to the supercooling area.

(4) Branch unit (plural-path part)

In general, the refrigerant flow passage of the heat exchanger is branched into a plurality of flow passages to reduce the pressure loss. Also in heat exchanger 50 according to Embodiment 51, a two-path part is present to reduce the pressure loss. In such a plural-path part (the two-path part in the heat exchanger 50 according to Embodiment 51), by correcting variations in heat exchange volume of the respective paths, the heat exchange performance of the heat exchanger 50 can be improved.

The heat exchange volume of each path in the plural-path part is significantly changed depending on the flow rate distribution (the air volume distribution) of the air flowing into the heat exchanger. Accordingly, when the refrigerant flow passage is branched, it is required to consider the position of the rotation shaft of the fan with respect to the heat exchanger (the position of the center axis), the distance between the fan 20 and the heat exchanger, the size of the fan, the presence of a member causing a pressure loss between the heat exchanger and the fan (for example, a filter), the presence of a member causing a pressure loss on the upstream side of the fan (for example, a filter), the structure of the heat exchanger, the shape of the air passage, and others.

In the case of the indoor unit 100 according to Embodiment 51, the position of the rotation shaft 20a of the fan 20 is placed slightly toward a front side of a symmetric line 50a of the heat exchanger 50 (a top part of the heat exchanger 50 having the substantially inverted V shape right side vertical section). Regarding air passages between the fan 20 and the heat exchanger 50 in the casing 1, an air passage formed on the front of the rotation shaft 20a of the fan 20 is larger than an air passage formed on the rear of the rotation shaft 20a of the fan 20. Furthermore, since a portion on a front side of the filter 10 is folded to a heat exchanger 50 side, a distance between the fan 20 and the filter 10 on the front of the rotation shaft 20a of the fan 20 is larger than a distance between the fan 20 and the filter 10 on the rear of the rotation shaft 20a of the fan 20.

Accordingly, in the indoor unit 100 according to Embodiment 51, the air volume of the front side heat exchanger 51 including the heat exchangers 51a and 51c is larger than the air volume of the back side heat exchanger 55 including heat exchangers 55a, 55b, and 55d. For example, when the sectional area of each heat transfer pipe 57 is the same and the refrigerant amount flowing through each heat transfer pipe 57 is the same, the heat exchange volume in the heat transfer pipes 57 provided to the front side heat exchanger 51 is larger than the heat exchange volume of the heat transfer pipes 57 provided to the back side heat exchanger 55.

Thus, the two-path part of the heat exchanger 50 according to Embodiment 51 is structured so that the number of heat transfer pipes 57 of the paths relatively largely passing through the back side heat exchanger 55 is larger than the number of heat transfer pipes 57 of the paths relatively largely passing through the front side heat exchanger 51. More specifically, the number of heat transfer pipes 57 of the paths relatively largely passing through the back side heat exchanger 55 is set at 16, and the number of heat transfer pipes 57 of the paths relatively largely passing through the front side heat exchanger 51 is set at 14. In addition, in the branch unit 60, a refrigerant amount flowing through the paths relatively largely passing through the front side heat exchanger 51 and a refrigerant amount flowing through the paths relatively largely passing through the back side heat exchanger 55 are adjusted to be the same.

With this, by correcting fluctuations in the heat exchange volume of each path in the two-path part, the heat exchange performance of the heat exchanger 50 can be improved more.

The number of heat transfer pipes 57 of the paths relatively largely passing through the front side heat exchanger 51 and the number of heat transfer pipes 57 of the paths relatively largely passing through the back side heat exchanger 55 are each only an example. For example, if the air volume of the front side heat exchanger 51 is larger, it is sufficient that the number of heat transfer pipes 57 of the paths relatively largely passing through the front side heat exchanger 51 is decreased so as to be smaller than 14 and that decreased number of heat transfer pipes 57 is added to the number of heat transfer pipes 57 of the paths relatively largely passing through the back side heat exchanger 55.

Fluctuations in the heat exchange volume of each path in the two-path part can be corrected other than adjusting the number of heat transfer pipes 57 included in each path. For example, in the branch unit 60, the refrigerant amount flowing into a path relatively largely flowing into the front side heat exchanger 51 may be larger than the refrigerant amount flowing into a path relatively largely flowing into the back side heat exchanger 55. With this, fluctuations in the heat exchange volume of each path in the two-path part can be corrected, and the heat exchange performance of the heat exchanger 50 can be more improved. In the two-path part, the number of heat transfer pipes 57 included in each path and the flow rate of the refrigerant flowing into each path may both be adjusted, of course.

Fluctuations in the heat exchange volume of each path in the two-path part may be corrected by adjusting the air volume of the front side heat exchanger 51 and the air volume of the back side heat exchanger 55 separately from adjustment of the number of heat transfer pipes 57 included in each path and the flow rate of the refrigerant flowing into each path. Together with the adjustment of the number of heat transfer pipes 57 included in each path and the flow rate of the refrigerant flowing into each path, the air volume of the front side heat exchanger 51 and the air volume of the back side heat exchanger 55 may be adjusted, of course.

The air volume of the front side heat exchanger 51 and the air volume of the back side heat exchanger 55 can be adjusted, for example, by moving the fan 20 to the back side, for example, by increasing the heat transfer area of the front side heat exchanger 51, for example, by decreasing the heat transfer area of the back side heat exchanger 55, for example, by forming a folded portion of the filter 10 in a flat shape, or others.

While the indoor unit 100 has been described in Embodiment 51 in which the air volume of the front side heat exchanger 51 is larger than the air volume of the back side heat exchanger 55, fluctuations in the heat exchange volume of each path in the two-path part are corrected also in the indoor unit 100 in which the air volume of the back side heat exchanger 55 is larger than the air volume of the front side heat exchanger 51. With this, the heat exchange performance of the heat exchanger 50 can be more improved. With the air volume of the back side heat exchanger 55 being larger than the air volume of the front side heat exchanger 51, the need for sharply bending the air flow in the vicinity of the air outlet 3 is eliminated, and the pressure loss in the vicinity of the air outlet 3 can be reduced.

While the heat exchanger 50 with a refrigerant flow passage being a one-two path has been described in the description of (1) to (4) in Embodiment 51, the refrigerant flow passages of the heat exchanger 50 is not restricted to this. The refrigerant flow passages of the heat exchanger 50 can be determined as appropriate according to the air conditioning capacity and energy efficiency required for the indoor unit 100. For example, the indoor unit 100 may be used only for cooling, or the period during which the indoor unit 100 is used for heating may be short.

Alternatively, the air conditioning capacity required for the indoor unit 100 may be large with respect to the heat transfer area of the heat exchanger 50 and the pressure loss of the refrigerant may be excessive. In these cases, no one-path part may be provided to the refrigerant flow passage of the heat exchanger 50, and the number of plural-path parts such as a two-two path, a two-four path, or a three-three path may be increased to structure the refrigerant flow passages of the heat exchanger 50.

Embodiment 52

The method of improving the heat exchange performance of the heat exchanger 50 described in Embodiment 51 ((1) to (4) described in Embodiment 51) can be performed not restrictively on the heat exchanger 50 with the right side vertical section having substantially inverted V shape, but also on the heat exchanger 50 having another shape. Items in Embodiment 52 that are not particularly described are the same as in Embodiment 51, and functions and structures that are the same as in Embodiment 51 are given the same reference characters in the following description.

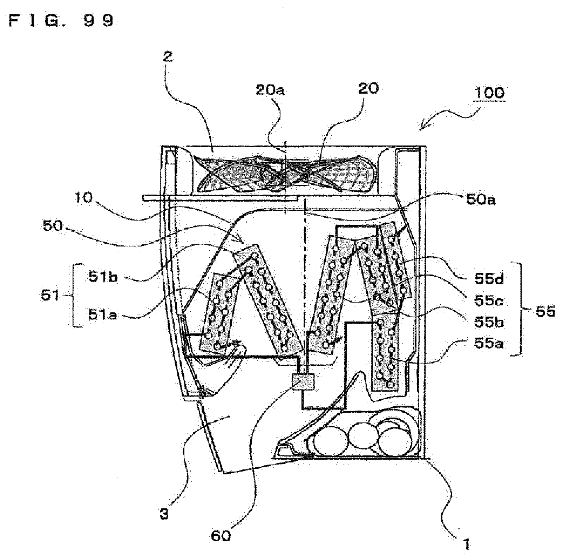

FIG. 99 is a vertical sectional view showing an indoor unit according to Embodiment 52 of the present invention. In FIG. 99, an example of refrigerant flow passages is also shown by using representations similar to those in FIG. 95 when the indoor unit 100 performs a cooling operation (when the heat exchanger 50 functions as an evaporator). The refrigerant flow passages when the indoor unit 100 performs a heating operation (when the heat exchanger 50 functions as a condenser) are in reverse to the refrigerant flow passages when the indoor unit 100 performs a cooling operation (when the heat exchanger 50 functions as an evaporator).

The shape of the heat exchanger 50 in the indoor unit 100 according to Embodiment 52 is different from that in the indoor unit 100 shown in Embodiment 51. That is, the heat exchanger 50 of the indoor unit 100 according to Embodiment 52 has the right side vertical section substantially M shape. With the substantially M shape right side vertical section of the heat exchanger 50, the heat exchanger 50 with a larger heat transfer area can be mounted even in the indoor unit 100 having the same thickness (length in a left/right direction in FIG. 99).

More specifically, the heat exchanger 50 according to Embodiment 52 has heat exchangers 51a, 51b, 55c, 55b, and 55a sequentially arranged from the front side of the casing 1, and is substantially M shape. Also, on a windward side of the heat exchanger 55b, the heat exchanger 55d having a heat transfer area equivalent to or smaller than that of the heat exchanger 55b is placed. That is, in the heat exchanger 50 according to Embodiment 52, the front side heat exchanger 51 includes heat exchangers 51a and 51b, and the back side heat exchanger 55 includes the heat exchangers 55a, 55b, 55c, and 55d.

The arrangement of the heat transfer pipes 57 in these heat exchangers are 2 rows x 4 layers in the heat exchanger 51a, 2 rows x 6 layers in the heat exchanger 51b, 2 rows x 6 layers in the heat exchanger 55c, 2 rows x 4 layers in the heat exchanger 55b, 2 rows x 4 layers in the heat exchanger 55a, and 1 row x 4 layers in the heat exchanger 55d. The heat exchanger 50 according to Embodiment 52 has a refrigerant flow passage of a one path in which the refrigerant flows in the heat exchanger 55d through the heat exchanger 55a to the branch unit 60.

In addition, the refrigerant flow passage after branched at the branch unit 60 has two paths. More specifically, one of the paths of the two-path part forms a refrigerant flow passage in which the refrigerant flowing out from the branch unit 60 passes through the heat exchangers 55c and 55b. The other path of the two-path part forms a refrigerant flow passage in which the refrigerant flowing out from the branch unit 60 passes through the heat exchangers 51a and 51b. That is, a one-two path is achieved in the heat exchanger 50 according to Embodiment 50. In Embodiment 52, the branch unit 60 is adjusted so that the refrigerant is caused to flow through both paths of the two-path part.

The arrangement of the heat transfer pipes 57 and the refrigerant flow passages shown in FIG. 99 are merely an example, and it is sufficient that the arrangement of the heat transfer pipes 57 and the refrigerant flow passages are determined as appropriate according to a flow rate distribution of the air to be sent from the fan 20 to the heat exchanger 50 or the like.

Also in heat exchanger 50 according to Embodiment 52, the heat exchange performance of the heat exchanger 50 can be improved in consideration of items (1) to (4) described in Embodiment 51.

For example, the refrigerant flow passages of the heat exchanger 50 according to Embodiment 52 are in consideration of (1) described in Embodiment 51. That is, each refrigerant flow passage of the heat exchanger 50 at cooling operation is set so that the refrigerant flows substantially from a windward side toward a leeward side. Each refrigerant flow passage of the heat exchanger 50 at heating operation is set so that the refrigerant flows substantially from the leeward side toward the windward side. With this, the heat exchange performance of the heat exchanger 50 can be improved.

In addition, the refrigerant flow passages of the heat exchanger 50 according to Embodiment 52 are also structured in consideration of (3) described in Embodiment 51. That is, the heat exchanger 55d is set as a heat exchanger serving as a supercooling area in heating operation, formed separately from the other heat exchangers. With this, the heat exchange performance of the heat exchanger 50 can be more improved.

In addition, the refrigerant flow passages of the heat exchanger 50 according to Embodiment 52 are also structured in consideration of (4) described in Embodiment 51. That is, the two-path part in the heat exchanger 50 according to Embodiment 52 is structured so that the heat exchange volume of each path is substantially uniform. More specifically, in the heat exchanger 50 according to Embodiment 52, the air volume of the front side heat exchanger 51 and the air volume of the back side heat exchanger 55 are substantially equal to each other.

Accordingly, the number of heat transfer pipes 57 of the paths relatively largely passing through the front side heat exchanger 51 and the number of heat transfer pipes 57 of the paths relatively largely passing through the back side heat exchanger 55 are both 20. With this, the heat exchange performance of the heat exchanger 50 can be more improved.

The number of heat transfer pipes 57 of the paths relatively largely passing through the front side heat exchanger 51 and the number of heat transfer pipes 57 of the paths relatively largely passing through the back side heat exchanger 55 are only an example. For example, when the air volume of the front side heat exchanger 51 is large, it is sufficient that the number of heat transfer pipes 57 of the paths relatively largely passing through the front side heat exchanger 51 is decreased and that decreased number of heat transfer pipes 57 is added to the number of heat transfer pipes 57 of the paths relatively largely passing through the back side heat exchanger 55.

In addition, in the branch unit 60, the refrigerant amount flowing into a path relatively largely flowing into the front side heat exchanger 51 and the refrigerant amount flowing into a path relatively largely flowing into the back side heat exchanger 55 may be adjusted to correct fluctuations in the heat exchange volume of each path. Also, in the two-path part, the number of heat transfer pipes 57 included in each path and the flow rate of the refrigerant flowing into each path may both be adjusted, of course.

In addition, fluctuations in the heat exchange volume of each path in the two-path part may be corrected by adjusting the air volume of the front side heat exchanger 51 and the air volume of the back side heat exchanger 55, of course. The air volume of the front side heat exchanger 51 and the air volume of the back side heat exchanger 55 can be adjusted, for example, by moving the fan 20 in a front/rear direction, for example, by increasing the heat transfer area of the front side heat exchanger 51, for example, by decreasing the heat transfer area of the back side heat exchanger 55, for example, by forming a folded portion of the filter 10 in a flat shape, or others.

While the indoor unit 100 has been described in Embodiment 52 in which the air volume of the front side heat exchanger 51 and the air volume of the back side heat exchanger 55 are the same, fluctuations in the heat exchange volume of each path in the two-path part are corrected even in the indoor unit 100 in which the air volume of the back side heat exchanger 55 is larger than the air volume of the front side heat exchanger 51.

With this, the heat exchange performance of the heat exchanger 50 can be more improved. With the air volume of the back side heat exchanger 55 being larger than the air volume of the front side heat exchanger 51, the need for sharply bending the air flow in the vicinity of the air outlet 3 is eliminated, and the pressure loss in the vicinity of the air outlet 3 can be reduced.

While the heat exchanger 50 with a refrigerant flow passage being a one-two path has been described in Embodiment 52, the refrigerant flow passages of the heat exchanger 50 is not restricted to this. The refrigerant flow passages of the heat exchanger 50 can be determined as appropriate according to the air conditioning capacity and energy efficiency required for the indoor unit 100. For example, the indoor unit 100 may be used only for cooling, or the period in which the indoor unit 100 is used for heating may be short.

Alternatively, the air conditioning capacity required for the indoor unit 100 may be large with respect to the heat transfer area of the heat exchanger 50 and the pressure loss of the refrigerant may be excessive. In these cases, no one-path part may be provided to the refrigerant flow passage of the heat exchanger 50, and the number of plural-path parts such as a two-two path, a two-four path, or a three-three path may be increased to structure the refrigerant flow passages of the heat exchanger 50.

Although (2) described in Embodiment 51 is not particularly considered in Embodiment 52, the refrigerant flow passages of the heat exchanger 50 may be structured in consideration of (2) described in Embodiment 51, of course. That is, it is sufficient that the heat transfer pipe 57 that is close to the rotation shaft 20a of the fan 20 is taken as an inlet of the refrigerant of the heat exchanger 50 at cooling operation (an outlet of the refrigerant of the heat exchanger 50 at heating operation).

Also, it is sufficient that the heat transfer pipe 57 that is close to the rotation shaft 20a of the fan 20 is taken as an outlet of the refrigerant of the heat exchanger 50 at cooling operation (an inlet of the refrigerant of the heat exchanger 50 at heating operation). The heat exchange performance of the heat exchanger 50 can be more improved.

Embodiment 53

When the heat exchanger 50 includes a plurality of heat exchangers (for example, Embodiment 51 and Embodiment 52), the indoor unit 100 can be configured as an indoor unit performing reheat dehumidification. In this case, it is sufficient that the refrigerant flow passages of the heat exchanger 50 are configured as described below, for example. Items in Embodiment 53 that are not particularly described are the same as in Embodiment 51 or Embodiment 52, and functions and structures that are the same as in Embodiment 51 or Embodiment 52 are given the same reference characters in the following description.

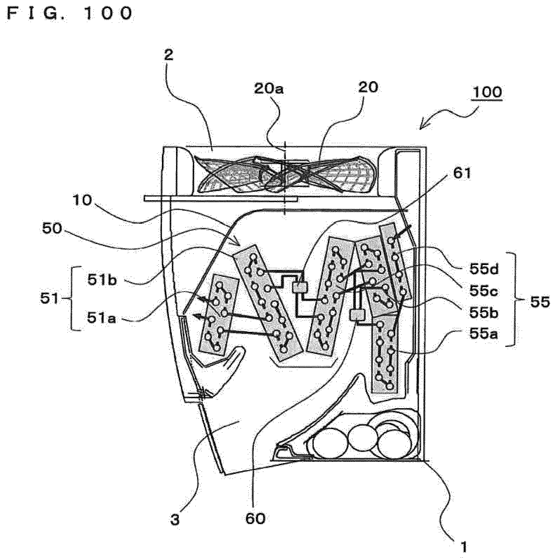

FIG. 100 is a vertical sectional view showing an indoor unit according to Embodiment 53 of the present invention. In FIG. 100, an example of refrigerant flow passages is also shown by using representations similar to those in FIG. 95 when the indoor unit 100 performs a cooling operation.

The heat exchanger 50 of the indoor unit 100 according to Embodiment 53, as with Embodiment 52, has the right side vertical section substantially M shape. That is, the heat exchanger 50 according to Embodiment 53 has heat exchangers 51a, 51b, 55c, 55b, and 55a sequentially arranged from the front side of the casing 1, and is substantially M shape. Also, on a windward side of the heat exchanger 55b, the heat exchanger 55d having a heat transfer area equivalent to or smaller than that of the heat exchanger 55b is placed. That is, in the heat exchanger 50 according to Embodiment 52, the front side heat exchanger 51 includes heat exchangers 51a and 51b, and the back side heat exchanger 55 includes the heat exchangers 55a, 55b, 55c, and 55d. The arrangement of the heat transfer pipes 57 in these heat exchangers is similar to that in Embodiment 52.

However, since the indoor unit 100 is configured as an indoor unit performing reheat dehumidification, the refrigerant flow passages of the heat exchanger 50 according to Embodiment 53 are different from those of Embodiment 52.

Reheat dehumidification is a dehumidification method of decreasing humidity while suppressing a decrease in room temperature. That is, in a refrigeration cycle at normal cooling operation, each heat exchanger provided to the outdoor unit is caused to function as a condenser, and each heat exchanger provided to the indoor unit is caused to function as an evaporator.

By contrast, in a refrigeration cycle in which reheat dehumidification is performed at cooling operation, part of the heat exchangers provided to the indoor unit is caused to function as a condenser. With the heat exchangers provided to the indoor unit being divided into an evaporating unit and a condensing unit, an excessive decrease in temperature of air-conditioned air occurring at the time of dehumidification at the evaporating unit can be compensated for at the condensing unit.

In the indoor unit 100 according to Embodiment 53, an expansion device 61 is provided in mid course of a refrigerant flow passage of the heat exchanger 50, and part of the heat exchangers included in the heat exchanger 50 is used as a condenser. In Embodiment 53, the refrigerant flow passages of the heat exchanger 50 are the same both at normal cooling operation and at cooling operation performing reheat dehumidification. More specifically, an inlet of the refrigerant flow passage is provided to the heat exchanger 55d. A one-path part is formed from this inlet through the heat exchangers 55d and 55a to reach the branch unit 60.

Then, the part is branched into two paths at the branch unit 60. This two-path part passes through the heat exchangers 55b and 55c. After passing through the heat exchangers 55b and 55c, this two-path part is merged at the expansion device 61. The refrigerant flow passage merged at the expansion device 61 is again branched into two paths. This two-path part passes through the heat exchangers 51b and 51a. An outlet of the refrigerant flow passage is provided to the heat exchanger 51a.

At normal cooling operation, the expansion device 61 is controlled so that the expansion device 61 does not expand the refrigerant. With this, at normal cooling operation, all heat exchangers included in the heat exchanger 50 function as evaporators. By contrast, at cooling operation performing reheat dehumidification, the expansion device 61 is controlled so that the expansion device 61 expands the refrigerant.

With this, among the heat exchangers included in the heat exchanger 50, the heat exchangers 55a, 55b, 55c, and 55d function as condensers (configure a condensing unit), and the heat exchangers 51a and 51b function as evaporators (configure an evaporating unit).

To set heat exchangers functioning as evaporators and heat exchangers functioning as condensers, it is desirable to consider the air flow flowing through the heat exchanger 50. For example, assume the case in which the air flow passing through a heat exchanger functioning as a condenser flows into a heat exchanger functioning as a condenser.

In this case, condensed water generated at the evaporator in dehumidification may again flow into the condenser to evaporate again. Accordingly, it is desirable to set heat exchangers functioning as evaporators and heat exchangers functioning as condensers so that the air flow passing through a heat exchanger functioning as an evaporator does not flow into a heat exchanger functioning as a condenser.

As described above, by configuring the refrigerant flow passages of the heat exchanger 50 as in Embodiment 53 when the heat exchanger 50 includes a plurality of heat exchangers, the indoor unit 100 can be configured as an indoor unit performing reheat dehumidification.

In Embodiment 53, the heat exchangers 55a, 55b, 55c, and 55d are caused to function as condensers and the heat exchangers 51a and 51b are caused to function as evaporators at cooling operation performing reheat dehumidification. However, any heat exchanger may be caused to function as a condenser (or caused to function as an evaporator) among the heat exchangers included in the heat exchanger 50. This may be determined as appropriate according to the ratio between sensible heat capacity and latent heat capacity or the like required.

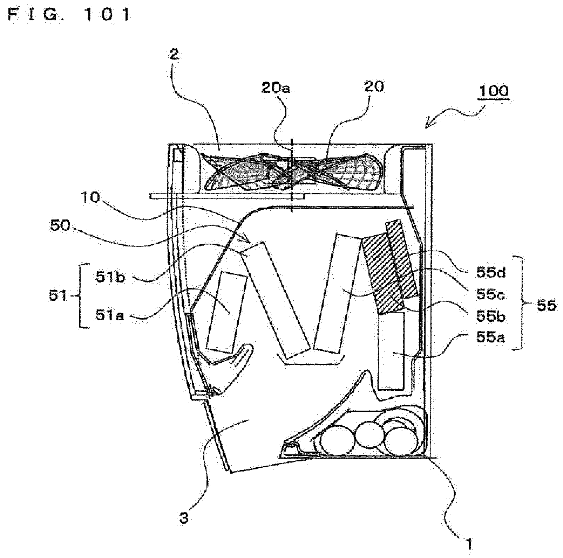

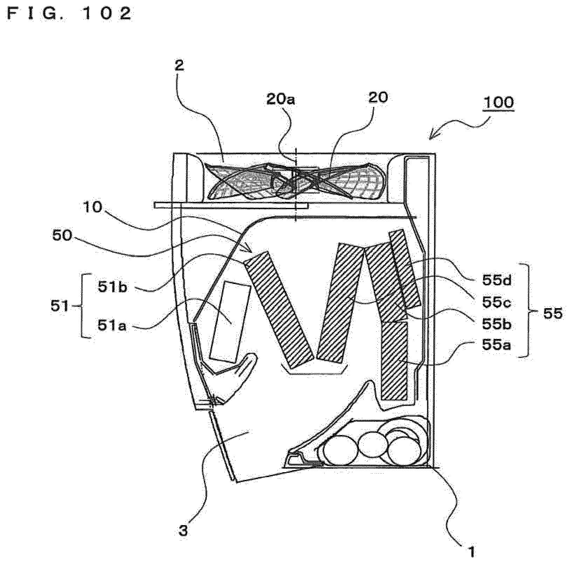

FIGs. 101 and 102 are vertical sectional views showing other examples of the indoor unit according to Embodiment 53 of the present invention. In FIGs. 101 and 102, heat exchangers to be caused to function as condensers at cooling operation performing reheat dehumidification are hatched.

At cooling operation performing reheat dehumidification, for example, as shown in FIG. 101, the heat exchangers 55b and 55d may be caused to function as condensers, and the heat exchangers 51a, 51b, 55a, and 55c may be caused to function as evaporators. Also, at cooling operation performing reheat dehumidification, for example, as shown in FIG. 102, the heat exchangers 51b, 55a, 55b, 55c, and 55d may be caused to function as condensers, and the heat exchanger 51a may be caused to function as an evaporator, of course.

Embodiment 54

Pre-filter

With the filter 10 placed as described below, reduction in pressure loss of the filter, an improvement in wind speed distribution of the air flow flowing into the heat exchanger, and other effects can be obtained. Functions and structures in Embodiment 54 that are the same as in Embodiment 1 to Embodiment 53 are given the same reference characters in the following description.

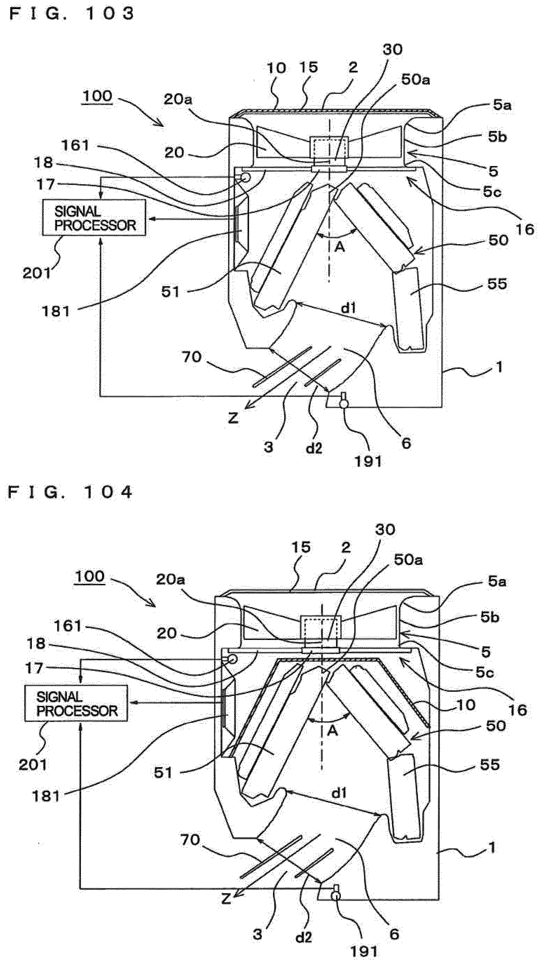

FIG. 103 is a vertical sectional view showing an indoor unit according to Embodiment 54 of the present invention.

The indoor unit 100 according to Embodiment 54 is different from the indoor unit 100 according to Embodiment 1 in the position of placement of the filter 10. More specifically, in the indoor unit 100 according to Embodiment 54, the filter 10 is placed on an upstream side of the finger guard 15 (for example, on an upper surface part of the finger guard 15).

In such a structure, the distance between the filter 10 and the fan 20 can be ensured, and the need for providing a reinforcing member in the filter 10 or below the filter 10 is eliminated. The reinforcing member for the filter 10 is to prevent interference of the filter 10 with the fan 20, and is a lattice-shaped or vertical-bar-shaped member.

That is, with the filter 10 being provided on the upstream side of the finger guard 15, the finger guard 15 can perform not only functions as the finger guard 15 for preventing fingers from touching the fan 20 but also functions as a strength member for preventing interference between the fan 20 and the filter 10. In other words, the reinforcing member of the filter 10 can be used as the finger guard 15. Accordingly, the reinforcing member provided to the conventional filter is not required, and a reduction in cost by that reinforcing member can be achieved.

In addition, with the filter 10 being placed on the upstream side of the finger guard 15, the distance between the filter 10 and the fan 20 is increased. Accordingly, as shown in FIG. 103, an effective air passage actually passing through the filter 10 (referred to below as a front area) can be increased. Accordingly, the pressure loss of the filter 10 can be reduced with the same air volume.

The shape of the finger guard 15 may be changed so as to enlarge the front area of the filter 10. Also, the filter 10 and the finger guard 15 may be separately (both removably) configured or may be integrally configured with, for example, an adhesive. In Embodiment 54, the finger guard 15 is formed with a peripheral part of the finger guard 15 being slanted downward so as to enlarge the front area of the filter 10.

Embodiment 55

For example, the filter 10 may be placed on a downstream side of the fan 20. Items in Embodiment 55 that are not particularly described are the same as in Embodiment 54, and functions and structures that are the same as in Embodiment 54 are given the same reference characters in the following description.

FIG. 104 is a vertical sectional view showing an indoor unit according to Embodiment 55 of the present invention.

The indoor unit 100 according to Embodiment 55 is different from the indoor unit 100 according to Embodiment 1 and Embodiment 54 in the position of placement of the filter 10. More specifically, in the indoor unit 100 according to Embodiment 55, the filter 10 is placed between the fan 20 and the heat exchanger 50. In addition, the filter 10 according to Embodiment 55 has a shape with a front side and a back side being folded diagonally downward along the upper surface part of the heat exchanger 50.

In such a structure, the air flow with a high flow rate flowing from the fan 20 can be prevented from directly colliding with the heat exchanger 50. Accordingly, after the air flow with a high flow rate flowing from the fan 20 is once rectified by the filter 10, the air flow can be caused to flow into the heat exchanger 50. Furthermore, since the filter 10 is folded to the front side and back side of the casing 1, the front area of the filter 10 can be increased. Accordingly, the pressure loss of the filter 10 can be reduced, and variations of the wind speed distribution occurring at the heat exchanger 50 can be reduced. Therefore, the performance of the indoor unit 100 can be improved.

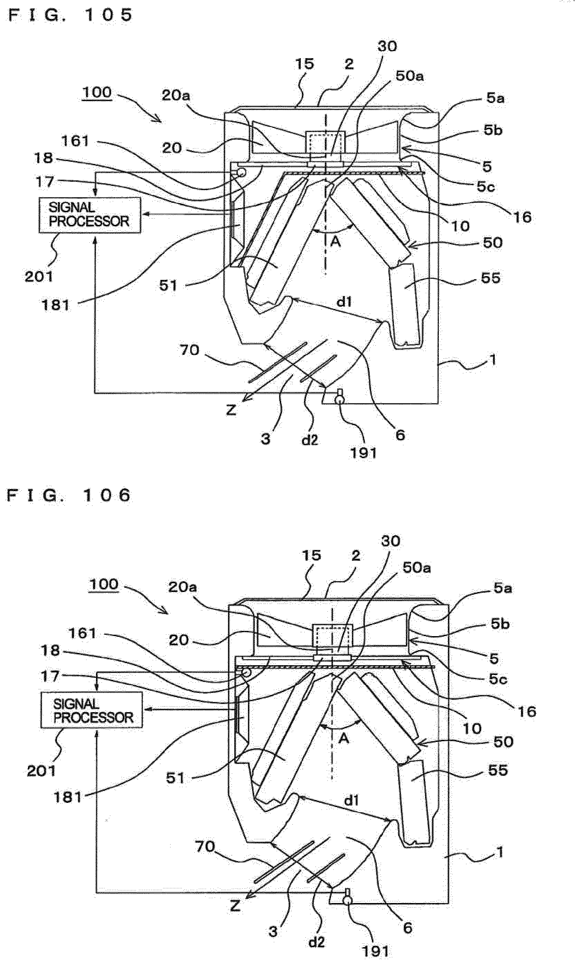

When the filter 10 is formed by folding, for example, as shown in FIG. 105, only the front side of the casing may be folded to form the filter 10. With the filter 10 being formed in this manner, the filter 10 can be easily removed from and attached to the front side of the casing 1.

Embodiment 56

When the filter 10 is placed on the downstream side of the fan 20, the filter 10 may be placed, for example, as described below if the distance between the filter 10 and the fan 20 can be sufficiently ensured. Items in Embodiment 56 that are not particularly described are the same as in Embodiment 54 or Embodiment 55, and functions and structures that are the same as in Embodiment 54 or Embodiment 55 are given the same reference characters in the following description.

FIG. 106 is a vertical sectional view showing an indoor unit according to Embodiment 56 of the present invention.

In the indoor unit 100 according to Embodiment 56, as with the indoor unit 100 according to Embodiment 55, the filter 10 is placed between the fan 20 and the heat exchanger 50. However, the filter 10 provided to the indoor unit 100 according to Embodiment 56 is different in shape from the filter 10 shown in Embodiment 55.

More specifically, in Embodiment 55, the shape is obtained by folding the front side and the back side to ensure the front area of the filter 10 (to ensure a space where part of the air flow blown from the fan 20 is once converted to static pressure). By contrast, in the indoor unit 100 according to Embodiment 56, since the distance between the filter 10 and the fan 20 can be sufficiently ensured, the filter 10 has a substantially flat shape (without a folded front side or back side).

The case in which the distance between the filter 10 and the fan 20 can be sufficiently ensured is the case in which the distance between the filter 10 and the fan 20 is equal to or larger than D/4. Here, D is the diameter of the fan 20 (more specifically, the bladed wheel 25 of the fan 20). If the distance between the filter 10 and the fan 20 can be sufficiently ensured, part of the air flow blown from the fan 20 can be converted to static pressure even if the shape of the filter 10 is as shown in FIG. 106.

In such a structure, since the filter 10 and the fan 20 are placed symmetrically to each other in plane, it is possible to prevent noise occurring when the air flow blown from the fan 20 directly collides with the heat exchanger (occurring when the filter 10 is placed on the upstream side of the fan 20) or noise occurring when the air flow blown from the fan 20 collides with the asymmetrical filter 10 (the filter 10 shown in FIG. 105 in which only the front side is folded).

The following effects can also be obtained by placing the filter 10 having the shape shown in Embodiment 56 on the downstream side of the fan 20.

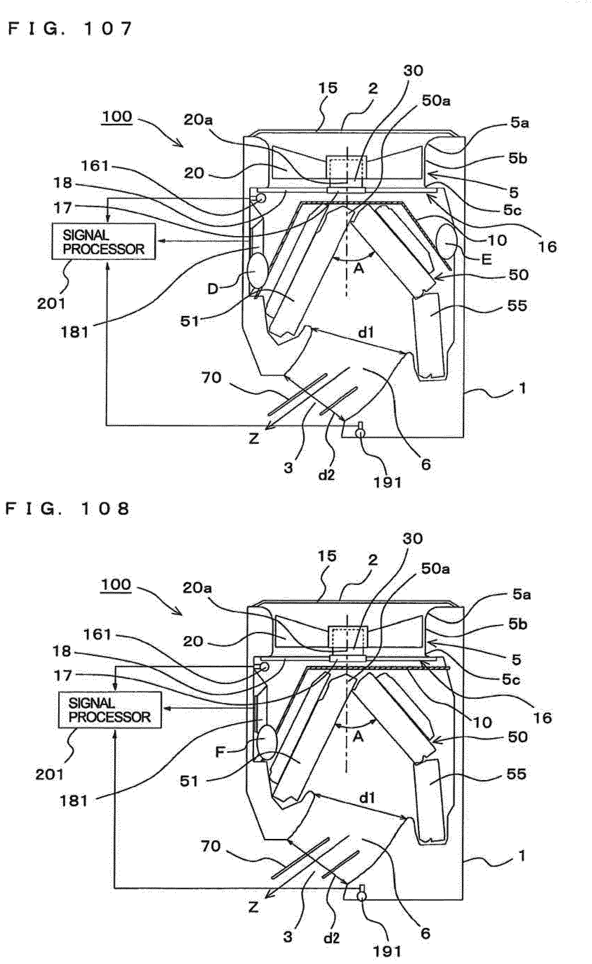

FIGs. 107 and 108 are diagrams (vertical sectional views) each describing an air flow occurring inside the indoor unit according to Embodiment 55 of the present invention. FIG. 107 is a diagram (vertical sectional view) describing an air flow occurring inside the indoor unit 100 shown in FIG. 104, and FIG. 108 is a diagram (vertical sectional view) describing an air flow occurring inside the indoor unit 100 shown in FIG. 105.

As shown in FIGs. 107 and 108, if a slanted region is included in the filter 10, the air blown from the fan 20 flows along the slanted region of the filter 10. That is, if a slanted region is included in the filter 10, the air flow blown from the fan 20 becomes an air flow flowing toward areas indicated by D and E in FIG. 107 or by F in FIG. 108. Accordingly, many of air flows passing through the areas indicated by D and E in FIG. 107 or by F in FIG. 108 flow into the heat exchanger 150.

Accordingly, variations occur in the speed distribution of the air flow flowing into the heat exchanger 50. By contrast, in the substantially-flat-shaped filter 10 as in Embodiment 56, the filter 10 and the fan 20 are placed symmetrically to each other in plane. Accordingly, the air flow blown from the fan 20 is uniformly rectified by this fan 20. Accordingly, the wind speed distribution occurring at the heat exchanger on the downstream of the filter 10 can be improved, and the performance of the indoor unit 100 can be improved.

Embodiment 57

The filter 10 may be placed on both of the upstream side and the downstream side of the fan 20, of course. Items in Embodiment 57 that are not particularly described are the same as in Embodiment 54 to Embodiment 56, and functions and structures that are the same as in Embodiment 54 to Embodiment 56 are given the same reference characters in the following description.

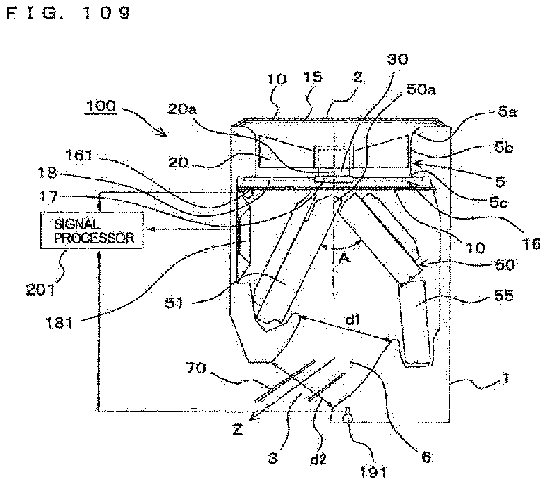

FIG. 109 is a vertical sectional view showing an indoor unit according to Embodiment 57 of the present invention.

In the indoor unit 100 according to Embodiment 57, the filter 10 is placed on both of the upstream side and the downstream side of the fan 20. In Embodiment 57, a total of pressure losses of the filter 10 provided on the upstream side and the downstream side of the fan 20 is approximately the same as the pressure loss of the filter 10 shown in Embodiment 54 (the filter placed only on the upstream side of the fan 20) or the pressure loss of the filter 10 shown in Embodiment 55 and Embodiment 56 (the filter provided only on the downstream side of the fan 20).

That is, in Embodiment 57, by adjusting the roughness and front area of each of the filters 10 provided on the upstream side and the downstream side of the fan 20, the total of these pressure losses is set to be approximately the same as the pressure loss of the filter 10 shown in Embodiment 54 (the filter placed only on the upstream side of the fan 20) or the pressure loss of the filter 10 shown in Embodiment 55 and Embodiment 56 (the filter provided only on the downstream side of the fan 20).

In such a structure, in addition to rectifying the air flow at the filter 10 placed on the downstream side of the fan 20, dust attached to the fan 20 can be collected at the filter 10 on the upstream side of the fan 20. Accordingly, it is possible not only to improve the wind speed distribution of the air flow flowing into the heat exchanger 50 but also to prevent the air volume of the fan 20 from being decreased due to attachment or accumulation of dust.

Regarding the filter 10 placed on the downstream side of the fan 20, a honey comb structure with a rectifying effect may be used. For example, by using a cleaning filter with a honey comb structure, not only dust collection but also an air cleaning function can be added. If dust collection on the downstream side of the fan 20 is not required, a member with air flow resistance may be placed at the position where the filter 10 is supposed to be placed on the downstream side of the fan 20.

With a member with air flow resistance being placed in this manner, the air flow flowing into the heat exchanger 50 can be rectified, and the speed distribution of the air flow flowing into the heat exchanger 50 can be improved (that is, the heat exchange performance of the heat exchanger 50 can be improved). For example, as a member with air flow resistance to be placed on the downstream side of the fan 20, a heat exchanger other than the heat exchanger 50 may be provided. With this, the performance (air conditioning performance) of the indoor unit 100 can be improved.

Embodiment 58

Dust attached to the fan 20 may be collected as described below. Items in Embodiment 58 that are not particularly described are the same as in Embodiment 54 to Embodiment 57, and functions and structures that are the same as in Embodiment 54 to Embodiment 57 are given the same reference characters in the following description.

The indoor unit 100 according to Embodiment 57 has the filters 10 placed on both of the upstream side and the downstream side of the fan 20. Accordingly, when the thickness of the indoor unit 100 (a width in a front/rear direction) is configured to be thin, the front area of the filter 10 is decreased, and the pressure loss may possibly be increased.

In this case, as shown in Embodiment 55 and Embodiment 56, it is desirable to place the filter 10 only on the downstream side of the fan 20 and collect dust attached to the fan 20 as follows.

For example, dust attached to the fan 20 may be caused to fall down by rotating the fan 20 in reverse or changing the operating point of the fan 20 to cause surging of the fan 20, and this fallen dust may be collected by the filter 10 placed on the downstream side of the fan 20. For example, the air outlet 3 of the indoor unit 100 is totally closed by the up/down vane 70 or the left/right vane 80, thereby increasing the pressure on the fan 20. This can cause surging of the fan 20.

In such a structure, only one filter 10 on the downstream side of the fan 20 can be sufficient. Accordingly, even if the size of the indoor unit 100 is decreased and the thickness of the indoor unit 100 is made thin, a significant increase in pressure loss can be avoided.

Embodiment 59

Air direction control vane

When the indoor unit 100 is provided with a human detection sensor that detects the position of a person who is present indoors, it is desirable to individually control the up/down vane 70 and the left/right vane 80 together with the air volume of each fan 20 based on the detection results. This can further improve air flow controllability of the indoor unit 100. Functions and structures in Embodiment 59 that are the same as in Embodiment 1 to Embodiment 58 are given the same reference characters in the following description.

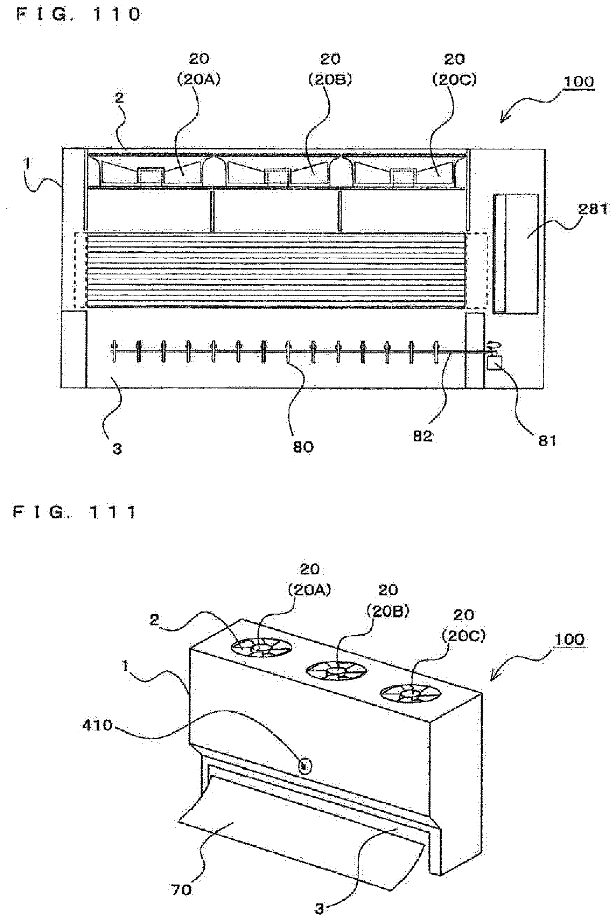

FIG. 110 is a sectional front view showing an indoor unit according to Embodiment 59 of the present invention. FIG. 111 is a perspective view showing the indoor unit. FIG. 110 is a sectional front view obtained by cutting a substantially center part of the fans 20. The indoor unit 100 shown in FIGs. 110 and 111 is the indoor unit 100 including three fans 20 (a fan 20A to a fan 20C).

The left/right vane 80 is coupled via the link bar 82 to a motor 81 such as a stepping motor. With the motor 81 being driven according to the number of instruction steps from the controller 281, the orientation (the angle) of the left/right vane 80 is changed, and the orientation of the air flow blown from the air outlet 3 can be controlled in the left/right direction. The up/down vane 70 is coupled to a motor (not shown) such as a stepping motor. With this motor being driven according to the number of instruction steps from the controller 281, the orientation (the angle) of the up/down vane 70 is changed, and the orientation of the air flow blown from the air outlet 3 can be controlled in the up/down direction.

The indoor unit 100 according to Embodiment 59 is provided with a human detection sensor that detects the position of a person who is present indoors. As the human detection sensor, various sensors can be used, such as a human detection sensor using a camera. In Embodiment 59, an infrared sensor 410 is used as a human detection sensor. The infrared sensor 410 detects the temperature in an indoor target range for temperature detection while scanning the target range for temperature detection, thereby sensing the presence of a person, a heating device, or others.

This infrared sensor 410 is provided on a bottom portion of the front surface of the casing 1 and a top portion of the air outlet 3. The infrared sensor 410 is rotatable in a left/right direction, and is mounted to be oriented downward at a depression angle of approximately 24.5°. The depression angle is an angle formed by the center axis of the infrared sensor 410 and the horizontal line. In other words, the infrared sensor 410 is mounted to be oriented downward at an angle of approximately 24.5° with respect to the horizontal line.

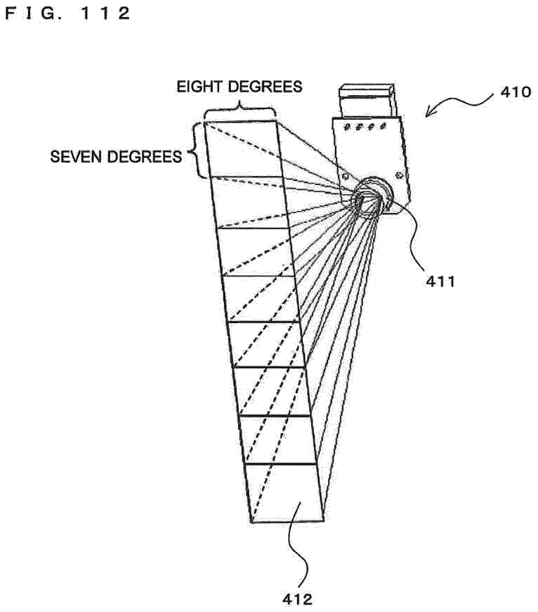

FIG. 112 is a diagram describing a light distribution viewing angle of each light-receiving element of an infrared sensor according to Embodiment 59 of the present invention.

As shown in FIG. 112, the infrared sensor 410 has eight light-receiving elements (not shown) inside a metal can 411 arranged in a line in a vertical direction. The metal can 411 has an upper surface provided with a lens-made window (not shown) for letting infrared light pass through the eight light-receiving elements. A light distribution viewing angle 412 of each light-receiving element has seven degrees (7°) in a vertical direction and eight degrees (8°) in a horizontal direction.

While the light distribution viewing angle 412 of each light-receiving element with seven degrees (7°) in the vertical direction and eight degrees (8°) in the horizontal direction is used in Embodiment 59, the light distribution viewing angle 412 is not restricted to these values (seven degrees (7°) in the vertical direction and eight degrees (8°) in the horizontal direction). It is sufficient that the number of light-receiving elements is changed according to the light distribution viewing angle 412 of each light-receiving element. For example, it is sufficient that the product of the vertical light distribution viewing angle of one light-receiving element and the number of light-receiving elements is constant.

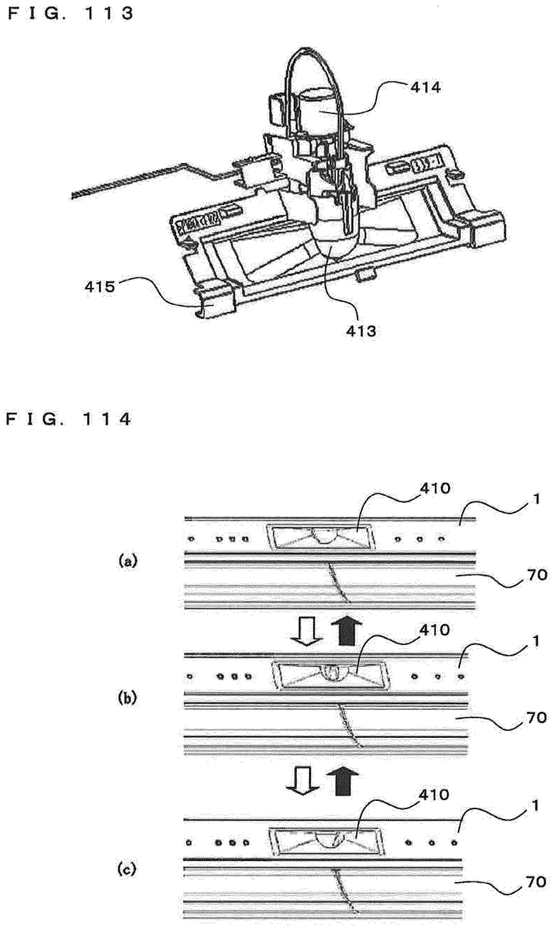

FIG. 113 is a perspective view showing a cabinet for accommodating the infrared sensor according to Embodiment 59 of the present invention. FIG. 113 is a perspective view of a portion near the infrared sensor 410, viewed from the back side (from the inside of the casing 1).

As shown in FIG. 113, the infrared sensor 410 is accommodated in a cabinet 413. On an upper portion of the cabinet 413, a motor 414 that drives the infrared sensor 410 (more specifically, rotates the infrared sensor 410 in a left/right direction) is provided. The motor 414 is a stepping motor, for example. A mounting part 415 integrally formed with the cabinet 413 is fixed to a bottom portion of the front surface of the casing 1, thereby mounting the infrared sensor 410 on the casing 1. In the state where the infrared sensor 410 is mounted on the casing 1, the motor 414 and the cabinet 413 are substantially vertical. Inside the cabinet 413, the infrared sensor 410 is mounted to be oriented downward at a depression angle of approximately 24.5°.

The infrared sensor 410 is driven and rotated by the motor 414 in a predetermined angle range in a left/right direction (this rotation driving is referred to below as moving). Specifically, states are as shown in FIG. 114.

FIG. 114 is a diagram describing a moving state of the infrared sensor according to Embodiment 59 of the present invention. FIG. 114(a) is a perspective view showing the state in which the infrared sensor is moved to a left side end (a right side end when the interior is viewed from the indoor unit 100). FIG. 114(b) is a perspective view showing the state in which the infrared sensor is moved to a middle portion. FIG. 114(c) is a perspective view showing the state in which the infrared sensor is moved to a right side end (a left side end when the interior is viewed from the indoor unit 100).

The infrared sensor 410 moves from the left side end (a) via the middle portion (b) to the right side end (c) and, upon reaching the right side end (c), moves in reverse. By repeating this operation, the infrared sensor 410 detects the temperature of a target for temperature detection while horizontally scanning the indoor target range for temperature detection.

A method of obtaining thermal imagery data of a wall, a floor, or others in the room by the infrared sensor 410 will be described. The infrared sensor 410 and others are controlled by a controller 281 (for example, a microcomputer) programmed with a predetermined operation. In the following, a description in which each control is performed by the controller 281 is omitted.

When thermal imagery data of a wall, a floor, or others in the room is obtained, the infrared sensor 410 is moved by the motor 414 in a left/right direction, and is stopped at each position for every moving angle of the motor 414 (a rotation driving angle of the infrared sensor 410) of 1.6° for a predetermined time (0.1 to 0.2 seconds).

When the infrared sensor 410 is stopped at each position, the operation waits for the predetermined time (shorter than 0.1 to 0.2 seconds), capturing the detection results (thermal imagery data) from the eight light-receiving elements of the infrared sensor 410. After the end of capturing the detection results of the infrared sensor 410, the motor 414 is again driven (at a moving angle of 1.6°) and then stopped, and the detection results (thermal imagery data) from the eight light-receiving elements of the infrared sensor 410 are captured.

The operation described above is repeatedly performed, and thermal imagery data in the detection area is computed based on the detection results from the infrared sensor 410 at 94 points in a left/right direction. Since the infrared sensor 410 is stopped at 94 points for every moving angle of the motor 414 of 1.6° for capturing the thermal imagery data, the moving range of the infrared sensor 410 in the left/right direction (the angle range for rotation driving in the left/right direction) is approximately 150.4°.

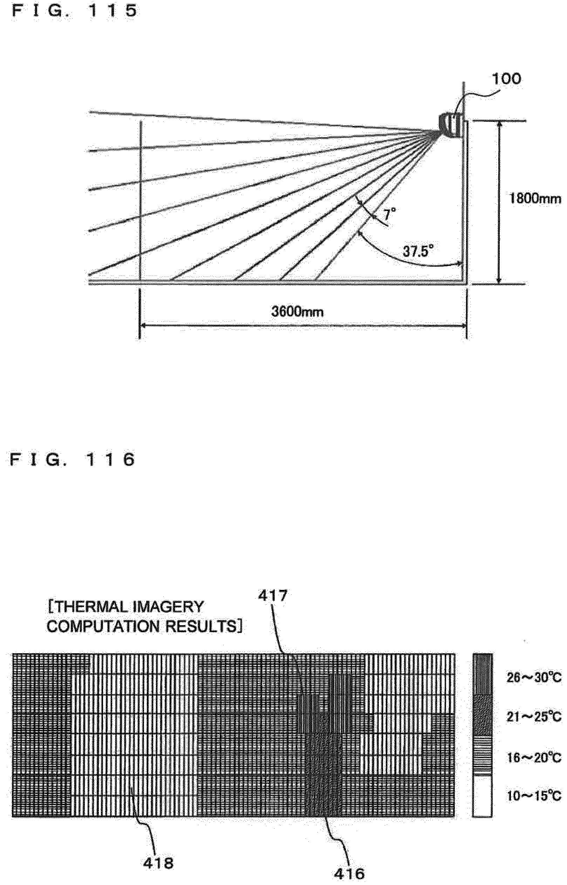

FIG. 115 is a diagram describing a vertical light distribution viewing angle of a vertical section of the infrared sensor according to Embodiment 59 of the present invention. FIG. 115 shows a vertical light distribution viewing angle in a vertical section of the infrared sensor 410 where eight light-receiving elements are vertically arranged in a line with the indoor unit 100 set at a height of 1800 mm from the floor surface of the room. An angle of seven degrees shown in FIG. 115 is a vertical light distribution viewing angle of one light-receiving element.

An angle of 37.5° in FIG. 115 indicates an area not in a vertical viewing area of the infrared sensor 410 (an angle from the wall where the indoor unit 100 is mounted). This angle is 90° - 4 (the number of light-receiving elements below a horizontal line) x 7° (the vertical light distribution viewing angle of one light-receiving element) = 62° if the depression angle of the infrared sensor 410 is 0°. Since the infrared sensor 410 according to Embodiment 59 has a depression angle of 24.5°, 62° - 24.5° = 37.5° holds.

By using the infrared sensor 410 as described above, for example, thermal imagery data as described below can be obtained.

FIG. 116 is a diagram showing an example of thermal imagery data obtained by the infrared sensor according to Embodiment 59. FIG. 116 shows the results obtained as thermal imagery data by computation based on the detection results obtained while the infrared sensor 410 is being moved in a left/right direction over one scene of life with a housemaker 416 holding a baby 417 in a room corresponding to eight tatami mats (approximately 12.96 m²).

FIG. 116 shows thermal imagery data obtained on a cloudy day in winter. Therefore, a window 418 has low temperatures of 10 °C to 15 °C. By contrast, the housemaker 416 and the baby 417 have the highest temperatures. In particular, the housemaker 416 and the baby 417 have upper-body temperatures of 26 °C to 30 °C. Thus, by moving the infrared sensor 410 in the left/right direction, for example, temperature information of each part in the room can be obtained.

Thus, the indoor unit 100 according to Embodiment 59 controls the air volume of each fan 20, the orientation of the up/down vane 70, and the orientation of the left/right vane 80 based on the temperature information of each part in the room obtained by the infrared sensor 410. More specifically, the controller 281 provided in the indoor unit 100 includes an input section, a CPU, a memory, and an output unit. Furthermore, the CPU incorporates an indoor state determining unit, a target area judging unit, and an area air direction control unit.

The controller 281 sections the indoor floor surface area into a plurality of area sections, and replaces each coordinate point of the thermal imagery data obtained by the infrared sensor 410 with the plurality of these area sections. With this, in which area section in the room a person is present can be grasped with high accuracy.

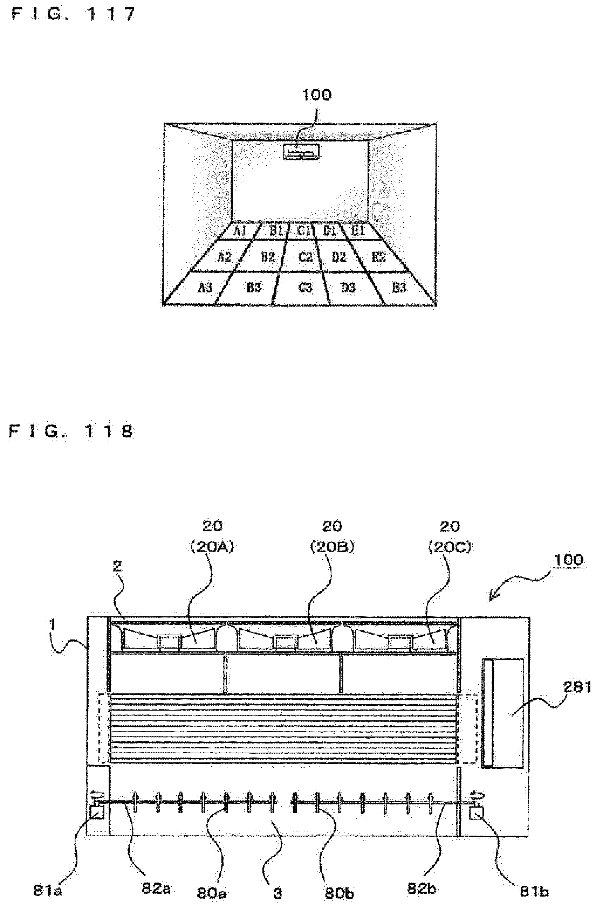

FIG. 117 is a diagram showing an example when the indoor unit according to Embodiment 59 sections an indoor floor surface area into a plurality of area sections.

For example, the controller 281 of the indoor unit 100 sections the indoor floor surface area into 15 area sections A1 to E3. The controller 281 then controls the orientation of the up/down vane 70 and the orientation of the left/right vane 80 based on heat source data obtained from the infrared sensor 410. The controller 281 also controls the air volume of each fan 20 based on the heat source data obtained from the infrared sensor 410.

For example, when the air flow blown out from the air outlet 3 is required to be brought to a place far away, the rotation speeds of all fans 20 are increased (the air volumes of all fans 20 are increased) to increase the air volume blown out from the air outlet 3. In addition, for example, when the air flow blown out from the air outlet 3 is brought to a place very close to the indoor unit 100, the rotation speeds of all fans 20 are decreased (the air volumes of all fans 20 are decreased) to decrease the air volume blown out from the air outlet 3.

In addition, for example, there may be the case in which an area section where a person is present is desired to be air-conditioned in a concentrated manner even if the indoor temperature becomes close to a set temperature. In this case, the air volume (that is, the rotation speed) of the fan 20 generating an air flow reaching the place desired to be air-conditioned in a concentrated manner (an area section where a person is present) is increased.

The remaining fans 20 may be operated at low speed or may be stopped. By controlling the air volume of each fan 20 in this manner, the air flow can be brought in a concentrated manner to the area section where a person is present, although the air volume is small as the air flow blown out from the air outlet 3 of the indoor unit 100 as a whole. This can more stabilize the temperature environment of the area section where a person is present, achieving comfortable, energy-saving operation of the indoor unit 100.

In addition, for example, there may be the case in which a person who desires to avoid the air flow blown out from the air outlet 3 of the indoor unit 100 is present. In this manner, when there is a place where the air flow blown out from the air outlet 3 of the indoor unit 100 is desired to be avoided, the air volume (that is, the rotation speed) of the fan 20 generating the air flow reaching the place where the air flow blown out from the air outlet 3 is desired to be avoided is decreased.

In this manner, by controlling the air volume of each fan 20, it is possible to perform indoor air conditioning while suppressing the air flow blown out from the air outlet 3 to reach the place. This can achieve comfortable, energy-saving operation of the indoor unit 100 while stabilizing the environment of the place where the air flow blown out from the air outlet 3 of the indoor unit 100 is desired to be avoided.

When the air volumes of the respective fans 20 are individually controlled as described above, as the fan 20 generating the air flow reaching "the place desired to be air-conditioned in a concentrated manner" and "the place where the air flow blown out from the air outlet 3 is desired to be avoided", it is desired to set a fan 20 closest to any of these places.

For example, if the area section E3 shown in FIG. 117 corresponds to any of these places, as the fan 20 generating the air flow reaching to the place, it is sufficient to set the fan 20C (refer to FIG. 110) closest to the place. By selecting the fan 20 in this manner, the entire air flow blown out from the air outlet 3 of the indoor unit 100 can be oriented to a substantially middle portion in the room, and more energy-saving operation of the indoor unit 100 can be achieved.

Embodiment 60

Dividing the vane into a plurality of parts

When the air volumes of the up/down vane 70, the left/right vane 80, and each fan 20 are controlled based on the detection results of the infrared sensor 410, it is desirable to divide the up/down vane 70 and the left/right vane 80 into a plurality of parts and individually control these parts. This can further improve comfortability. Items in Embodiment 60 that are not particularly described are the same as in Embodiment 59, and functions and structures that are the same as in Embodiment 59 are given the same reference characters in the following description.

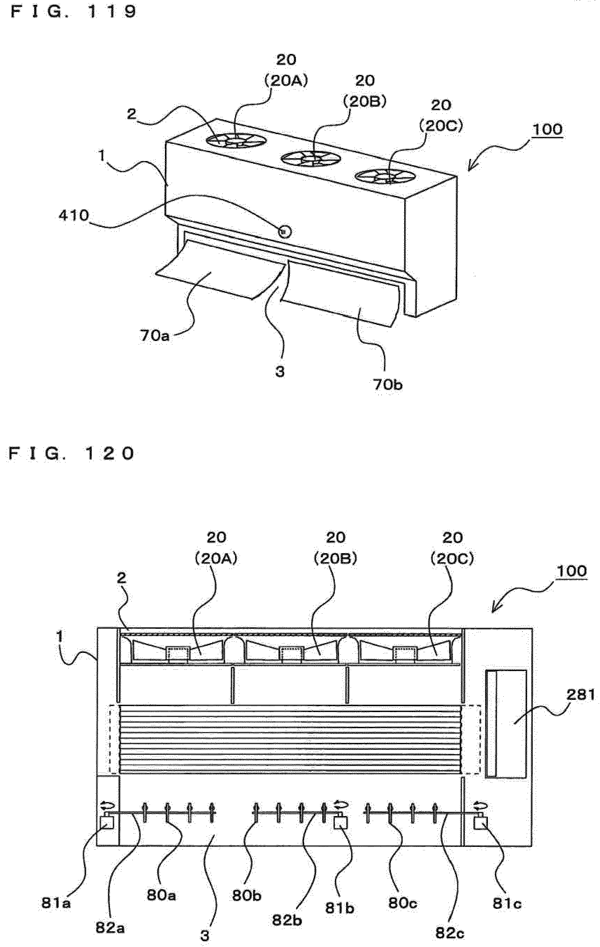

FIG. 118 is a sectional front view showing an indoor unit according to Embodiment 60 of the present invention. FIG. 119 is a perspective view showing this indoor unit. FIG. 118 is a sectional front view obtained by cutting a substantially center part of the fans 20.

In the indoor unit 100 according to Embodiment 60, the up/down vane 70 and the left/right vane 80 are divided into a plurality of parts (in FIGs. 118 and 119, the up/down vane 70 and the left/right vane 80 are each divided into two).

More specifically, the left/right vane 80 is divided into a left/right vane 80a placed on the left side of the casing 1 and a left/right vane 80b placed on the right side of the casing 1. The left/right vane 80a is coupled via a link bar 82a to a motor 81a such as a stepping motor. The left/right vane 80b is coupled via a link bar 82b to a motor 81b such as a stepping motor.

With the motor 81a and the motor 81b being driven according to the number of instruction steps from the controller 281, the orientations (the angles) of the left/right vane 80a and the left/right vane 80b are changed, and the orientation of the air flow blown from the air outlet 3 can be controlled in the left/right direction. The orientations (angles) of the left/right vane 80a and the left/right vane 80b can be individually changed.

The up/down vane 70 is divided into an up/down vane 70a placed on the left side of the casing 1 and an up/down vane 70b placed on the right side of the casing 1. The up/down vane 70a and the up/down vane 70b are each coupled to a motor (not shown) such as a stepping motor. With these motors being driven according to the number of instruction steps from the controller 281, the orientations (the angles) of the up/down vane 70a and the up/down vane 70b are changed, and the orientation of the air flow blown from the air outlet 3 can be controlled in the up/down direction. The orientations (angles) of the up/down vane 70a and the up/down vane 70b can be individually changed.

That is, the indoor unit 100 according to Embodiment 60 can simultaneously send air flows of different air volumes to two different points in the room. Accordingly, when it is desired to send air flows in a concentrated manner to two different points in the room, the air volumes of the air flows to be sent to these places can be increased. When air flows are desired to be avoided, the air volumes of the air flows to be sent to these places can be decreased. Therefore, it is possible to perform indoor air conditioning while keeping the environments in two different places stable simultaneously.

For example, it is assumed that two persons are present in two area sections that are spaced apart from each other in the room. When these two area sections are desired to be air-conditioned in a concentrated manner, the air volumes (that is, the rotation speeds) of the fans 20 generating air flows reaching these two area sections are increased. The remaining fans 20 are each set to be in an operation or stop state with a low air volume.

By controlling the air volume of each fan 20 in this manner, the air flow can be brought in a concentrated manner to the area section where a person is present although the air volume is small as the air flow blown out from the air outlet 3 of the indoor unit 100 as a whole. This can more stabilize the temperature environment of the area section where a person is present, and can achieve comfortable, energy-saving operation of the indoor unit 100.

For example, it is assumed that two persons are present in two area sections that are spaced apart from each other in the room and the temperature in one area section has reached a set temperature and the remaining one area section has not reached the set temperature. In this case, the air volume (that is, the rotation speed) of the fan 20 generating an air flow reaching a place desired to be air-conditioned in a concentrated manner (an area section that has not reached the set temperature) is increased.

It is also assumed that the air volume (that is, the rotation speed) of the fan 20 generating the air flow reaching the area section that has reached the set temperature is a low air volume. The remaining fans 20 are assumed to be each set to be in an operation or stop state with a low air volume. By controlling the air volume of each fan 20 in this manner, the air flow can be sent in a concentrated manner to the place desired to be air-conditioned in a concentrated manner (the area section that has not reached the set temperature), and a small air volume of the air flow can also be sent to the area section that has reached the set temperature.

That is, the indoor unit 100 according to Embodiment 60 where the up/down vane 70 and the left/right vane 80 are divided can achieve comfortable, energy-saving operation more than the indoor unit 100 according to Embodiment 59.

Embodiment 61

Dividing the vane into parts as many as the fans

By increasing the number of divisions of the up/down vane 70 and the left/right vane 80, comfortability can further be improved. Also, by setting the number of divisions of the up/down vane 70 and the left/right vane 80 as many as the number of fans 20, comfortability can further be improved. Items in Embodiment 61 that are not particularly described are the same as in Embodiment 59 or Embodiment 60, and functions and structures that are the same as in Embodiment 59 or Embodiment 60 are given the same reference characters in the following description.

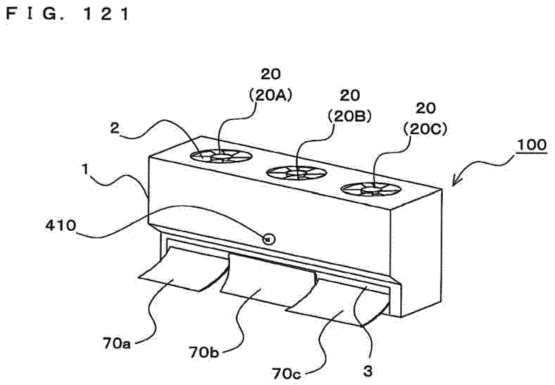

FIG. 120 is a sectional front view showing an indoor unit according to Embodiment 61 of the present invention. FIG. 121 is a perspective view showing this indoor unit. FIG. 120 is a sectional front view obtained by cutting a substantially center part of the fans 20. The indoor unit 100 shown in FIGs. 120 and 121 represents the indoor unit 100 including three fans 20 (fan 20A to fan 20C).

In the indoor unit 100 according to Embodiment 61, the up/down vane 70 and the left/right vane 80 are each divided as many as the number of fans 20. Since the indoor unit 100 according to Embodiment 61 is provided with three fans 20 (the fan 20A to the fan 20C), the up/down vane 70 and the left/right vane 80 are also each divided into three.

More specifically, the left/right vane 80 is divided into a left/right vane 80a placed on the left side of the casing 1, a left/right vane 80b placed in the middle portion of the casing 1, and a left/right vane 80c placed on the right side of the casing 1. The left/right vane 80a is coupled via a link bar 82a to a motor 81a such as a stepping motor. The left/right vane 80b is coupled via a link bar 82b to a motor 81b such as a stepping motor. The left/right vane 80c is coupled via a link bar 82c to a motor 81c such as a stepping motor.

With the motor 81a to the motor 81c being each driven according to the number of instruction steps from the controller 281, the orientations (the angles) of the left/right vane 80a to the left/right vane 80c are changed, and the orientation of the air flow blown from the air outlet 3 can be controlled in the left/right direction. The orientations (angles) of the left/right vane 80a to the left/right vane 80c can be individually changed.

The up/down vane 70 is divided into an up/down vane 70a placed on the left side of the casing 1, an up/down vane 70 placed in the middle portion of the casing 1, and an up/down vane 70c placed on the right side of the casing 1. The up/down vane 70a to the up/down vane 70c are each coupled to a motor (not shown) such as a stepping motor. With these motors being driven according to the number of instruction steps from the controller 281, the orientations (the angles) of the up/down vane 70a to the up/down vane 70c are changed, and the orientation of the air flow blown from the air outlet 3 can be controlled in the up/down direction. The orientations (angles) of the up/down vane 70a to the up/down vane 70c can be individually changed.

That is, the indoor unit 100 according to Embodiment 61 can simultaneously send air flows of different air volumes to different three points in the room. Accordingly, when it is desired to send air flows in a concentrated manner to three different points in the room, the air volumes of the air flows to be sent to these places can be increased. When air flows are desired to be avoided, the air volumes of the air flows to be sent to these places can be decreased. Therefore, it is possible to perform indoor air conditioning while keeping the environments in three different places stable simultaneously.

For example, it is assumed that three persons are present in three area sections that are spaced apart from one another in the room and the temperature in one area section has reached a set temperature and the remaining two area sections have not reached the set temperature. In this case, the air volumes (that is, the rotation speeds) of the fans 20 generating air flows reaching places desired to be air-conditioned in a concentrated manner (the two area sections that have not reached the set temperature) are each increased. It is also assumed that the air volume (that is, the rotation speed) of the fan 20 generating the air flow reaching the area section that has reached the set temperature is a low air volume.

By controlling the air volume of each fan 20 in this manner, the air flows can be sent in a concentrated manner to the places desired to be air-conditioned in a concentrated manner (the two area sections that have not reached the set temperature), and a small air volume of the air flow can also be sent to the area section that has reached the set temperature. With this, while the places desired to be air-conditioned in a concentrated manner (the two area sections that have not reached the set temperature) are being actively air-conditioned, the temperature environment of the area section that has reached the set temperature can also be stabilized.

That is, the indoor unit 100 according to Embodiment 61 in which the number of divisions of the up/down vane 70 and the left/right vane 80 is larger than that of Embodiment 60 can achieve comfortable, energy-saving operation more than the indoor unit 100 according to Embodiment 60.

In addition, since the number of divisions of the up/down vane 70 and the left/right vane 80 is set as many as the number of fans 20 in Embodiment 61, comfortability is further improved. That is, as shown in FIGs. 120 and 121, the orientation of the air flow generated by the fan 20A is controlled by the up/down vane 70a and the left/right vane 80a. The orientation of the air flow generated by the fan 20B is controlled by the up/down vane 70b and the left/right vane 80b.

The orientation of the air flow generated by the fan 20C is controlled by the up/down vane 70c and the left/right vane 80c. Accordingly, air flows to be controlled by each of the up/down vane 70 and the left/right vane 80 are not air flows generated by the plurality of fans 20, but an air flow generated by one fan 20.

Therefore, the air volume of the air flow to be sent to a place where the air volume is desired to be controlled in a concentrated manner can be adjusted with high accuracy, and more comfortable, energy-saving operation can be achieved than in the indoor unit 100 in which the number of divisions of the up/down vane 70 and the left/right vane 80 and the number of fans 20 are different (for example, the indoor unit 100 according to Embodiment 59 or Embodiment 60).

Embodiment 62

Auxiliary up/down vane

The indoor unit 100 according to Embodiment 1 controls the air flow passing through the heat exchanger 50 in the up/down direction by using only the up/down vane 70. By providing an auxiliary up/down vane as described below on an upstream side of the up/down vane 70, the air flow controllability of the indoor unit 100 can be improved. Functions and structures in Embodiment 62 that are the same as in Embodiment 1 to Embodiment 61 are given the same reference characters in the following description.

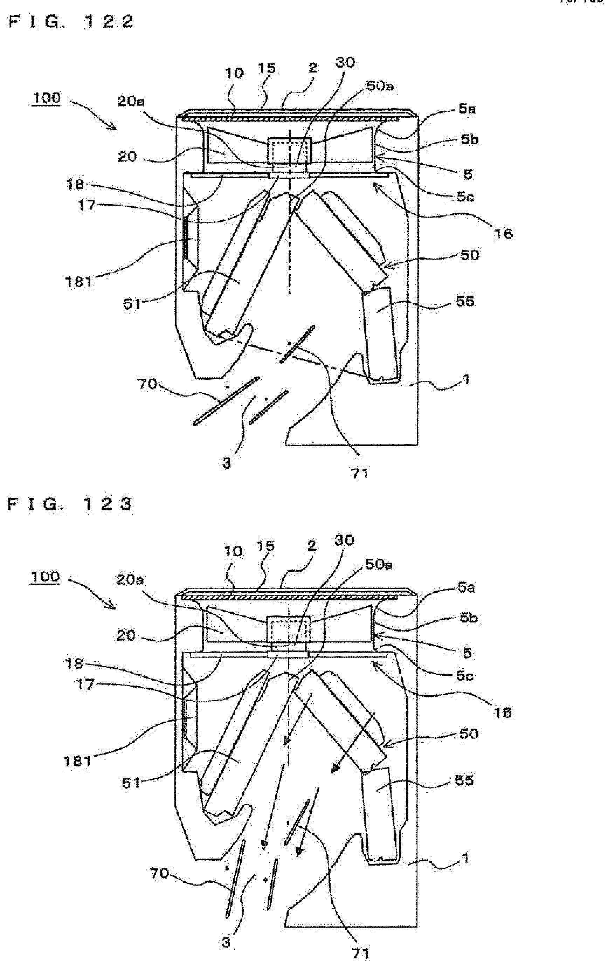

FIG. 122 is a vertical sectional view showing an indoor unit according to Embodiment 62 of the present invention.

In the indoor unit 100 according to Embodiment 62, an auxiliary up/down vane 71 is provided between the heat exchanger 50 and the up/down vane 70 (that is, on an upstream side of the up/down vane 70).

In the conventional indoor unit, the heat exchanger is provided so as to cover the upstream side of the fan (such as a cross-flow fan). By contrast, in the indoor unit 100 according to Embodiment 62, the fan 20 is provided on the upstream side of the heat exchanger 50. Accordingly, in the indoor unit 100 according to Embodiment 62, the auxiliary up/down vane 71 can be provided in the area occupied by the fan in the conventional indoor unit.

Therefore, the auxiliary up/down vane 71 can be provided so that an end on the upstream side of the auxiliary up/down vane 71 is positioned above a virtual straight line (a two-dot chain line shown in FIG. 122) connecting both lower ends of the heat exchanger 50 on a right side vertical section. Even if a distance for bending the air flow is insufficient only with the up/down vane 70 in the conventional indoor unit and desired air flow controllability cannot be obtained, the auxiliary up/down vane 71 can be provided on the upstream side of the up/down vane 70 in the indoor unit 100 according to Embodiment 62, thereby improving air flow controllability.

The indoor unit 100 as described above controls the direction of the air flow passing through the heat exchanger 50 in a manner as described below.

FIG. 123 is a diagram (a vertical sectional view) describing an air flow control operation of the indoor unit according to Embodiment 62 of the present invention.

For example, such as in heating operation, when the air flow passing through the heat exchanger 50 is desired to be bent downward, it is sufficient that the up/down vane 70 and the auxiliary up/down vane 71 are controlled so that the state is changed from the state shown in FIG. 122 to the state shown in FIG. 123. That is, it is sufficient that the up/down vane 70 and the auxiliary up/down vane 71 are controlled to be oriented downward by rotating the up/down vane 70 and the auxiliary up/down vane 71 in a counterclockwise direction on a right side vertical section.

It is desirable that the auxiliary up/down vane 71 is controlled so as to be oriented upward more than the up/down vane 70. By setting different angles to the up/down vane 70 and the auxiliary up/down vane 71 in this manner, the air flow passing through the heat exchanger 50 can be smoothly bent, thereby further improving air flow controllability.

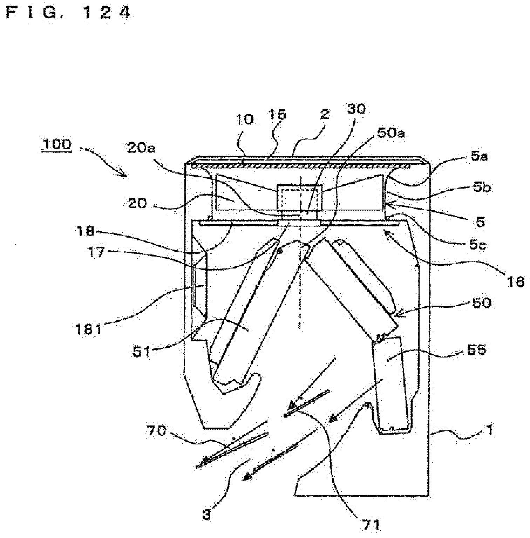

FIG. 124 is a diagram (a vertical sectional view) describing an air flow control operation of the indoor unit according to Embodiment 62 of the present invention.

For example, such as in cooling operation, when the air flow passing through the heat exchanger 50 is desired to be bent upward, it is sufficient that the up/down vane 70 and the auxiliary up/down vane 71 are controlled so that the state is changed from the state shown in FIG. 122 to the state shown in FIG. 124. That is, it is sufficient that the up/down vane 70 and the auxiliary up/down vane 71 are controlled to be oriented upward by rotating the up/down vane 70 and the auxiliary up/down vane 71 in a clockwise direction on a right side vertical section.

It is desirable that the auxiliary up/down vane 71 is controlled so as to be oriented downward more than the up/down vane 70. By setting different angles to the up/down vane 70 and the auxiliary up/down vane 71 in this manner, the air flow passing through the heat exchanger 50 can be smoothly bent, thereby further improving air flow controllability.

In the indoor unit 100 described above, since the auxiliary up/down vane 71 is provided on the upstream side of the up/down vane 70, in both heating operation and cooling operation, a sufficient distance can be taken for bending the air flow passing through the heat exchanger 50. Accordingly, air flow controllability of the indoor unit 100 is improved.

Embodiment 63

A plurality of auxiliary up/down vanes 71 may be placed. Items in Embodiment 63 that are not particularly described are the same as in Embodiment 62, and functions and structures that are the same as in Embodiment 62 are given the same reference characters in the following description.

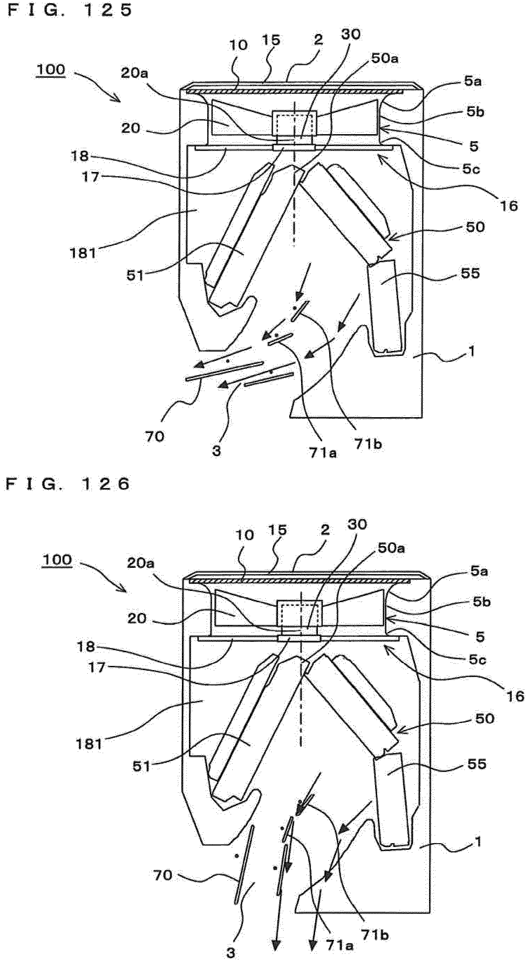

FIGs. 125 and 126 are vertical sectional views each showing an indoor unit according to Embodiment 63 of the present invention.

In the indoor unit 100 according to Embodiment 63, two auxiliary up/down vanes (an auxiliary up/down vane 71a and an auxiliary up/down vane 71b) are provided between the heat exchanger 50 and the up/down vane 70 (that is, on the upstream side of the up/down vane 70). More specifically, the auxiliary up/down vane 71a is provided on the upstream side of the up/down vane 70. Furthermore, the auxiliary up/down vane 71b is provided on the upstream side of this auxiliary up/down vane 71a. Three or more auxiliary up/down vanes 71 may be provided, of course.

The indoor unit 100 described above controls the direction of the air flow passing through the heat exchanger 50 in a manner as described below.

For example, as in cooling operation, when the air flow passing through the heat exchanger 50 is desired to be bent upward, it is sufficient that the up/down vane 70, the auxiliary up/down vane 71a, and the auxiliary up/down vane 71b are controlled so that the state becomes the state shown in FIG. 125. It is desirable that the auxiliary up/down vane 71a is controlled so as to be oriented downward more than the up/down vane 70.

Also, it is desirable that the auxiliary up/down vane 71b is controlled so as to be oriented downward more than the auxiliary up/down vane 71a. By setting different angles to the up/down vane 70, the auxiliary up/down vane 71a, and the auxiliary up/down vane 71b, the air flow passing through the heat exchanger 50 can be bent more smoothly than Embodiment 62.

For example, as in heating operation, when the air flow passing through the heat exchanger 50 is desired to be bent downward, it is sufficient that the up/down vane 70, the auxiliary up/down vane 71a, and the auxiliary up/down vane 71b are controlled so that the state becomes the state shown in FIG. 126. It is desirable that the auxiliary up/down vane 71a is controlled so as to be oriented upward more than the up/down vane 70.

Also, it is desirable that the auxiliary up/down vane 71b is controlled so as to be oriented upward more than the auxiliary up/down vane 71a. By setting different angles to the up/down vane 70, the auxiliary up/down vane 71a, and the auxiliary up/down vane 71b, the air flow passing through the heat exchanger 50 can be bent more smoothly than Embodiment 62.

Since the indoor unit 100 according to Embodiment 63 is provided with the plurality of auxiliary up/down vanes 71 on the upstream side of the up/down vane 70, the air flow passing through the heat exchanger 50 can be bent more smoothly than the indoor unit 100 according to Embodiment 62. Accordingly, the indoor unit 100 according to Embodiment 63 can improve air flow controllability more than the indoor unit 100 according to Embodiment 62.

Embodiment 64

The position of a rotation shaft of the up/down vane 70 or the auxiliary up/down vane 71 may be movable.

Items in Embodiment 64 that are not particularly described are the same as in Embodiment 62 or Embodiment 63, and functions and structures that are the same as in Embodiment 62 or Embodiment 63 are given the same reference characters in the following description.

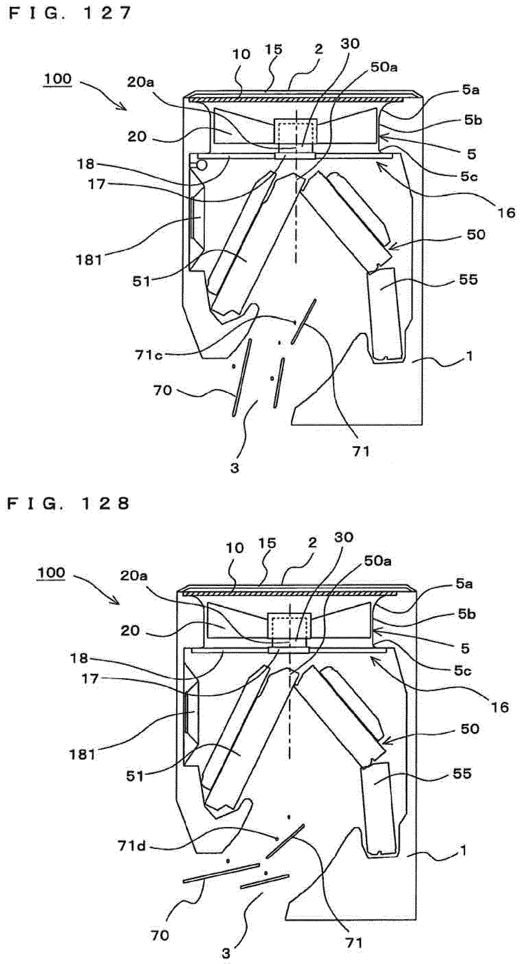

FIGs. 127 and 128 are vertical sectional views each showing an indoor unit according to Embodiment 64 of the present invention.

In the indoor unit 100 according to Embodiment 64, the position of the rotation shaft of the auxiliary up/down vane 71 in heating operation and the position of the rotation shaft of the auxiliary up/down vane 71 in cooling operation are varied.

That is, when the air flow passing through the heat exchanger 50 is desired to be bent downward, as shown in FIG. 127, the rotation shaft of the auxiliary up/down vane 71 is moved to a rotation shaft position 71c. Then, the auxiliary up/down vane 71 rotates with this rotation shaft position 71c being taken as a center.

When the air flow passing through the heat exchanger 50 is desired to be bent upward, as shown in FIG. 128, the rotation shaft of the auxiliary up/down vane 71 is moved to a rotation shaft position 71d. Then, the auxiliary up/down vane 71 rotates with this rotation shaft position 71d being taken as a center.

The position of the rotation shaft of the auxiliary up/down vane 71 is not restricted to the two points described above (the rotation shaft position 71c and the rotation shaft position 71d). It is sufficient that the rotation shaft position of the auxiliary up/down vane 71 is moved between the two points described above according to the angles of the up/down vane 70 and the auxiliary up/down vane 71.

When the position of the rotation shaft of the auxiliary up/down vane 71 is movable as described above, it is sufficient that, for example, the following moving mechanism is provided.

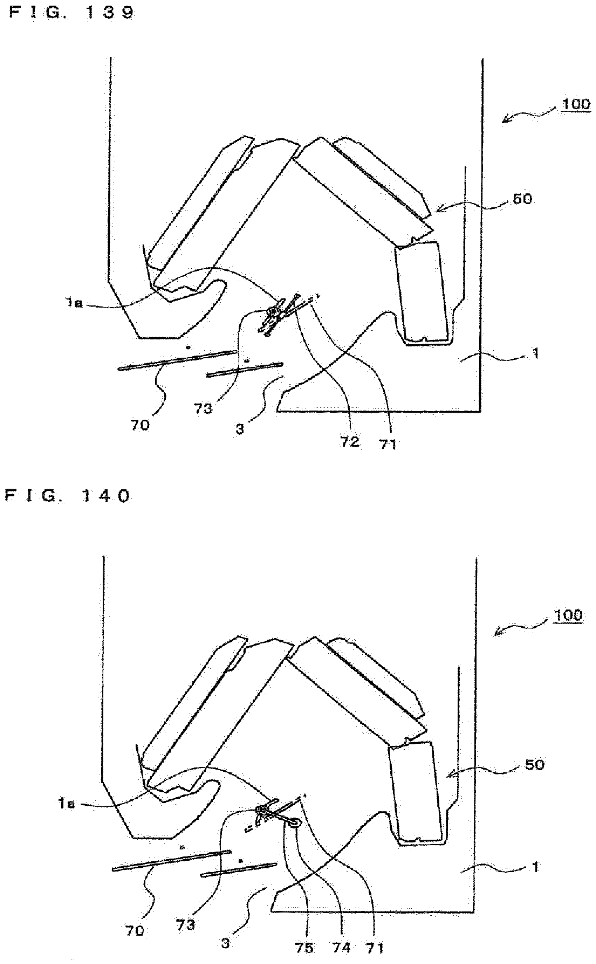

FIG. 139 is an enlarged view of the main part showing an example of a moving mechanism for moving the position of the rotation shaft of the auxiliary up/down vane 71 according to Embodiment 64 of the present invention.

The moving mechanism shown in FIG. 139 includes a linear actuator 72 and a motor 73, for example, such as a stepping motor. The rotation shaft of the auxiliary up/down vane 71 is mounted on the motor 73. More specifically, the rotation shaft of the auxiliary up/down vane 71 is inserted in a slit 1a formed to be open on a side surface part of the casing 1 to be mounted on the motor 73. Also, the motor 73 is mounted on a movable part of the linear actuator 72.

With the movable part of the linear actuator 72 moving along a longitudinal direction of the slit 1a, the position of the rotation shaft of the auxiliary up/down vane 71 also moves. In addition, by rotating the motor 73, the auxiliary up/down vane 71 rotates about the rotation shaft.

In addition, when the position of the rotation shaft of the auxiliary up/down vane 71 is movable, the following moving mechanism may be provided, for example.

FIG. 140 is an enlarged view of the main part showing another example of the moving mechanism for moving the position of the rotation shaft of the auxiliary up/down vane 71 according to Embodiment 64 of the present invention.

The moving mechanism shown in FIG. 140 includes a motor 74, for example, such as a stepping motor; a motor 73, for example, such as a stepping motor; and an arm 75 connecting the motor 73 and the motor 74 together. The rotation shaft of the auxiliary up/down vane 71 is mounted on the motor 73. More specifically, the rotation shaft of the auxiliary up/down vane 71 is inserted in a slit 1a formed to be open on a side surface part of the casing 1 to be mounted on the motor 73. Also, the motor 73 is mounted on the motor 74 via the arm 75.

With the rotation of the motor 74, the motor 73 moves along the slit 1a. With this, the position of the rotation shaft of the auxiliary up/down vane 71 also moves along the slit 1a. In addition, by rotating the motor 73, the auxiliary up/down vane 71 rotates about the rotation shaft.

In the indoor unit 100 as described above, the position of the rotation shaft of the auxiliary up/down vane 71 can be adjusted according to the direction of the air flow. Therefore, irrespectively of the angles of the up/down vane 70 and the auxiliary up/down vane 71, an end on the upstream side of the up/down vane 70 and an end on the downstream side of the auxiliary up/down vane 71 can be brought close to each other. Accordingly, the air flow can be prevented from getting away from the auxiliary up/down vane 71. Therefore, while a decrease in power efficiency of the indoor unit 100 is being suppressed, the air flow can be smoothly bent.

The effects shown in Embodiment 64 can be obtained even if the position of the rotation shaft of the up/down vane 70 is movable. Both of the position of the rotation shaft of the up/down vane 70 and the position of the rotation shaft of the auxiliary up/down vane 71 may be movable, of course.

Embodiment 65

By providing the auxiliary up/down vane 71, the air flow can be controlled from a portion closer to the heat exchanger than ever. Accordingly, by independently providing a heat exchange operation to the front side heat exchanger 51 and the back side heat exchanger 55, air flow controllability can further be improved. Items in Embodiment 65 that are not particularly described are the same as in Embodiment 62 to Embodiment 64, and functions and structures that are the same as in Embodiment 62 to Embodiment 64 are given the same reference characters in the following description.

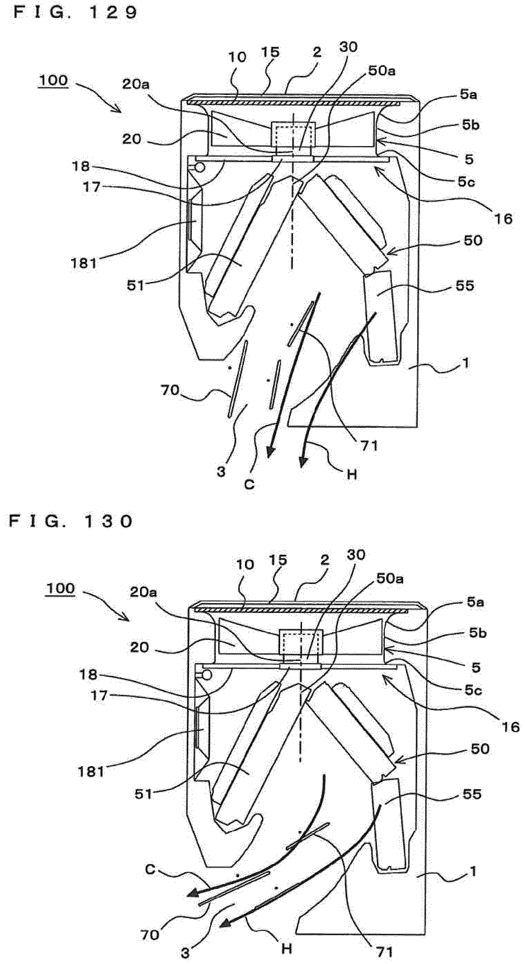

FIGs. 129 and 130 are vertical sectional views each showing an indoor unit according to Embodiment 65 of the present invention.

As shown in FIG. 129, in heating operation, cold air (an arrow C) is generated at the front side heat exchanger 51, and warm air (an arrow H) is generated at the back side heat exchanger 55. With this structure, flying of warm air can be suppressed by cold air, thereby improving air flow controllability.

As shown in FIG. 130, in cooling operation, cold air is generated at the front side heat exchanger 51, and warm air is generated at the back side heat exchanger 55. With this structure, dropping of cold air can be suppressed by warm air, thereby improving air flow controllability.

To independently provide a heat exchange operation to the front side heat exchanger 51 and the back side heat exchanger 55 as described above, it is sufficient that the refrigerant circuit of the air-conditioning apparatus including the indoor unit 100 according to Embodiment 65 is as described below.

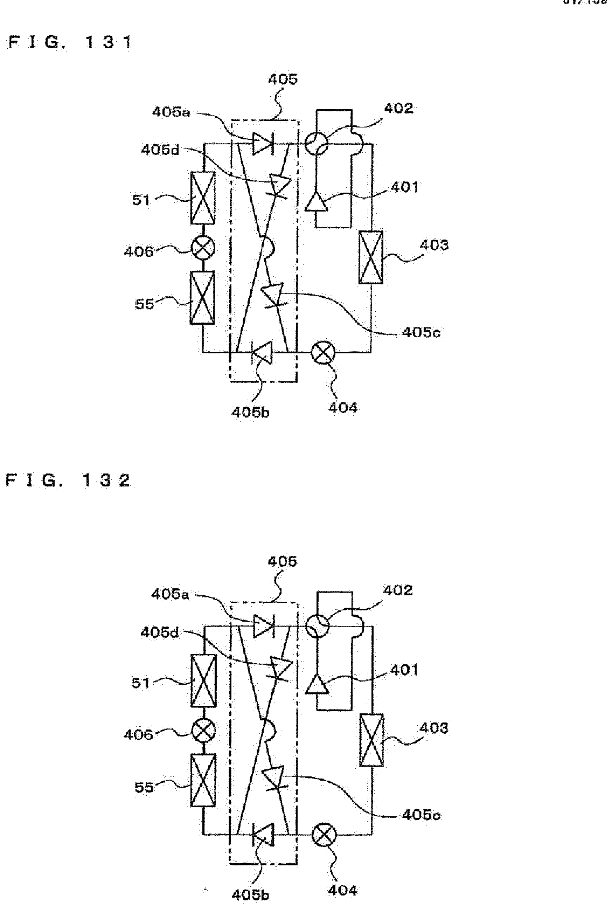

FIG. 131 is a refrigerant circuit diagram showing the air-conditioning apparatus including the indoor unit according to Embodiment 65 of the present invention.

This refrigerant circuit includes a compressor 401, a four-way valve 402, an outdoor heat exchanger 403, an expansion device 404, a flow switching device 405, the back side heat exchanger 55, an expansion device 406, and the front side heat exchanger 51, which are connected via refrigerant pipes. The flow switching device 405 includes a check valve 405a to a check valve 405d.

The compressor 401 suctions a refrigerant flowing through the refrigerant pipes, and compresses the refrigerant to be in a high-temperature and highpressure state. The four-way valve 402 switches a flow passage of the refrigerant discharged from the compressor 401 between heating operation and cooling operation. The outdoor heat exchanger 403 functions as a condenser or an evaporator, exchanging heat between the refrigerant flowing through the refrigerant pipes and a fluid (such as air, water, refrigerant, or the like) to supply heat energy to the heat exchanger 50 (the front side heat exchanger 51 and the back side heat exchanger 55).

The expansion device 404 and the expansion device 406 reduce the pressure of the refrigerant flowing through the refrigerant pipes for expansion. It is desirable to form each of these expansion device 404 and expansion device 406 by using a capillary, a solenoid valve, or the like, for example. The heat exchanger 50 (the front side heat exchanger 51 and the back side heat exchanger 55) functions as a condenser or an evaporator, exchanging heat between the refrigerant flowing through the refrigerant pipes and the fluid. The flow switching device 405 regulates the direction of a flow of the refrigerant flowing through the refrigerant pipes to one direction.

The operation of the refrigerant circuit as described above will be briefly described.

Cooling operation

In cooling operation, the refrigerant flow passage of the four-way valve 402 is as shown in FIG. 131.

The refrigerant compressed by the compressor 401 to become high in temperature and pressure flows into the outdoor heat exchanger 403. In the outdoor heat exchanger 403, the refrigerant becomes a two-phase gas-liquid refrigerant at low temperature and high pressure. The pressure of this refrigerant is reduced by the expansion device 404, and the refrigerant becomes a two-phase gas-liquid refrigerant at low temperature and low pressure.

Since the flowing direction of the refrigerant flowing out from the expansion device 404 is regulated by the flow switching device 405, the refrigerant flows into the back side heat exchanger 55. Here, the room air is cooled to become cooling air. The refrigerant heat-exchanged by the back side heat exchanger 55 flows into the expansion device 406 for reducing pressure, and then flows into the front side heat exchanger 51.

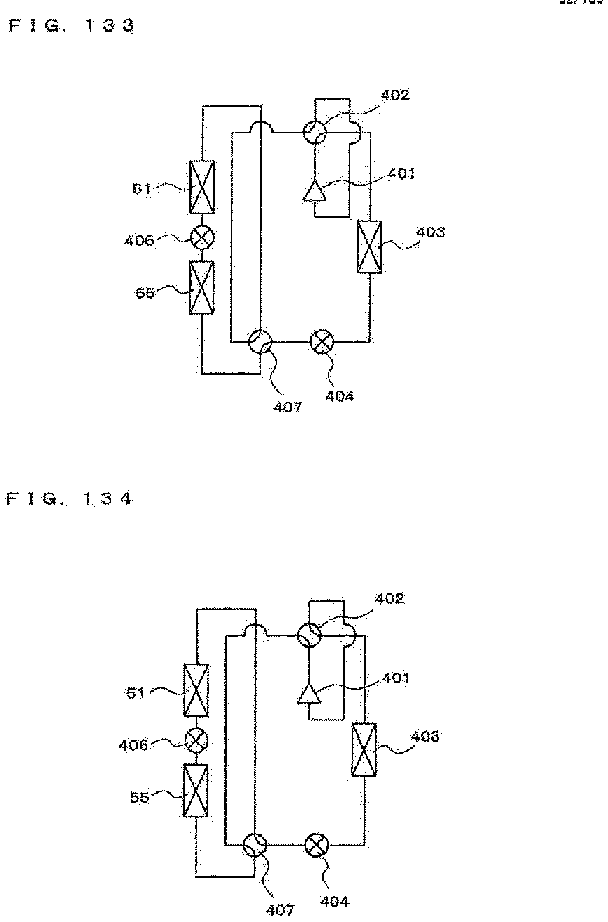

Here, by decreasing the amount of pressure reduction at the expansion device 404 and increasing the amount of pressure reduction at the expansion device 406, air-conditioned air at a temperature higher than that of the front side heat exchanger 51 can be generated in the back side heat exchanger 55. In addition, as shown in FIG. 133, similar effects can be obtained by using the four-way valve 407 in place of the flow switching device 405.

Heating operation

In healing operation, the refrigerant flow passage of the four-way valve 402 is as shown in FIG. 132.

Since the flowing direction of the refrigerant compressed by the compressor to become high in temperature and pressure is regulated by the flow switching device 405, the refrigerant flows into the back side heat exchanger 55. Here, the room air is heated to become heating air. The refrigerant heat-exchanged by the back side heat exchanger 55 flows into the expansion device 406. The pressure of the refrigerant flowing into the expansion device 406 is reduced to become a two-phase gas-liquid refrigerant at low temperature and low pressure, and flows into the front side heat exchanger 51.

At the front side heat exchanger 51, the refrigerant becomes a liquid refrigerant at low temperature and low pressure. The refrigerant flowing out from the front side heat exchanger 51 is pressured-reduced by the expansion device 404, and then flows into the outdoor heat exchanger 403 to be heated to become a refrigerant at low temperature and low pressure. By decreasing the amount of pressure reduction at the expansion device 404 and increasing the amount of pressure reduction at the expansion device 406, air-conditioned air at a temperature higher than that of the front side heat exchanger 51 can be generated in the back side heat exchanger 55. In addition, as shown in FIG. 134, similar effects can be obtained by using the four-way valve in place of the check valves.

Embodiment 66

The up/down vane 70 and the auxiliary up/down vane 71 may be divided into a plurality of parts in a longitudinal direction (a left/right direction) of the casing 1 so as to be controlled independently. Items in Embodiment 66 that are not particularly described are the same as in Embodiment 62 to Embodiment 65, and functions and structures that are the same as in Embodiment 62 to Embodiment 65 are given the same reference characters in the following description.

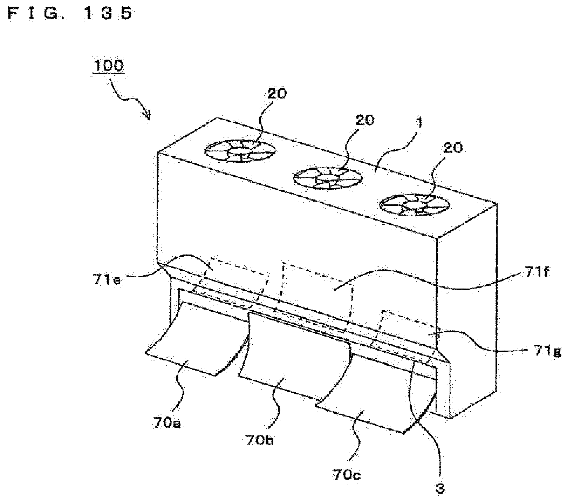

FIG. 135 is a perspective view showing an indoor unit according to Embodiment 66 of the present invention.
In the indoor unit 100 according to Embodiment 66, the up/down vane 70 is divided into a plurality of up/down vanes along the longitudinal direction of the casing 1. In FIG. 135, the up/down vane is divided into three up/down vanes (an up/down vane 70a to an up/down vane 70c). For these up/down vane 70a to up/down vane 70c, the rotation angles can be independently controlled. In addition, in the indoor unit 100 according to Embodiment 66, the auxiliary up/down vane 71 is divided into a plurality of auxiliary up/down vanes along the longitudinal direction of the casing 1.
In FIG. 135, the auxiliary up/down vane is divided into three auxiliary up/down vanes (an auxiliary up/down vane 71e to an auxiliary up/down vane 71g). The auxiliary up/down vane 71e is placed on an upstream side of the up/down vane 70a. The auxiliary up/down vane 71f is placed on the upstream side of the up/down vane 70b. The auxiliary up/down vane 71g is placed on the upstream side of the up/down vane 70c. For these auxiliary up/down vane 71e to auxiliary up/down vane 71g, the rotation angle can be independently controlled.
In the indoor unit 100 as described above, upward blowing and downward blowing of air flows can be distributed in the longitudinal direction of the casing. Accordingly, an air flow according to each person can be generated in the case such that a plurality of persons are present in an air-conditioned area, thereby improving comfortability of air conditioning.

Embodiment 67

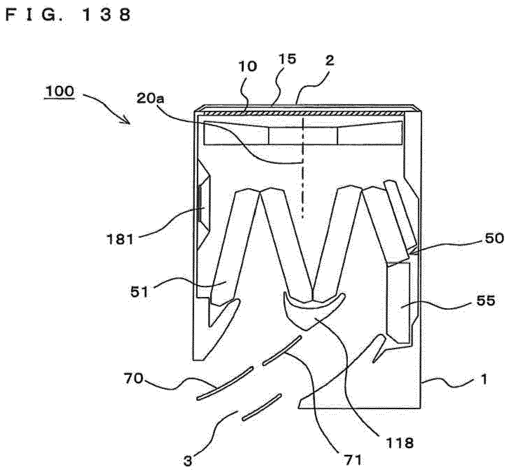

There may be the case in which a drain pan is provided inside the air passage of the casing 1 when, for example, a gradient change part is present in a bottom portion of the heat exchanger 50 on a right side vertical section (for example, the substantially M shape heat exchanger 50). In this case, for example, it is desirable to place the auxiliary up/down vane 71 at a position as described below. Items in Embodiment 67 that are not particularly described are the same as in Embodiment 62 to Embodiment 66, and functions and structures that are the same as in Embodiment 62 to Embodiment 66 are given the same reference characters in the following description.

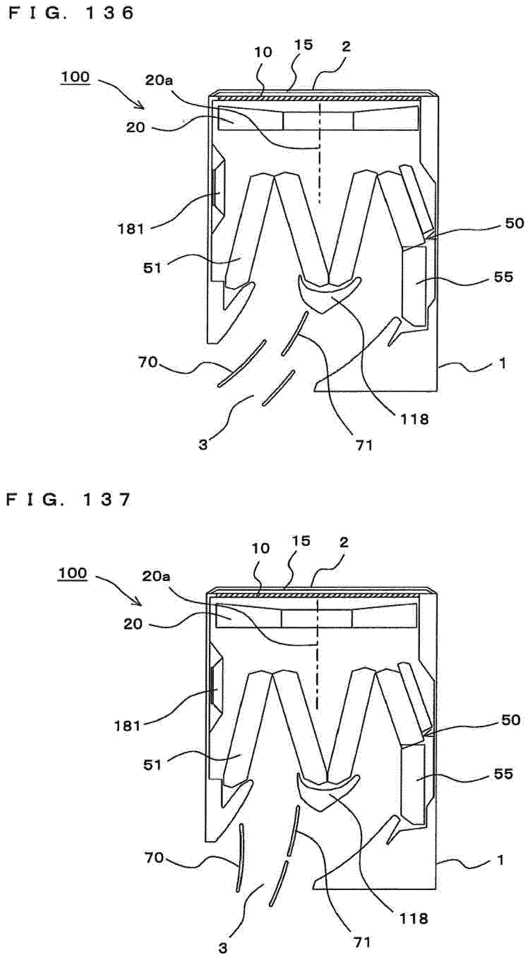

FIG. 136 is a vertical sectional view showing an indoor unit according to Embodiment 67 of the present invention.
The indoor unit 100 according to Embodiment 67 is provided with a substantially M shape heat exchanger 50 on the right side vertical section. Below a connection part between the front side heat exchanger 51 and the back side heat exchanger 55, an intermediate drain pan 118 that collects drain generated from the front side heat exchanger 51 and the back side heat exchanger 55 is provided. The auxiliary up/down vane 71 is placed below (for example, straight below) the intermediate drain pan 118. Since a lower portion of the drain in the air passage is a dead water region of the blown air flow, this means that the auxiliary up/down vane 71 is placed in this dead water region.
The indoor unit 100 as described above controls the direction of the air flow passing through the heat exchanger 50 in a manner as described below.
For example, when the air flow passing through the heat exchanger 50 is desired to be bent downward as in heating operation, the up/down vane 70 and the auxiliary up/down vane 71 are controlled to be oriented downward so as to be in the state shown in FIG. 137. Here, since the auxiliary up/down vane 71 is placed in the dead water region, it is possible to suppress a degradation in air-sending performance due to a collision between the air flow passing through the heat exchanger 50 and the auxiliary up/down vane 71.
For example, when the air flow passing through the heat exchanger 50 is desired to be bent upward as in cooling operation, the up/down vane 70 and the auxiliary up/down vane 71 are controlled to be oriented upward so as to be in the state shown in FIG. 138. Here, since the auxiliary up/down vane 71 is placed in the dead water region, it is possible to suppress a degradation in air-sending performance due to a collision between the air flow passing through the heat exchanger 50 and the auxiliary up/down vane 71.
In the indoor unit 100 described above, while suppressing a degradation in air-sending performance due to a collision between the air flow passing through the heat exchanger 50 and the auxiliary up/down vane 71, it is possible to improve air flow controllability.

In addition, by placing the auxiliary up/down vane 71 as in Embodiment 67, the air flow passing through the front side heat exchanger 51 and the air flow passing through the back side heat exchanger 55 can be reliably separated. Accordingly, air flow controllability is further improved when the front side heat exchanger 51 and the back side heat exchanger 55 are independently provided with a heat exchange operation.

Embodiment 68

Drain pan

The drain pan provided in the indoor unit 100 is not limited to the structure described in Embodiment 1, and may have structures as follows, for example. It is to be noted that functions and structures in Embodiment 68 that are the same as in Embodiment 1 to Embodiment 67 are given the same reference characters in the following description.

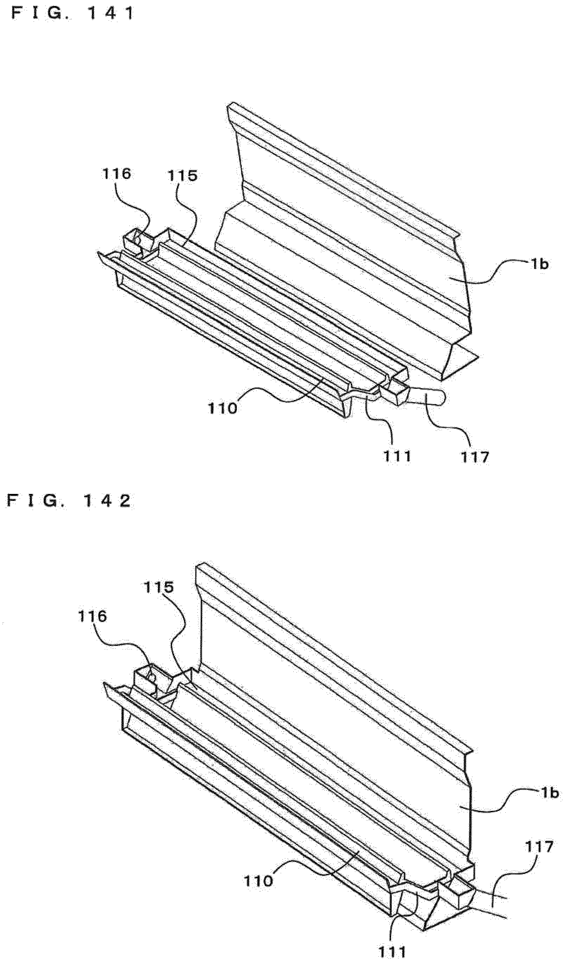

FIG. 141 is a perspective view showing an example of a drain pan according to Embodiment 68 of the present invention. Meanwhile, FIG. 142 is a perspective view showing another example of the drain pan according to Embodiment 68 of the present invention.
As described above, in the indoor unit 100 according to the present invention, the fan 20 is disposed on the upstream side of the heat exchanger 50. Accordingly, maintenance or the like of the fan 20 (replacement, cleaning or the like of the fan 20) can be carried out without detaching the front side drain pan 110. Therefore, the ease of maintenance is enhanced only by disposing the fan 20 on the upstream side of the heat exchanger 50 in comparison with the case of the past indoor unit in which a fan is disposed on the downstream side of a heat exchanger. Accordingly, in order to enhance the ease of assembly or the like of the indoor unit 100, it may be preferable to use such drain pans that are shown in FIGs. 141 and 142.
For example, the drain pan shown in FIG. 141 is integrally formed of the front side drain pan 110, the discharge passage 111 and the back side drain pan 115 by connecting the back side end of the discharge passage 111 with the back side drain pan 115. By structuring the drain pan in this manner, it is possible to assemble the indoor unit 100 without considering a difference in height between the front side drain pan 110 and the back side drain pan 115. This makes it possible to reduce the assembly man-hours of the indoor unit 100 and in turn to reduce costs of the indoor unit 100.
In addition, for example, the drain pan shown in FIG. 142 is further integrally formed of the drain pan of FIG. 142 and the back part 1b of the casing 1. By structuring the drain pan in this manner, it is also possible to assemble the indoor unit 100 without considering the difference in height between the front side drain pan 110 and the back side drain pan 115, whereby the assembly man-hours of the indoor unit 100 can be reduced and in turn costs of the indoor unit 100 can be reduced. Moreover, a molding cost of the drain pan can be also reduced, whereby the costs of the indoor unit 100 can be further reduced.

Embodiment 69

In Embodiment 1 and Embodiment 68, the drain pan that is provided in the indoor unit 100 including the heat exchanger 50 whose right side vertical section is substantially inverted V shape is described. However, the invention is not limited thereto, and the same drain pans as described in Embodiment 1 and embodiment 68 can be provided in the indoor unit 100 including the heat exchanger 50 formed in various shapes.
Hereinafter, an example thereof will be described. Note that, items in Embodiment 69 that are not particularly described are the same as in Embodiment 1 or Embodiment 68, and functions and structures that are the same as in Embodiment 1 or Embodiment 68 are given the same reference characters in the following description.
For example, the same drain pans as described in Embodiment 1 and Embodiment 68 can be provided in the indoor unit 100 that includes, aside from the heat exchanger 50 whose right side vertical section is substantially inverted V shape, the heat exchanger 50 having two lower ends (for example, a heat exchanger whose right side vertical section is substantially N shape, substantially W shape, or substantially horizontally flipped N shape).

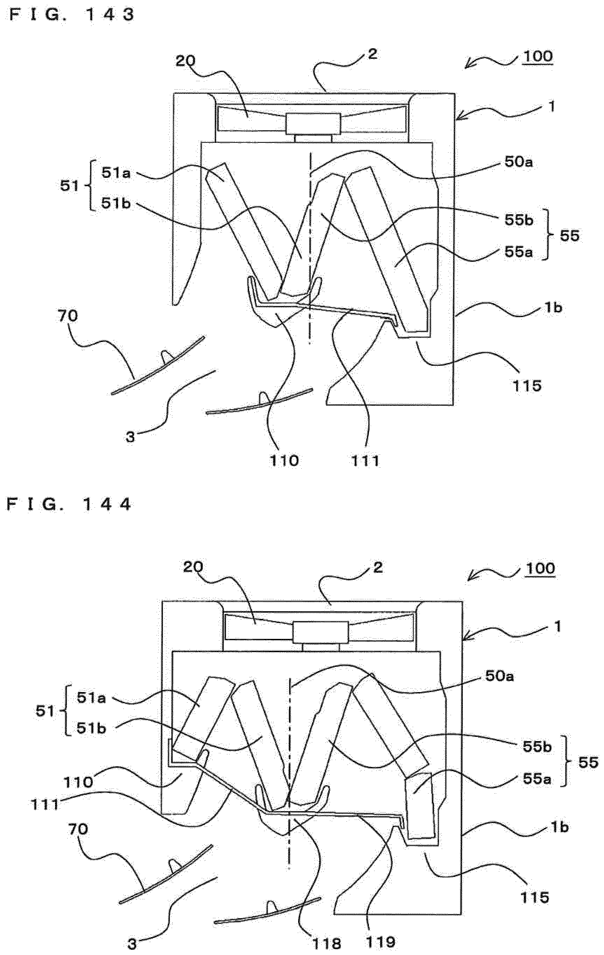

FIG. 143 is a vertical sectional view showing an example of an indoor unit according to Embodiment 69 of the present invention. FIG. 143 shows the indoor unit 100 including the heat exchanger 50 whose right side vertical section is substantially horizontally flipped N shape.
As shown in FIG. 143, two lower ends are formed in the right side vertical section of the heat exchanger 50 whose right side vertical section is substantially horizontally flipped N shape. More specifically, a connecting part (gradient change part) between the heat exchanger 51a and the heat exchanger 51b included in the front side heat exchanger 51 is a lower end, and a back side end of the heat exchanger 55a included in the back side heat exchanger 55 is another lower end.
In the indoor unit 100 described above, it is preferable that the front side drain pan 110 described in Embodiment 1 and embodiment 68 be provided under the connecting part (gradient change part) between the heat exchanger 51a and the heat exchanger 51b included in the front side heat exchanger 51. Meanwhile, it is preferable that the back side drain pan 115 described in Embodiment 1 and Embodiment 68 be provided under the back side end of the heat exchanger 55a included in the back side heat exchanger 55.

Providing the back side drain pan 115 and the front side drain pan 110 in this manner makes it possible to collect the drain received by both the drain pans into the back side drain pan 115 (drain pan disposed at the deepest back side position in the casing 1) like in Embodiment 1. Therefore, by providing the back side drain pan 115 with the connection openings 116 for the drain hose 117, it is possible to discharge the drain received by the front side drain pan 110 and the back side drain pan 115 to the outside of the casing 1.

This eliminates the need for attaching or removing, for example, the drain pan to which the drain hose 117 is connected when, for example, maintenance of the indoor unit 100 (such as cleaning of the heat exchanger 50) is performed by opening the front part or the like of the casing 1, and improves the workability of maintenance or the like.

Further, in the case where the indoor unit 100 includes the heat exchanger 50 having more than three lower ends (for example, a heat exchanger whose right side vertical section is substantially M shape), for example, it is preferable for drain pans to be provided as follows.

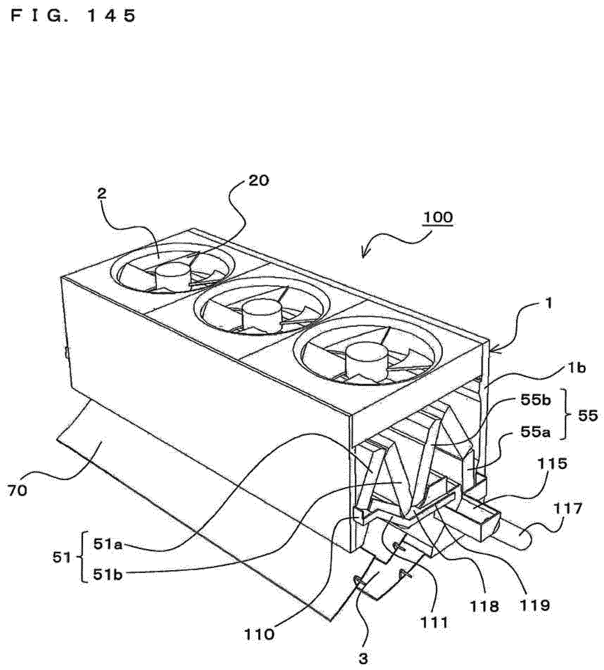

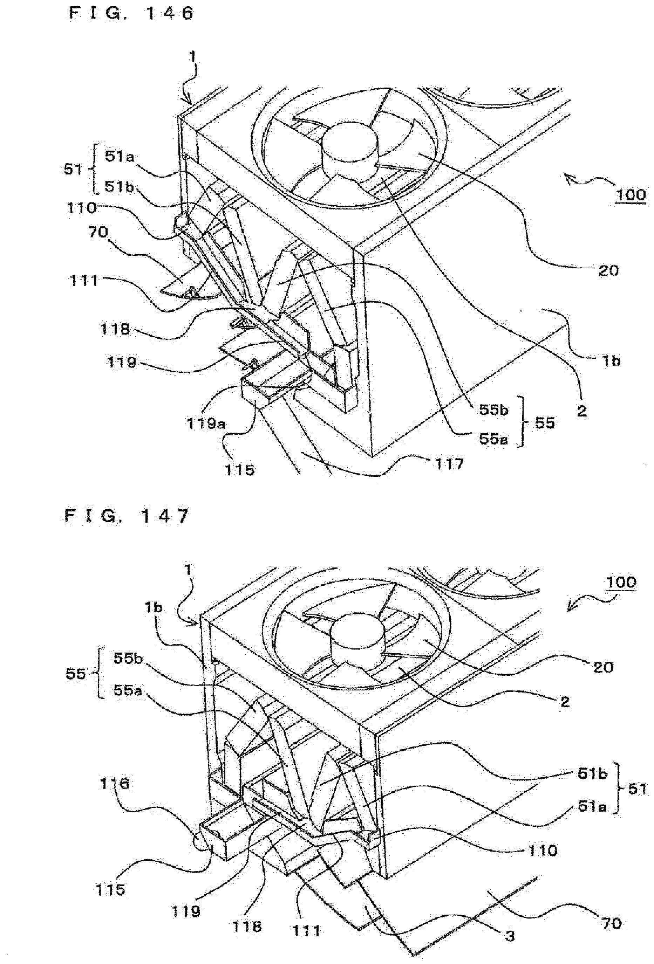

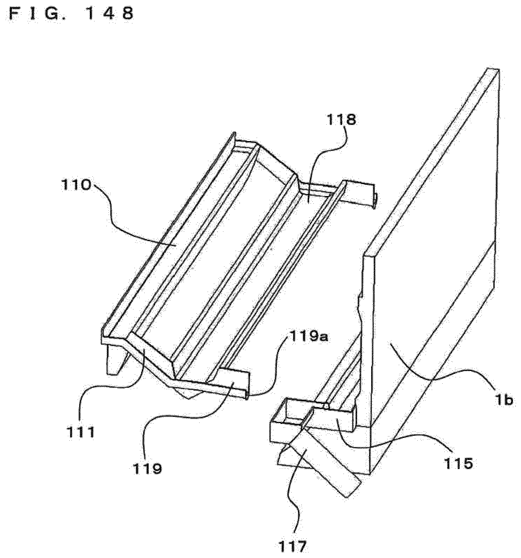

FIG. 144 is a vertical sectional view showing another example of the indoor unit according to Embodiment 69 of the present invention. FIG. 145 is a perspective view showing this indoor unit when viewed from the front side right. FIG. 146 is a perspective view showing this indoor unit when viewed from the back side right. FIG. 147 is a perspective view showing this indoor unit when viewed from the front-side left. FIG. 148 is a perspective view showing a drain pan provided in this indoor unit. For the sake of facilitating the understanding of the shape of the drain pan, FIGs. 145 and 146 show a cross section of the right side of the indoor unit 100, whereas FIG. 147 shows a cross section of the left side of the indoor unit 100.

Three lower ends are formed in the right side vertical section of the heat exchanger 50 whose right side vertical section is substantially M shape. More specifically, a front side end of the heat exchanger 51a included in the front side heat exchanger 51 is a lower end, a connecting part (gradient change part) between the heat exchanger 51b included in the front side heat exchanger 51 and the heat exchanger 55b included in the back side heat exchanger 55 is another lower end, and a back side end of the heat exchanger 55a included in the back side heat exchanger 55 is also a lower end.

In the indoor unit 100 as described above, it is preferable to provide the intermediate drain pan 118 at the lower end that is formed between the front side end and the back side end (connecting part between the heat exchanger 51b included in the front side heat exchanger 51 and the heat exchanger 55b included in the back side exchanger 55). More specifically, the front side drain pan 110 is provided under the front side end of the heat exchanger 51a included in the front side heat exchanger 51.

The intermediate drain pan 118 is provided under the connecting part between the heat exchanger 51b included in the front side heat exchanger 51 and the heat exchanger 55b included in the back side heat exchanger 55. The back side drain pan 115 is provided under the back side end of the heat exchanger 55a included in the back side heat exchanger 55. Note that the back side drain pan 115 and the back part 1b of the casing 1 are integrally formed. In the back side drain pan 115, at both of a left side end and a right side end, connection openings 116 to which the drain hose 117 is connected are provided.

The front side drain pan 110 is disposed at a higher position than the intermediate drain pan 118. The intermediate drain pan 118 is disposed at a higher position than the back side drain pan 115. Between the front side drain pan 110 and the intermediate drain pan 118, the discharge passage 111 is provided as a movement path of drain extending to both the left side end and the right side end.

Meanwhile, between the intermediate drain pan 118 and the back side drain pan 115, a discharge passage 119 is provided as a movement path of drain extending to both the left side end and the right side end. The front side end of the discharge passage 111 is connected with the front side drain pan 110, and the back side end thereof is connected with the intermediate drain pan 118. The discharge passage 111 is provided so as to be sloped downward as it proceeds from the front side drain pan 110 toward the intermediate drain pan 118.

The front side end of the discharge passage 119 is connected with the intermediate drain pan 118, and the discharge passage 119 is provided so as to be sloped downward as it proceeds from the intermediate drain pan 118 toward the back side drain pan 115. A ligulate part 119a is formed at the back side end of the discharge passage 119. The back side end of the discharge passage 119 is disposed so as to cover the upper surface of the back side drain pan 115.

With the drain pans (front side drain pan 110, intermediate drain pan 118 and back side drain pan 115) provided under the heat exchanger 50, condensation formed on the heat exchanger 50 drops from each of the lower ends of the heat exchanger 50 into each of the drain pans and is received therein. Drain having been received in the front side drain pan 110 and the intermediate drain pan 118 is collected into the back side drain pan 115 via the discharge passages 111 and 119. The drain collected in the back side drain pan 115 is discharged to exterior of the casing 1 (indoor unit 100) through the drain hose 117.

As described thus far, by providing the drain pans (front side drain pan 110, intermediate drain pan 118 and back side drain pan 115), the drain having been received in each of the drain pans can be collected into the back side drain pan 115 (the drain pan disposed at the deepest back side position in the casing 1). Therefore, by providing the back side drain pan 115 with the connection openings 116 for the drain hose 117, it is possible to discharge the drain received by the front side drain pan 110 and the back side drain pan 115 to the outside of the casing 1.

This eliminates the need for attaching or removing, for example, the drain pan to which the drain hose 117 is connected when, for example, maintenance of the indoor unit 100 (such as cleaning of the heat exchanger 50) is performed by opening the front part or the like of the casing 1, and improves the workability of maintenance or the like.

The drain pans shown in FIGs. 144 to 148 integrally form the front side drain pan 110, the discharge passage 111, the intermediate drain pan 118 and the discharge passage 119. In other words, the drain pans shown in FIGs. 144 to 148 are separated at a position between the discharge passage 119 and the back side drain pan 115. However, this separation position (discontinued position) can be set arbitrarily. The separation position (discontinued position) may be determined appropriately considering the ease of maintenance, ease of assembly or the like.

Moreover, it is not necessarily needed that the front side drain pan 110 is higher in position than the intermediate drain pan 118, and it is also not necessarily needed that the intermediate drain pan 118 is higher in position than the back side drain pan 115. Even if the front side drain pan 110 and the intermediate drain pan 118 are at the same height, drain received in both the drain pans can be discharged through the drain hose connected with the back side drain pan 115. Likewise, even if the intermediate drain pan 118 and the back side drain pan 115 are at the same height, drain received in both the drain pans can be discharged through the drain hose connected with the back side drain pan 115.

Embodiment 70

Nozzle

In Embodiment 1, the nozzle 6 is structured so that the opening length d1 on the inlet side of the nozzle 6 is larger than the opening length d2 on the outlet side of the nozzle 6 in the right side vertical section. With this, uneven distribution of wind speed that is generated in the vicinity of the inlet of the nozzle 6 is corrected. By adding the following structure to the structured mentioned above, it is possible to more correct the uneven distribution of wind speed generated in the vicinity of the inlet of the nozzle 6 and/or in the vicinity of the outlet of the nozzle 6 (air outlet 3). Note that functions and structures in Embodiment 70 that are the same as in Embodiment 1 to Embodiment 69 are given the same reference characters in the following description.

The shape of the nozzle 6 in the right side vertical section in Embodiment 70 differs from that in Embodiment 1. Hereinafter, the difference in shape between the nozzle 6 according to Embodiment 70 and the nozzle 6 according to Embodiment 1 will be described in detail.

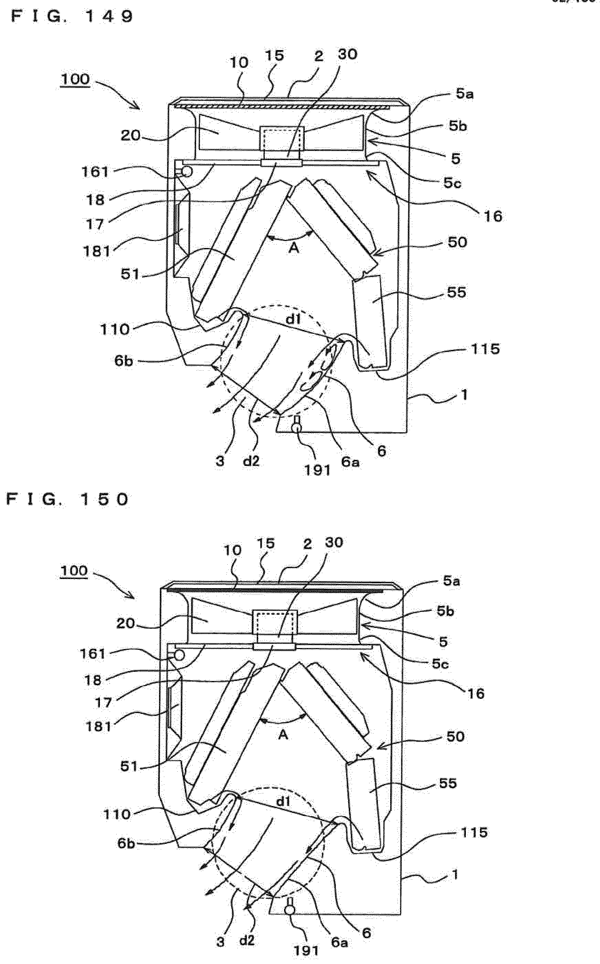

FIG. 149 is a diagram (vertical sectional view) describing an air flow in the nozzle of the indoor unit according to Embodiment 1 of the present invention.

As shown in FIG. 149, both a front side curve 6b and a back side curve 6a of the nozzle 6 according to Embodiment 1 are convex-shaped projecting toward the back side. With such structure, as shown in FIG. 149, there arises a problem in some case in that an air flow that takes a roundabout path from the back side drain pan 115 causes an air separation to occur, resulting in decrease and loss of an effective air passage, and also causes the occurrence of wind speed distribution at the air outlet 3.

In other words, with the shape of the nozzle 6 like in Embodiment 1, the amount of air flow that passes through the back side heat exchanger 55 is larger than the amount of air flow that passes through the front side heat exchanger 51. Accordingly, at the time when an air flow that has passed through the bottom of the back side drain pan 115 arranged under the lower end of the back side heat exchanger 55 climbs over the back side drain pan 155 and flows into the nozzle 6, the air flow gets away from the top portion of the back side curve 6a (inlet side of the nozzle 6) because the flow rate thereof is too fast for the air flow to curve smoothly.

The above-mentioned air separation area is larger as the amount of air flow that passes through the back side heat exchanger 55 is larger, and additionally, as a larger wind speed distribution is more generated at the lower end of the back side heat exchanger 55.

Accordingly, in Embodiment 70, the shape of the nozzle 6 is formed as follows.

FIG. 150 is a vertical sectional view showing the indoor unit according to Embodiment 70 of the present invention.

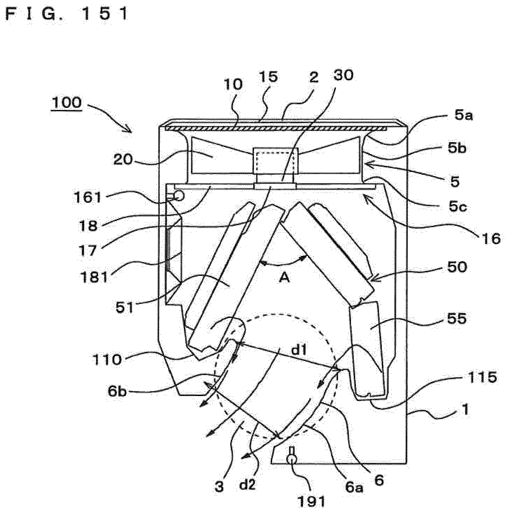

In Embodiment 70, the back side curve 6a included in the nozzle 6 is so formed as to be convex-shaped projecting toward the front side. The whole back side curve 6a may be formed in a convex shape projecting toward the front side as shown in FIG. 150, or a part of the back side curve 6a may be formed in a convex shape projecting toward the front side as shown in FIG. 151.

In the case where a part of the back side curve 6a is formed in a convex shape projecting toward the front side, it is preferable for the above-mentioned air separation area to be formed in a convex shape. In general, since the above air separation area is frequently generated at the inlet side (top portion) of the nozzle 6, in the case where a part of the back side curve 6a is formed in a convex shape projecting toward the front side, it is preferable for the curve to be concave-shaped on the upstream side from the center of the curve.

Further, the back side curve 6a may be convex-shaped projecting toward the front side at the upstream side, and may be convex-shaped projecting toward the back side at the downstream side. To rephrase, the back side curve 6a may be so formed as to be substantially S shape as a whole in the right side vertical section.

According to this structure, the air flow that climbs over the back side drain pan 115 and flows into the nozzle 6 is guided to the air outlet 3 without occurrence of the air separation. In addition, the wind speed distribution at the air outlet 3 is improved because the air separation, a back flow or the like does not occur. This makes it easy to prevent condensation due to the back flow or the like and to control the air flow direction, whereby quality of the overall indoor unit 100 can be improved.

Embodiment 71

The uneven distribution of wind speed at the air outlet 3 can be corrected by changing the shape of the nozzle 6 in a front-back direction thereof along the longitudinal direction (right-left direction) of the casing 1. Items in Embodiment 71 that are not particularly described are the same as those in Embodiment 70, and functions and structures that are the same as in Embodiment 70 are given the same reference characters in the following description.

In the indoor unit 100 according to Embodiment 1, the nozzle 6 is uniform in shape along the longitudinal direction (right-left direction) of the casing 1. Forming the nozzle 6 in the above-described manner can cause a problem as described below in some case.

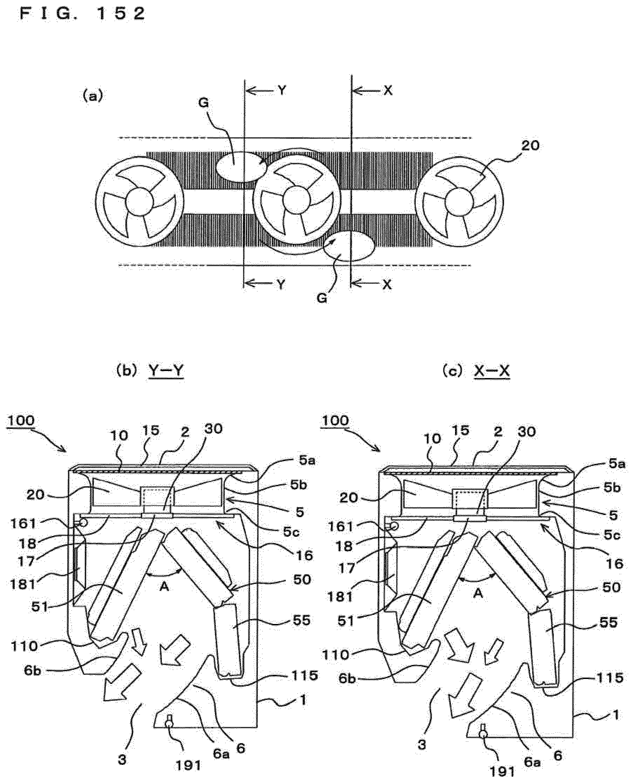

FIG. 152 is a diagram describing an air flow that is generated inside the indoor unit according to Embodiment 1 of the present invention. FIG. 152 (a) is a sectional plan view showing the indoor unit 100 according to Embodiment 1, and the lower side of FIG. 152 (a) corresponds to the front side of the indoor unit 100. Meanwhile, FIG. 152 (b) is a sectional view taken along the Y-Y line in FIG. 152 (a), and FIG. 152 (c) is a sectional view taken along the line X-X in FIG. 152 (a). Note that, in FIG. 152, the case in which each of the fans 20 rotates counterclockwise when the indoor unit 100 being viewed from top, is illustrated.

As shown in FIG. 152 (a), wind speed increases at G-areas in the heat exchanger 50 that is disposed at the downstream side (to rephrase, air volume increases) due to the influence of a spiral flow generated by the fans 20 provided at the upper side of the casing 1. This uneven distribution of wind speed that is generated in the heat exchanger 50 is also present at the downstream side. Accordingly, the air flow having passed through the heat exchanger flows into the nozzle 6 while having such wind speed distribution.

In other words, the uneven distribution of wind speed is generated in the vicinity of the air outlet 3. Further, with an arrangement of the heat exchanger 50 like in the indoor unit 100 according to Embodiment 1 (the right side vertical section is substantially inverted V shape), because the air volume that passes through the back side heat exchanger 55 is larger than the air volume that passes through the front side heat exchanger 51, wind speed distribution in the right side vertical section will be such distribution that is shown in FIG. 152 (b) and FIG. 152 (c).

More specifically, in the Y-Y cross section, because the amount of air flow from the back side heat exchanger 55 is larger, the main flow in the nozzle 6 is slightly shifted to substantially the middle portion of the nozzle 6 or to the front side of the casing 1. On the other hand, in the X-X cross section, because the amount of air flow from the front side heat exchanger 51 is larger, the main flow in the nozzle 6 is slightly shifted to the back side of the casing 1.

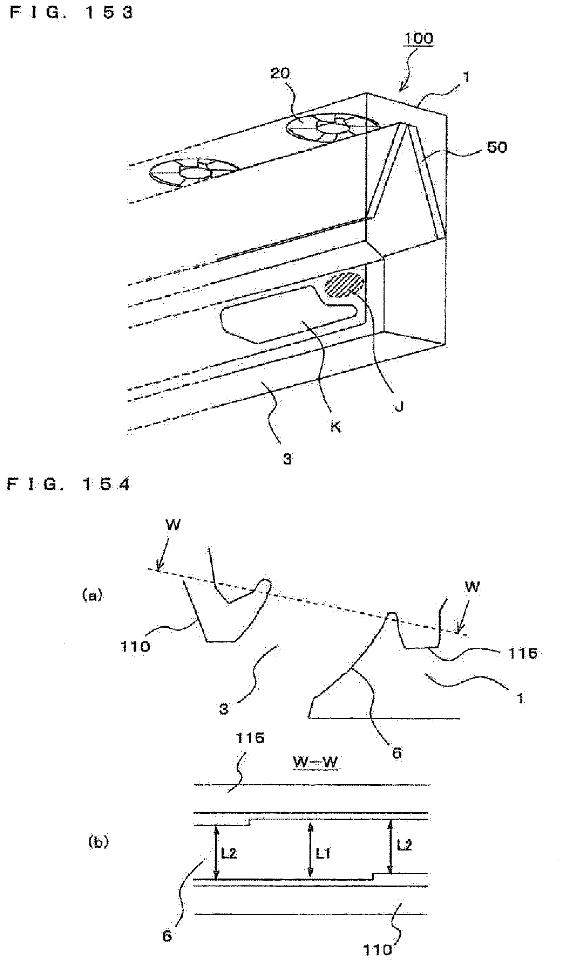

Furthermore, with the arrangement of the heat exchanger 50 like in the indoor unit 100 according to Embodiment 1 (the right side vertical section is substantially inverted V shape), since the air flows along the upper surface of the heat exchanger 50, wind speed distribution of the air flow that flows into the heat exchanger 50 becomes uneven. To be more specific, in the case where each of the fans 20 rotates counterclockwise in a top view, wind speed is smaller in the vicinity of a lower end at the right side of the front side heat exchanger 51 (area J), as shown in FIG. 153, whereby an area where wind speed is larger is also generated (area K).

In FIG. 152 and FIG. 153, the case in which each of the fans 20 rotates counterclockwise in a top view is described; however, if each of the fans 20 rotates clockwise in a top view, the areas where the wind speed is larger or smaller are reversed right and left. In addition, the areas where the wind speed is larger or smaller are changed if the location of the heat exchanger 50 and/or the relationship between the rotation shaft 20a of the fan 20 and the symmetric line 50a of the heat exchanger 50 is changed.

Accordingly, in Embodiment 71 of the present invention, the shape of the nozzle 6 is formed as described below.

FIG. 154 is a diagram describing an example of the shape of the nozzle of the indoor unit according to Embodiment 71 of the present invention. FIG. 154(a) is a vertical sectional view showing the vicinity of the nozzle 6 of the indoor unit 100 according to Embodiment 71, whereas FIG. 154 (b) is a sectional view taken along the W-W line in FIG. 154 (a). Note that the lower side of FIG. 154(b) corresponds to the front side of the casing 1.

As shown in FIG. 154, in the nozzle 6 according to Embodiment 71, the width of the nozzle 6 is changed in the front-back direction in accordance with the main flow in the nozzle 6.

More specifically, in a range in which the main flow in the nozzle 6 is not shifted to either the front side or the back side of the casing 1 (middle portion of the casing 1 in the right-left direction thereof), the width of the nozzle 6 in the front-back direction is L1, which is a width before the change of the width of the nozzle 6 in the front-back direction.

In a range in which the main flow in the nozzle 6 is shifted to the front side of the casing 1 (left side of the casing 1 in the right-left direction thereof), the width of the nozzle 6 is reduced in the front-back direction toward the front side to be L2 as the width of the nozzle 6 in the front-back direction. Further, in a range in which the main flow in the nozzle 6 is shifted to the back side of the casing 1 (right side of the casing 1 in the right-left direction thereof), the width of the nozzle 6 is reduced in the front-back direction toward the back side to be L2 as the width of the nozzle 6 in the front-back direction.

It is to be noted that the width of the nozzle 6 in the front-back direction is not necessarily needed to be changed in a stepwise manner along the right-left direction of the casing 1. The width of the nozzle 6 in the front-back direction may be smoothly changed along the right-left direction of the casing 1.

Further, the width of the nozzle 6 may not be changed in the front-back direction, and instead the position of the nozzle 6 may be changed in the front-back direction along the right-left direction of the casing 1 in accordance with the main flow in the nozzle 6.

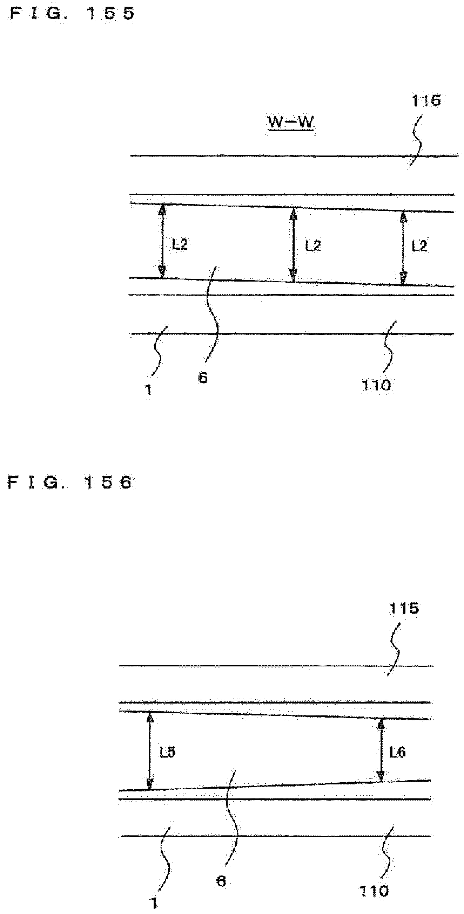

FIG. 155 is a diagram describing another example of the shape of the nozzle of the indoor unit according to Embodiment 71 of the present invention.

As shown in FIG. 155, the position of the nozzle 6 in the front-back direction is gradually (smoothly) shifted to the front side as it proceeds from left to right of the casing 1. Note that, it is assumed in FIG. 155 that the main flow in the nozzle 6 is shifted to the front side of the casing 1 as it proceeds from left to right of the casing 1.

Furthermore, the position of the nozzle 6 in the front-back direction may not be changed, and instead the width of the nozzle 6 may be changed in the front-back direction along the right-left direction of the casing 1 in accordance with the main flow in the nozzle 6.

FIG. 156 is a diagram describing yet another example of the shape of the nozzle of the indoor unit according to Embodiment 71 of the present invention.

As shown in FIG. 156, the width of the nozzle 6 in the front-back direction becomes gradually (smoothly) narrower from L5 to L6 as it proceeds from left to right of the casing 1. In FIG. 156, it is assumed that the air volume flowing in the nozzle 6 becomes smaller as it proceeds from left to right of the casing 1.

In other words, in the longitudinal direction (right-left direction) of the casing 1, it is also possible to more correct the uneven distribution of wind speed at the air outlet 3 by changing the shape of the nozzle 6 in the front-back direction in accordance with the wind speed distribution of the air flow which flows in the nozzle 6.

In Embodiment 71, the shape of the nozzle 6, that is, the shape at the inlet side of the nozzle 6 is described; however, the shape at the outlet side of the nozzle 6 may be changed in the same manner as described above, of course.

According to the structure described above, the uneven distribution of wind speed in the vicinity of the air outlet 3 can be corrected. Accordingly, the wind speed distribution in the vicinity of the air outlet 3 can be improved, and it is possible to prevent a back flow or the like and to control the direction of the air flow with ease, whereby quality of the overall indoor unit 100 can be improved.

Embodiment 72

In the case where the uneven distribution of wind speed is corrected at the air outlet 3, a fan may be added in the manner as described below. Items in Embodiment 72 that are not particularly described are the same as those in Embodiment 70 or embodiment 71, and functions and structures that are the same as in Embodiment 70 or Embodiment 71 are given the same reference characters in the following description.

FIG. 157 is a sectional plan view showing an indoor unit according to Embodiment 72 of the present invention. In FIG. 157, only the upper end of the heat exchanger 50 is illustrated.

The principal structure of the indoor unit 100 according to Embodiment 72 is the same as that of the indoor unit 100 according to Embodiment 1. In other words, in the indoor unit 100 according to Embodiment 72, the heat exchanger formed in a substantially A-shape in the right side vertical section is provided on the downstream side of the plurality of fans 20. The indoor unit 100 according to Embodiment 72 differs from the indoor unit 100 according to Embodiment 1 in that there is provided a fan 20b. The fan 20b is small in size so as not to exert an influence on a spiral flow of the adjacent fan 20.

Therefore, the fan 20b may be similar in shape to the fan 20 or may have a different shape; however, it is advisable that the blades of the fan 20b may be designed so that the spiral flow of the fan 20 is made smaller. The rotation direction of the fan 20b may be the same as that of the fan 20 or may be opposite to that of the fan 20. In FIG. 157, the rotation direction of the fan 20b is the same as that of the fan 20.

In the case where the fan 20 rotates counterclockwise in a top view, the most part of the air flow in the vicinity of the right side of the casing 1 flows into the heat exchanger 50 from the front side of the heat exchanger 50. This makes the air volume in the back side right of the heat exchanger 50 to be smaller. Accordingly, in Embodiment 72, the fan 20b is disposed at a position in the back side right on the upper surface of the casing 1 in order to increase the air volume in this area where the air volume is smaller.

In the indoor unit 100 that is structured in the above-described manner, it is possible to partially increase the air volume in an area where the wind speed becomes smaller. In other words, it is possible to make the wind speed substantially even at the air outlet 3 as a whole. Accordingly, the wind speed distribution in the vicinity of the air outlet 3 can be improved, and it is possible to prevent a back flow or the like and to control the direction of the air flow with ease, whereby quality of the overall indoor unit 100 can be improved.

The fans 20b may be disposed in the back side right and in the front side right on the upper surface of the casing 1. The fans 20b may be disposed in the vicinities of all the corners on the upper surface of the casing 1.

FIG. 158 is a sectional plan view showing another example of the indoor unit according to Embodiment 72 of the present invention. In FIG. 158, only the upper end of the heat exchanger 50 is illustrated.

A fan 20b is additionally provided to the indoor unit 100 shown in FIG. 157 in the front side right on the upper surface of casing 1 so as to structure the indoor unit 100 shown in FIG. 158. Although the left side of the casing 1 is not shown in the drawing, the fan 20b may be provided in the vicinity of a corner at the left side on the upper surface of the casing 1. In other words, a plurality of fans 20b may be disposed at both the right and left sides on the upper surface of the casing 1.

As described in Embodiment 36, in the case where the indoor unit 100 is operated in the low air volume mode (low capacity mode), a back flow occurs near both ends of the air outlet 3 in some case. In such case, the wind speed near both the ends of the air outlet 3 can be increased by structuring the indoor unit 100 in the manner as shown in FIG. 158. With this, durability against a troublesome back flow at both the ends of the air outlet 3 can be enhanced and in turn quality of the overall indoor unit 100 can be improved.

Embodiment 73

ANC

Hereinafter, another embodiment of the active noise cancellation method will be described. In Embodiment 73, functions and structures that are the same as in Embodiment 1 to Embodiment 72 are given the same reference characters in the following description.

FIG. 159 is a vertical sectional view showing an indoor unit according to Embodiment 73 of the present invention. Note that the right side of FIG. 159 corresponds to the front side of the indoor unit 100.

A different point between the indoor unit 100 according to Embodiment 73 and the indoor unit 100 according to Embodiment 1 is as follows. That is, in the indoor unit 100 according to Embodiment 1, control sound is generated in the signal processer 201 using two microphones, that is, the noise detecting microphone 161 and the noise-cancellation effect detecting microphone 161, which are provided for carrying out the active noise cancellation.

However, in the indoor unit 100 according to Embodiment 73, the above-mentioned two microphones are replaced with a noise detection/noise-cancellation effect detecting microphone 211, which is a single microphone. Therefore, because the methods of signal processing are different from each other, contents of the signal processor 204 are different from those of the signal processor 201.

The control speaker 181 that outputs control sound to suppress noise is disposed on a wall under the fan 20 while facing to the center of the air passage from the wall; under the speaker, there is disposed the noise detection/noise-cancellation effect detecting microphone 211 that detects sound which is obtained after making the control sound discharged from the control speaker 181 interfere with the noise that propagates from the fan 20 passing through the air passage and comes out from the air outlet 3. The control speaker 181 and the noise detection/noise-cancellation effect detecting microphone 211 are installed between the fan 20 and the heat exchanger 50.

An output signal from the noise detection/noise-cancellation effect detecting microphone 211 is input to the signal processor 204, which is a control sound generation means for generating a signal (control sound) to control the control speaker 181.

FIG. 160 is a block diagram showing a signal processor according to Embodiment 73 of the present invention. That is, FIG. 160 shows a block diagram of the signal processor 204. An electric signal converted from a sound signal by the noise detection/noise-cancellation effect detecting microphone 211 is amplified by the microphone amplifier 151 and converted from an analog signal to a digital signal by the A/D converter 152.

The converted digital signal is input to the LMS algorithm 159, and a differential signal between the converted digital signal and a signal which is obtained by making an output of the FIR filter 158 be convoluted through an FIR filter 160, is input to the FIR filter 158 and the LMS algorithm 159. Subsequently, the differential signal experiences a convolution operation carried out by the FIR filter 158 using a tap coefficient calculated by the LMS algorithm 159, thereafter is converted by the D/A converter 154 from digital to analog and amplified by the amplifier 155 to be discharged from the control speaker 181 as the control sound.

Next, a method for suppressing the operation sound of the indoor unit 100 will be described. In the indoor unit 100, the sound which is obtained after making the control sound discharged from the control speaker 181 interfere with the operation sound (noise) including air-blowing sound of the fan 20, is detected by the noise detection/noise-cancellation effect detecting microphone 211 installed between the fan 20 and the heat exchanger 50, and is converted to a digital signal via the microphone amplifier 151 and the A/D converter 152.

In order to carry out a method of operation sound suppression that is equivalent to the method of operation sound suppression described in Embodiment 1, it is necessary to input noise to be deadened to the FIR filter 158, and as indicated by the expression 1, it is also necessary to input sound, which is obtained after making control sound as an error signal interfere with the noise to be deadened as an input signal, to the LMS algorithm 159. However, since the noise detection/noise-cancellation effect detecting microphone 211 detects only a resultant sound after the interference with the control sound, it is necessary to generate the noise to be deadened from the detected sound by the noise detection/noise-cancellation effect detecting microphone 211.

FIG. 161 shows a sound waveform after control sound having interfered with noise (waveform "a" in FIG. 161), a sound waveform of the control sound (waveform "b" in FIG. 161) and a sound waveform of the noise (waveform "c" in FIG. 161). According to the superposition principle of sound, b + c = a, therefore "c" can be obtained by subtracting "b" from "a". That is to say, the noise to be deadened can be generated from a difference between the sound detected by the noise detection/noise-cancellation effect detecting microphone 211 after the interference and the control sound.

FIG. 162 is a block diagram describing a pathway in which a control signal that is output from the FIR filter 158 is output as control sound from the control speaker 181, detected by the noise detection/noise-cancellation effect detecting microphone 211 and input to the signal processor 204. That is, the control signal passes through a pathway from the D/A converter 154, the amplifier 155, the control speaker 181 and to the noise detection/noise-cancellation effect detecting microphone 211, and further passes through the noise detection/noise-cancellation effect detecting microphone 211, the microphone amplifier 151 and the A/D converter 152.

In the case where the transfer characteristic of the pathway mentioned above is H, the FIR filter 160 in FIG. 160 is provided while estimating this transfer characteristic of H. Through carrying out convolution operation on the output signal of the FIR filter 158 using the FIR filter 160, the control sound can be estimated to be the signal "b" that is detected by the noise detection/noise-cancellation effect detecting microphone 211; the noise "c" to be deadened is generated through calculating a difference between the signal "a" detected by the noise detection/noise-cancellation effect detecting microphone 211 after the interference and the signal "b".

The noise "c" to be deadened that has been generated in the above-described manner is supplied as an input signal to the LMS algorithm 159 and the FIR filter 158. The digital signal that has passed through the FIR filter 158 with the tap coefficient having being updated by the LMS algorithm 159, is converted to the analog signal by the D/A converter 154, amplified by the amplifier 155, and discharged as the control sound into the air passage within the indoor unit 100 from the control speaker 181 installed between the fan 20 and the heat exchanger 50.

Meanwhile, the noise detection/noise-cancellation effect detecting microphone 211 installed under the control speaker 181 detects the sound obtained after making the control sound discharged from the control speaker 181 interfere with the noise that propagates passing through the air passage from the fan 20 and comes out from the air outlet 3.

To the above-mentioned error signal of the LMS algorithm 159, the sound detected by the noise detection/noise-cancellation effect detecting microphone 211 is input; therefore, the tap coefficient of the FIR filter 158 is updated so that this sound after the interference comes closer to zero. This makes it possible to suppress the noise near the air outlet 3 by the control sound that has passed through the FIR filter 158.

In the indoor unit 100 adopting the active noise cancellation method as described above, disposing the noise detection/noise-cancellation effect detecting microphone 211 and the control speaker 181 between the fan 20 and the heat exchanger 50 makes it unnecessary to install a member needed for the active noise cancellation method in an area B where condensation can occur. Accordingly, it is possible to prevent adhesion of water droplets to the control speaker 181 and the noise detection/noise-cancellation effect detecting microphone 211, thereby making it possible to prevent deterioration of the noise cancellation performance and failures of the speaker, the microphone and the like.

In Embodiment 73, although the noise detection/noise-cancellation effect detecting microphone 211 is disposed on the upstream side of the heat exchanger 50, the noise detection/noise-cancellation effect detecting microphone 211 may be disposed at a lower end position against which the wind discharged from the air outlet 3 does not blow (a position avoiding the air flow) in the indoor unit 100, as shown in FIG. 163.

Moreover, the microphone has been taken up as an example of detection means for detecting noise or a noise cancellation effect after noise is cancelled out by the control sound; instead, the detection means may be formed of an acceleration sensor or the like that senses the vibration of the casing.

Furthermore, by treating sound as disturbance of an air flow, noise or a noise cancellation effect after noise is cancelled out by the control sound may be detected as disturbance of an air flow. That is, as detection means for detecting noise or a noise cancellation effect after noise is cancelled out by the control sound, a flow rate sensor, a hot wire probe, or the like that detects an air flow may be used. It is also possible to detect an air flow by increasing the gain of a microphone.

Further, in Embodiment 73, as an adaptive signal processing circuit of the signal processor 204, the FIR filter 158 and the LMS algorithm 159 are used. However, any adaptive signal processing circuit can be used as long as the circuit can make the sound detected by the noise detection/noise-cancellation effect detecting microphone 211 come closer to zero; accordingly, a processing circuit employing the filtered -X algorithm, which is generally used in the active noise cancellation method, may be also used.

Moreover, the signal processor 204 may not be structured to use the adaptive signal processing, but may be structured to use a fixed tap coefficient so as to generate control sound. In addition, the signal processor 204 may not be digital signal processing, but an analog signal processing circuit.

Furthermore, in Embodiment 73, a case in which there is provided the heat exchanger 50 that cools air to an extent such that condensation is caused to occur is described; however, the invention can be also applied to a case in which there is provided the heat exchanger 50 that cools air to an extent such that condensation is not caused to occur. Therefore, it is possible to obtain an effect such that the deterioration of performance of the noise detection/noise-cancellation effect detecting microphone 211, the control speaker 181 or the like can be prevented without considering presence/absence of the occurrence of condensation due to the heat exchanger 50.

Embodiment 74

A control speaker and a noise-cancellation effect detecting microphone being disposed under a heat exchanger

For example, the noise cancellation mechanism may be disposed at a position described below. Note that functions and structures in Embodiment 74 that are the same as in Embodiment 1 to Embodiment 73 are given the same reference characters in the following description.

In Embodiment 74 of the present invention, of the components of the noise cancellation mechanism, the noise detecting microphone 161 (corresponds to the noise detecting device), the control speaker 181 (corresponds to the control sound output device) and the noise-cancellation effect detecting microphone 191 (corresponds to the noise cancellation effect detection device) are provided on the downstream side of the heat exchanger 50.

This makes it possible to reduce the influence of turbulence of the air flow caused to occur by the fan 20 on the noise-cancellation effect detecting microphone 191 and to shorten a pathway through which control sound discharged from the control speaker 181 reaches a control point. Therefore, the indoor unit 100 according to Embodiment 74 can control the noise with high precision using the noise cancellation mechanism. In addition, it is also possible for the indoor unit 100 according to Embodiment 74 to reduce costs of the signal processing circuit.

Further detailed explanation will be given below.

FIG. 164 is a vertical sectional view showing an indoor unit according to Embodiment 74 of the present invention. Just like in FIG. 1, the left side of FIG. 164 corresponds to the front side of the indoor unit 100. The structure of the indoor unit 100 will be described with reference to FIG. 164.

The structure of the indoor unit 100 is the same as that of the indoor unit 100 according to Embodiment 1 except that the arrangement positions of the noise detecting microphone 161 and the control speaker 181 as the noise cancellation mechanism are different from those in FIG. 1.

The indoor unit 100 includes the noise cancellation mechanism structured of the noise detecting microphone 161, the control speaker 181, the noise-cancellation effect detecting microphone 191 and the signal processor 201. The noise detecting microphone 161 is installed on the downstream side of the heat exchanger 50. The noise-cancellation effect detecting microphone 191 is installed in the vicinity of the air outlet 3 (e.g., a part on the nozzle 6 forming the air outlet 3) on the downstream side of the heat exchanger 50.

The control speaker 181 is provided on a side of the casing 1 (more specifically, a position under the heat exchanger 50 and in the vicinity of the noise-cancellation effect detecting microphone 191). Further, the control speaker 181 and the noise-cancellation effect detecting microphone 191 are disposed so as to face to the center of the air flow from the wall of the casing 1.

Note that the arrangement position of the noise-cancellation effect detecting microphone 191 is not limited to the part on the nozzle 6 of the air outlet 3, and may be any position as far as the position is at an opening of the air outlet 3. For example, the noise-cancellation effect detecting microphone 191 may be installed on a bottom portion or a side of the air outlet 3.

Further, in Embodiment 74, although the control speaker 181 is installed on the side of the casing 1, the control speaker 181 may be installed on the front or back surface of the casing 1. Furthermore, the noise detecting microphone 161 is not necessarily needed to be installed on the downstream side of the heat exchanger 50; it is sufficient that the control speaker 181 and the noise-cancellation effect detecting microphone 191 are installed on the downstream side of the heat exchanger 50.

Output signals of the noise detecting microphone 161 and the noise-cancellation effect detecting microphone 191 are input to the signal processor 201 that generates a signal (control sound) for controlling the control speaker 181. The structure of the signal processor 201 is completely the same as that in the indoor unit 100 according to Embodiment 1.

In order to obtain a large noise cancellation effect with the noise cancellation mechanism according to Embodiment 74, high coherence is needed between the sound detected by the noise detecting microphone 161 and the sound detected by the noise-cancellation effect detecting microphone 191. However, in the case where the noise detecting microphone 161 and the noise-cancellation effect detecting microphone 191 are disposed in an area where an air flow turbulence is caused to occur by rotation of the bladed wheel 25 of the fan 20 (e.g., in the air passage between the fan 20 and the heat exchanger 50 in the indoor unit 100), other components than the original noise are detected and in turn the coherence between the two microphones is lowered, where those other components in this case are pressure fluctuation components generated due to the air flow turbulence.

Accordingly, in the indoor unit 100 according to Embodiment 74, the noise detecting microphone 161 and the noise-cancellation effect detecting microphone 191 are disposed on the downstream side of the heat exchanger 50. In the indoor unit 100, since the fan 20 is disposed on the upstream side of the heat exchanger 50, it is possible to dispose the heat exchanger 50 between the fan 20 and the noise detecting microphone 161 and noise-cancellation effect detecting microphone 191.

With the noise detecting microphone 161 and the noise-cancellation effect detecting microphone 191 being disposed in this manner, the air flow turbulence caused to occur by the fan 20 passes through between the fins 56 of the heat exchanger 50 to be suppressed, whereby influence of the air flow turbulence on the noise detecting microphone 161 and the noise-cancellation effect detecting microphone 191 can be reduced. As a result, the coherence between the noise detecting microphone 161 and the noise-cancellation effect detecting microphone 191 is enhanced to obtain a high noise cancellation effect.

FIG. 165 is a diagram showing coherence properties between a noise detecting microphone and a noise-cancellation effect detecting microphone with respect to installation positions of the microphones. To be more specific, FIG. 165 (a) is a diagram showing a coherence property between the two microphones, in which the noise detecting microphone 161 and the noise-cancellation effect detecting microphone 191 are provided on the upstream side of the heat exchanger 50 (more specifically, between the fan 20 and the heat exchanger 50).

Meanwhile, FIG. 165 (b) is a diagram showing a coherence property between the two microphones, in which the noise detecting microphone 161 and the noise-cancellation effect detecting microphone 191 are provided on the downstream side of the heat exchanger 50. Comparing FIG. 165 (a) with FIG. 165 (b), it is found that, in the case of the indoor unit 100 with the fan 20 being provided on the upstream side of the heat exchanger 50, providing the noise detecting microphone 161 and the noise-cancellation effect detecting microphone 191 on the downstream side of the heat exchanger 50 enhances the coherence between the two microphones.

The noise cancellation effect is influenced by a distance from the arrangement position of the control speaker 181 to the arrangement position of the noise-cancellation effect detecting microphone 191 (control point). In other words, the length of a transfer pathway through which the control sound discharged from the control speaker 181 reaches the control point (arrangement position of the noise-cancellation effect detecting microphone 191), has influence on the noise cancellation effect.

More specifically, the amplitude characteristic and the phase characteristic of the control sound discharged from the control speaker 181 are changed in the transfer pathway through which the control sound reaches the control point (arrangement position of the noise-cancellation effect detecting microphone 191). In the case where the amplitude characteristic and the phase characteristic are changed in the transfer pathway, the control sound no longer has the same amplitude and inverse phase as those of the noise, consequently the noise cancellation effect is reduced.

In order to suppress such reduction in noise cancellation effect due to the transfer pathway-related issue, a typical Filtered-X algorithm determines the transfer pathway of the control sound in advance, and corrects the control sound according to the determined transfer pathway during generation of the control sound so as to resolve the above problem.

However, as the transfer pathway is longer, the filter tap number of the target transfer pathway is larger to increase the number of arithmetic operations. In addition, in the case where the sound propagation speed varies due to change in temperature or the like, an error between the determined transfer pathway and the actual transfer pathway becomes larger if the transfer pathway is long, thereby reducing the noise cancellation effect.

Accordingly, in order to suppress the reduction in noise cancellation effect due to the transfer pathway-related issue, it is preferable that the control speaker 181 and the noise-cancellation effect detecting microphone 191 be disposed close to each other. Disposing the control speaker 181 and the noise-cancellation effect detecting microphone 191 in this manner makes it possible to shorten a transfer distance of the control sound and to cause the change in the amplitude characteristic and the phase characteristic to be much smaller. In other words, by disposing the control speaker 181 and the noise-cancellation effect detecting microphone 191 close to each other, it is possible to superpose the sound waves with high precision so as to obtain a high noise cancellation effect.

Therefore, in the indoor unit 100 according to Embodiment 74, the control speaker 181 is provided on the downstream side of the heat exchanger 50, where the noise-cancellation effect detecting microphone 191 is also provided. This makes it possible to shorten the transfer pathway through which the control sound discharged from the control speaker 181 reaches the control point (arrangement position of the noise-cancellation effect detecting microphone 191) so as to obtain a high noise cancellation effect.

Moreover, in the indoor unit 100, since the fan 20 can be disposed on the upstream side of the heat exchanger 50, it is possible to dispose the fan 20 as a noise source at the upper side within the casing 1. This makes it possible for the transfer pathway through which noise from the fan 20 is discharged from the air outlet 3 to have a longer length. Accordingly, disposing the control speaker 181 on the downstream side of the heat exchanger 50 makes it possible for a distance between the noise detecting microphone 161 and the control speaker 181 to be longer.

In other words, because a computing time during which control sound is generated in response to the detected sound by the noise detecting microphone 161 can be longer, a high speed computation is not needed. Therefore, costs of the indoor unit 100 according to Embodiment 1 can be reduced because the specification criteria of the A/D converter 152, a digital signal processor for carrying out the signal processing and the like can be lowered.

In the case where the noise detecting microphone 161, the control speaker 181 and the noise-cancellation effect detecting microphone 191 are provided on the downstream side of the heat exchanger 50, condensation can occur due to direct exposure to cool air; therefore, those that have experienced waterproof processing may be preferably used.

As described thus far, in the indoor unit 100 according to Embodiment 74, of the components included in the noise cancellation mechanism, at least the control speaker 181 and the noise-cancellation effect detecting microphone 191 are provided on the downstream side of the heat exchanger 50. With this, in the indoor unit 100, influence of the air flow turbulence caused to occur by the fan 20 on the noise-cancellation effect detecting microphone 191 can be reduced, and the length of the transfer pathway through which the control sound discharged from the control speaker 181 reaches the control point (arrangement position of the noise-cancellation effect detecting microphone 191) can be shortened.

Accordingly, the indoor unit 100 can control the noise with high precision using the noise cancellation mechanism. Further, in the indoor unit 100 according to Embodiment 74, the noise detecting microphone 161 is also provided on the downstream side of the heat exchanger 50. With this, influence of the air flow turbulence caused to occur by the fan 20 on the noise detecting microphone 161 and the noise-cancellation effect detecting microphone 191 can be reduced so as to enhance the coherence between the two microphones, whereby a high noise cancellation effect can be obtained.

Furthermore, in the indoor unit 100 according to Embodiment 74, the fan 20 can be provided at a position at the upper side within the casing 1, which is on the upstream side of the heat exchanger 50. With this, it is possible to lengthen the transfer pathway of the noise from the fan 20 so that a longer distance can be ensured between the noise detecting microphone 161 and the control speaker 181. Accordingly, costs of the indoor unit 100 can be reduced because a high speed arithmetic operation is not needed.

Embodiment 75

With a noise cancellation mechanism that will be described below, the same noise cancellation effect can be obtained as in Embodiment 74. Note that, items in Embodiment 75 that are not particularly described are the same as in Embodiment 1 to Embodiment 74, and functions and structures that are the same as in Embodiment 1 to Embodiment 74 are given the same reference characters in the following description.

FIG. 166 is a vertical sectional view showing an indoor unit according to Embodiment 75 of the present invention.

The indoor unit 100 according to Embodiment 75 differs from the indoor unit 100 according to Embodiment 74 in that a different microphone is used in the active noise cancellation. More specifically, the indoor unit 100 according to Embodiment 74 uses the two microphones (the noise detecting microphone 161 and the noise-cancellation effect detecting microphone 191) to generate control sound with the signal processor 201.

Meanwhile, in the indoor 100 according to Embodiment 75, the noise detecting microphone 161 and the noise-cancellation effect detecting microphone 191 are replaced with the noise detection/noise-cancellation effect detecting microphone 211, which is a single microphone. In addition, since the different microphone is used in the active noise cancellation, the method of signal processing is also different, whereby the indoor unit 100 according to Embodiment 75 uses the signal processor 204, which is different from the signal processor 201 used in the indoor unit 100 according to Embodiment 74.

In other words, the indoor unit 100 according to Embodiment 75 includes a noise cancellation mechanism that is structured of the control speaker 181, the noise detection/noise-cancellation effect detecting microphone 211 and the signal processor 204.

More specifically, the noise detection/noise-cancellation effect detecting microphone 211 is installed in the vicinity of the air outlet 3 on the downstream side of the heat exchanger 50 (e.g., a part on the nozzle 6 forming the air outlet 3). This noise detection/noise-cancellation effect detecting microphone 211 detects sound obtained after making the control sound discharged from the control speaker 181 interfere with the operation sound (noise) of the indoor unit 100 including the air-blowing sound of the fan 20.

The control speaker 181 that outputs the control sound against the noise is provided on a side of the casing 1 (more specifically, in the vicinity of the noise detection/noise-cancellation effect detecting microphone 211 and also in the lower side of the heat exchanger 50). The control speaker 181 and the noise detection/noise-cancellation effect detecting microphone 211 are disposed in the lower side of the heat exchanger 50 so as to face to the center of the air passage from a wall of the casing 1.

Note that the arrangement position of the noise detection/noise-cancellation effect detecting microphone 211 is not limited to the part on the nozzle 6 of the air outlet 3, and may be any position as far as the position is at the opening of the air outlet 3. For example, the noise detection/noise-cancellation effect detecting microphone 211 may be installed on a bottom portion or a side of the air outlet 3. Further, in Embodiment 75, although the control speaker 181 is installed on the side of the casing 1, the control speaker 181 may be installed on the front or back surface of the casing 1.

An output signal of the noise detection/noise-cancellation effect detecting microphone 211 is input to the signal processor 204 that generates a signal (control sound) for controlling the control speaker 181. The structure of the signal processor 204 is completely the same as that of the indoor unit 100 according to Embodiment 73.

In order to obtain a large noise cancellation effect with the noise cancellation mechanism according to Embodiment 75, it is necessary that the sound detected by the noise detection/noise-cancellation effect detecting microphone 211 does not detect a pressure fluctuation component that is generated due to the air flow turbulence.

Accordingly, in the indoor unit 100 according to Embodiment 75, the noise detection/noise-cancellation effect detecting microphone 211 is disposed on the downstream side of the heat exchanger 50. In the indoor unit 100, since the fan 20 is disposed on the upstream side of the heat exchanger 50, it is possible to dispose the heat exchanger 50 between the fan 20 and the noise detection/noise-cancellation effect detecting microphone 211.

With the noise detection/noise-cancellation effect detecting microphone 211 being disposed in this manner, the air flow turbulence caused to occur by the fan 20 passes through between the fins 56 of the heat exchanger 50 to be suppressed, whereby the influence of the air flow turbulence on the noise detection/noise-cancellation effect detecting microphone 211 can be reduced; as a result, a high noise cancellation effect can be obtained.

The noise cancellation effect is also influenced by a distance from the arrangement position of the control speaker 181 to the arrangement position of the noise detection/noise-cancellation effect detecting microphone 211 (control point). In other words, the length of the transfer pathway through which the control sound discharged from the control speaker 181 reaches the control point (arrangement position of the noise detection/noise-cancellation effect detecting microphone 211), has influence on the noise cancellation effect.

More specifically, the amplitude characteristic and the phase characteristic of the control sound discharged from the control speaker 181 are changed in the transfer pathway through which the control sound reaches the control point (arrangement position of the noise detection/noise-cancellation effect detecting microphone 211). In the case where the amplitude characteristic and the phase characteristic are changed in the transfer pathway, the control sound no longer has the same amplitude and inverse phase as those of the noise, consequently the noise cancellation effect is reduced.

In order to suppress such reduction in noise cancellation effect due to the transfer pathway-related issue, a typical Filtered-X algorithm determines the transfer pathway of the control sound in advance, and corrects the control sound according to the determined transfer pathway during generation of the control sound so as to resolve the above problem.

However, as the transfer pathway is longer, the filter tap number of the target transfer pathway is larger to increase the number of arithmetic operations. In addition, in the case where the sound propagation speed varies due to change in temperature or the like, an error between the determined transfer pathway and the actual transfer pathway becomes larger if the transfer pathway is long, thereby reducing the noise cancellation effect.

Accordingly, in order to suppress the reduction in noise cancellation effect due to the transfer pathway-related issue, it is preferable that the control speaker 181 and the noise detection/noise-cancellation effect detecting microphone 211 be disposed close to each other.

Disposing the control speaker 181 and the noise detection/noise-cancellation effect detecting microphone 211 in this manner makes it possible to shorten the transfer distance of the control sound and to cause the change in the amplitude characteristic and the phase characteristic to be much smaller. In other words, by disposing the control speaker 181 and the noise detection/noise-cancellation effect detecting microphone 211 close to each other, it is possible to superpose the sound waves with high precision so as to obtain a high noise cancellation effect.

Accordingly, in the indoor unit 100 according to Embodiment 75, the control speaker 181 is provided on the downstream side of the heat exchanger 50, where the noise detection/noise-cancellation effect detecting microphone 211 is also provided. This makes it possible to shorten the transfer pathway through which the control sound discharged from the control speaker 181 reaches the control point (arrangement position of the noise detection/noise-cancellation effect detecting microphone 211) to obtain a high noise cancellation effect.

In the case where the control speaker 181 and the noise detection/noise-cancellation effect detecting microphone 211 are provided on the downstream side of the heat exchanger 50, condensation can occur due to direct exposure to cool air; therefore, those that have experienced waterproof processing may be preferably used.

As described thus far, in the indoor unit 100 according to Embodiment 75, the heat exchanger 50 is provided on the downstream side of the fan 20. Further, in the indoor unit 100, of the components included in the noise cancellation mechanism, at least the control speaker 181 and the noise detection/noise-cancellation effect detecting microphone 211 are provided on the downstream side of the heat exchanger 50.

With this, in the indoor unit 100, the influence of the air flow turbulence caused to occur by the fan 20 on the noise detection/noise-cancellation effect detecting microphone 211 can be reduced, and the length of the transfer pathway through which the control sound discharged from the control speaker 181 reaches the control point (arrangement position of the noise detection/noise-cancellation effect detecting microphone 211), can be shortened. Accordingly, the indoor unit 100 can control the noise with high precision using the noise cancellation mechanism.

Embodiment 76

A noise detecting microphone being disposed on a boss

For example, the noise cancellation mechanism may be disposed at a position described below. It is to be noted that functions and structures in Embodiment 76 that are the same as in Embodiment 1 to Embodiment 75 are given the same reference characters in the following description.

FIG. 167 is a vertical sectional view showing an indoor unit according to Embodiment 76 of the present invention. The right side of FIG. 167 corresponds to the front side of the indoor unit 100.

In the indoor unit 100 according to Embodiment 76, the heat exchanger 50 is anchored to the inside of the casing 1 with a heat exchanger retaining fitting 58. As indicated by outline arrows in FIG. 167, when the fan 20 is driven, room air is sucked into the air passage in the indoor unit 100 through the air inlet 2, the sucked air is cooled or heated by the heat exchanger 50 positioned under the fan 20, and the cooled or heated air is blown into the room through the air outlet 3.

FIG. 168 is a bottom view showing a fan (viewed from the lower side of FIG. 167) according to Embodiment 76 of the present invention. Meanwhile, FIG. 169 is a sectional view of the fan 20 taken along the M-M line in FIG. 168.

The fan 20 is equipped with the bladed wheel 25 called a rotor blade. A fan motor as a power source of the bladed wheel 25 is provided in the fixing member 17. The fixing member 17 is connected with the casing 1 and the like via the support member 18. A shaded part in FIG. 168 corresponds to an inner perimeter part of the blade of the fan 20 (in other words, an inscribed circle in contact with the inner perimeter of the blade of the bladed wheel 25).

The fan motor as the power source of the bladed wheel 25 and the boss 21 of the bladed wheel 25 are connected with each other by the rotation shaft 20a. With this, rotation of the fan motor is transmitted to the bladed wheel 25 via the rotation shaft 20a, whereby the bladed wheel 25 is rotated. The rotation of the bladed wheel 25 causes the air to flow (blow) to a direction indicated by the outline arrow in FIG. 169. Parts indicated by diagonal lines in FIG. 169 are the parts that rotate during the driving of the fan 20.

On the other hand, parts without diagonal lines are the parts that do not rotate during the driving of the fan 20 (to rephrase, fixed members). The inner perimeter part of the blade of the fan 20 (in other words, an inscribed circle in contact with the inner perimeter of the blade of the bladed wheel 25) is the perimeter of the boss 21. Note that, in Embodiment 76, the diameter of the fixing member 17 is set to be substantially the same as that of the boss 21.

Referring to FIG. 167 again, the noise detecting microphone 161 as the noise detecting device that detects the operation sound of the indoor unit 100 (noise) including the air-blowing sound of the fan 20, is attached to the fixing member 17 which corresponds to the inner perimeter of the blade of the fan 20. In other words, the noise detecting microphone 161 is disposed in a cylinder area (hereinafter, called a cylinder area S) formed by extending the inscribed circle in contact with the inner perimeter of the blade of the bladed wheel 25 to the rotation axis direction of the bladed wheel 25.

As shown in FIG. 169, the fixing member 17 is structured to be independent of the bladed wheel 25 that rotates when the fan 20 is driven, so that the fixing member 17 does not rotate. Accordingly, the noise detecting microphone 161 also does not rotate when the fan 20 is driven. Further, on the lower side of the noise detecting microphone 161, the control speaker 181 as the control sound output device that outputs control sound against noise is so disposed as to face to the center of the air passage from the wall of the casing 1.

Furthermore, on a wall at the lower end of the indoor unit 100, the noise-cancellation effect detecting microphone 191 as the noise cancellation effect detection device that detects noise that comes out from the air outlet 3 so as to detect the noise cancellation effect, is installed at a position on the top portion of the air outlet 3, for example. This noise-cancellation effect detecting microphone 191 is installed facing to a direction which is opposite to the direction of the flow passage.

It is to be noted that the arrangement position of the noise-cancellation effect detecting microphone 191 is not limited to the position on the top portion of the air outlet 3, and may be at any position as far as the position is at the opening of the air outlet 3. For example, the noise-cancellation effect detecting microphone 191 may be installed on a bottom portion or a side of the air outlet 3.

In addition, the noise-cancellation effect detecting microphone 191 is not necessarily needed to be provided facing to precisely the opposite direction of the flow passage. It is sufficient that the noise-cancellation effect detecting microphone 191 is provided facing to exterior of the indoor unit 100 (casing 1). In other words, the noise-cancellation effect detecting microphone 191 may be disposed at a position where the noise discharged into the room can be detected.

Output signals of the noise detecting microphone 161 and the noise-cancellation effect detecting microphone 191 are input to a signal processor 207 as the control sound generation device that generates a signal (control sound) for controlling the control speaker 181. The noise cancellation mechanism of the indoor unit 100 includes the noise detecting microphone 161, the control speaker 181, the noise-cancellation effect detecting microphone 191 and the signal processor 207.

Next, the operation of the indoor unit 100 will be described. When the indoor unit 100 is operated, the bladed wheel 25 of the fan 20 rotates to suck in room air from the upper side of the fan 20 and an air flow is generated by the sucked air being sent to the lower side of the fan 20. With this, operation sound (noise) is generated in the vicinity of the air outlet of the fan 20 and the operation sound propagates to the downstream side.

Turbulence of the air flow is caused to occur in the vicinity of the air outlet 3 of the fan 20 due to the rotation of the bladed wheel 25. Since the air from the fan 20 is blown from the air outlet of the fan 20 to the outer side thereof, the air hits against a side wall of the casing 1 of the indoor unit 100 so as to cause additional turbulence of the air flow to occur. Accordingly, a larger pressure fluctuation occurs at the side wall of the casing 1 due to the air flow turbulence. In contrast, in an area inside of the inner perimeter of the blade of the fan 20 (cylinder area S), the air flow turbulence is small in size and the pressure fluctuation affected by the air flow is also small.

In order to confirm the above discussion, an experiment result in which an air flow that was blown from the fan 20 was visualized is shown in FIG. 171. In the experiment, the fan 20 was attached to the right side of a duct-shaped tube, white smoke was made to stay inside the tube, and then the fan 20 was driven so as to take a picture as shown in FIG. 171.

When focusing on the vicinity of the air outlet of the fan 20, it was found that, in the areas other than the vicinity of the fixing member 17 and the cylinder area S, the white smoke was flown by the air flow to be thinner in density compared to the time when it was initially made to stay.

On the other hand, in the vicinity of the fixing member 17 of the fan 20 and in the cylinder area S, the influence of the air flow was small so that the white smoke stayed therein; therefore, it was found that the vicinity of the fixing member 17 of the fan 20 and the cylinder area S are unlikely to be affected by the air flow so that the pressure fluctuation caused by the air flow turbulence was small in size.

Air that is blown by the fan 20 is sent to the heat exchanger 50 while passing through the air passage. For example, during cooling operation, the refrigerant is transferred to the heat exchanger 50 through a refrigerant pipe connected to the outdoor unit (not shown). The air sent to the heat exchanger 50 is cooled by the refrigerant flowing through the heat exchanger 50 and the cold air is directly discharged to the indoor side from the air outlet 3.

Next, a method of suppressing the operation sound of the indoor unit 100 will be described.

FIG. 170 is a block diagram showing a signal processor according to Embodiment 76 of the present invention.

The operation sound (noise) of the indoor unit 100 including the air-blowing sound of the fan 20 is detected by the noise detecting microphone 161 attached to the fixing member 17 of the fan 20. The noise detected by the noise detecting microphone 161 is converted to a digital signal via the microphone amplifier 151 and the A/D converter 152, and is input to the FIR filter 158 and the LMS algorithm 159.

The tap coefficient of the FIR filter 158 is sequentially updated by the LMS algorithm 159. In the LMS algorithm 159, like in the Expression (1) according to Embodiment 1, based on ($h (n+1) = h (n) + 2 \cdot \mu \cdot e (n) \cdot x (n)$), the optimum tap coefficient is updated so that the error signal "e" comes closer to zero.

With the tap coefficient having been updated by the LMS algorithm 159 in the above-described manner, the digital signal that has passed through the FIR filter 158 is converted to an analog signal by the D/A converter 154, amplified by the amplifier 155, and discharged from the control speaker 181 as the control sound into the air passage in the indoor unit 100.

Meanwhile, the noise-cancellation effect detecting microphone 191 that is installed on the top portion of the air outlet 3 of the indoor unit 100 facing to the opposite direction of the flow passage, detects sound obtained after making the control sound discharged from the control speaker 181 interfere with the noise that propagates passing through the air passage from the fan 20 and is discharged from the air inlet 3 into the room. The signal detected by the noise-cancellation effect detecting microphone 191 is converted to the digital signal and averaged by a weighting means 153.

FIG. 172 is a block diagram showing a weighting means circuit according to Embodiment 76 of the present invention. The weighting means 153 is structured with an integrator that includes a multiplier 121 that multiplies an input signal by a weighting coefficient, an adder 122, a delay element 123 for one sampling and a multiplier 124.

In Embodiment 76, the weighting coefficient of the multiplier 121 can be set from exterior according to the installation environment or the like.

For example, in an environment where disturbance is large so that the operation is unstable, the weighting coefficient of the multiplier 121 may be set to be smaller. On the other hand, in an environment where the disturbance is small, the weighing coefficient of the multiplier 121 may be set to be larger. Through this, the sensitivity to change in environment can be varied.

Note that the averaging operation by the weighting means 153 may not be carried out until the LMS algorithm 159 becomes stable. This is because the noise has not been sufficiently reduced during the time when the LMS algorithm 159 is unstable so that the output value of the weighting means 153 can become outrageous in some case. In addition, the output value of the weighting means 153 may be reset if the value exceeds a set value.

The signal that is averaged in the manner described above is processed as the error signal "e" of the LMS algorithm 159. Feedback control is carried out so that the error signal "e" comes closer to zero, and the tap coefficient of the FIR filter 158 is appropriately updated. This makes it possible to suppress the noise near the air outlet 3 by the control sound that has passed through the FIR filter 158.

Because, of the noise from the indoor unit 100, the noise that has been discharged from the air outlet 3 into the room is felt by a person, by making the noise-cancellation effect detecting microphone 191 face to the room opposite to the flow passage, the noise discharged into the room can be detected. In other words, by installing the noise-cancellation effect detecting microphone 191 on the top portion of the air outlet 3 while making the microphone face to the opposite direction of the flow passage, it is possible to detect sound having high coherence with the noise discharged into the room.

Further, since the air flow does not directly hit the noise-cancellation effect detecting microphone 191, the microphone does not detect wind noise caused by the air flow. Meanwhile, if the noise-cancellation effect detecting microphone 191 is made to face to the inside of the flow passage, noise in the flow passage is detected. This makes it not possible to detect change in sound characteristics at a position where the sound is discharged from the air outlet; therefore, the characteristics of the sound detected by the noise-cancellation effect detecting microphone 191 are different from those of the noise in the room.

This lowers the coherence between the sound detected by the noise-cancellation effect detecting microphone 191 and the sound discharged into the room. In addition, since the air flow directly hits the noise-cancellation effect detecting microphone 191, the noise-cancellation effect detecting microphone 191 detects the wind noise so as to further lower the coherence.

Further, since other sound components than the noise generated from the fan 20 are included in the sound in the room, stability of the feedback control is lowered due to these other sound components. Accordingly, there is disposed the weighting means 153 at a previous stage of the feedback control so as to average the sound components other than the noise. This makes it possible to cancel other uncorrelated components than the noise so as to stabilize the operation of feedback control. That is to say, the coherence between the noise detecting microphone 161 and the noise-cancellation effect detecting microphone 191 can be enhanced.

In Embodiment 76, since the noise detecting microphone 161 is attached to the fixing member 17 of the fan 20, the air flow does not directly hit the noise detecting microphone 161. This makes the noise detecting microphone 161 unlikely to detect a pressure fluctuation component due to the air flow turbulence. Therefore, it is possible for the noise detecting microphone 161 to detect sound having high coherence with the noise of operation sound of the fan 20. Moreover, since the noise-cancellation effect detecting microphone 191 is installed on the top portion of the air outlet 3 facing to the opposite direction of the flow passage, the air flow does not directly hit the noise-cancellation effect detecting microphone 191 so that the noise-cancellation effect detecting microphone 191 is not affected by the air flow.

In addition, the noise-cancellation effect detecting microphone 191 can detect only the noise that is discharged into the room, the noise-cancellation effect detecting microphone 191 can detect noise having high coherence with the noise which a person in the room actually hear. Further, since the sound detected by the noise-cancellation effect detecting microphone 191 is averaged by the weighting means 153 and the feedback control is carried out, sound components other than the noise from the indoor unit 100 that are included in the sound detected by the noise-cancellation effect detecting microphone 191, can be averaged and cancelled.

This makes it possible to obtain high coherence between the detected sound of the noise detecting microphone 161 and the detected sound of the noise-cancellation effect detecting microphone 191. As described thus far, high coherence can be obtained among the noise generated from the fan 20, the sound detected by the noise detecting microphone 161, the sound detected by the noise-cancellation effect detecting microphone 191 and the noise in the room into which the noise is discharged from the indoor unit 100, whereby a high noise cancellation effect can be obtained.

Hereinafter, a result of experiment will be described. The experiment is such that the noise detecting microphone 161 is actually attached to the inside of the inner perimeter of the blade of the fan 20 (cylinder area S) and the coherence between the noise detecting microphone 161 and the noise-cancellation effect detecting microphone 191 is measured.

FIG. 173 is a diagram showing a coherence property between the sound detected by the noise detecting microphone 161 and the sound detected by the noise-cancellation effect detecting microphone 191 when the fan 20 is driven with the noise detecting microphone 161 being installed outside of the cylinder area S. Meanwhile, FIG. 174 is a diagram showing a coherence property between the sound detected by the noise detecting microphone 161 and the sound detected by the noise-cancellation effect detecting microphone 191 when the fan 20 is driven with the microphone being installed inside of the cylinder area S. When comparing the FIG. 173 with FIG. 174, it is obvious that the coherence is higher when the noise detecting microphone 161 is installed inside of the cylinder area S.

Further, by attaching the noise detecting microphone 161 to the fixing member 17 of the fan 20, the noise detecting microphone 161 can be easily installed without increase of the number of parts and a precise mounting mechanism is not needed. Furthermore, disposing the noise detecting microphone 161 on the fixing member 17 of the fan 20 makes it possible to shorten a distance between the fan 20 and the noise detecting microphone 161, whereby the indoor unit 100 can be short in height.

In Embodiment 76, the noise detecting microphone 161 is disposed on the fixing member 17; however, natural machinery vibration with the rotation of the fan 20 is transmitted to the fixing member 17, and consequently the noise detecting microphone 161 may detect the vibration in some case. In this case, the coherence between the noise detecting microphone 161 and the noise-cancellation effect detecting microphone 191 may be partially lowered in some case.

In such case, the noise detecting microphone 161 may be disposed at a position other than the fixing member 17 within the cylinder area S. For example, as show in 175, the noise detecting microphone 161 may be disposed at a position on the heat exchanger 50 within the range of the cylinder area S. Further, for example, as shown in FIG. 176, the noise detecting microphone 161 may be disposed at a position under the heat exchanger retaining fitting 58 within the range of the cylinder area S.

By disposing the noise detecting microphone 161 in this manner, the coherence between noise detecting microphone 161 and the noise-cancellation effect detecting microphone 191 can be further enhanced to obtain a higher noise cancellation effect in comparison with the case in which the noise detecting microphone 161 is disposed on the fixing member 17.

As shown in FIG. 177, the nose detection microphone 161 may be covered with a wall member 270. Since the air flow is blocked by the wall member 270, influence of the air flow is further suppressed so as to obtain a higher noise cancellation effect. In FIG. 177, although the wall member 270 is formed substantially cylinder-shaped, the shape of the wall member 270 can be determined arbitrarily.

Moreover, it is advisable that the noise detecting microphone 161 be covered with the wall member 270 in the case where the noise detecting microphone 161 is installed on the heat exchanger 50 or the heat exchanger retaining fitting 58. Influence of the air flow is further suppressed so as to obtain a higher noise cancellation effect.

The noise-cancellation effect detecting microphone 191 that is installed on the top portion of the air outlet 3 facing to the opposite direction of the flow passage, may be covered with the wall member. This blocks the air flow to prevent influence of the air flow on the noise-cancellation effect detecting microphone 191, and in turn a higher noise cancellation effect can be obtained.

In Embodiment 76, the FIR filter 158 and the LMS algorithm 159 are used in the signal processor 207. However, any adaptive signal processing circuit can be used as long as the circuit can make the sound detected by the noise-cancellation effect detecting microphone 191 come closer to zero; accordingly, a processing circuit employing the filtered -X algorithm, which is generally used in the active noise cancellation method, may be used.

Further, the weighting means 153 is not needed to be an integrator, and any means can be employed as long as the means can carry out the averaging operation. Moreover, the signal processor 207 may not be structured to use the adaptive signal processing, but may be structured to use a fixed tap coefficient so as to generate control sound. In addition, the signal processor 207 may not be a digital signal processing circuit, but may be an analog signal processing circuit.

As described above, in the indoor unit 100 according to Embodiment 76, the noise detecting microphone 161 as the noise detecting device is provided on the fixed member of the fan 20 within the cylinder area S. Accordingly, effects of the air flow from the air outlet of the fan 20 can be reduced and sound with high coherence with noise can be detected, thereby enabling active noise cancellation with high precision. In addition, because the noise detecting microphone 161 can be disposed without changing the mechanism of the fan 20 and without increasing the number of parts of the indoor unit 100, it is possible to realize the indoor unit 100 having a high degree of freedom of installation.

Note that the fixed member of the fan 20 is not limited to the fixing member 17; of the components included in the fan 20, if there exits an fixed member such that at least part of the member is disposed within the cylinder area S, the noise detecting microphone 161 may be provided at a position of the fixed member within the range of the cylinder area S.

In the indoor unit 100 according to Embodiment 76, the noise detecting microphone 161 as the noise detecting device is provided at a position on the downstream side of the fan 20 within the cylinder area S. Accordingly, effects of the air flow from the air outlet of the fan 20 can be reduced and sound with high coherence with noise can be detected, thereby enabling active noise cancellation with high precision.

In addition, because the noise detecting microphone 161 can be disposed without changing the mechanism of the fan 20 and without increasing the number of parts of the indoor unit 100, it is possible to realize the indoor unit 100 having a high degree of freedom of installation. Moreover, because the noise detecting microphone 161 does not detect the natural machinery vibration with the rotation of the fan 20, it is possible to carry out the active noise cancellation with higher precision than in the case where the noise detecting microphone 161 is provided on the fixed member of the fan 20.

In the case where the noise detecting microphone 161 is provided on the downstream side of the fan 20, the component on which the noise detecting microphone 161 is provided is not limited to the heat exchanger 50 or the heat exchanger retaining fitting 58. If there exists a component such that at least part of the component is disposed on the downstream side of the fan 20 within the cylinder area S, the noise detecting microphone 161 may be disposed on a position of the component within the range of the cylinder area S.

In the indoor unit 100 according to Embodiment 76, the noise-cancellation effect detecting microphone 191 as the noise cancellation effect detection device is provided at the opening of the air outlet 3 and is made to face to exterior of the indoor unit 100. With this, noise discharged into the room can be detected without being affected by the air flow.

Accordingly, high coherence between the noise in the room discharged from the indoor unit 100 and the sound detected by the noise-cancellation effect detecting microphone 191 can be obtained. Therefore, the active noise cancellation can be carried out with high precision on the noise in the room discharged from the indoor unit 100.

In the indoor unit 100 according to Embodiment 76, the signal processor 207 as the control sound generation device includes a processing circuit in which a detected result detected by the noise-cancellation effect detecting microphone 191 as the noise cancellation effect detection device is weighted and feedback control is carried out.

Accordingly, sound components other than the noise from the indoor unit 100 that are included in the sound detected by the noise-cancellation effect detecting microphone 191, can be averaged and cancelled. This makes it possible to detect sound with high coherence between the noise detecting microphone 161 and the noise-cancellation effect detecting microphone 191, whereby the active noise cancellation can be carried out with higher precision.

Further, in the indoor unit 100 according to Embodiment 76, the noise detecting microphone 161 is disposed on the fixing member 17 of the fan 20 within the range of cylinder area S. Accordingly, effects of the air flow from the air outlet of the fan 20 can be reduced and sound with high coherence with noise can be detected, thereby enabling active noise cancellation with high precision. Furthermore, because the noise detecting microphone 161 can be disposed without changing the mechanism of the fan 20 and without increasing the number of parts of the air-conditioning apparatus, it is possible to realize the indoor unit 100 having a high degree of freedom of installation.

Moreover, in the indoor unit 100 according to Embodiment 76, the noise detecting microphone 161 is provided on the heat exchanger 50 within the range of the cylinder area S. Accordingly, effects of the air flow from the air outlet of the fan 20 can be reduced and sound with high coherence with noise can be detected, thereby enabling active noise cancellation with high precision.

Furthermore, because the noise detecting microphone 161 can be disposed without changing the mechanism of the fan 20 and without increasing the number of parts of the air-conditioning apparatus, it is possible to realize the indoor unit 100 having a high degree of freedom of installation. Moreover, because the noise detecting microphone 161 does not detect the natural machinery vibration with the rotation of the fan 20, it is possible to carry out the active noise cancellation with higher precision than in the case where the noise detecting microphone 161 is provided on the fixed member of the fan 20.

Further, in the indoor unit 100 according to Embodiment 76, the noise detecting microphone 161 is provided on the heat exchanger retaining fitting 58 within the range of the cylinder area S. Accordingly, effects of the air flow from the air outlet of the fan 20 can be reduced and sound with high coherence with noise can be detected, thereby enabling active noise cancellation with high precision.

Furthermore, because the noise detecting microphone 161 can be disposed without changing the mechanism of the fan 20 and without increasing the number of parts of the air-conditioning apparatus, it is possible to realize the indoor unit 100 having a high degree of freedom of installation. Moreover, because the noise detecting microphone 161 does not detect the natural machinery vibration with the rotation of the fan 20, it is possible to carry out the active noise cancellation with higher precision than in the case where the noise detecting microphone 161 is provided on the fixed member of the fan 20.

In the indoor unit 100 according to Embodiment 76, the noise detecting microphone 161 is covered with the wall member 270. With this, the air flow is blocked so that the noise detecting microphone 161 is further prevented from being affected by the air flow; as a result, a higher noise cancellation effect can be obtained.

Further, in the indoor unit 100 according to Embodiment 76, the noise-cancellation effect detecting microphone 191 is covered with the wall member. With this, the air flow is blocked so that the noise-cancellation effect detecting microphone 191 is further prevented from being affected by the air flow; as a result, a higher noise cancellation effect can be obtained.

Embodiment 77

In Embodiment 77, the indoor unit 100 will be described, in which the noise detection/noise-cancellation effect detecting microphone 211 is placed as the noise detection/noise cancellation effect detection device that integrally combines the noise detecting microphone 161 and the noise-cancellation effect detecting microphone 191 in Embodiment 76. Items in Embodiment 77 that are not particularly described are the same as in Embodiment 76, and functions and structures that are the same as in Embodiment 76 are given the same reference characters in the following description.

FIG. 178 is a vertical sectional view showing an indoor unit according to Embodiment 77 of the present invention. FIG. 178 shows the right side in the figure as the front side of the indoor unit 100.

In the indoor unit 100 according to Embodiment 77, the heat exchanger 50 is fixed within the casing 1 by the heat exchanger retaining fitting 58. As shown by the outline arrows in FIG. 178, when the fan 20 operates, room air is sucked into the air passage within the indoor unit 100 from the air inlet 2 and the suction air is blown out to the indoor side from the air outlet 3 after cooling or heating the suction air by the heat exchanger 50 located at the bottom portion of the fan 20.

The indoor unit 100 according to Embodiment 77 differs from the indoor unit 100 according to Embodiment 76 in the following points. That is, the indoor unit 100 according to Embodiment 76 generates control sound in the signal processor 207 using the two microphones, that is, the noise detecting microphone 161 and the noise-cancellation effect detecting microphone 191 for performing active noise cancellation.

On the other hand, in the indoor unit 100 according to Embodiment 77, these microphones are replaced with the noise detection/noise-cancellation effect detecting microphone 211, which is a single microphone. Therefore, because the methods of signal processing are different from each other, contents of the signal processor 204 are different from those of the signal processor 201. At the side wall part of the casing 1 of the indoor unit 100, the control speaker 181 that outputs control sound for noise is placed so as to face the center of the air passage from the wall.

In the range within the cylindrical area S of the fixing member 17, the noise detection/noise-cancellation effect detecting microphone 211 is placed that detects operation sound (noise) of the indoor unit 100 including air-sending sound of the fan 20 after being interfered with control sound discharged from the control speaker 181.

The fixing member 17 is structured so that the rotating bladed wheel 25 is independent and does not rotate during operation of the fan 20. Accordingly, the noise detection/noise-cancellation effect detecting microphone 211 also does not rotate during operation of the fan 20 as a result. The output signal of the noise detection/noise-cancellation effect detecting microphone 211 is input to the signal processor 204, which is the control sound generation device for generating a signal (control sound) to control the control speaker 181.

The noise cancellation mechanism of the indoor unit 100 includes the noise detection/noise-cancellation effect detecting microphone 211, the control speaker 181, and the signal processor 204. The signal processor 204 has quite the same structure as in FIG. 160 described in Embodiment 73.

Next, the operation of the indoor unit 100 will be described. When the indoor unit 100 operates, the bladed wheel 25 of the fan 20 rotates, room air is sucked from the upper side of the fan 20, and the air is sent to the lower side of the fan 20, thereby generating an air flow. With this, operation sound (noise) is generated in the vicinity of the air outlet of the fan 20 and the operation sound propagates to the downstream side.

In the vicinity of the air outlet of the fan 20, as in Embodiment 76, air flow disturbance is caused by the rotation of the bladed wheel 25. Since the air blown out of the fan 20 is blown out from the air outlet of the fan 20 toward the outside, the air hits the side wall of the cabinet of the indoor unit 100 and further air flow disturbance is caused. This increases pressure fluctuation by the air flow disturbance at the side wall of the indoor unit 100. In comparison to this, in the area (cylindrical area S) inside the blade inner perimeter of the fan 20, the air flow is less disturbed and pressure fluctuation by air flow is small.

Air that is blown by the fan 20 is sent to the heat exchanger 50 while passing through the air passage. For example, during cooling operation, the refrigerant is transferred to the heat exchanger 50 through a refrigerant pipe connected to the outdoor unit (not shown). The air sent to the heat exchanger 50 is cooled by the refrigerant flowing through the heat exchanger 50 and the cold air is directly discharged to the indoor side from the air outlet 3.

The suppression method of operation sound of the indoor unit 100 is quite the same as the method described in Embodiment 73 and operates such that control sound is output so as to bring noise detected by the noise detection/noise-cancellation effect detecting microphone 211 close to zero and as a result, noise in the noise detection/noise-cancellation effect detecting microphone 211 is suppressed.

As above, in Embodiment 77, in the indoor unit 100 to which the active noise cancellation method is applied, since the noise detection/noise-cancellation effect detecting microphone 211 is attached in the range within the cylindrical area S of the fixing member 17, the air flow does not hit directly and detection of the pressure fluctuation component generated by the air flow disturbance can be reduced. Accordingly, sound with high coherence with noise that is operation sound of the fan 20 can be detected and large noise cancellation effects can be obtained.

Further, by attaching the noise detection/noise-cancellation effect detecting microphone 211 to the fixing member 17 of the fan 20, the noise detection/noise-cancellation effect detecting microphone 211 can be attached easily without newly increasing the number of parts and a precise attaching mechanism is no longer necessary. By installing the noise detection/noise-cancellation effect detecting microphone 211 to the fixing member 17 of the fan 20, the distance between the fan 20 and the noise detection/noise-cancellation effect detecting microphone 211 may be short, and therefore, the height of the indoor unit 100 can be reduced.

In Embodiment 77, the noise detection/noise-cancellation effect detecting microphone 211 is installed to the fixing member 17, but, there is a case where the natural mechanical vibration caused by the rotation of the fan 20 is transmitted to the noise detection/noise-cancellation effect detecting microphone 211 and the noise detection/noise-cancellation effect detecting microphone 211 detects the vibration.

Accordingly, there is a case where noise cancellation effects are reduced. In such a case, the noise detection/noise-cancellation effect detecting microphone 211 may be installed in a position other than the fixing member 17 within the cylindrical area S. For example, as shown in FIG. 179, the noise detection/noise-cancellation effect detecting microphone 211 may be installed on the heat exchanger 50 in the range within the cylindrical area S.

Further, for example, as shown in FIG. 180, the noise detection/noise-cancellation effect detecting microphone 211 may be installed beneath the heat exchanger retaining fitting 58 in the range within the cylindrical area S. By installing the noise detection/noise-cancellation effect detecting microphone 211 as described above, larger noise cancellation effects can be obtained than when the noise detection/noise-cancellation effect detecting microphone 211 is installed to the fixing member 17.

As shown in FIG. 181, the noise detection/noise-cancellation effect detecting microphone 211 may be covered with the wall member 270. Since air flow can be shut off by the wall member 270, influence of the air flow is further suppressed so as to obtain a higher noise cancellation effect. In FIG. 181, the wall member 270 is formed into a substantially cylindrical shape, but, the wall member 270 may have any shape.

When the noise detection/noise-cancellation effect detecting microphone 211 is attached to the heat exchanger 50 or the heat exchanger retaining fitting 58, it is also recommended to cover the noise detection/noise-cancellation effect detecting microphone 211 with the wall member 270. Influence of the air flow is further suppressed so as to obtain a higher noise cancellation effect.

As above, in the indoor unit 100 according to Embodiment 77, the noise detection/noise-cancellation effect detecting microphone 211, which is the noise detection/noise cancellation effect detection device, is provided within the cylindrical area S and to the fixed member of the fan 20. Accordingly, effects of the air flow from the air outlet of the fan 20 can be reduced and sound with high coherence with noise can be detected, thereby enabling active noise cancellation with high precision. Further, since the noise detection/noise-cancellation effect detecting microphone 211 can be installed without increasing the number of parts of the indoor unit 100, the indoor unit 100 with a high degree of freedom in installation can be realized.

In Embodiment 77, the FIR filter 158 and the LMS algorithm 159 are used in the signal processor 204, but, any adaptive signal processing circuit may be used that brings sound detected by the noise detection/noise-cancellation effect detecting microphone 211 close to zero, and one which uses the filtered-X algorithm used generally in the active noise cancellation method may also be used. The signal processor 204 does not need to have a structure to perform adaptive signal processing and may have a structure to generate control sound by a fixed tap coefficient. Further, the signal processor 204 does not need to be a digital signal processing circuit and may also be an analog signal processing circuit.

In the indoor unit 100 according to Embodiment 77, the noise detection/noise-cancellation effect detecting microphone 211, which is the noise detection/noise cancellation effect detection device, is provided within the cylindrical area S and on the downstream side of the fan 20. Accordingly, effects of the air flow from the air outlet of the fan 20 can be reduced and sound with high coherence with noise can be detected, thereby enabling active noise cancellation with high precision.

Since the noise detection/noise-cancellation effect detecting microphone 211 can be installed without changing the mechanism of the fan 20 and without increasing the number of parts of the indoor unit 100, the indoor unit 100 with a high degree of freedom in installation can be realized. Further, since the natural mechanical vibration caused by the rotation of the fan 20 is not detected by the noise detection/noise-cancellation effect detecting microphone 211, active noise cancellation with higher precision is enabled than when the noise detection/noise-cancellation effect detecting microphone 211 is provided to the fixed member of the fan 20.

In the indoor unit 100 according to Embodiment 77, the noise detection/noise-cancellation effect detecting microphone 211 is installed in the range within the cylindrical area S of the fixing member 17 of the fan 20. Accordingly, effects of the air flow from the air outlet of the fan 20 can be reduced and sound with high coherence with noise can be detected, thereby enabling active noise cancellation with high precision. Since the noise detection/noise-cancellation effect detecting microphone 211 can be installed without changing the mechanism of the fan 20 and without increasing the number of parts of the air-conditioning apparatus, the indoor unit 100 with a high degree of freedom in installation can be realized.

In the indoor unit 100 according to Embodiment 77, the noise detection/noise-cancellation effect detecting microphone 211 is provided in the range within the cylindrical area S of the heat exchanger 50. Accordingly, effects of the air flow from the air outlet of the fan 20 can be reduced and sound with high coherence with noise can be detected, thereby enabling active noise cancellation with high precision.

Since the noise detection/noise-cancellation effect detecting microphone 211 can be installed without changing the mechanism of the fan 20 and without increasing the number of parts of the air-conditioning apparatus, the indoor unit 100 with a high degree of freedom in installation can be realized. Further, since the natural mechanical vibration caused by the rotation of the fan 20 is not detected by the noise detection/noise-cancellation effect detecting microphone 211, active noise cancellation with higher precision is enabled than when the noise detection/noise-cancellation effect detecting microphone 211 is provided to the fixed member of the fan 20.

In the indoor unit 100 according to Embodiment 77, the noise detection/noise-cancellation effect detecting microphone 211 is provided in the range within the cylindrical area S of the heat exchanger retaining fitting 58. Accordingly, effects of the air flow from the air outlet of the fan 20 can be reduced and sound with high coherence with noise can be detected, thereby enabling active noise cancellation with high precision.

Since the noise detection/noise-cancellation effect detecting microphone 211 can be installed without changing the mechanism of the fan 20 and without increasing the number of parts of the air-conditioning apparatus, the indoor unit 100 with a high degree of freedom in installation can be realized.

Further, since the natural mechanical vibration caused by the rotation of the fan 20 is not detected by the noise detection/noise-cancellation effect detecting microphone 211, active noise cancellation with higher precision is enabled than when the noise detection/noise-cancellation effect detecting microphone 211 is provided to the fixed member of the fan 20.

In the indoor unit 100 according to Embodiment 77, the noise detection/noise-cancellation effect detecting microphone 211 is covered with the wall member 270. By shutting off air flow, effects of the air flow on the noise detection/noise-cancellation effect detecting microphone 211 are further reduced, and therefore, larger noise cancellation effects can be obtained.

Embodiment 78

In Embodiment 78, the indoor unit 100 will be described, in which the noise detection/noise-cancellation effect detecting microphone 211 is installed at the top portion of the air outlet 3 so as to face the opposite side of the flow passage. Items in Embodiment 78 that are not particularly described are the same as in Embodiment 76 or Embodiment 77, and functions and structures that are the same as in Embodiment 76 or Embodiment 77 are given the same reference characters in the following description.

FIG. 182 is a vertical sectional view showing an indoor unit according to Embodiment 78 of the present invention. FIG. 182 shows the right side in the figure as the front side of the indoor unit 100.

The indoor unit 100 according to Embodiment 78 differs from the indoor unit 100 according to Embodiment 77 in that the noise detection/noise-cancellation effect detecting microphone 211 is placed at the top portion of the air outlet 3 so as to face the opposite side of the flow passage. Accordingly, the structure of a signal processor 208 is also different. In the case where the noise detection/noise-cancellation effect detecting microphone 211 is attached to the top portion of the air outlet 3 facing the opposite direction of the flow passage, the noise detection/noise-cancellation effect detecting microphone 211 can be also attached easily without newly increasing the number of parts and a precise attaching mechanism is no longer necessary as in Embodiment 77.

At the side wall part of the casing 1 of the indoor unit 100, the control speaker 181 that outputs control sound for noise is placed so as to face the center of the air passage from the wall. Further, the noise detection/noise-cancellation effect detecting microphone 211 that detects sound after control sound discharged from the control speaker 181 is caused to interfere with operation sound (noise) of the indoor unit 100 including air-sending sound of the fan 20, is placed at the top portion of the air outlet 3 so as to face the opposite side of the flow passage. The output signal of the noise detection/noise-cancellation effect detecting microphone 211 is input to the signal processor 208, which is the control sound generation device for generating a signal (control sound) to control the control speaker 181.

FIG. 183 shows a block diagram of the signal processor 208. The signal processor 208 differs from the signal processor 204 shown in FIG. 160 in that the weighting means 153 is placed between the output of the A/D converter 152 and the input of the LMS algorithm 159. Other structures are the same as those of the signal processor 204 of Embodiment 73.

Next, the operation of the indoor unit 100 will be described. When the indoor unit 100 operates, the bladed wheel 25 of the fan 20 rotates, the room air is sucked from the upper side of the fan 20, and the air is sent to the lower side of the fan 20, thereby generating an air flow. With this, operation sound (noise) is generated in the vicinity of the air outlet of the fan 20 and the operation sound propagates to the downstream side.

In the vicinity of the air outlet of the fan 20, as in Embodiment 76 and Embodiment 77, air flow disturbance is caused by the rotation of the bladed wheel 25. Since the air blown out of the fan 20 is blown out from the air outlet of the fan 20 toward the outside, the air hits the side wall of the cabinet of the indoor unit 100 and further air flow disturbance is caused. This increases pressure fluctuation by the air flow disturbance at the side wall of the indoor unit 100.

However, in Embodiment 78, the noise detection/noise-cancellation effect detecting microphone 211 is placed at the top portion of the air outlet 3 facing the opposite direction of the flow passage. In the vicinity of the air outlet 3, the distance from the air outlet of the fan 20 where air flow disturbance is large is sufficiently large compared to that in the vicinity of the fan 20. Further, in the vicinity of the air outlet 3, air flow disturbance is rectified by the heat exchanger 50. Accordingly, air flow disturbance in the vicinity of the noise detection/noise-cancellation effect detecting microphone 211 is small.

Further, since the air flow does not hit directly the area where the noise detection/noise-cancellation effect detecting microphone 211 is provided, the noise detection/noise-cancellation effect detecting microphone 211 hardly suffers from effects of air flow disturbance. Furthermore, since noise from the indoor unit 100 that a person feels is the noise after being discharged to the indoor side from the air outlet 3, the noise discharged to the indoor side can be detected by causing the noise detection/noise-cancellation effect detecting microphone 211 to face to the indoor side opposite to the flow passage.

That is, by attaching the noise detection/noise-cancellation effect detecting microphone 211 to the top portion of the air outlet 3 facing the opposite direction of the flow passage, detection of sound having high coherence with noise discharged to the indoor side is enabled.

Next, a method of suppressing the operation sound of the indoor unit 100 will be described. The generation method of control sound of Embodiment 78 is the same as the method described in Embodiment 73. The generation method of control sound of Embodiment 78 differs from the method described in Embodiment 73 in that the signal input to the LMS algorithm 159 as an error signal is averaged by the weighting means 153. When the noise detection/noise-cancellation effect detecting microphone 211 is placed at the top portion of the air outlet 3 facing the opposite direction of the flow passage, in the noise detected by the noise detection/noise-cancellation effect detecting microphone 211, much sound other than the noise generated from the fan 20 is included.

Accordingly, the stability of feedback control is lost due to the sound other than noise. Because of this, in Embodiment 78, the sound other than noise is averaged by placing the weighting means 153 in the previous stage of the feedback control. This makes it possible to cancel other uncorrelated components than the noise so as to stabilize the operation of feedback control. That is, enhancement of coherence between the noise after being discharged to the indoor side from the air outlet 3 and the noise detection/noise-cancellation effect detecting microphone 211 is enabled.

As in Embodiment 76, the averaging by the weighting means 153 may not be performed until the LMS algorithm 159 stabilizes. This is because the noise has not been sufficiently reduced during the time when the LMS algorithm 159 is unstable so that the output value of the weighting means 153 can become outrageous in some case. In addition, the output value of the weighting means 153 may be reset if the value exceeds a set value.

In order to further reduce effects of the air flow, the noise detection/noise-cancellation effect detecting microphone 211 may be covered with the wall member 270. Since the air flow can be shut off by the wall member, influence of the air flow is further suppressed so as to obtain a higher noise cancellation effect.

The installation position of the noise detection/noise-cancellation effect detecting microphone 211 is not limited to the top portion of the air outlet 3 and may be anywhere at the opening of the air outlet 3. For example, the noise detection/noise-cancellation effect detecting microphone 211 may be attached to the bottom portion or side part of the air outlet 3. The noise detection/noise-cancellation effect detecting microphone 211 does not need to be provided accurately facing the opposite direction of the flow passage.

The noise detection/noise-cancellation effect detecting microphone 211 only needs to be provided so as to face outside of the indoor unit 100 (cabinet). That is, the noise detection/noise-cancellation effect detecting microphone 211 only needs to be installed in a position where noise emitted to the indoor side can be detected.

In Embodiment 78, the FIR filter 158 and the LMS algorithm 159 are used in the signal processor 208, but, any adaptive signal processing circuit may be used that brings sound detected by the noise detection/noise-cancellation effect detecting microphone 211 close to zero, and one which uses the filtered-X algorithm used generally in the active noise cancellation method may also be used. Further, the weighting means 153 is not needed to be an integrator, and any means can be employed as long as the means can carry out the averaging operation.

The signal processor 208 does not need to have a structure to perform adaptive signal processing and may have a structure to generate control sound by a fixed tap coefficient. Further, the signal processor 208 does not need to be a digital signal processing circuit and may also be an analog signal processing circuit.

As above, in the indoor unit 100 according to Embodiment 78, the noise detection/noise-cancellation effect detecting microphone 211, which is the noise detection/noise cancellation effect detection device, is provided at the opening of the air outlet 3 and placed so as to face outside of the indoor unit 100. With this, noise discharged into the room can be detected without being affected by the air flow. Consequently, high coherence of noise in the room emitted from the indoor unit 100 and the detected sound of the noise detection/noise-cancellation effect detecting microphone 211 can be obtained. Therefore, the active noise cancellation can be carried out with high precision on the noise in the room emitted from the indoor unit 100.

In the indoor unit 100 according to Embodiment 78, the signal processor 208, which is the control sound generation device, includes a circuit that weights the detection result detected by the noise detection/noise-cancellation effect detecting microphone 211, which is the noise detection/noise cancellation effect detection device, and performs feedback control. Accordingly, sound other than the noise of the indoor unit 100 detected by the noise detection/noise-cancellation effect detecting microphone 211 can be cancelled by averaging the sound.

Consequently, active noise cancellation with higher precision is enabled. Further, in the indoor unit 100 according to Embodiment 78, the noise detection/noise-cancellation effect detecting microphone 211 is covered with the wall member 270. By shutting off air flow, influence of the air flow on the noise detection/noise-cancellation effect detecting microphone 211 is further reduced so as to obtain a higher noise cancellation effect.

Embodiment 79

Fan individual control

By individually controlling the rotation speeds of the fans 20 provided in the indoor unit 100, the noise cancellation effect of the active noise cancellation mechanism is improved. Functions and structures in Embodiment 79 that are the same as in Embodiment 1 to Embodiment 78 are given the same reference characters in the following description.

FIG. 184 is a front view showing an indoor unit according to Embodiment 79 of the present invention. Furthermore, FIG. 185 is a side view showing the indoor unit shown in FIG. 184. FIG. 185 is a view when the indoor unit 100 shown in FIG. 184 is viewed from the direction of a hatched arrow in FIG. 184, while penetrating a side wall of the casing 1 of the indoor unit 100. In FIG. 185, the illustration of a remote controller 280, the controller 281, and motor drivers 282A to 282C shown in FIG. 184 is omitted.

In the indoor unit 100 shown in FIGs. 184 and 185, the air inlets 2 are opened in a top portion of the indoor unit 100 (more specifically, the casing 1 of the indoor unit 100), and the air outlet 3 is opened in the lower end of the indoor unit 100 (more specifically, the casing 1 of the indoor unit 100). That is, an air passage communicating between the air inlets 2 and the air outlet 3 is formed in the indoor unit 100. Then, a plurality of the fans 20 each having the bladed wheel 25 are provided along the right and left direction (the longitudinal direction) on the lower sides of the air inlets 2 in the air passage.

In Embodiment 79, three fans (the fans 20A to 20C) are provided. These fans 20A to 20C each are provided so that the center of the rotation axis of the bladed wheel 25 becomes a substantially vertical direction. Each of these fans 20A to 20C is connected to an air-sending fan control means 171 of the controller 281 via the motor drivers 282A to 282C. The details of the controller 281 will be described below.

The heat exchanger 50 is placed below the fans 20A to 20C that exchange heat with air to cool or heat the air. As shown by outline arrows in FIG. 184, when the fans 20A to 20C operate, air in the indoor side is sucked into the air passage in the indoor unit 100 from the air inlets 2, this suction air is cooled or heated by the heat exchanger 50 located under the fans 20A to 20C, and thereafter, the air is blown to the indoor side from the air outlet 3.

Furthermore, a noise cancellation mechanism used for active noise cancellation is provided in the indoor unit 100 according to Embodiment 79. The noise cancellation mechanism of the indoor unit 100 according to Embodiment 79 includes the noise detecting microphone 161 and a noise detecting microphone 162, the control speaker 181 and a control speaker 182, the noise-cancellation effect detecting microphone 191 and a noise-cancellation effect detecting microphone 192, and the signal processor 201 and a signal processor 202.

That is, the noise cancellation mechanism of the indoor unit 100 according to Embodiment 79 includes two noise detecting microphones, two control speakers, and two noise-cancellation effect detecting microphones. Hereinafter, the noise cancellation mechanism including the noise detecting microphone 161, the control speaker 181, the noise-cancellation effect detecting microphone 191, and the signal processor 201 is defined as a noise cancellation mechanism A. Furthermore, the noise cancellation mechanism including the noise detecting microphone 162, the control speaker 182, the noise-cancellation effect detecting microphone 192, and the signal processor 202 is defined as a noise cancellation mechanism B.

The noise detecting microphones 161 and 162 are the noise detecting devices detecting operation sound (noise) of the indoor unit 100 that includes air-sending sound of the fans 20A to 20C (noise emitted from the fans 20A to 20C). The noise detecting microphones 161 and 162 are provided at positions on the downstream sides of the fans 20A to 20C (for example, between the fans 20A to 20C and the heat exchanger 50). Furthermore, the noise detecting microphone 161 is provided on the left side face of the indoor unit 100, and the noise detecting microphone 162 is provided on the right side face of the indoor unit 100.

The control speakers 181 and 182 are the control sound output devices outputting control sound for noise. The control speakers 181 and 182 are provided at positions on the downstream sides of the noise detecting microphones 161 and 162 (for example, the downstream sides of the heat exchanger 50). Furthermore, the control speaker 181 is provided on the left side face of the indoor unit 100, and the control speaker 182 is provided on the right side face of the indoor unit 100. Then, the control speakers 181 and 182 are placed so as to face the center of the air passage from wall faces of the casing 1 of the indoor unit 100.

The noise-cancellation effect detecting microphones 191 and 192 are the noise cancellation effect detection devices detecting a noise cancellation effect due to control sound. The noise-cancellation effect detecting microphones 191 and 192 are provided at positions on the downstream sides of the control speakers 181 and 182.

Furthermore, the noise-cancellation effect detecting microphone 191 is provided, for example, substantially on an extension line of the rotation axis of the fan 20A, and the noise-cancellation effect detecting microphone 192 is provided, for example, substantially on an extension line of the rotation axis of the fan 20C.

In Embodiment 79, the noise-cancellation effect detecting microphones 191 and 192 are provided on the nozzle 6 forming the air outlet 3. That is, the noise-cancellation effect detecting microphones 191 and 192 detect noise emitted from the air outlet 3 and detect a noise cancellation effect.

The structures of the signal processors 201 and 202 are quite the same as the structure shown in FIG. 8 that is described in Embodiment 1.

FIG. 186 is a block diagram showing the controller according to Embodiment 79 of the present invention.

Various operations and means described below are performed by executing a program incorporated into the controller 281 that the indoor unit 100 includes. The controller 281 mainly includes an input section 130 inputting signals from an external input device such as the remote controller 280 or the like, a CPU 131 performing computing in accordance with the incorporated program, and a memory 132 for storing data or programs. Furthermore, the CPU 131 includes the air-sending fan control means 171.

The air-sending fan control means 171 includes an identical-rotation-speed determining means 133, a fan-individual-control rotation speed determining means 134, and a plurality of switches 135 (in the same number as the fans 20). The identical-rotation-speed determining means 133 determines a rotation speed used to rotate the fans 20A to 20C at the same rotation speed based on operation information input from the remote controller 280. The operation information input from the remote controller 280 includes, for example, operation mode information such as a cooling operation mode, heating operation mode, and dehumidification operation mode and air volume information such as strong, medium, and weak.

The fan-individual-control rotation speed determining means 134 determines each rotation speed at the time when individually controlling the rotation speeds of the fans 20A to 20C. The switch 135 switches the rotation control signals for the fans 20A to 20C sent to the motor drivers 282A to 282C based on a signal input from, for example, the remote controller 280. That is, the switches 135 switch whether to operate all the fans 20A to 20C at the same rotation speed or to operate the fans 20A to 20C at each individual rotation speed.

Next, the operation of the indoor unit 100 will be described.

When the indoor unit 100 operates, the bladed wheels of the fans 20A to 20C rotate, air of the indoor side is sucked from upper sides of the fans 20A to 20C, the air is sent to the lower sides of the fans 20A to 20C, and, thus, an air flow is generated. This causes operation sound (noise) in the vicinity of the air outlets of the fans 20A to 20C and the sound propagates to the downstream side.

The air sent by the fans 20A to 20C passes through the air passage and is sent to the heat exchanger 50. For example, during cooling operation, a cold refrigerant is transferred to the heat exchanger 50 through a pipe connected to the outdoor unit (not shown). The air sent to the heat exchanger 50 is cooled by the refrigerant flowing through the heat exchanger 50 and the cold air is directly discharged to the indoor side from the air outlet 3.

The operation of the noise cancellation mechanism A and the noise cancellation mechanism B is quite the same as that of Embodiment 1, and the mechanisms A and B: output control sound so as to bring, close to zero, noise detected in the noise-cancellation effect detecting microphones 191 and 192; and as a result, operate so as to suppress noise in the noise-cancellation effect detecting microphones 191 and 192.

In the active noise cancellation method, control sound is output from the control speakers 181 and 182 so as to have an opposite phase to the phase of noise at the installed positions of the noise-cancellation effect detecting microphones 191 and 192 (control points). Because of this, although noise cancellation effect becomes higher near the noise-cancellation effect detecting microphones 191 and 192, the phase of the control sound changes when being separate from the points. Therefore, at positions separate from the noise-cancellation effect detecting microphones 191 and 192, the phase shift between noise and control sound becomes larger and noise cancellation effect becomes lower.

Next, a control method for individually controlling the rotation speeds of the fans 20A to 20C (also referred to below as fan individual control) will be described.

Operation information selected by the remote controller 280 is input to the controller 281. The operation information includes, for example, operation mode information such as a cooling operation mode, heating operation mode, and dehumidification operation mode. Furthermore, air volume information such as strong, medium, and weak is also similarly input as operation information from the remote controller 280 to the controller 281. Operation information input to the controller 281 is input to the identical-rotation-speed determining means 133 via the input section 130.

The identical-rotation-speed determining means 133 to which the operation information is input determines, from the input operation information, a rotation speed at the time when operating all the fans 20A to 20C at the same rotation speed. When not performing fan individual control, the fans 20A to 20C are all controlled to rotate at the same rotation speed (also referred to below as same rotation speed control).

The information of a rotation speed (a rotation speed at the time of same rotation speed control) determined in the identical-rotation-speed determining means 133 is input to the fan-individual-control rotation speed determining means 134. In contrast, air-sending fan information stored in the memory 132 in advance at the time of product shipment is read out by the fan-individual-control rotation speed determining means 134. This air-sending fan information is information of the fans 20 emitting noise for which noise cancellation effect at the time when causing control sound to interfere is high.

That is, this air-sending fan information is information of the fans 20 having a high relevance to the noise-cancellation effect detecting microphones 191 and 192. These identification numbers are allocated for each noise-cancellation effect detecting microphone.

In Embodiment 79, identification numbers of the fans 20 closest in distance to (having a high relevance to) the noise-cancellation effect detecting microphones 191 and 192 are used as air-sending fan information. Specifically, they are an identification number of the fan 20A closest in distance to the noise-cancellation effect detecting microphone 191 and an identification number of the fan 20C closest in distance to the noise-cancellation effect detecting microphone 192.

The fan-individual-control rotation speed determining means 134 determines the rotation speeds of the fans 20 at the time when performing fan individual control, based on rotation speed information determined in the identical-rotation-speed determining means 133 and air-sending fan information read out from the memory 132. Specifically, the fan-individual-control rotation speed determining means 134 increases the rotation speeds of the fans 20A and 20C closest to the noise-cancellation effect detecting microphones 191 and 192, and decreases the rotation speed of the fan 20B separate from the noise-cancellation effect detecting microphones 191 and 192.

It is desirable to determine the rotation speeds of the fans 20A to 20C so that the air volume obtained during fan individual control equals the air volume obtained during same rotation speed control. Since air volume and rotation speed are proportional to each other, the same air volume is obtained by decreasing, by 20 %, the rotation speed of the fan 20B when the rotation speeds of the fan 20A and the fan 20C are increased by 10 % in the case of the structure as in FIG. 184, for example.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

As described above, when performing active noise cancellation, although the noise cancellation effect in: the noise-cancellation effect detecting microphones 191 and 192 as the control points for noise control; and their peripheries becomes higher, the phase shifts between control sound emitted from the control speakers 181 and 182 and noise become larger and noise cancellation effect becomes lower at points separate from the control points.

However, in Embodiment 79, by using a structure including the plurality of fans 20A to 20C in the indoor unit 100, it is possible to: increase the rotation speeds of the fans 20A and 20C (fans emitting noise for which noise cancellation effect is high) close in distance to the noise-cancellation effect detecting microphones 191 and 192 in which noise cancellation effect is high; and decrease the rotation speed of the fan 20B (a fan emitting noise for which noise cancellation effect is low) separate from the noise-cancellation effect detecting microphones 191 and 192.

As a result, in the indoor unit 100 according to Embodiment 79, since noise cancellation effect becomes further higher in an area in which noise cancellation effect is high and noise is reduced in an area in which noise cancellation effect is lower, it is possible to reduce noise emitted from the whole of the air outlet 3 in comparison with an indoor unit using a single fan or an indoor unit that does not use fan individual control. Furthermore, by controlling the rotation speeds of the fans 20A to 20C so that air volume is constant, it is possible to realize reduction in noise without any degradation of aerodynamic performance.

Furthermore, as shown in FIGs. 187 and 188, by dividing the air passage of the indoor unit 100 into a plurality of areas, it is possible to further improve noise cancellation effect.

FIG. 187 is a front view showing another example of an indoor unit according to Embodiment 79 of the present invention. Furthermore, FIG. 188 is a left side view of the indoor unit shown in FIG. 187. FIG. 188 is a view penetrating a side wall of the casing 1 of the indoor unit 100. The indoor unit 100 shown in FIGs. 187 and 188 divides, using the partition plates 90 and 90a, the air passage to thereby partition it into an area through which air blown by the fan 20A passes, an area through which air blown by the fan 20B passes, and an area through which air blown by the fan 20C passes.

Then, the noise detecting microphone 161, the control speaker 181, and the noise-cancellation effect detecting microphone 191 of the noise cancellation mechanism A are placed in the area through which air blown by the fan 20A passes. Furthermore, the noise detecting microphone 162, the control speaker 182, and the noise-cancellation effect detecting microphone 192 of the noise cancellation mechanism B are placed in the area through which air blown by the fan 20C passes.

By thus structuring the indoor unit 100, it is possible to separate noise emitted from the fans 20A to 20C into each area, the noise cancellation mechanism A reduces only noise emitted from the fan 20A, and the noise cancellation mechanism B reduces only noise emitted from the fan 20C. Because of this, since it is possible to prevent the noise detecting microphones 161 and 162, and the noise-cancellation effect detecting microphones 191 and 192 from detecting noise emitted from the fan 20B, crosstalk noise components in the noise detecting microphones 161 and 162, and the noise-cancellation effect detecting microphones 191 and 192 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. In contrast, by lowering the rotation speed of the fan 20B in which a noise cancellation mechanism is not provided, the noise of an area is reduced in which a noise cancellation mechanism is not provided.

Therefore, by structuring the indoor unit 100 as in FIGs. 187 and 188, it is possible to further reduce noise in comparison with the structure in FIG. 184. In FIGs. 187 and 188, although partition plates are inserted across the entire area of the air passage, a part of the air passage such as, for example, only the upstream sides of the heat exchanger 50 or only the downstream sides of the heat exchanger 50 may be partitioned by partition plates.

Although the noise detecting microphones 161 and 162 are installed on both side faces of the indoor unit 100 in Embodiment 79, the installation positions of the noise detecting microphones 161 and 162 may be anywhere if the installation positions are on the upstream sides of the control speakers 181 and 182. Furthermore, although the control speakers 181 and 182 are placed on both the side faces of the indoor unit 100 in Embodiment 79, the installation positions of the control speakers 181 and 182 may be anywhere if the installation positions are on the downstream sides of the noise detecting microphones 161 and 162, and on upstream sides of the noise-cancellation effect detecting microphones 191 and 192.

Furthermore, although the noise-cancellation effect detecting microphones 191 and 192 are placed substantially on extension lines of the rotation axes of the fans 20A and 20C in Embodiment 79, the installation positions of the noise-cancellation effect detecting microphones 191 and 192 may be anywhere if the installation positions are on the downstream sides of the control speakers 181 and 182. Furthermore, although each two noise detecting microphones, control speakers, noise-cancellation effect detecting microphones, and signal processors are placed in Embodiment 79, but the present invention is not limited to this.

Furthermore, although the air-sending fan control means 171 is configured with the CPU 131 in the controller 281 in Embodiment 79, the air-sending fan control means 171 may be configured with hardware such as an LSI (large scale integration), an FPGA (field programmable gate array) or the like. Furthermore, the structure of the air-sending fan control means 171 is also not limited to the structure shown in FIG. 186.

Furthermore, although the air-sending fan control means 171 is configured so as to increase the rotation speeds of the fans 20A and 20C close in distance to the noise-cancellation effect detecting microphones 191 and 192, and decrease the rotation speed of the fan 20B separate from the noise-cancellation effect detecting microphones 191 and 192 in Embodiment 79, the air-sending fan control means 171 may be configured to perform either one of them.

Hereinabove, in the indoor unit 100 according to Embodiment 79, the plurality of fans 20A to 20C are placed and the controller 281 (more specifically, the air-sending fan control means 171) for individually controlling the rotation speeds of the fans 20A to 20C is provided. The air-sending fan control means 171: performs rotation speed control so as to increase the rotation speeds of the fans 20A and 20C sending air to areas near the noise-cancellation effect detecting microphones 191 and 192 that are areas in which noise cancellation effect is high; and performs rotation speed control so as to decrease the rotation speed of the fan 20B sending air to an area distant from the noise-cancellation effect detecting microphones 191 and 192 that is an area in which noise cancellation effect becomes lower.

Because of this, noise cancellation effect becomes further higher in an area in which noise cancellation effect is high, and noise is reduced in an area in which noise cancellation effect is low. Because of this, in a noise cancellation mechanism having the same structure, it is possible to obtain high noise reduction effect in comparison with an indoor unit using a single fan or an indoor unit that does not use fan individual control.

Furthermore, since the air-sending fan control means 171 controls each rotation speed of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Furthermore, by dividing the air passage of the indoor unit 100 into a plurality of areas using the partition plates 90 and 90a, it is possible to separate each noise emitted from the fans 20A to 20C, the noise cancellation mechanism A reduces only noise emitted from the fan 20A, and the noise cancellation mechanism B reduces only noise emitted from the fan 20C. Because of this, crosstalk noise components due to noise emitted from the fan 20B are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, the phase of noise transferred in the indoor unit 100 becomes uniform and phase error during interference of control sound is reduced. Furthermore, by lowering the rotation speed of the fan 20B for which a noise cancellation mechanism is not provided, the noise of an area is reduced in which a noise cancellation mechanism is not provided, and it is possible to obtain a higher noise reduction effect in comparison with the structure in FIG. 184.

Embodiment 80

Fan individual control is not limited to the structure of Embodiment 79, and may also be performed based on a noise cancellation effect that a noise-cancellation effect detecting microphone detects. The following description focuses on items in Embodiment 80 that are different from those in Embodiment 79, and components that are the same as in Embodiment 79 are given the same reference characters.

FIG. 189 is a front view showing an indoor unit according to Embodiment 80 of the present invention.

The indoor unit 100 according to Embodiment 80 differs from the indoor unit 100 of Embodiment 79 in that a noise cancellation mechanism C (a noise detecting microphone 163, a control speaker 183, a noise-cancellation effect detecting microphone 193, and a signal processor 203) is provided. The structure of the signal processor 203 is quite the same as those of the signal processors 201 and 202. The attachment positions of the noise detecting microphone 163, the control speaker 183, and the noise-cancellation effect detecting microphone 193 are similar to those in Embodiment 79, and the noise detecting microphone 163, the control speaker 183, and the noise-cancellation effect detecting microphone 193 may be placed in this order from the downstream side of the fan 20B.

Furthermore, that signal lines (signal lines for sending signals S1, S2, and S3) connected from the signal processors 201 to 203 to an air-sending fan control means 172 are provided, is also different from the indoor unit 100 of Embodiment 79. Because of this, the structure of the air-sending fan control means 172 is also different from the structure of the air-sending fan control means 171 according to Embodiment 79.

Specifically, the signals S1, S2, and S3 sent from the signal processors 201 to 203 to the air-sending fan control means 172 are signals obtained by digitally converting, in the A/D converter 152 through a microphone amplifier 151, each signal input from the noise-cancellation effect detecting microphones 191 to 193. That is, the signals S1, S2, and S3 are digital values of sound pressure levels detected in the noise-cancellation effect detecting microphones 191 to 193.

Next, the structure of the air-sending fan control means 172 will be described.

FIG. 190 is a block diagram showing a controller according to Embodiment 80 of the present invention. Various operations and means described below are performed by executing a program incorporated into the controller 281 that the indoor unit 100 includes. As with the structure described in Embodiment 79, the controller 281 mainly includes the input section 130 inputting signals from an external input device such as the remote controller 280, the CPU 131 performing computing in accordance with the incorporated program, and the memory 132 for storing data or programs. Furthermore, the CPU 131 includes the air-sending fan control means 172.

The air-sending fan control means 172 includes the identical-rotation-speed determining means 133, a plurality of averaging means 136 (in the same number as the noise-cancellation effect detecting microphones), a fan-individual-control rotation speed determining means 134A, and a plurality of the switches 135 (in the same number as the fans 20). The identical-rotation-speed determining means 133 determines a rotation speed used to rotate the fans 20A to 20C at the same rotation speed based on operation information input from the remote controller 280.

The operation information input from the remote controller 280 includes, for example, operation mode information such as a cooling operation mode, heating operation mode, and dehumidification operation mode and air volume information such as strong, medium, and weak. The digital values S1, S2, and S3 of sound pressure levels detected in the noise-cancellation effect detecting microphones 191 to 193 are input to the averaging means 136, which average these signals S1, S2, and S3 for a certain given time.

The fan-individual-control rotation speed determining means 134A determines each rotation speed at the time when performing fan individual control on the fans 20A to 20C, based on each signal S1, S2, and S3 averaged in the averaging means 136 and rotation speed information input from the identical-rotation-speed determining means 133. The switch 135 switches the rotation control signals for the fans 20A to 20C sent to the motor drivers 282A to 282C based on a signal input from, for example, the remote controller 280. That is, the switch 135 switches whether to operate all the fans 20A to 20C at the same rotation speed (perform same rotation speed control) or to operate the fans 20A to 20C at each individual rotation speed (perform fan individual control).

Next, the operation of the indoor unit 100 will be described.

As in Embodiment 79, when the indoor unit 100 operates, the bladed wheels of the fans 20A to 20C rotate, air of the indoor side is sucked from the upper sides of the fans 20A to 20C, the air is sent to the lower sides of the fans 20A to 20C, and, thus, an air flow is generated. This causes operation sound (noise) in the vicinity of the air outlets of the fans 20A to 20C and the sound propagates to the downstream side.

The air sent by the fans 20A to 20C passes through the air passage and is sent to the heat exchanger 50. For example, during cooling operation, a cold refrigerant is transferred to the heat exchanger 50 through a pipe connected to the outdoor unit (not shown). The air sent to the heat exchanger 50 is cooled by the refrigerant flowing through the heat exchanger 50 and the cold air is directly discharged to the indoor side from the air outlet 3.

Furthermore, the operation of the noise cancellation mechanisms A to C is also quite the same as that of Embodiment 79, and the mechanisms A to C: output control sound so as to bring, close to zero, noise detected in the noise-cancellation effect detecting microphones 191 to 193; and as a result, operate so as to suppress noise in the noise-cancellation effect detecting microphones 191 to 193.

In the case of the indoor unit 100 according to Embodiment 80, noise (crosstalk noise components) emitted from the fans 20A and 20C adjacent to the fan 20B, in addition to noise emitted from the fan 20B, also enters the noise-cancellation effect detecting microphone 193. In contrast, crosstalk noise components detected in the noise-cancellation effect detecting microphones 191 and 192 are more reduced than in the noise-cancellation effect detecting microphone 193.

This is because the noise-cancellation effect detecting microphones 191 and 192 are only adjacent to the single fan 20 (the fan 20B). Because of this, the noise cancellation effect of the noise cancellation mechanisms A and B is higher than that of the noise cancellation mechanism C.

Next, fan individual control of the fans 20A to 20C according to Embodiment 80 will be described.

Operation information selected by the remote controller 280 is input to the controller 281. As described above, the operation information includes, for example, operation mode information such as a cooling operation mode, heating operation mode, and dehumidification operation mode. Furthermore, air volume information such as strong, medium, and weak is also similarly input as operation information from the remote controller 280 to the controller 281. Operation information input to the controller 281 is input to the identical-rotation-speed determining means 133 via the input section 130. The identical-rotation-speed determining means 133 to which the operation information is input determines, from the input operation information, a rotation speed at the time when performing same rotation speed control on the fans 20A to 20C.

In contrast, the signals S1 to S3 (digital values of sound pressure levels detected in the noise-cancellation effect detecting microphones 191 to 193) input from the signal processors 201 to 203 to the averaging means 136 are averaged for a certain given time in the averaging means 136.

The information of: sound pressure level values obtained by averaging each of these values S1, S2, and S3; and a rotation speed (a rotation speed during same rotation speed control) determined in the identical-rotation-speed determining means 133 is input to the fan-individual-control rotation speed determining means 134A. The fan-individual-control rotation speed determining means 134A determines the rotation speeds of the fans 20 at the time when performing fan individual control, based on this information.

Specifically, the fan-individual-control rotation speed determining means 134A determines the rotation speeds of the fans so as to: increase the rotation speed of a fan close in distance to (having a high relevance to) a noise-cancellation effect detecting microphone in which the averaged sound pressure level value is small; and decrease the rotation speed of a fan close in distance to (having a high relevance to) a noise-cancellation effect detecting microphone in which the averaged sound pressure level value is large. It is desirable to determine the rotation speeds of the fans 20A to 20C so that the air volume obtained during fan individual control equals the air volume obtained during same rotation speed control.

For example, in the indoor unit 100 according to Embodiment 80, when the average value of noise levels detected in the noise-cancellation effect detecting microphone 191 is 45 dB, the average value of noise levels detected in the noise-cancellation effect detecting microphone 192 is 45 dB, and the average value of noise levels detected in the noise-cancellation effect detecting microphone 193 is 50 dB, the fan-individual-control rotation speed determining means 134A determines the rotation speeds of the fans 20 so as to increase the rotation speeds of the fans 20A and 20C and to decrease the rotation speed of the fan 20B.

Since the air volume and the rotation speed are proportional to each other, the same air volume is obtained by decreasing, by 20 %, the rotation speed of the fan 20B when the rotation speeds of the fan 20A and the fan 20C are increased by 10 % in the case of the structure as in FIG. 189, for example.

The above method of determining the rotation speeds of the fans 20A to 20C is only an example. For example, when the average value of noise levels detected in the noise-cancellation effect detecting microphone 191 is 45 dB, the average value of noise levels detected in the noise-cancellation effect detecting microphone 192 is 47 dB, and the average value of noise levels detected in the noise-cancellation effect detecting microphone 193 is 50 dB, the fan-individual-control rotation speed determining means 134A may determine the rotation speeds of the fans 20 so as to increase the rotation speed of the fan 20A, to decrease the rotation speed of the fan 20B, and to maintain the rotation speed of the fan 20C as it is.

That is, the fan-individual-control rotation speed determining means 134A may determine the rotation speeds of the fans 20 so as to increase the rotation speed of the fan 20A close in distance to the noise-cancellation effect detecting microphone 191 in which the detected noise level is the lowest, decrease the rotation speed of the fan 20B close in distance to the noise-cancellation effect detecting microphone 193 in which the detected noise level is the highest, and maintain the rotation speed of the fan 20C that is not either of them, as it is.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

Here, as described above, in the case of the indoor unit 100 according to Embodiment 80, areas near the noise-cancellation effect detecting microphones 191 and 192 become higher in noise cancellation effect than an area near the noise-cancellation effect detecting microphone 193 depending on the magnitude of crosstalk noise components from the adjacent fans.

That is, in the case of the indoor unit 100 according to Embodiment 80, areas near the noise-cancellation effect detecting microphones 191 and 192 become lower in detected noise level than an area near the noise-cancellation effect detecting microphone 193.

In contrast, the area near the noise-cancellation effect detecting microphone 193 becomes lower in noise cancellation effect. Therefore, the indoor unit 100 according to Embodiment 80, including the plurality of fans 20A to 20C: increases the rotation speeds of the fans 20A and 20C close in distance to the noise-cancellation effect detecting microphones 191 and 192 in which the detected noise level average value is smaller of the average values of noise level values detected by the noise-cancellation effect detecting microphones 191 to 193; and decreases the rotation speed of the fan 20B close in distance to the noise-cancellation effect detecting microphone 193 in which the detected noise level average value is larger of the average values of noise level values detected by the noise-cancellation effect detecting microphones 191 to 193.

As a result, since noise cancellation effect becomes further higher in an area in which noise cancellation effect is high and noise is reduced in an area in which noise cancellation effect is low, the indoor unit 100 according to Embodiment 80 can reduce noise emitted from the whole of the air outlet 3 in comparison with an indoor unit using a single fan or an indoor unit that does not use fan individual control.

Furthermore, as shown in FIGs. 191 and 192, by dividing the air passage of the indoor unit 100 into a plurality of areas, it is possible to further improve noise cancellation effect.

FIG. 191 is a front view showing another example of an indoor unit according to Embodiment 80 of the present invention. Furthermore, FIG. 192 is a left side view of the indoor unit shown in FIG. 191. FIG. 192 is a view penetrating a side wall of the casing 1 of the indoor unit 100. The indoor unit 100 shown in FIGs. 191 and 192 divides, using the partition plates 90 and 90a, the air passage to thereby partition it into an area through which air blown by the fan 20A passes, an area through which air blown by the fan 20B passes, and an area through which air blown by the fan 20C passes.

Then, the noise detecting microphone 161, the control speaker 181, and the noise-cancellation effect detecting microphone 191 of the noise cancellation mechanism A are placed in the area through which air blown by the fan 20A passes. Furthermore, the noise detecting microphone 162, the control speaker 182, and the noise-cancellation effect detecting microphone 192 of the noise cancellation mechanism B are placed in the area through which air blown by the fan 20C passes. Furthermore, the noise detecting microphone 163, the control speaker 183, and the noise-cancellation effect detecting microphone 193 of the noise cancellation mechanism C are placed in an area through which air blown by the fan 20B passes.

By thus structuring the indoor unit 100, it is possible to separate noise emitted from the fans 20A to 20C into each area, the noise cancellation mechanism A reduces only noise emitted from the fan 20A, the noise cancellation mechanism B reduces only noise emitted from the fan 20C, and the noise cancellation mechanism C reduces only noise emitted from the fan 20B. Because of this, crosstalk noise components (noise emitted from fans provided in adjacent flow passages) detected by the noise detecting microphones 161 to 163 and the noise-cancellation effect detecting microphones 191 to 193 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. Therefore, by structuring the indoor unit 100 as in FIGs. 191 and 192, it is possible to further reduce noise in comparison with the structure of FIG. 189.

In FIGs. 191 and 192, although partition plates are inserted across the entire area of the air passage, a part of the air passage such as, for example, only the upstream sides of the heat exchanger 50 or only the downstream sides of the heat exchanger 50 may be partitioned by partition plates.

Furthermore, as in Embodiment 79, as in FIG. 193, even when there is the fan 20 for which a noise cancellation mechanism is not provided (the noise cancellation mechanism C is not provided for the fan 20B in FIG. 193), the noise of an area is reduced in which a noise cancellation mechanism is not provided, by lowering the rotation speed of the fan 20, and it is possible to obtain a similar noise cancellation effect.

The installation positions of the noise detecting microphones 161 to 163 may be anywhere if the installation positions are on the upstream sides of the control speakers 181 to 183. Furthermore, the installation positions of the control speakers 181 to 183 may be anywhere if the installation positions are on the downstream sides of the noise detecting microphones 161 to 163 and on the upstream sides of the noise-cancellation effect detecting microphones 191 to 193.

Furthermore, although the noise-cancellation effect detecting microphones 191 to 193 are placed substantially on extension lines of the rotation axes of the fans 20A to 20C in Embodiment 80, the installation positions of the noise-cancellation effect detecting microphones 191 to 193 may be anywhere if the installation positions are on the downstream sides of the control speakers 181 to 183. Furthermore, although each two to three noise detecting microphones, control speakers, noise-cancellation effect detecting microphones, and signal processors are placed in Embodiment 80, but the present invention is not limited to this.

Furthermore, although the air-sending fan control means 172 includes the CPU 131 in the controller 281 in Embodiment 80, the air-sending fan control means 172 may include hardware such as an LSI (large scale integration), an FPGA (field programmable gate array) or the like. Furthermore, the structure of the air-sending fan control means 172 is also not limited to the structure shown in FIG. 190.

Furthermore, although the air-sending fan control means 172 is configured so as to increase the rotation speeds of the fans 20A and 20C close in distance to the noise-cancellation effect detecting microphones 191 and 192 in which the noise level is low, and decrease the rotation speed of the fan 20B close in distance to the noise-cancellation effect detecting microphone 193 in which the noise level is high in Embodiment 80, the air-sending fan control means 172 may be configured to perform either one of them.

Hereinabove, in the indoor unit 100 according to Embodiment 80, the plurality of fans 20A to 20C are placed, and the controller 281 (more specifically, the air-sending fan control means 172) for individually controlling the rotation speeds of the fans 20A to 20C is provided.

The air-sending fan control means 172: performs control so as to increase the rotation speed of a fan close in distance to a noise-cancellation effect detecting microphone in which the detected noise level is lower of the average values of noise levels detected by the noise-cancellation effect detecting microphones 191 to 193; and performs control so as to decrease the rotation speed of a fan close in distance to a noise-cancellation effect detecting microphone in which the detected noise level is higher of the average values of noise levels detected by the noise-cancellation effect detecting microphones 191 to 193.

Because of this, noise cancellation effect becomes further higher in an area in which noise cancellation effect is high (i.e., the noise level is low), and noise is reduced in an area in which noise cancellation effect is low (i.e., the noise level is high). Accordingly, noise can be more reduced than an indoor unit that has a noise cancellation mechanism of the same structure and a single fan or an indoor unit that does not use fan individual control.

Furthermore, since the air-sending fan control means 172 controls each rotation speed of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Furthermore, by dividing the air passage of the indoor unit 100 into a plurality of areas using the partition plates 90 and 90a, it is possible to separate each noise emitted from the fans 20A to 20C, the noise cancellation mechanism A reduces only noise emitted from the fan 20A, the noise cancellation mechanism B reduces only noise emitted from the fan 20C, and the noise cancellation mechanism C reduces only noise emitted from the fan 20B. Accordingly, crosstalk noise components due to noise emitted to adjacent areas in each area are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, since the phase of noise transferred in the indoor unit 100 becomes uniform and phase error during interference of control sound is reduced, it is possible to obtain a further higher noise reduction effect in comparison with the structure in FIG. 189.

Furthermore, as in FIG. 193, even when there is the fan 20 for which a noise cancellation mechanism is not provided, the noise of an area is reduced in which a noise cancellation mechanism is not provided, by lowering the rotation speed of the fan 20, and it is possible to obtain a similar noise cancellation effect.

Embodiment 81

When fan individual control is performed in accordance with a noise cancellation effect that a noise-cancellation effect detecting microphone detects, fan individual control may be performed as described below, for example. The following description focuses on items in Embodiment 81 that are different from those in Embodiment 79 or Embodiment 80, and components that are the same as in Embodiment 79 or Embodiment 80 are given the same reference characters.

FIG. 194 is a front view showing an indoor unit according to Embodiment 81 of the present invention.

The indoor unit 100 according to Embodiment 81 differs from the indoor unit 100 according to Embodiment 80 in that signal lines (signal lines for sending signals T1, T2, and T3) connected from the signal processors 201 to 203 to an air-sending fan control means 173 are further provided. Because of this, the structure of the air-sending fan control means 173 is also different from the structure of the air-sending fan control means 172 according to Embodiment 80.

Specifically, the signals S1, S2, and S3 sent from the signal processors 201 to 203 to the air-sending fan control means 173 are, as in Embodiment 80, signals obtained by digitally converting, in the A/D converter 152 through the microphone amplifier 151, signals input from the noise-cancellation effect detecting microphones 191 to 193.

That is, the signals S1, S2, and S3 are digital values of sound pressure levels detected in the noise-cancellation effect detecting microphones 191 to 193. Furthermore, the newly added signals T1, T2, and T3 are signals obtained by digitally converting, in the A/D converter 152 through the microphone amplifier 151, signals input from the noise detecting microphones 161 to 163. That is, the signals T1, T2, and T3 are sound pressure level digital values detected in the noise detecting microphones 161 to 163.

Next, the structure of the air-sending fan control means 173 will be described.

FIG. 195 is a block diagram showing a controller according to Embodiment 81 of the present invention. Various operations and means described below are performed by executing a program incorporated into the controller 281 that the indoor unit 100 includes. As in the structure described in Embodiment 80, the controller 281 mainly includes the input section 130 inputting signals from an external input device such as the remote controller 280 or the like, the CPU 131 performing computing in accordance with the incorporated program, and the memory 132 for storing data or programs. Furthermore, the CPU 131 includes the air-sending fan control means 173.

The air-sending fan control means 173 includes the identical-rotation-speed determining means 133, a plurality of coherence calculating means 137 (in the same number as that of the noise-cancellation effect detecting microphones), a fan-individual-control rotation speed determining means 134B, and a plurality of the switches 135 (in the same number as that of the fans 20). The identical-rotation-speed determining means 133 determines a rotation speed used to rotate the fans 20A to 20C at the same rotation speed based on operation information input from the remote controller 280.

The operation information input from the remote controller 280 includes, for example, operation mode information such as a cooling operation mode, heating operation mode, and dehumidification operation mode and air volume information such as strong, medium, and weak. The sound pressure level digital values S1, S2, and S3 detected in the noise-cancellation effect detecting microphones 191 to 193 and the sound pressure level digital values T1, T2, and T3 detected in the noise detecting microphones 161 to 163 are input to the coherence calculating means 137. The coherence calculating means 137 computes the coherence between S1 and T1, S2 and T2, and S3 and T3.

The fan-individual-control rotation speed determining means 134B determines each rotation speed at the time when performing fan individual control on the fans 20A to 20C, based on coherence values computed in the coherence calculating means 137 and rotation speed information input from the identical-rotation-speed determining means 133. The switch 135 switches the rotation control signals for the fans 20A to 20C sent to the motor drivers 282A to 282C based on a signal input from, for example, the remote controller 280. That is, the switch 135 switches whether to operate all the fans 20A to 20C at the same rotation speed (perform same rotation speed control) or to operate the fans 20A to 20C at each individual rotation speed (perform fan individual control).

Next, the operation of the indoor unit 100 will be described.

As in Embodiment 80, when the indoor unit 100 operates, the bladed wheels of the fans 20A to 20C rotate, air of the indoor side is sucked from the upper sides of the fans 20A to 20C, the air is sent to the lower sides of the fans 20A to 20C, and thus an air flow is generated. This causes operation sound (noise) in the vicinity of the air outlets of the fans 20A to 20C and the sound propagates to the downstream side.

The air sent by the fans 20A to 20C passes through the air passage and is sent to the heat exchanger 50. For example, during cooling operation, a cold refrigerant is transferred to the heat exchanger 50 through a pipe connected to the outdoor unit (not shown). The air sent to the heat exchanger 50 is cooled by the refrigerant flowing through the heat exchanger 50 and the cold air is directly discharged to the indoor side from the air outlet 3.

Furthermore, the operation of the noise cancellation mechanisms A to C is also quite the same as that of Embodiment 80, and the mechanisms A to C: output control sound so as to bring, close to zero, noise detected in the noise-cancellation effect detecting microphones 191 to 193; and as a result, operate so as to suppress noise in the noise-cancellation effect detecting microphones 191 to 193.

Generally, coherence values between the noise detecting microphones 161 to 163 and the noise-cancellation effect detecting microphones 191 to 193 greatly affects noise cancellation effect due to active noise cancellation. That is, it is not possible to expect noise cancellation effect if the coherence between the noise detecting microphones 161 to 163 and the noise-cancellation effect detecting microphones 191 to 193 is not high. Conversely, it is also possible to predict noise cancellation effect from coherence values between the noise detecting microphones 161 to 163 and the noise-cancellation effect detecting microphones 191 to 193.

Therefore, the indoor unit 100 (more specifically, the air-sending fan control means 173 of the controller 281) according to Embodiment 81 controls the rotation speeds of the fans 20A to 20C so as to: increase the rotation speed of a fan for an area in which it is inferred that noise cancellation effect is high; and decrease the rotation speed of a fan for an area in which it is inferred that noise cancellation effect is low, based on coherence values between the noise detecting microphones 161 to 163 and the noise-cancellation effect detecting microphones 191 to 193.

Next, fan individual control of the fans 20A to 20C according to Embodiment 81 will be described.

Operation information selected by the remote controller 280 is input to the controller 281. As described above, the operation information includes, for example, operation mode information such as a cooling operation mode, heating operation mode, and dehumidification operation mode. Furthermore, air volume information such as strong, medium, and weak is also similarly input as operation information from the remote controller 280 to the controller 281.

Operation information input to the controller 281 is input to the identical-rotation-speed determining means 133 via the input section 130. The identical-rotation-speed determining means 133 to which the operation information is input determines, from the input operation information, a rotation speed at the time when performing same rotation speed control on the fans 20A to 20C.

In contrast, the sound pressure level digital values S1 to S3 detected in the noise-cancellation effect detecting microphones 191 to 193 and input from the signal processors 201 to 203, and the sound pressure level digital values T1 to T3 detected in the noise detecting microphones 161 to 163 are used for obtaining coherence values between the respectively corresponding microphones in the coherence calculating means 137.

The information of: coherence values computed in the coherence calculating means 137; and a rotation speed (a rotation speed during same rotation speed control) determined in the identical-rotation-speed determining means 133 is input to the fan-individual-control rotation speed determining means 134B. The fan-individual-control rotation speed determining means 134B determines the rotation speeds of the fans at the time when performing fan individual control, based on this information.

Specifically, the fan-individual-control rotation speed determining means 134B determines the rotation speeds of the fans so as to: increase the rotation speed of a fan close in distance to (having a high relevance to) a noise-cancellation effect detecting microphone in which coherence values are large: and decrease the rotation speed of a fan close in distance to (having a high relevance to) a noise-cancellation effect detecting microphone in which coherence values are small. It is desirable to determine the rotation speeds of the fans 20A to 20C so that the air volume obtained during fan individual control equals the air volume obtained during same rotation speed control.

For example, in the indoor unit 100 according to Embodiment 81, when a coherence value between the noise detecting microphone 161 and the noise-cancellation effect detecting microphone 191 is 0.8, a coherence value between the noise detecting microphone 162 and the noise-cancellation effect detecting microphone 192 is 0.8, and a coherence value between the noise detecting microphone 163 and the noise-cancellation effect detecting microphone 193 is 0.5, the fan-individual-control rotation speed determining means 134B determines the rotation speeds of the fans so as to increase the rotation speeds of the fans 20A and 20C and to decrease the rotation speed of the fan 20B.

Since air volume and rotation speed are proportional to each other, the same air volume is obtained by decreasing, by 20 %, the rotation speed of the fan 20B when the rotation speeds of the fan 20A and the fan 20C are increased by 10 % in the case of the structure as in FIG. 194, for example.

The above method of determining the rotation speeds of the fans 20A to 20C is only an example. For example, when a coherence value between the noise detecting microphone 161 and the noise-cancellation effect detecting microphone 191 is 0.8, a coherence value between the noise detecting microphone 162 and the noise-cancellation effect detecting microphone 192 is 0.7, and a coherence value between the noise detecting microphone 163 and the noise-cancellation effect detecting microphone 193 is 0.5, the fan-individual-control rotation speed determining means 134B may determine the rotation speeds of the fans so as to: increase the rotation speed of the fan 20A; decrease the rotation speed of the fan 20B; and maintain the rotation speed of the fan 20C as it is.

That is, the fan-individual-control rotation speed determining means 134B may determine the rotation speeds of the fans so as to: increase the rotation speed of the fan 20A close in distance to the noise-cancellation effect detecting microphone 191 in which the coherence value is the largest; decrease the rotation speed of the fan 20B close in distance to the noise-cancellation effect detecting microphone 193 in which the coherence value is the smallest; and maintain the rotation speed of the fan 20C that is not either of them, as it is.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

As described above, when active noise cancellation is used, expected noise cancellation effects are different depending on coherence values between the noise detecting microphones 161 to 163 and the noise-cancellation effect detecting microphones 191 to 193. That is, it can be inferred that noise cancellation effect is high in a noise-cancellation effect detecting microphone in which coherence values are large, and noise cancellation effect is low in a noise-cancellation effect detecting microphone in which coherence values are small.

Therefore, the indoor unit 100 according to Embodiment 81 that includes the plurality of fans 20A to 20C: increases the rotation speed of the fan close in distance to a noise-cancellation effect detecting microphone in which coherence values are large; and decreases the rotation speed of the fan close in distance to a noise-cancellation effect detecting microphone in which coherence values are small.

As a result, in the indoor unit 100 according to Embodiment 81, noise cancellation effect becomes further higher in an area in which it is inferred that noise cancellation effect is high, and noise becomes smaller in an area in which it is inferred that noise cancellation effect is low. Because of this, it is possible to reduce noise emitted from the whole of the air outlet 3 in comparison with an indoor unit using a single fan or an indoor unit that does not use fan individual control. Furthermore, the indoor unit 100 according to Embodiment 81 can suppress the degradation of aerodynamic performance by individually controlling the rotation speeds of the plurality of fans 20A to 20C so that air volume is constantly the same as that during same rotation speed control.

Furthermore, as shown in FIGs. 191 and 192 of Embodiment 80, by dividing the air passage of the indoor unit 100 into a plurality of areas, it is possible to further improve noise cancellation effect. That is, it is possible to separate noise emitted from the fans 20A to 20C into each area, the noise cancellation mechanism A can reduce only noise emitted from the fan 20A, the noise cancellation mechanism B can reduce only noise emitted from the fan 20C, and the noise cancellation mechanism C can reduce only noise emitted from the fan 20B. Because of this, crosstalk noise components (noise emitted from fans provided in adjacent flow passages) detected by the noise detecting microphones 161 to 163 and the noise-cancellation effect detecting microphones 191 to 193 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. Therefore, by dividing the air passage of the indoor unit 100 into a plurality of areas, it is possible to further reduce noise in comparison with the structure of FIG. 194.

As in FIG. 193 of Embodiment 80, when there is a fan for which a noise cancellation mechanism is not provided, the noise of an area becomes smaller in which a noise cancellation mechanism is not provided, by lowering the rotation speed of the fan 20, and it is possible to obtain a similar noise cancellation effect.

The installation positions of the noise detecting microphones 161 to 163 according to Embodiment 81 may be anywhere if the installation positions are on the upstream sides of the control speakers 181 to 183. Furthermore, the installation positions of the control speakers 181 to 183 may be anywhere if the installation positions are on the downstream sides of the noise detecting microphones 161 to 163 and on the upstream sides of the noise-cancellation effect detecting microphones 191 to 193.

Furthermore, although the noise-cancellation effect detecting microphones 191 to 193 are disposed substantially on the extension lines of the rotation axes of the fans 20A to 20C in Embodiment 81, the installation positions of the noise-cancellation effect detecting microphones 191 to 193 may be anywhere if the installation positions are on downstream sides of the control speakers 181 to 183. Furthermore, although each three noise detecting microphones, control speakers, noise-cancellation effect detecting microphones, and signal processors are disposed in Embodiment 81, but the present invention is not limited to this.

Furthermore, although the air-sending fan control means 173 includes the CPU 131 in the controller 281 in Embodiment 81, the air-sending fan control means 173 may include hardware such as an LSI (large scale integration), an FPGA (field programmable gate array) or the like. Furthermore, the structure of the air-sending fan control means 173 is also not limited to the structure shown in FIG. 195.

Furthermore, although the air-sending fan control means 173 is configured so as to increase the rotation speeds of the fans 20A and 20C close in distance to the noise-cancellation effect detecting microphones 191 and 192 in which coherence values are large, and decrease the rotation speed of the fan 20B close in distance to the noise-cancellation effect detecting microphone 193 in which coherence values are small in Embodiment 81, the air-sending fan control means 173 may be configured to perform either one of them.

Hereinabove, in the indoor unit 100 according to Embodiment 81, the plurality of fans 20A to 20C are disposed, and the controller 281 (more specifically, the air-sending fan control means 173) for individually controlling the rotation speeds of the fans 20A to 20C is provided. The air-sending fan control means 173 calculates coherence values between the noise detecting microphones 161 to 163 and the noise-cancellation effect detecting microphones 191 to 193, performs control so as to increase the rotation speed of a fan close in distance to the noise-cancellation effect detecting microphone in which coherence values between the noise detecting microphone and the noise-cancellation effect detecting microphone are large, and performs control so as to decrease the rotation speed of a fan close in distance to the noise-cancellation effect detecting microphone in which coherence values between the noise detecting microphone and the noise-cancellation effect detecting microphone are small.

As a result, noise cancellation effect becomes further higher in an area in which a high noise cancellation effect can be expected, and noise becomes smaller in an area in which noise cancellation effect cannot be expected. Accordingly, noise can be more reduced than an indoor unit that has a noise cancellation mechanism of the same structure and a single fan or an indoor unit that does not use fan individual control.

Furthermore, since the air-sending fan control means 173 controls the rotation speeds of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Furthermore, by dividing the air passage of the indoor unit 100 into a plurality of areas using the partition plates 90 and 90a, it is possible to separate each noise emitted from the fans 20A to 20C, in which the noise cancellation mechanism A reduces only noise emitted from the fan 20A, the noise cancellation mechanism B reduces only noise emitted from the fan 20C, and the noise cancellation mechanism C reduces only noise emitted from the fan 20B. Accordingly, crosstalk noise components due to noise emitted to adjacent areas in each area are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, since the phase of noise transferred in the indoor unit 100 becomes uniform and phase error during interference of control sound is reduced, it is possible to obtain a further higher noise reduction effect in comparison with the structure in FIG. 194. Furthermore, even when there is the fan 20 for which a noise cancellation mechanism is not provided, the noise of an area becomes smaller in which a noise cancellation mechanism is not provided, by lowering the rotation speed of the fan 20, and it is possible to obtain a similar noise cancellation effect.

Furthermore, in the indoor unit 100 according to Embodiment 81, the control of rotation speed is performed based on coherence values between noise detecting microphones and noise-cancellation effect detecting microphones. Since it is possible to infer a theoretical noise cancellation effect from the coherence values, it is possible to perform control of the rotation speeds of fans more optimally and finely based on coherence values in each noise-cancellation effect detecting microphone. Because of this, the indoor unit 100 according to Embodiment 81 can obtain a higher noise cancellation effect in comparison with the structures of Embodiment 79 and Embodiment 80.

Embodiment 82

Noise cancellation mechanisms for carrying out the present invention are not limited to the noise cancellation mechanisms described in Embodiment 79 to Embodiment 81. For example, even if a noise cancellation mechanism different from the above-described noise cancellation mechanisms is used, it is possible to obtain an air-conditioning apparatus having effects similar to those of Embodiment 79 to Embodiment 81.

In Embodiment 82, an example using a different noise cancellation mechanism in an air-conditioning apparatus according to Embodiment 79 will be described. Furthermore, the following description focuses on items in Embodiment 82 that are different from those in Embodiment 79 to Embodiment 81, and components that are the same as in Embodiment 79 to Embodiment 81 are given the same reference characters.

FIG. 196 is a front view showing an indoor unit according to Embodiment 82 of the present invention.

The indoor unit 100 according to Embodiment 82 differs from the indoor unit 100 of Embodiment 79 in the structure of the noise cancellation mechanism. Specifically, in the noise cancellation mechanism A of the indoor unit 100 according to Embodiment 79, two microphones (the noise detecting microphone 161 and the noise-cancellation effect detecting microphone 191) are used in order to perform active noise cancellation.

In contrast, a noise cancellation mechanism D used in the indoor unit 100 according to Embodiment 82 as a noise cancellation mechanism corresponding to the noise cancellation mechanism A replaces two microphones (the noise detecting microphone 161 and the noise-cancellation effect detecting microphone 191) of the noise cancellation mechanism A with one microphone (the noise detection/noise-cancellation effect detecting microphone 211).

Similarly, in the noise cancellation mechanism B of the indoor unit 100 according to Embodiment 79, two microphones (the noise detecting microphone 162 and the noise-cancellation effect detecting microphone 192) are used in order to perform active noise cancellation. In contrast, a noise cancellation mechanism E used in the indoor unit 100 according to Embodiment 82 as a noise cancellation mechanism corresponding to the noise cancellation mechanism B replaces two microphones (the noise detecting microphone 162 and the noise-cancellation effect detecting microphone 192) of the noise cancellation mechanism B with one microphone (a noise detection/noise-cancellation effect detecting microphone 212).

Furthermore, since the methods for processing signals are different, the signal processor 204 and a signal processor 205 are provided instead of the signal processors 201 and 202 in the indoor unit 100 according to Embodiment 82. The structures of the signal processors 204 and 205 is quite the same as the structure described in Embodiment 73.

Next, the operation of the indoor unit 100 will be described.

As in Embodiment 79, when the indoor unit 100 operates, the bladed wheels of the fans 20A to 20C rotate, air of the indoor side is sucked from the upper sides of the fans 20A to 20C, the air is sent to the lower sides of the fans 20A to 20C, and, thus, an air flow is generated. This causes operation sound (noise) in the vicinity of the air outlets of the fans 20A to 20C and the sound propagates to the downstream side.

The air sent by the fans 20A to 20C passes through the air passage and is sent to the heat exchanger 50. For example, during cooling operation, a cold refrigerant is transferred to the heat exchanger 50 through a pipe connected to the outdoor unit (not shown). The air sent to the heat exchanger 50 is cooled by the refrigerant flowing through the heat exchanger 50 and the cold air is directly discharged to the indoor side from the air outlet 3.

The method for suppressing operation sound of the indoor unit 100 is also quite the same as that of Embodiment 73. The method outputs control sound so as to bring, close to zero, noise detected in the noise detection/noise-cancellation effect detecting microphones 211 and 212, and as a result, operates so as to suppress noise in the noise detection/noise-cancellation effect detecting microphones 211 and 212.

As described also in Embodiment 79, an active noise cancellation method outputs control sound from the control speakers 181 and 182 so that the control sound becomes opposite in phase to noise at the installation places (control points) of the noise detection/noise-cancellation effect detecting microphones 211 and 212. Because of this, although noise cancellation effect becomes higher near the noise detection/noise-cancellation effect detecting microphones 211 and 212, the phase of the control sound changes when being distant from the points. Therefore, at places distant from the noise detection/noise-cancellation effect detecting microphones 211 and 212, the phase shift between noise and control sound becomes larger and noise cancellation effect becomes lower.

The fan individual control of the fans 20A to 20C according to Embodiment 82 is the same control as that of the air-sending fan control means 171 described in Embodiment 79.

In this way, in the indoor unit 100 including the plurality of fans 20A to 20C, by: increasing the rotation speeds of the fans 20A and 20C close in distance to the noise detection/noise-cancellation effect detecting microphones 211 and 212; and decreasing the rotation speed of the fan 20B distant from the noise detection/noise-cancellation effect detecting microphones 211 and 212, it is possible to: increase noise to the vicinity of the noise detection/noise-cancellation effect detecting microphones 211 and 212 in which noise cancellation effect due to active noise cancellation is high; and decrease noise in an area distant from the noise detection/noise-cancellation effect detecting microphones 211 and 212 in which noise cancellation effect due to active noise cancellation becomes lower.

That is, as described above, when using active noise cancellation, although the noise cancellation effect in: the noise detection/noise-cancellation effect detecting microphones 211 and 212 serving as control points for noise control; and their peripheries becomes higher, the phase shift between control sound emitted from the control speakers 181 and 182 and noise becomes larger and noise cancellation effect becomes lower at places distant from the control points.

However, in Embodiment 82, by using a structure including the plurality of fans 20A to 20C in the indoor unit 100, it is possible to: increase the rotation speeds of the fans 20A and 20C (fans emitting noise for which noise cancellation effect is high) close in distance to the noise detection/noise-cancellation effect detecting microphones 211 and 212; and decrease the rotation speed of the fan 20B (a fan emitting noise for which noise cancellation effect is low) distant from the noise detection/noise-cancellation effect detecting microphones 211 and 212.

As a result, since noise cancellation effect becomes further higher in an area in which noise cancellation effect is high and noise becomes smaller in an area in which noise cancellation effect is low, the indoor unit 100 according to Embodiment 82 can reduce noise emitted from the whole of the air outlet 3 in comparison with an indoor unit using a single fan or an indoor unit that does not use fan individual control. Furthermore, the indoor unit 100 according to Embodiment 82 can suppress the degradation of aerodynamic performance by individually controlling the rotation speeds of the plurality of fans 20A to 20C so that air volume is constantly the same as that during same rotation speed control.

Furthermore, as shown in FIGs. 197 and 198, by dividing the air passage of the indoor unit 100 into a plurality of areas, it is possible to further improve noise cancellation effect.

FIG. 197 is a front view showing another example of an indoor unit according to Embodiment 82 of the present invention. Furthermore, FIG. 198 is a left side view of the indoor unit shown in FIG. 197. FIG. 198 is a view penetrating a side wall of the casing 1 of the indoor unit 100. The indoor unit 100 shown in FIGs. 197 and 198 divides the air passage by the partition plates 90 and 90a to partition it into an area through which air blown by the fan 20A passes and an area through which air blown by the fan 20B passes, and an area through which air blown by the fan 20C passes.

Then, the control speaker 181 and the noise detection/noise-cancellation effect detecting microphone 211 of the noise cancellation mechanism D are disposed in the area through which air blown by the fan 20A passes. Furthermore, the control speaker 182 and the noise detection/noise-cancellation effect detecting microphone 212 of the noise cancellation mechanism E are disposed in the area through which air blown by the fan 20C passes.

By thus structuring the indoor unit 100, it is possible to separate noise emitted from the fans 20A to 20C into each area, the noise cancellation mechanism D reduces only noise emitted from the fan 20A, and the noise cancellation mechanism E reduces only noise emitted from the fan 20C. Because of this, since it is possible to prevent the noise detection/noise-cancellation effect detecting microphones 211 and 212 from detecting noise emitted from the fan 20B, crosstalk noise components in the noise detection/noise-cancellation effect detecting microphones 211 and 212 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. Therefore, by structuring the indoor unit 100 as in FIGs. 197 and 198, it is possible to further reduce noise in comparison with the structure of FIG. 196.

In FIGs. 197 and 198, although partition plates are inserted across the entire area of the air passage, a part of the air passage such as, for example, only the upstream sides of the heat exchanger 50 or only the downstream sides of the heat exchanger 50 may be partitioned by partition plates.

Although the noise detection/noise-cancellation effect detecting microphones 211 and 212 are installed on the downstream sides of the control speakers 181 and 182 in Embodiment 82, the noise detection/noise-cancellation effect detecting microphones 211 and 212 may be installed on the upstream sides of the control speakers 181 and 182. Furthermore, although each two control speakers, noise detection/noise-cancellation effect detecting microphones, and signal processors are disposed in Embodiment 82, but the present invention is not limited to this.

Furthermore, although the air-sending fan control means 171 includes the CPU 131 in the controller 281 in Embodiment 82, the air-sending fan control means 173 may include hardware such as an LSI (large scale integration), an FPGA (field programmable gate array) or the like. Furthermore, the structure of the air-sending fan control means 171 is also not limited to the structure shown in FIG. 186 as in Embodiment 79.

Furthermore, although the air-sending fan control means 171 is configured so as to increase the rotation speeds of the fans 20A and 20C close in distance to the noise detection/noise-cancellation effect detecting microphones 211 and 212, and decrease the rotation speed of the fan 20B distant from the noise detection/noise-cancellation effect detecting microphones 211 and 212 in Embodiment 82, the air-sending fan control means 171 may be configured to perform either one of them.

Hereinabove, in the indoor unit 100 according to Embodiment 82, the plurality of fans 20A to 20C is disposed, and the controller 281 (more specifically, the air-sending fan control means 171) for individually controlling the rotation speeds of the fans 20A to 20C is provided. The air-sending fan control means 171: performs control so as to increase the rotation speeds of the fans 20A and 20C sending air to areas near the noise detection/noise-cancellation effect detecting microphones 211 and 212 that are areas in which noise cancellation effect is high; and performs rotation speed control so as to decrease the rotation speed of the fan 20B sending air to an area distant from the noise detection/noise-cancellation effect detecting microphones 211 and 212 that is an area in which noise cancellation effect becomes lower.

Because of this, noise cancellation effect becomes further higher in an area in which noise cancellation effect is high, and noise becomes smaller in an area in which noise cancellation effect is low. Accordingly, noise can be more reduced than an indoor unit that has a noise cancellation mechanism of the same structure and a single fan or an indoor unit that does not use fan individual control.

Furthermore, since the air-sending fan control means 171 controls the rotation speeds of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Furthermore, by dividing the air passage of the indoor unit 100 into a plurality of areas by the partition plates 90 and 90a, it is possible to separate each noise emitted from the fans 20A to 20C, the noise cancellation mechanism D reduces only noise emitted from the fan 20A, and the noise cancellation mechanism E reduces only noise emitted from the fan 20C. Because of this, crosstalk noise components due to noise emitted from the fan 20B are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, the phase of noise transferred in the indoor unit 100 becomes uniform and phase error during interference of control sound is reduced. Furthermore, by lowering the rotation speed of the fan 20B for which a noise cancellation mechanism is not provided, the noise of an area becomes smaller in which a noise cancellation mechanism is not provided, and it is possible to obtain a higher noise reduction effect in comparison with the structure in FIG. 196.

Furthermore, in Embodiment 82, since the noise detecting microphones 161 and 162, and the noise-cancellation effect detecting microphones 191 and 192 are integrated into the noise detection/noise-cancellation effect detecting microphones 211 and 212, it is possible to decrease the number of microphones and reduce the number of parts, and thus, it is possible to further reduce costs.

Embodiment 83

The noise cancellation mechanism shown in Embodiment 82 may be used in the indoor unit shown in Embodiment 80, of course. The following description focuses on items in Embodiment 83 that are different from those in Embodiment 79 to Embodiment 82, and components that are the same as in Embodiment 79 to Embodiment 82 are given the same reference characters.

FIG. 199 is a front view showing an indoor unit according to Embodiment 83 of the present invention.

The indoor unit 100 according to Embodiment 83 differs from the indoor unit 100 according to Embodiment 82 in that a noise cancellation mechanism F (the control speaker 183, a noise detection/noise-cancellation effect detecting microphone 213, and a signal processor 206) is provided. The structure of the signal processor 206 is quite the same as those of the signal processors 204 and 205.

Furthermore, as in Embodiment 80, the indoor unit 100 according to Embodiment 83 differs from the indoor unit 100 according to Embodiment 82 also in that signal lines (signal lines for sending the signals S1, S2, and S3) connected from the signal processors 204 to 206 to the air-sending fan control means 172 are provided. The signals S1, S2, and S3 sent from the signal processors 204 to 206 to the air-sending fan control means 172 are signals obtained by digitally converting, in the A/D converter 152 through the microphone amplifier 151, signals input from the noise detection/noise-cancellation effect detecting microphones 211 to 213. That is, the signals S1, S2, and S3 are sound pressure level digital values detected in the noise detection/noise-cancellation effect detecting microphones 211 to 213.

The structure of the air-sending fan control means 172 is the same as the structure described in Embodiment 80, and is the structure shown in FIG. 190. The air-sending fan control means 172 includes the identical-rotation-speed determining means 133, a plurality of averaging means 136 (in the same number as that of the noise-cancellation effect detecting microphones), fan-individual-control rotation speed determining means 134A, and a plurality of the switches 135 (in the same number as that of the fans 20).

The identical-rotation-speed determining means 133 determines a rotation speed used to rotate the fans 20A to 20C at the same rotation speed based on operation information input from the remote controller 280. The operation information input from the remote controller 280 includes, for example, operation mode information such as a cooling operation mode, heating operation mode, and dehumidification operation mode and air volume information such as strong, medium, and weak. The digital values S1, S2, and S3 of sound pressure levels detected in the noise-cancellation effect detecting microphones 191 to 193 are input to the averaging means 136, which average these signals S1, S2, and S3 for a certain given time.

The fan-individual-control rotation speed determining means 134A determines each rotation speed at the time when performing fan individual control on the fans 20A to 20C, based on each signal S1, S2, and S3 averaged in the averaging means 136 and rotation speed information input from the identical-rotation-speed determining means 133. The switch 135 switches the rotation control signals for the fans 20A to 20C sent to the motor drivers 282A to 282C based on a signal input from, for example, the remote controller 280.

That is, the switch 135 switches whether to operate all the fans 20A to 20C at the same rotation speed (perform same rotation speed control) or to operate the fans 20A to 20C at each individual rotation speed (perform fan individual control).

Next, the operation of the indoor unit 100 will be described.

The point different from Embodiment 82 is only the operation of the air-sending fan control means 172. Furthermore, the operation of the air-sending fan control means 172 is as described in Embodiment 80. That is, the sound pressure level digital values S1 to S3 detected in the noise detection/noise-cancellation effect detecting microphones 211 to 213 are averaged for a certain given time in the averaging means 136. The fan-individual-control rotation speed determining means 134A determines the rotation speeds of the fans at the time when performing fan individual control, based on these averaged sound pressure level values and a rotation speed determined in the identical-rotation-speed determining means 133.

Specifically, the fan-individual-control rotation speed determining means 134A determines the rotation speeds of the fans so as to: increase the rotation speed of a fan close in distance to (having a high relevance to) a noise-cancellation effect detecting microphone in which the averaged sound pressure level value is small: and decrease the rotation speed of a fan close in distance to (having a high relevance to) a noise-cancellation effect detecting microphone in which the averaged sound pressure level value is large. It is desirable to determine the rotation speeds of the fans 20A to 20C so that the air volume obtained during fan individual control equals the air volume obtained during same rotation speed control.

For example, in the indoor unit 100 according to Embodiment 83, when the average value of noise levels detected in the noise detection/noise-cancellation effect detecting microphone 211 is 45 dB, the average value of noise levels detected in the noise detection/noise-cancellation effect detecting microphone 212 is 45 dB, and the average value of noise levels detected in the noise detection/noise-cancellation effect detecting microphone 213 is 50 dB, the fan-individual-control rotation speed determining means 134A determines the rotation speeds of the fans 20 so as to increase the rotation speeds of the fans 20A and 20C and to decrease the rotation speed of the fan 20B.

Since air volume and rotation speed are proportional to each other, the same air volume is obtained by decreasing, by 20 %, the rotation speed of the fan 20B when the rotation speeds of the fan 20A and the fan 20C are increased by 10 % in the case of the structure as in FIG. 199, for example.

The above method of determining the rotation speeds of the fans 20A to 20C is only an example. For example, when the average value of noise levels detected in the noise detection/noise-cancellation effect detecting microphone 211 is 45 dB, the average value of noise levels detected in the noise detection/noise-cancellation effect detecting microphone 212 is 47 dB, and the average value of noise levels detected in the noise detection/noise-cancellation effect detecting microphone 213 is 50 dB, the fan-individual-control rotation speed determining means 134A may determine the rotation speeds of the fans so as to increase the rotation speed of the fan 20A, to decrease the rotation speed of the fan 20B, and to maintain the rotation speed of the fan 20C as it is.

That is, the fan-individual-control rotation speed determining means 134A may determine the rotation speeds of the fans so as to increase the rotation speed of the fan 20A close in distance to the noise detection/noise-cancellation effect detecting microphone 211 in which the detected noise level is the lowest, decrease the rotation speed of the fan 20B close in distance to the noise detection/noise-cancellation effect detecting microphone 213 in which the detected noise level is the highest, and maintain the rotation speed of the fan 20C that is not either of them, as it is.

When an operation information signal (for example, a signal for the low noise mode etc.) instructing fan individual control is input from the remote controller 280, the rotation speeds of the fans are individually controlled. That is, when an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

Here, in the case of the indoor unit 100 according to Embodiment 83, as in Embodiment 80, areas near the noise detection/noise-cancellation effect detecting microphones 211 and 212 become higher in noise cancellation effect than an area near the noise detection/noise-cancellation effect detecting microphone 213 depending on the magnitude of crosstalk noise components from adjacent fans. That is, areas near the noise detection/noise-cancellation effect detecting microphones 211 and 212 become lower in detected noise level than an area near the noise detection/noise-cancellation effect detecting microphone 213. In contrast, the area near the noise detection/noise-cancellation effect detecting microphone 213 becomes lower in noise cancellation effect.

Therefore, the indoor unit 100 including the plurality of fans 20A to 20C according to Embodiment 83: increases the rotation speeds of the fans 20A and 20C close in distance to the noise detection/noise-cancellation effect detecting microphones 211 and 212 in which the detected noise level average value is smaller of the average values of noise level values detected by the noise detection/noise-cancellation effect detecting microphones 211 to 213; and decreases the rotation speed of the fan 20B close in distance to the noise detection/noise-cancellation effect detecting microphone 213 in which the detected noise level average value is larger of the average values of noise level values detected by the noise detection/noise-cancellation effect detecting microphones 211 to 213.

As a result, since noise cancellation effect becomes further higher in an area in which noise cancellation effect is high and noise becomes smaller in an area in which noise cancellation effect is low, the indoor unit 100 according to Embodiment 83 can reduce noise emitted from the whole of the air outlet 3 in comparison with an indoor unit using a single fan or an indoor unit that does not use fan individual control. Furthermore, the indoor unit 100 according to Embodiment 83 can suppress the degradation of aerodynamic performance by individually controlling the rotation speeds of the plurality of fans 20A to 20C so that air volume is constantly the same as that during same rotation speed control.

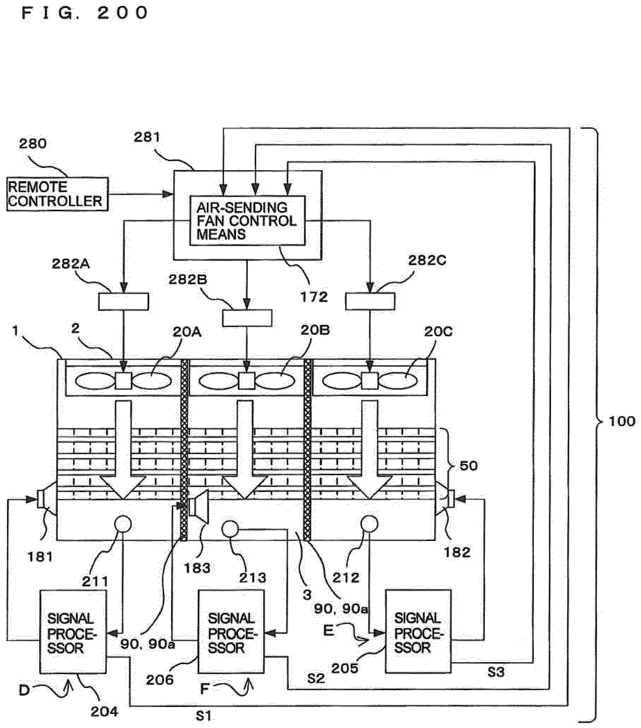

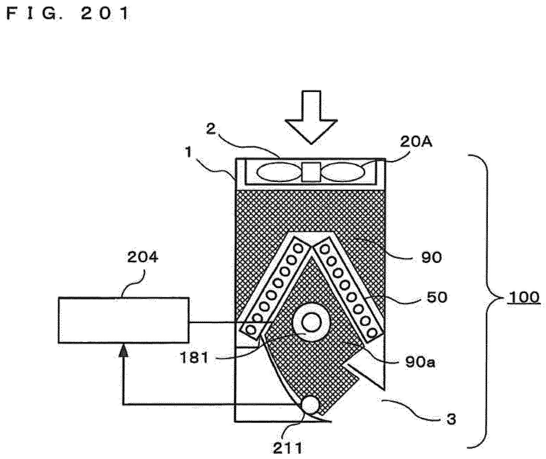

Furthermore, as shown in FIGs. 200 and 201, by dividing the air passage of the indoor unit 100 into a plurality of areas, it is possible to further improve noise cancellation effect.

FIG. 200 is a front view showing another example of an indoor unit according to Embodiment 83 of the present invention. Furthermore, FIG. 201 is a left side view of the indoor unit shown in FIG. 200. FIG. 201 is a view penetrating a side wall of the casing 1 of the indoor unit 100. The indoor unit 100 shown in FIGs. 200 and 201 divides the air passage by the partition plates 90 and 90a to partition it into an area through which air blown by the fan 20A passes and an area through which air blown by the fan 20B passes, and an area through which air blown by the fan 20C passes.

Then, the control speaker 181 and the noise detection/noise-cancellation effect detecting microphone 211 of the noise cancellation mechanism D are disposed in the area through which air blown by the fan 20A passes. Furthermore, the control speaker 182 and the noise detection/noise-cancellation effect detecting microphone 212 of the noise cancellation mechanism E are disposed in the area through which air blown by the fan 20C passes. Furthermore, the control speaker 183 and the noise detection/noise-cancellation effect detecting microphone 213 of the noise cancellation mechanism F are disposed in an area through which air blown by the fan 20B passes.

By thus structuring the indoor unit 100, it is possible to separate noise emitted from the fans 20A to 20C into each area, in which the noise cancellation mechanism D reduces only noise emitted from the fan 20A, the noise cancellation mechanism E reduces only noise emitted from the fan 20C, and the noise cancellation mechanism F reduces only noise emitted from the fan 20B. Because of this, crosstalk noise components (noise emitted from fans provided in adjacent flow passages) detected by the noise detection/noise-cancellation effect detecting microphones 211 to 213 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. Therefore, by structuring the indoor unit 100 as in FIGs. 200 and 201, it is possible to further reduce noise in comparison with the structure of FIG. 199.

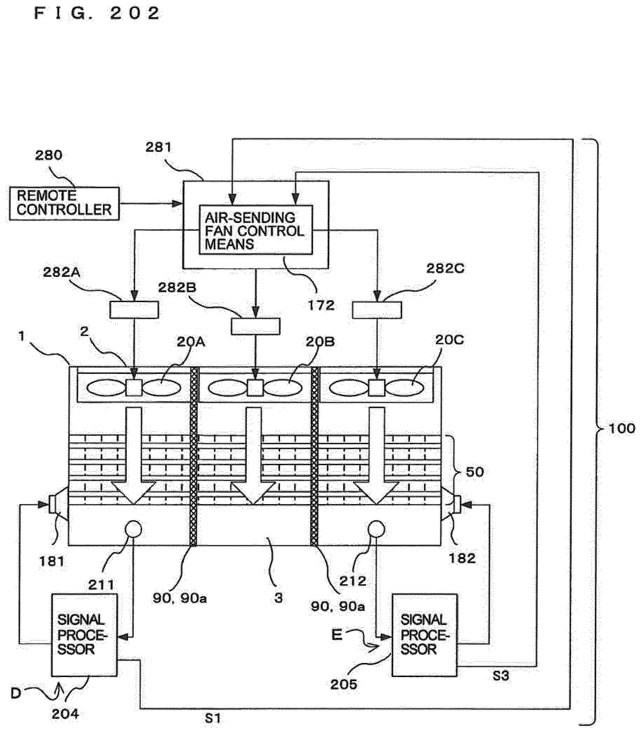

In FIGs. 200 and 201, although partition plates are inserted across the entire area of the air passage, a part of the air passage such as, for example, only the upstream sides of the heat exchanger 50 or only the downstream sides of the heat exchanger 50 may be separated by partition plates. Furthermore, as in Embodiment 82, even when there is the fan 20 for which a noise cancellation mechanism is not provided, as in FIG. 202, the noise of an area becomes smaller in which a noise cancellation mechanism is not provided, by lowering the rotation speed of the fan 20, and it is possible to obtain a similar noise cancellation effect.

Although the noise detection/noise-cancellation effect detecting microphones 211 to 213 are installed on the downstream sides of the control speakers 181 to 183 in Embodiment 83, the noise detection/noise-cancellation effect detecting microphones 211 to 213 may be installed on the upstream sides of the control speakers 181 to 183. Furthermore, although each two to three control speakers, noise detection/noise-cancellation effect detecting microphones, and signal processors are disposed in Embodiment 83, but the present invention is not limited to this.

Furthermore although the air-sending fan control means 172 includes the CPU 131 in the controller 281 in Embodiment 83, the air-sending fan control means 172 may include hardware such as an LSI (large scale integration), an FPGA (field programmable gate array) or the like. Furthermore, the structure of the air-sending fan control means 172 is, as in Embodiment 80, also not limited to the structure shown in FIG. 190.

Furthermore, although the air-sending fan control means 172 is configured so as to increase the rotation speed of a fan close in distance to a noise detection/noise-cancellation effect detecting microphone in which the noise level is low, and decrease the rotation speed of a fan close in distance to a noise detection/noise-cancellation effect detecting microphone in which the noise level is high in Embodiment 83, the air-sending fan control means 172 may be configured to perform either one of them.

Hereinabove, in the indoor unit 100 according to Embodiment 83, the plurality of fans 20A to 20C are disposed, and the controller 281 (more specifically, the air-sending fan control means 172) for individually controlling the rotation speeds of the fans 20A to 20C is provided.

The air-sending fan control means 172; performs control so as to increase the rotation speed of a fan close in distance to a noise detection/noise-cancellation effect detecting microphone in which the detected noise level is lower of the average values of noise levels detected by the noise detection/noise-cancellation effect detecting microphones 211 to 213; and performs rotation speed control so as to decrease the rotation speed of a fan close in distance to a noise detection/noise-cancellation effect detecting microphone in which the detected noise level is higher of the average values of noise levels detected by the noise detection/noise-cancellation effect detecting microphones 211 to 213.

Because of this, noise cancellation effect becomes further higher in an area in which noise cancellation effect is high (i.e., the noise level is low), and noise is reduced in an area in which noise cancellation effect is low (i.e., the noise level is high). Accordingly, noise can be more reduced than an indoor unit that has a noise cancellation mechanism of the same structure and a single fan or an indoor unit that does not use fan individual control.

Furthermore, since the air-sending fan control means 172 controls the rotation speeds of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Furthermore, by dividing the air passage of the indoor unit 100 into a plurality of areas by the partition plates 90 and 90a, it is possible to separate each noise emitted from the fans 20A to 20C, in which the noise cancellation mechanism D reduces only noise emitted from the fan 20A, the noise cancellation mechanism E reduces only noise emitted from the fan 20C, and the noise cancellation mechanism F reduces only noise emitted from the fan 20B. Accordingly, crosstalk noise components due to noise emitted to adjacent areas in each area are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, the phase of noise transferred in the indoor unit 100 becomes uniform and phase error during interference of control sound is reduced.

Therefore, noise cancellation effect becomes higher in the noise detection/noise-cancellation effect detecting microphones 211 to 213, and it is possible to further reduce noise in comparison with the structure in FIG. 200. Furthermore, even when there is the fan 20 for which a noise cancellation mechanism is not provided, the noise of an area becomes smaller in which a noise cancellation mechanism is not provided, by decreasing the rotation speed of the fan 20, and it is possible to obtain a similar noise cancellation effect.

Furthermore, in Embodiment 83, since the noise detecting microphones 161 to 163 and the noise-cancellation effect detecting microphones 191 to 193 are integrated into the noise detection/noise-cancellation effect detecting microphones 211 to 213, it is possible to decrease the number of microphones, to reduce the number of parts, and further reduce costs.

Embodiment 84

In Embodiment 79 to Embodiment 83, the fan that discharges noise having a high relevance to the noise-cancellation effect detecting microphone or the noise detection/noise-cancellation effect detecting microphone (that is, the fan that discharges noise for which the noise-cancellation effect detecting microphone or the noise detection/noise-cancellation effect detecting microphone easily exhibits noise cancellation effects) is taken to be the fan close in distance from the noise-cancellation effect detecting microphone or the noise detection/noise-cancellation effect detecting microphone.

However, the fan is not limited to this and the fan that discharges noise having a high relevance to the noise-cancellation effect detecting microphone or the noise detection/noise-cancellation effect detecting microphone (that is, the fan that discharges noise for which the noise-cancellation effect detecting microphone or the noise detection/noise-cancellation effect detecting microphone easily exhibits noise cancellation effects) may be taken to be a fan as below.

Embodiment 84 will be described using the air-conditioning apparatus according to Embodiment 79 as an example. The following description focuses on items in Embodiment 84 that are different from those in Embodiment 79 to Embodiment 83, and components that are the same as in Embodiment 79 to Embodiment 83 are given the same reference characters.

As described above, the basic structure of the indoor unit 100 according to Embodiment 84 is the same as in FIG. 184 described in Embodiment 79. The indoor unit 100 according to Embodiment 84 differs from the indoor unit 100 of Embodiment 79 in that the air-sending fan information having been input to the memory 132 of the controller 281 is different. That is, the indoor unit 100 according to Embodiment 84 differs from the indoor unit 100 of Embodiment 79 in that the air-sending fan information input from the memory 132 to the fan-individual-control rotation speed determining means 134 is different.

In Embodiment 79, the detailed installation structure of the control speakers 181 and 182 to the side face of the indoor unit 100 is not described; in Embodiment 84, the control speakers 181 and 182 are installed to the side face of the indoor unit 100 as below.

Since the control speakers 181 and 182 have a certain thickness, if they are installed to the front or the back of the indoor unit 100, the air passage is blocked, which will lead to deterioration of aerodynamic performance. Because of this, in Embodiment 84, the control speakers 181 and 182 are placed within a mechanical box (box in which the control substrate etc. are stored) provided at both side face parts of the casing 1. By placing the control speakers 181 and 182 in this manner, the control speakers 181 and 182 can be prevented from protruding into the air passage.

More specifically, in Embodiment 79, the identification numbers of the fans 20 close in distance to the noise-cancellation effect detecting microphones 191 and 192 are taken to be air-sending fan information. On the other hand, in Embodiment 84, the identification numbers of the fans 20 installed at both ends of the casing 1 of the indoor unit 100 are taken to be air-sending fan information. That is, as is seen from FIG. 184, the air-sending fan information in Embodiment 84 is the identification numbers of the fan 20A and the fan 20C.

The operation in the indoor unit 100 is the same as the operation described in Embodiment 79. Because of this, in the following, fan individual control of the fans 20A to 20C will be described.

The fan-individual-control rotation speed determining means 134 of the air-sending fan control means 171 determines the rotation speed of each of the fan 20 when performing fan individual control based on the rotation speed information determined by the identical-rotation-speed determining means 133 and the air-sending fan information read from the memory 132 as in Embodiment 79.

Specifically, the fan-individual-control rotation speed determining means 134 increases the rotation speeds of the fans 20A and 20C whose identification numbers are input to the memory 132 and decreases the rotation speed of the fan 20B whose identification number is not input to the memory 132. As a result, the fan-individual-control rotation speed determining means 134 increases the rotation speeds of the fans 20A and 20C installed at both ends of the casing 1 of the indoor unit 100 and decreases the rotation speed of the fan 20B installed in a position other than both ends of the casing 1 of the indoor unit 100. It is desirable to determine the rotation speeds of the fans 20A to 20C so that the air volume obtained during fan individual control equals the air volume obtained during same rotation speed control.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

The crosstalk noise component when detecting noise of the fans in the case where noise emitted from the fans 20A and 20C at both ends is actively deadened is different from that in the case where noise emitted from the fan 20B in a position other than both the ends is actively deadened. The reason is that in the case where noise emitted from the fan 20B is detected, noise emitted from the fans 20A and 20C adjacent to the fan 20B also enters as the crosstalk noise component.

Because of this, in Embodiment 84, the indoor unit 100 is structured to include a plurality of the fans 20A to 20C, so as to increase the rotation speeds of the fans 20A and 20C at both ends having a small crosstalk noise component when detecting noise and decrease the rotation speed of the fan 20B in a position other than both the ends having a large crosstalk noise component when detecting noise.

As a result of that, in the indoor unit 100 according to Embodiment 84, in the area where noise cancellation effects are high, the noise cancellation effects become higher and in the area where noise cancellation effects are low, noise becomes small, and therefore, the noise emitted from the whole of the air outlet 3 can be reduced compared to an indoor unit that uses a single fan or an indoor unit that does not use fan individual control.

Further, in the indoor unit 100 according to Embodiment 84, by individually controlling the rotation speeds of the plurality of fans 20A to 20C so that the air volume is constantly the same as that during same rotation speed control, deterioration of aerodynamic performance can be suppressed.

Further, in Embodiment 84, the control speakers 181 and 182 are installed on both side faces of the indoor unit 100 so that the control speakers 181 and 182 do not protrude into the air passage. Accordingly, pressure loss caused by the protruding of the control speakers 181 and 182 into the air passage can be prevented and deterioration of aerodynamic performance can be prevented.

Furthermore, in the indoor unit 100 according to Embodiment 84 also, as in the indoor unit 100 shown in FIG. 187 and FIG. 188 of Embodiment 79, by dividing the air passage of the indoor unit 100 into a plurality of areas, noise cancellation effects can be further improved.

That is, by dividing the air passage of the indoor unit 100 into a plurality of areas using the partition plates 90 and 90a, noise emitted from the fans 20A to 20C can be separated into each area. The noise cancellation mechanism A reduces only noise emitted from the fan 20A, and the noise cancellation mechanism B reduces only noise emitted from the fan 20C.

Because of this, since it is possible to prevent the noise detecting microphones 161 and 162, and the noise-cancellation effect detecting microphones 191 and 192 from detecting noise emitted from the fan 20B, crosstalk noise components in the noise detecting microphones 161 and 162, and the noise-cancellation effect detecting microphones 191 and 192 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. In contrast, by decreasing the rotation speed of the fan 20B in which a noise cancellation mechanism is not provided, the noise of an area is reduced in which a noise cancellation mechanism is not provided.

Consequently, in the indoor unit 100 according to Embodiment 84 also, by dividing the air passage of the indoor unit 100 into a plurality of areas, noise can be further reduced compared to the structure of FIG. 184. The partition plate does not need to be provided in the entire area of the air passage and part of the air passage, for example, only the upstream side of the heat exchanger 50 or only the downstream side of heat exchanger 50, may be partitioned using the partition plate.

In Embodiment 84, the noise detecting microphones 161 and 162 are installed on both side faces of the indoor unit 100, but, the installation positions of the noise detecting microphones 161 and 162 may be anywhere on the upstream sides of the control speakers 181 and 182. Further, in Embodiment 84, the noise-cancellation effect detecting microphones 191 and 192 are placed substantially on the extension lines of the rotation axes of the fans 20A and 20C, but, the installation positions of the noise-cancellation effect detecting microphones 191 and 192 may be anywhere on the downstream sides of the control speakers 181 and 182. Furthermore, in Embodiment 84, each two noise detecting microphones, control speakers, noise-cancellation effect detecting microphones, and signal processors are placed, but, the placement thereof is not limited to this.

In Embodiment 84, the air-sending fan control means 171 is configured with the CPU 131 within the controller 281, but, the air-sending fan control means 171 may be configured with hardware, such as an LSI (large scale integration), an FPGA (field programmable gate array) or the like. Furthermore, the structure of the air-sending fan control means 171 is also not limited to the structure shown in FIG. 186.

In Embodiment 84, the air-sending fan control means 171 is configured so as to increase the rotation speeds of the fans 20A and 20C at both ends of the indoor unit 100 and to decrease the rotation speed of the fan 20B in a position other than both ends, but, the air-sending fan control means 171 may be structured so as to perform one of the operations.

As above, in the indoor unit 100 according to Embodiment 84, the plurality of fans 20A to 20C are placed and the air-sending fan control means 171 for individually controlling the rotation speeds of the fans 20A to 20C is provided. The air-sending fan control means 171 perform control so as to increase the rotation speeds of the fans 20A and 20C installed at both ends of the indoor unit 100 and to decrease the rotation speed of the fan 20B installed in a position other than both the ends.

Accordingly, in the area where the crosstalk noise component from the neighboring fan is small and noise cancellation effects are high, the noise cancellation effects become further higher, and in the area where the crosstalk noise component is large and noise cancellation effects are low, noise becomes small. Because of this, in a noise cancellation mechanism having the same structure, it is possible to obtain high noise reduction effect in comparison with an indoor unit using a single fan or an indoor unit that does not use fan individual control.

Furthermore, since the air-sending fan control means 171 controls each rotation speed of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Further, the control speakers 181 and 182 are installed on both side faces of the indoor unit 100 so that the control speakers 181 and 182 do not protrude into the air passage. Accordingly, pressure loss caused by the protruding of the control speakers 181 and 182 into the air passage can be prevented and degradation of aerodynamic performance can be prevented.

Furthermore, by dividing the air passage of the indoor unit 100 into a plurality of areas using the partition plates 90 and 90a, it is possible to separate each noise emitted from the fans 20A to 20C, in which the noise cancellation mechanism A reduces only noise emitted from the fan 20A, and the noise cancellation mechanism B reduces only noise emitted from the fan 20C. Because of this, crosstalk noise components due to noise emitted from the fan 20B are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, the phase of noise transferred in the indoor unit 100 becomes uniform and phase error during interference of control sound is reduced. Furthermore, by decreasing the rotation speed of the fan 20B for which a noise cancellation mechanism is not provided, the noise of an area is reduced in which a noise cancellation mechanism is not provided, and it is possible to obtain a higher noise reduction effect in comparison with the structure in FIG. 184.

Embodiment 85

In the indoor unit according to Embodiment 82, the air-sending fan information described in Embodiment 84 may also be used, of course. The following description focuses on items in Embodiment 85 that are different from those in Embodiment 79 to Embodiment 84, and components that are the same as in Embodiment 79 to Embodiment 84 are given the same reference characters.

The basic structure of the indoor unit 100 according to Embodiment 85 is the same as in FIG. 196 described in Embodiment 82. The indoor unit 100 according to Embodiment 85 differs from the indoor unit 100 of Embodiment 82 in that the air-sending fan information input to the memory 132 of the controller 281 is different. More specifically, in Embodiment 85, the identification numbers of the fans 20 installed at both ends of the casing 1 of the indoor unit 100 are taken to be air-sending fan information. That is, as is seen from FIG. 196, the air-sending fan information in Embodiment 85 includes the identification numbers of the fan 20A and the fan 20C.

In Embodiment 82, the detailed installation structure of the control speakers 181 and 182 on the side face of the indoor unit 100 is not described; in Embodiment 85, the control speakers 181 and 182 are installed on the side face of the indoor unit 100 as below.

Since the control speakers 181 and 182 have a certain thickness, if they are installed to the front or the back of the indoor unit 100, the air passage is blocked, which will lead to degradation of aerodynamic performance. Because of this, in Embodiment 85, the control speakers 181 and 182 are placed within a mechanical box (box in which the control substrate etc. are stored, not shown) provided at both side face parts of the casing 1. By placing the control speakers 181 and 182 in this manner, the control speakers 181 and 182 can be prevented from protruding into the air passage.

The operation in the indoor unit 100 is the same as the operation described in Embodiment 82. Because of this, in the following, fan individual control of the fans 20A to 20C will be described.

The fan-individual-control rotation speed determining means 134 of the air-sending fan control means 171 determines the rotation speed of each fan when performing fan individual control based on the rotation speed information determined by the identical-rotation-speed determining means 133 and the air-sending fan information read from the memory 132 as in Embodiment 82. Specifically, the fan-individual-control rotation speed determining means 134 increases the rotation speeds of the fans 20A and 20C whose identification numbers have been input to the memory 132 and decreases the rotation speed of the fan 20B whose identification number has not been input to the memory 132.

As a result, the fan-individual-control rotation speed determining means 134 increases the rotation speeds of the fans 20A and 20C installed at both ends of the casing 1 of the indoor unit 100 and decreases the rotation speed of the fan 20B installed in a position other than both ends of the casing 1 of the indoor unit 100. It is desirable to determine the rotation speeds of the fans 20A to 20C so that the air volume obtained during fan individual control equals the air volume obtained during same rotation speed control.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

The crosstalk noise component when detecting noise of the fans in the case where noise emitted from the fans 20A and 20C at both ends is actively deadened is different from that in the case where noise emitted from the fan 20B in a position other than both the ends is actively deadened. The reason is that in the case where noise emitted from the fan 20B is detected, noise emitted from the fans 20A and 20C adjacent to the fan 20B also enters as the crosstalk noise component.

Because of this, in Embodiment 85, the indoor unit 100 is structured to include the plurality of fans 20A to 20C so as to increase the rotation speeds of the fans 20A and 20C at both ends having a small crosstalk noise component when detecting noise and to decrease the rotation speed of the fan 20B in a position other than both the ends having a large crosstalk noise component when detecting noise.

As a result, in the indoor unit 100 according to Embodiment 85, in the area where noise cancellation effects are high, the noise cancellation effects become higher and in the area where noise cancellation effects are low, noise becomes small, and therefore, the noise emitted from the whole of the air outlet 3 can be reduced compared to an indoor unit that uses a single fan or an indoor unit that does not use fan individual control. Further, in the indoor unit 100 according to Embodiment 85, by individually controlling the rotation speeds of the plurality of fans 20A to 20C so that the air volume is constantly the same as that during same rotation speed control, deterioration of aerodynamic performance can be suppressed.

Further, in Embodiment 85, the control speakers 181 and 182 are installed on both side faces of the indoor unit 100 so that the control speakers 181 and 182 do not protrude into the air passage. Accordingly, pressure loss caused by the protruding of the control speakers 181 and 182 into the air passage can be prevented and degradation of aerodynamic performance can be prevented.

Furthermore, in the indoor unit 100 according to Embodiment 85 also, as in the indoor unit 100 shown in FIG. 197 and FIG. 198 of Embodiment 82, by dividing the air passage of the indoor unit 100 into a plurality of areas, noise cancellation effects can be further improved.

That is, by dividing the air passage of the indoor unit 100 into a plurality of areas using the partition plates 90 and 90a, noise emitted from the fans 20A to 20C can be separated into each area. The noise cancellation mechanism D reduces only noise emitted from the fan 20A, and the noise cancellation mechanism E reduces only noise emitted from the fan 20C. Because of this, it is possible to prevent the noise detection/noise-cancellation effect detecting microphones 211 and 212 that are emitted from the fan 20B from detection, and therefore, the crosstalk noise components in the noise detection/noise-cancellation effect detecting microphones 211 and 212 become small.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. In contrast, by decreasing the rotation speed of the fan 20B in which a noise cancellation mechanism is not provided, the noise of an area is reduced in which a noise cancellation mechanism is not provided.

Consequently, in the indoor unit 100 according to Embodiment 85 also, by dividing the air passage of the indoor unit 100 into a plurality of areas, noise can be further reduced compared to the structure of FIG. 196. The partition plate does not need to be provided in the entire area of the air passage and part of the air passage, for example, only the upstream side of the heat exchanger 50 or only the downstream side of the heat exchanger 50, may be partitioned using the partition plate.

In Embodiment 85, the noise detection/noise-cancellation effect detecting microphones 211 and 212 are installed on the downstream sides of the control speakers 181 and 182, but, the noise detection/noise-cancellation effect detecting microphones 211 and 212 may be installed on the upstream sides of the control speakers 181 and 182. Further in Embodiment 85, each two control speakers, noise detection/noise-cancellation effect detecting microphones, and signal processors are placed, but, the placement thereof is not limited to this.

In Embodiment 85, the air-sending fan control means 171 is configured with the CPU 131 within the controller 281, but, may be configured with hardware, such as an LSI (large scale integration), an FPGA (field programmable gate array) or the like. Further, the structure of the air-sending fan control means 171 is also not limited thereto.

In Embodiment 85, the air-sending fan control means 171 is configured so as to increase the rotation speeds of the fans 20A and 20C at both ends of the indoor unit 100 and to decrease the rotation speed of the fan 20B in a position other than both the ends, but, the air-sending fan control means 171 may be configured so as to perform one of the operations.

As above, in the indoor unit 100 according to Embodiment 85, the plurality of fans 20A to 20C are placed and the air-sending fan control means 171 for individually controlling the rotation speeds of the fans 20A to 20C is provided. The air-sending fan control means 171 perform control so as to increase the rotation speeds of the fans 20A and 20C installed at both ends of the indoor unit 100 and to decrease the rotation speed of the fan 20B installed in a position other than both the ends.

Accordingly, in the area where the crosstalk noise component from the neighboring fan is small and noise cancellation effects are high, the noise cancellation effects become higher and in the area where the crosstalk noise component is large and noise cancellation effects are low, noise becomes small. Accordingly, noise can be more reduced than an indoor unit that has a noise cancellation mechanism of the same structure and a single fan or an indoor unit that does not use fan individual control.

Furthermore, since the air-sending fan control means 171 controls each rotation speed of the fans 20A to 20C so that the volume of air emitted from the air outlet 3 when fan individual control is used is the same as the volume of air emitted from the air outlet 3 when same rotation speed control is used, it is possible to reduce noise without degrading aerodynamic performance.

Further, the control speakers 181 and 182 are installed on both side faces of the indoor unit 100 so that the control speakers 181 and 182 do not protrude into the air passage. Accordingly, pressure loss caused by the protruding of the control speakers 181 and 182 into the air passage can be prevented and degradation of aerodynamic performance can be prevented.

Furthermore, by dividing the air passage of the indoor unit 100 into a plurality of areas by the partition plates 90 and 90a, it is possible to separate each noise emitted from the fans 20A to 20C, in which the noise cancellation mechanism D reduces only noise emitted from the fan 20A, and the noise cancellation mechanism E reduces only noise emitted from the fan 20C. Because of this, crosstalk noise components due to noise emitted from the fan 20B are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, the phase of noise transferred in the indoor unit 100 becomes uniform and phase error during interference of control sound is reduced. Further, by decreasing the rotation speed of the fan 20B not provided with the noise cancellation mechanism, the noise in the area where the noise cancellation mechanism is not provided becomes small and higher noise reduction effects can be obtained compared to the structure of FIG. 196.

Furthermore, in Embodiment 85, since the noise detecting microphones 161 and 162 and the noise-cancellation effect detecting microphones 191 and 192 are combined integrally into the noise detection/noise-cancellation effect detecting microphones 211 and 212, the number of microphones can be reduced and the number of parts can be reduced, thereby enabling a further reduction in cost.

Embodiment 86

When performing fan individual control in accordance with noise cancellation effects of the noise-cancellation effect detecting microphone and the noise detection/noise-cancellation effect detecting microphone, it may be possible to perform fan individual control, for example, as below. The following description focuses on items in Embodiment 86 that are different from those in Embodiment 79 to Embodiment 85, and components that are the same as in Embodiment 79 to Embodiment 85 are given the same reference characters.

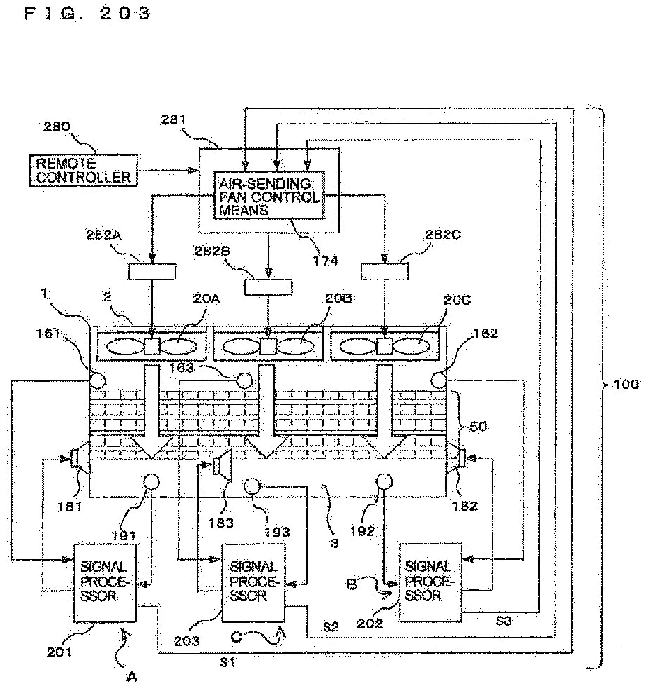

FIG. 203 is a front view showing an indoor unit according to Embodiment 86 of the present invention.

The indoor unit 100 according to Embodiment 86 differs from the indoor unit 100 of Embodiment 80 only in the structure of an air-sending fan control means 174.

The air-sending fan control means 174 according to Embodiment 86 will be described hereinafter.

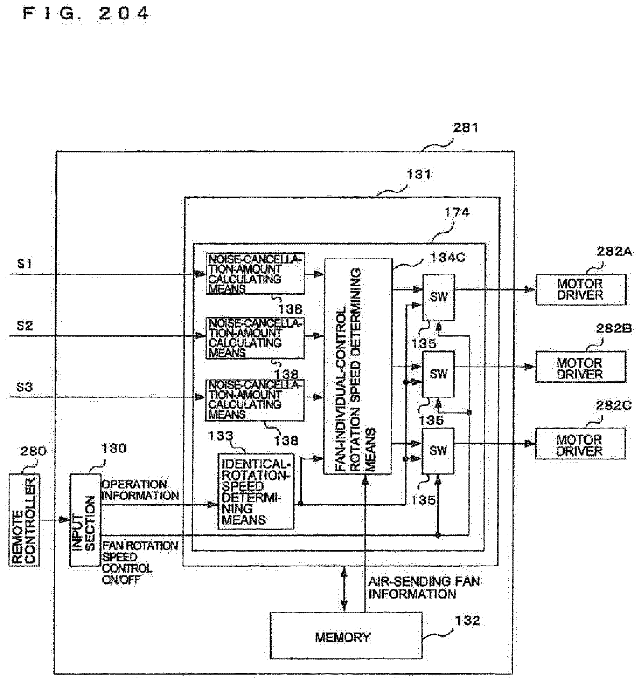

FIG. 204 is a block diagram showing a controller according to Embodiment 86 of the present embodiment. Various operations and means described below are performed by executing a program incorporated into the controller 281 that the indoor unit 100 includes. As in the structures described in Embodiment 79 to Embodiment 85, the controller 281 mainly includes the input section 130 that inputs a signal from an external input device, such as the remote controller 280, the CPU 131 that performs computation in accordance with the incorporated program, and the memory 132 that stores data and programs. Further, the CPU 131 according to Embodiment 86 includes the air-sending fan control means 174.

The air-sending fan control means 174 includes the identical-rotation-speed determining means 133, a plurality of noise cancellation amount calculating means 138 (in the same number as that of the noise-cancellation effect detecting microphones), fan-individual-control rotation speed determining means 134C, and a plurality of the switches 135 (in the same number as that of the fans 20). The identical-rotation-speed determining means 133 determines a rotation speed used to rotate the fans 20A to 20C at the same rotation speed based on operation information input from the remote controller 280.

The operation information input from the remote controller 280 includes, for example, operation mode information such as a cooling operation mode, heating operation mode, and dehumidification operation mode and air volume information such as strong, medium, and weak. The noise cancellation amount calculating means 138 receives the digital values S1, S2, and S3 of sound pressure levels detected by the noise-cancellation effect detecting microphones 191 to 193 and calculates the amount of noise cancellation from the signals of S1, S2, and S3.

The fan-individual-control rotation speed determining means 134C determines each rotation speed at the time when performing fan individual control on the fans 20A to 20C based on the amount of noise cancellation calculated by the noise cancellation amount calculating means 138 and the air-sending fan information stored in the memory 132. The air-sending fan information is information of the fans 20 having a high relevance to the noise-cancellation effect detecting microphones 191 to 193.

The switch 135 switches the rotation control signals for the fans 20A to 20C sent to the motor drivers 282A to 282C based on a signal input from, for example, the remote controller 280. That is, the switch 135 switches whether to operate all the fans 20A to 20C at the same rotation speed (perform same rotation speed control) or to operate the fans 20A to 20C at each individual rotation speed (perform fan individual control).

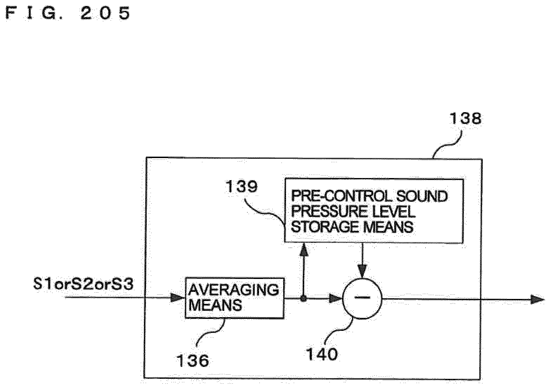

FIG. 205 is a block diagram showing a noise cancellation amount calculating means according to Embodiment 86 of the present invention.

The noise cancellation amount calculating means 138 includes the averaging means 136 that averages the signal that is input thereto (S1, S2, or S3), a pre-control sound pressure level storage means 139 that stores a sound pressure level before active noise cancellation control is started, and a difference calculator 140.

Next, the operation of the indoor unit 100 will be described.

As in Embodiment 80, when the indoor unit 100 operates, the bladed wheels of the fans 20A to 20C rotate, air of the indoor side is sucked from the upper sides of the fans 20A to 20C, the air is sent to the lower sides of the fans 20A to 20C, and thus an air flow is generated. This causes operation sound (noise) in the vicinity of the air outlets of the fans 20A to 20C and the sound propagates to the downstream side.

The air sent by the fans 20A to 20C passes through the air passage and is sent to the heat exchanger 50. For example, during cooling operation, a cold refrigerant is transferred to the heat exchanger 50 through a pipe connected to the outdoor unit (not shown). The air sent to the heat exchanger 50 is cooled by the refrigerant flowing through the heat exchanger 50 and the cold air is directly discharged to the indoor side from the air outlet 3.

Furthermore, the operation of the noise cancellation mechanisms A to C is also quite the same as that of Embodiment 80, and the mechanisms A to C: output control sound so as to bring, close to zero, noise detected in the noise-cancellation effect detecting microphones 191 to 193; and as a result, operate so as to suppress noise in the noise-cancellation effect detecting microphones 191 to 193.

In the case of the indoor unit 100 according to Embodiment 86, to the noise-cancellation effect detecting microphone 193, noise (crosstalk noise component) emitted from the neighboring fans 20A and 20C also is input in addition to noise emitted from the fan 20B. In contrast, crosstalk noise components detected in the noise-cancellation effect detecting microphones 191 and 192 are more reduced than in the noise-cancellation effect detecting microphone 193.

The reason is that only one fan (fan 20B) neighbors the noise-cancellation effect detecting microphones 191 and 192. Because of this, the noise cancellation effect of the noise cancellation mechanisms A and B is higher than that of the noise cancellation mechanism C.

Next, fan individual control of the fans 20A to 20C according to Embodiment 86 will be described.

Operation information selected by the remote controller 280 is input to the controller 281. As described above, the operation information includes, for example, operation mode information such as a cooling operation mode, heating operation mode, and dehumidification operation mode. Furthermore, air volume information such as strong, medium, and weak is also similarly input as operation information from the remote controller 280 to the controller 281.

Operation information input to the controller 281 is input to the identical-rotation-speed determining means 133 via the input section 130. The identical-rotation-speed determining means 133 to which the operation information is input determines, from the input operation information, a rotation speed at the time when performing same rotation speed control on the fans 20A to 20C. When fan individual control is not used, all the fans 20A to 20C are controlled to rotate at the same rotation speed.

On the other hand, in the noise cancellation amount calculating means 138, S1 to S3 (digital values of sound pressure levels detected by the noise-cancellation effect detecting microphones 191 to 193) are input to the averaging means 136 from the signal processors 201 to 203. The noise cancellation amount calculating means 138 average the sound pressure levels detected by the noise-cancellation effect detecting microphones 191 to 193 for a set period of time in the averaging means 136 before performing active noise cancellation control and store the averaged sound pressure level in the pre-control sound pressure level storage means 139.

Next, the noise cancellation amount calculating means 138 average the sound pressure levels detected by the noise-cancellation effect detecting microphones 191 to 193 during active noise cancellation control for a set period of time in the averaging means 136.

Then, the noise cancellation amount calculating means 138 calculate an amount of noise cancellation from a difference between "the sound pressure level, which is obtained by making the sound pressure levels detected by the noise-cancellation effect detecting microphones 191 to 193 during active noise cancellation control be averaged for a set period of time in the averaging means 136" and "the sound pressure level, which is obtained by making the sound pressure levels detected by the noise-cancellation effect detecting microphones 191 to 193 before performing active noise cancellation control be averaged for a set period of time in the averaging means 136" (sound pressure level stored in the pre-control sound pressure level storage means 139).

The noise cancellation amount calculated by the noise cancellation amount calculating means 138 is input to the fan-individual-control rotation speed determining means 134C.

In the memory 132, air-sending fan information is stored. The air-sending fan information is information of the fan 20 that emits noise having the highest relevance to the sound detected by the noise-cancellation effect detecting microphones 191 to 193. These identification numbers are allocated for each noise-cancellation effect detecting microphone. In Embodiment 86, the identification number, which is the air-sending fan information, is obtained as below. For example, of the noise emitted from the fans 20A to 20C, noise to which the sound detected by the noise-cancellation effect detecting microphone 191 has the highest relevance is checked.

When the sound detected by the noise-cancellation effect detecting microphone 191 has the highest relevance to noise emitted from the fan 20A, the air-sending fan information corresponding to the noise-cancellation effect detecting microphone 191 is the identification number indicating the fan 20A. Similarly, the air-sending fan information corresponding to the noise-cancellation effect detecting microphones 192 and 193 is also determined and stored in the memory 132 in advance.

For example, it is recommended to make the determination of air-sending fan information as below. For example, noise emitted from the fans 20A to 20C is detected with a microphone that accurately detects noise in the state where the fans 20A to 20C operate before shipping the product. Then, the coherence values between the sound detected by these microphones and the sound detected by the noise-cancellation effect detecting microphone 191 are measured.

After that, the microphone of the detected value that exhibits the highest coherence value with the detected value of the noise-cancellation effect detecting microphone 191, is determined. The identification number of the fan 20 that emits noise detected by this microphone is the air-sending fan information corresponding to the noise-cancellation effect detecting microphone 191. It is recommended to determine the air-sending fan information corresponding to the noise-cancellation effect detecting microphones 192 and 193 in the same manner.

The determination of air-sending fan information may be made, for example, as below. The coherence calculating means 137 as shown in Embodiment 81 are mounted on the air-sending fan control means 174 or the like of the indoor unit 100 in advance.

Then, during operation after shipping the product, the coherence values between the detected values of the noise detecting microphones 161 to 163 and the detected values of the noise-cancellation effect detecting microphones 191 to 193 are measured. Then, the identification number of the fan 20 close in distance to the noise detecting microphone having the highest coherence value for each of the noise-cancellation effect detecting microphones 191 to 193 is taken to be air-sending fan information.

The method of determining air-sending fan information is not limited to the method described above. Any method may be used as long as the fan that emits noise having the highest relevance to the sound detected by the noise-cancellation effect detecting microphones 191 to 193 can be identified.

The noise cancellation amount calculated by the noise cancellation amount calculating means 138 and the air-sending fan information stored in the memory 132 are input to the fan-individual-control rotation speed determining means 134C. The fan-individual-control rotation speed determining means 134C determines the rotation speed of each fan when performing fan individual control based on the information.

Specifically, the fan-individual-control rotation speed determining means 134C determines the rotation speeds of the fans so as to increase the rotation speed of the fan having a high relevance to the sound detected by the noise-cancellation effect detecting microphone with a large noise cancellation amount and decrease the rotation speed of the fan having a high relevance to the sound detected by the noise-cancellation effect detecting microphone with a small noise cancellation amount. It is desirable to determine the rotation speeds of the fans 20A to 20C so that the air volume obtained during fan individual control equals the air volume obtained during same rotation speed control.

For example, in the indoor unit 100 according to Embodiment 86, it is assumed that the fan that emits noise having the highest relevance to the sound detected by the noise-cancellation effect detecting microphone 191 is the fan 20A, the fan that emits noise having the highest relevance to the sound detected by the noise-cancellation effect detecting microphone 192 is the fan 20C, and the fan that emits noise having the highest relevance to the sound detected by the noise-cancellation effect detecting microphone 193 is the fan 20B.

Then, it is assumed that the noise cancellation amount in the noise-cancellation effect detecting microphone 191 is -5 dB, the noise cancellation amount in the noise-cancellation effect detecting microphone 192 is -5 dB, and the noise cancellation amount in the noise-cancellation effect detecting microphone 193 is -2 dB. In this case, the fan-individual-control rotation speed determining means 134C determines the rotation speed of each fan so as to increase the rotation speeds of the fans 20A and 20C and decrease the rotation speed of the fan 20B. Since the air volume and the rotation speed are in proportion to each other, in the case of the structure as in FIG. 203, for example, if the rotation speeds of the fan 20A and the fan 20C are increased by 10 %, the same air volume can be obtained by decreasing the rotation speed of the fan 20B by 20 %.

The above method of determining the rotation speeds of the fans 20A to 20C is only an example. For example, in the indoor unit 100 according to Embodiment 86, it is assumed that the fan that emits noise having the highest relevance to the sound detected by the noise-cancellation effect detecting microphone 191 is the fan 20A, the fan that emits noise having the highest relevance to the sound detected by the noise-cancellation effect detecting microphone 192 is the fan 20C, and the fan that emits noise having the highest relevance to the sound detected by the noise-cancellation effect detecting microphone 193 is the fan 20B.

Then, it is assumed that the noise cancellation amount in the noise-cancellation effect detecting microphone 191 is -5 dB, the noise cancellation amount in the noise-cancellation effect detecting microphone 192 is -3 dB, and the noise cancellation amount in the noise-cancellation effect detecting microphone 193 is -2 dB. In this case, the fan-individual-control rotation speed determining means 134C may determine the rotation speed of each fan so as to increase the rotation speed of the fan 20A, decrease the rotation speed of the fan 20B, and maintain the rotation speed of the fan 20C as it is.

That is, the fan-individual-control rotation speed determining means 134C may determine the rotation speed of each fan so as to increase the rotation speed of the fan 20A having a high relevance to the noise-cancellation effect detecting microphone 191 with the largest noise cancellation amount, decrease the rotation speed of the fan 20B having a high relevance to the noise-cancellation effect detecting microphone 193 with the smallest noise cancellation amount, and maintain the rotation speed of the fan 20C that is not either of them as it is.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

Here, as described above, in the case of the indoor unit 100 according to Embodiment 86, the amounts in the areas in the vicinity of the noise-cancellation effect detecting microphones 191 and 192 become large compared to the area in the vicinity of the noise-cancellation effect detecting microphone 193 depending on the size of the crosstalk noise component from the neighboring fan. On the other hand, the noise cancellation amount in the area in the vicinity of the noise-cancellation effect detecting microphone 193 becomes small.

Consequently, in the indoor unit 100 according to Embodiment 86 including the plurality of fans 20A to 20C, the rotation speeds of the fans 20A and 20C that emit noise having a high relevance to the noise-cancellation effect detecting microphones 191 and 192 with a large noise cancellation amount are increased, and the rotation speed of the fan 20B that emits noise having a high relevance to the noise-cancellation effect detecting microphone 193 with a small noise cancellation amount is decreased.

As a result, in the indoor unit 100 according to Embodiment 86, in the area where noise cancellation effects are large, the noise cancellation effects become larger and in the area where noise cancellation effects are small, noise becomes small, and therefore, noise emitted from the whole of the air outlet 3 can be reduced compared to an indoor unit that uses a single fan or an indoor unit that does not use fan individual control. Further, in the indoor unit 100 according to Embodiment 86, by individually controlling the rotation speeds of the plurality of fans 20A to 20C so that the air volume is constantly the same as that during same rotation speed control, it is possible to suppress deterioration of aerodynamic performance.

Furthermore, in the indoor unit 100 according to Embodiment 86 also, as in the indoor unit 100 shown in FIG. 191 and FIG. 192 of Embodiment 80, by dividing the air passage of the indoor unit 100 into a plurality of areas, it is possible to further improve the noise cancellation effects.

That is, by dividing the air passage of the indoor unit 100 into a plurality of areas using the partition plates 90 and 90a, it is possible to separate noise emitted from the fans 20A to 20C to each area. The noise cancellation mechanism A reduces only noise emitted from the fan 20A, the noise cancellation mechanism B reduces only noise emitted from the fan 20C, and the noise cancellation mechanism C reduces only noise emitted from the fan 20B. Because of this, crosstalk noise components (noise emitted from fans provided in adjacent flow passages) detected by the noise detecting microphones 161 to 163 and the noise-cancellation effect detecting microphones 191 to 193 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. Consequently, in the indoor unit 100 according to Embodiment 86 also, by dividing the air passage of the indoor unit 100 into a plurality of areas, it is possible to further reduce noise compared to the structure of FIG. 203.

On the other hand, when there is a fan that is not provided with the noise cancellation mechanism, by reducing the rotation speed of the fan 20, noise in the area where the noise cancellation mechanism is not provided becomes small and the same effects can be obtained. In FIG. 191 and FIG. 192, the partition plate is inserted into the entire area of the air passage, but, part of the air passage, for example, only the upstream side of the heat exchanger 50 or only the downstream side of the heat exchange 50, may be partitioned using the partition plate.

In Embodiment 86, the noise-cancellation effect detecting microphones 191 to 193 are disposed substantially on the extension lines of the rotation axes of the fans 20A to 20C, but, the installation positions of the noise-cancellation effect detecting microphones 191 to 193 may be anywhere on the downstream sides of the control speakers 181 to 183. Further, in Embodiment 86, each three noise detecting microphones, control speakers, noise-cancellation effect detecting microphones, and signal processors are disposed, but, the present invention is not limited to this.

In Embodiment 86, the air-sending fan control means 174 includes the CPU 131 within the controller 281, but may also include hardware, such as an LSI (large scale integration), an FPGA (field programmable gate array) or the like. Further, the structure of the air-sending fan control means 174 is also not limited to the structure shown in FIG. 204 and FIG. 205.

In Embodiment 86, the air-sending fan control means 174 is configured so as to increase the rotation speed of the fan that emits noise having a high relevance to the sound detected by the noise-cancellation effect detecting microphone with a large noise cancellation amount, and to decrease the rotation speed of the fan that emits noise having a high relevance to the sound detected by the noise-cancellation effect detecting microphone with a small noise cancellation amount, but, the air-sending fan control means 174 may be configured to perform either one of them.

In Embodiment 86, the noise cancellation amounts in the noise-cancellation effect detecting microphones 191 to 193 are used as parameters to control the rotation speeds of the fans, but, of course, others may also be used as parameters to control the rotation speeds of the fans. For example, it may also be possible to calculate the average values of sound pressure levels detected by the noise-cancellation effect detecting microphones 191 to 193, respectively, and to decrease the rotation speed of the fan that emits noise having a high relevance to the sound detected by the noise-cancellation effect detecting microphone with the largest average value of sound pressure levels.

Further, for example, it may also be possible to calculate the average values of sound pressure levels detected by the noise-cancellation effect detecting microphones 191 to 193, respectively, and to increase the rotation speed of the fan that emits noise having a high relevance to the sound detected by the noise-cancellation effect detecting microphone with the smallest average value of sound pressure levels. Of course, it may also be possible to perform both.

As parameters to control the rotation speeds of the fans, the coherence value between the noise detecting microphone 161 and the noise-cancellation effect detecting microphone 191, that between the noise detecting microphone 162 and the noise-cancellation effect detecting microphone 192, and that between the noise detecting microphone 163 and the noise-cancellation effect detecting microphone 193 may be used.

For example, it may also be possible to decrease the rotation speed of the fan that emits noise having a high relevance to the sound detected by the noise-cancellation effect detecting microphone with the smallest coherence value. Alternatively, for example, it may also be possible to increase the rotation speed of the fan that emits noise having a high relevance to the sound detected by the noise-cancellation effect detecting microphone with the largest coherence value. Of course, it may also be possible to perform both.

As above, in the indoor unit 100 according to Embodiment 86, the plurality of fans 20A to 20C are disposed and the controller 281 (more specifically, the air-sending fan control means 174) that individually controls the rotation speeds of the fans 20A to 20C is provided. The air-sending fan control means 174 perform rotation speed control so as to increase the rotation speed of the fan that emits noise having a high relevance to the sound detected by the noise-cancellation effect detecting microphone with a large noise cancellation amount from among the noise cancellation amounts in the noise-cancellation effect detecting microphones 191 to 193, and to decrease the rotation speed of the fan that emits noise having a high relevance to the sound detected by the noise-cancellation effect detecting microphone with a small noise cancellation amount.

Accordingly, by increasing the rotation speed in the area where the noise cancellation amount is large, noise cancellation effects become larger and by decreasing the rotation speed in the area where the noise cancellation amount is small, noise in the area becomes small. Accordingly, noise can be more reduced than an indoor unit that has a noise cancellation mechanism of the same structure and a single fan or an indoor unit that does not use fan individual control.

In the indoor unit 100 according to Embodiment 86, since the fan that emits noise having a high relevance to the sound detected by the noise-cancellation effect detecting microphone with a large noise cancellation amount is identified, it is possible to perform accurate rotation speed control also when the plurality of fans 20A to 20C emitting different sound pressure levels are used.

Further, since the air-sending fan control means 174 controls the rotation speeds of the fans 20A to 20C, respectively, so that the air volume emitted from the air outlet 3 when using fan individual control is the same as that when using same rotation speed control, it is possible to reduce noise without degrading the aerodynamic performance.

Furthermore, by dividing the air passage of the indoor unit 100 into a plurality of areas using the partition plates 90 and 90a, it is possible to separate each noise emitted from the fans 20A to 20C, in which the noise cancellation mechanism A reduces only noise emitted from the fan 20A, the noise cancellation mechanism B reduces only noise emitted from the fan 20C, and the noise cancellation mechanism C reduces only noise emitted from the fan 20B. Accordingly, crosstalk noise components due to noise emitted to adjacent areas in each area are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, since the phase of noise transferred in the indoor unit 100 becomes uniform and phase error during interference of control sound is reduced, larger noise reduction effects can be obtained compared to the structure of FIG. 203.

On the other hand, when there is an area not provided with the noise cancellation mechanism, by decreasing the rotation speed of the fan not provided with the noise cancellation mechanism, the noise in the area becomes small, and it is possible to similarly obtain noise cancellation effects.

## Embodiment 87

The fan individual control described in Embodiment 86 (fan individual control that uses information of the fan 20 having a high relevance to the noise-cancellation effect detecting microphone) can also be performed in an air-conditioning apparatus including a noise cancellation mechanism different from the noise cancellation mechanism according to Embodiment 86.

In the following, a case will be described where the indoor unit according to Embodiment 83 adopts the fan individual control described in Embodiment 86. The following description focuses on items in Embodiment 87 that are different from those in Embodiment 79 to Embodiment 86, and components that are the same as in Embodiment 79 to Embodiment 86 are given the same reference characters.

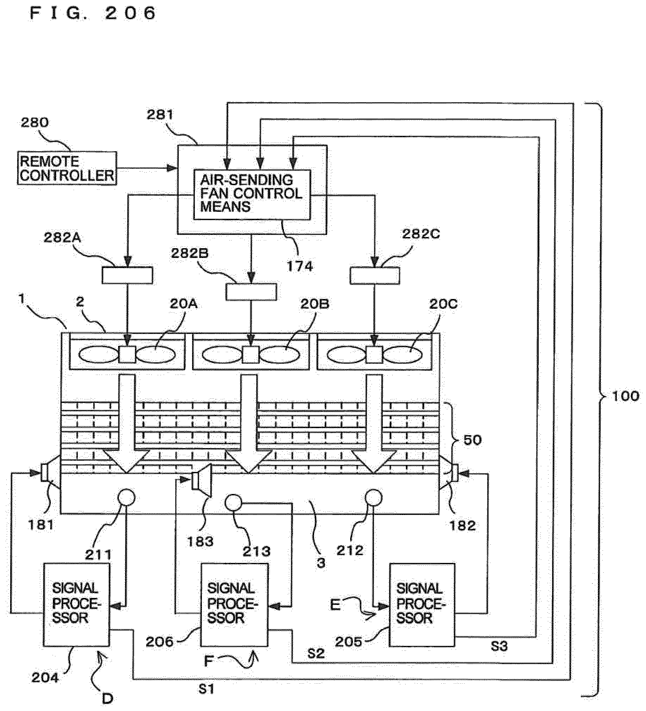

FIG. 206 is a front view showing an indoor unit according to Embodiment 87 of the present invention.

The indoor unit 100 according to Embodiment 87 differs from the indoor unit 100 of Embodiment 83 only in the structure of the air-sending fan control means 174. The structure of the air-sending fan control means 174 is quite the same as the structure shown in FIG. 204 of Embodiment 86.

Next, the operation of the indoor unit 100 will be described.

As in Embodiment 83, when the indoor unit 100 operates, the bladed wheels of the fans 20A to 20C rotate, the room air is sucked to the indoor side from the upper sides of the fans 20A to 20C, and the air is sent to the lower sides of the fans 20A to 20C, thereby generating an air flow. This causes operation sound (noise) in the vicinity of the air outlets of the fans 20A to 20C and the sound propagates to the downstream side.

The air sent by the fans 20A to 20C passes through the air passage and is sent to the heat exchanger 50. For example, during cooling operation, a cold refrigerant is transferred to the heat exchanger 50 through a pipe connected to the outdoor unit (not shown). The air sent to the heat exchanger 50 is cooled by the refrigerant flowing through the heat exchanger 50 and the cold air is directly discharged to the indoor side from the air outlet 3.

The operation of the noise cancellation mechanisms D to F is quite the same as in Embodiment 83, and the noise cancellation mechanisms operate to output control sound so that the noise detected by the noise detection/noise-cancellation effect detecting microphones 211 to 213 is brought close to zero, and as a result, to suppress the noise in the noise detection/noise-cancellation effect detecting microphones 211 to 213.

In the case of the indoor unit 100 according to Embodiment 87, to the noise detection/noise-cancellation effect detecting microphone 213, noise (crosstalk noise component) emitted from the neighboring fans 20A and 20C is also input in addition to the noise from the fan 20B. On the other hand, the crosstalk noise component detected by the noise detection/noise-cancellation effect detecting microphones 211 and 212 is reduced compared to the crosstalk noise component detected by the noise detection/noise-cancellation effect detecting microphone 213.

The reason is that only one fan (fan 20B) neighbors the noise detection/noise-cancellation effect detecting microphones 211 and 212. Accordingly, the noise cancellation effects of the noise cancellation mechanisms D and E become larger compared to the noise cancellation mechanism F.

The fan individual control of the fans 20A to 20C is almost the same as the contents described in Embodiment 86. The fan individual control of Embodiment 87 differs from the fan individual described in Embodiment 86 in that S1 to S3 input to the noise cancellation amount calculating means 138 are digital values of the sound pressure levels detected by the noise detection/noise-cancellation effect detecting microphones 211 to 213.

Further, the fan individual control of Embodiment 87 differs from the fan individual control described in Embodiment 86 in that the air-sending fan information stored in the memory 132 is the identification number of the fan 20 that emits noise having the highest relevance to the sound detected by the noise detection/noise-cancellation effect detecting microphones 211 to 213.

Accordingly, the fan-individual-control rotation speed determining means 134C of the air-sending fan control means 174 determines the rotation speeds of the fans so as to increase the rotation speed of the fan having a high relevance to the sound detected by the noise detection/noise-cancellation effect detecting microphone with a large noise cancellation amount and to decrease the rotation speed of the fan having a high relevance to the sound detected by the noise detection/noise-cancellation effect detecting microphone with a small noise cancellation amount, based on the noise cancellation amounts calculated by the noise cancellation amount calculating means 138 and the air-sending fan information stored in the memory 132. It is desirable to determine the rotation speeds of the fans 20A to 20C so that the air volume obtained during fan individual control equals the air volume obtained during same rotation speed control.

For example, in the indoor unit 100 according to Embodiment 87, it is assumed that the fan that emits noise having the highest relevance to the sound detected by the noise detection/noise-cancellation effect detecting microphone 211 is the fan 20A, the fan that emits noise having the highest relevance to the sound detected by the noise detection/noise-cancellation effect detecting microphone 212 is the fan 20C, and the fan that emits noise having the highest relevance to the sound detected by the noise detection/noise-cancellation effect detecting microphone 213 is the fan 20B.

Then, it is assumed that the noise cancellation amount in the noise detection/noise-cancellation effect detecting microphone 211 is -5 dB, the noise cancellation amount in the noise detection/noise-cancellation effect detecting microphone 212 is -5 dB, and the noise cancellation amount in the noise detection/noise-cancellation effect detecting microphone 213 is -2 dB. In this case, the fan-individual-control rotation speed determining means 134C determines the rotation speed of each fan so as to increase the rotation speeds of the fans 20A and 20C and decrease the rotation speed of the fan 20B.

Since the air volume and the rotation speed are in proportion to each other, for example, in the case of the structure as in FIG. 206, if the rotation speeds of the fan 20A and the fan 20B are increased by 10 %, the same air volumes can be obtained by decreasing the rotation speed of the fan 20B by 20 %.

The above method of determining the rotation speeds of the fans 20A to 20C is only an example. In the indoor unit 100 according to Embodiment 87, it is assumed that the fan that emits noise having the highest relevance to the sound detected by the noise detection/noise-cancellation effect detecting microphone 211 is the fan 20A, the fan that emits noise having the highest relevance to the sound detected by the noise detection/noise-cancellation effect detecting microphone 212 is the fan 20C, and the fan that emits noise having the highest relevance to the sound detected by the noise detection/noise-cancellation effect detecting microphone 213 is the fan 20B.

Then, it is assumed that the noise cancellation amount in the noise detection/noise-cancellation effect detecting microphone 211 is -5 dB, the noise cancellation amount in the noise detection/noise-cancellation effect detecting microphone 212 is -3 dB, and the noise cancellation amount in the noise detection/noise-cancellation effect detecting microphone 213 is -2 dB. In this case, the fan-individual-control rotation speed determining means 134C may determine the rotation speed of each fan so as to increase the rotation speed of the fan 20A, decrease the rotation speed of the fan 20B, and maintain the rotation speed of the fan 20C as it is.

That is, the fan-individual-control rotation speed determining means 134C may determine the rotation speed of each fan so as to increase the rotation speed of the fan 20A having a high relevance to the noise-cancellation effect detecting microphone 191 with the largest noise cancellation amount, decrease the rotation speed of the fan 20B having a high relevance to the noise-cancellation effect detecting microphone 193 with the smallest noise cancellation amount, and maintain the rotation speed of the fan 20C that is not either of them as it is.

When an operation information signal (for example, a signal for the low noise mode etc.) instructing fan individual control is input from the remote controller 280, switching from the rotation control signal for same rotation speed control to the rotation control signal for fan individual control is made by the switch 135 and this rotation control signal is output from the controller 281 to the fans 20A to 20C. The rotation control signal output from the controller 281 is input to the motor drivers 282A to 282C and the fans 20A to 20C are controlled so as to rotate at a rotation speed specified by the rotation control signal.

Here, as described above, in the case of the indoor unit 100 according to Embodiment 87, depending on the size of the crosstalk noise component from the neighboring fan, compared to the area in the vicinity of the noise detection/noise-cancellation effect detecting microphone 213, the noise cancellation amount in the areas in the vicinity of the noise detection/noise-cancellation effect detecting microphones 211 and 212 becomes large. On the other hand, in the area in the vicinity of the noise detection/noise-cancellation effect detecting microphone 213, the noise cancellation amount becomes small.

Because of this, in the indoor unit 100 according to Embodiment 87 including the plurality of fans 20A to 20C, the rotation speeds of the fans 20A and 20C that emit noise having a high relevance to the noise-cancellation effect detecting microphones 191 and 192 with a large noise cancellation amount are increased and the rotation speed of the fan 20B that emits noise having a high relevance to the noise-cancellation effect detecting microphone 193 with a small noise cancellation amount is decreased.

As a result, in the indoor unit 100 according to Embodiment 87, in the area where noise cancellation effects are large, the noise cancellation effects become larger and in the area where noise cancellation effects are small, noise becomes small, and therefore, compared to an indoor unit that uses a single fan or an indoor unit that does not use fan individual control, the noise emitted from the whole of the air outlet 3 can be reduced. Further, in the indoor unit 100 according to Embodiment 87, by individually controlling the rotation speeds of the plurality of fans 20A to 20C so that the air volume is constantly the same as that during same rotation speed control, it is possible to suppress deterioration of aerodynamic performance.

Furthermore, in the indoor unit 100 according to Embodiment 87 also, as in the indoor unit 100 shown in FIG. 200 and FIG. 201 of Embodiment 83, by dividing the air passage of the indoor unit 100 into a plurality of areas, it is possible to further improve noise cancellation effects.

That is, by dividing the air passage of the indoor unit using the partition plates 90 and 90a, it is possible to separate noise emitted from the fans 20A to 20C into each area. The noise cancellation mechanism D reduces only noise emitted from the fan 20A, the noise cancellation mechanism E reduces only noise emitted from the fan 20C, and the noise cancellation mechanism F reduces only noise emitted from the fan 20B. Because of this, crosstalk noise components (noise emitted from fans provided in adjacent flow passages) detected by the noise detection/noise-cancellation effect detecting microphones 211 to 213 are reduced.

In addition, since the structure of the air passage becomes similar to that of a duct, noise can be handled one-dimensionally. Accordingly, the phase of noise transferred in the indoor unit 100 becomes uniform and phase error during interference of control sound is reduced, thereby improving noise cancellation effects. Accordingly, in the indoor unit 100 according to Embodiment 87 also, by dividing the air passage of the indoor unit 100 into a plurality of areas, it is possible to further reduce noise compared to the structure of FIG. 206.

On the other hand, when there is a fan that is not provided with the noise cancellation mechanism, by decreasing the rotation speed of the fan 20, noise in the area is reduced in which the noise cancellation mechanism is not provided, and the same effects can be obtained. In FIG. 200 and FIG. 201, the partition plate is inserted into the entire area, but, part of the air passage, for example, only the upstream side of the heat exchanger 50 or only the downstream side of the heat exchanger 50, may be partitioned using the partition plate.

In Embodiment 87, the noise detection/noise-cancellation effect detecting microphones 211 to 213 are installed on the downstream sides of the control speakers 181 to 183, but, the noise detection/noise-cancellation effect detecting microphones 211 to 213 may be installed on the upstream sides of the control speakers 181 to 183. Further, in Embodiment 87, each three control speakers, noise detection/noise-cancellation effect detecting microphones, and signal processors are disposed, but, the present invention is not limited to this.

In Embodiment 87, the air-sending fan control means 174 includes the CPU 131 within the controller 281, but, may also include hardware, such as an LSI (large scale integration), an FPGA (field programmable gate array) or the like. Further, the structure of the air-sending fan control means 174 is also not limited to the structure shown in FIG. 204.

In Embodiment 87, the air-sending fan control means 174 is configured so as to increase the rotation speed of the fan that emits noise having a high relevance to the sound detected by the noise-cancellation effect detecting microphone with a large noise cancellation amount and to decrease the rotation speed of the fan that emits noise having a high relevance to the sound detected by the noise detection/noise-cancellation effect detecting microphone with a small noise cancellation amount, but, the air-sending fan control means 174 may be configured to perform either one of them.

In Embodiment 87, as the parameters to control the rotation speeds of the fans, the noise cancellation amounts in the noise detection/noise-cancellation effect detecting microphones 211 to 213 are used, but, of course, others may also be used as the parameters to control the rotation speeds of the fans. For example, it may also be possible to calculate average values of the sound pressure levels detected by the noise detection/noise-cancellation effect detecting microphones 211 to 213, respectively, and to decrease the rotation speed of the fan that emits noise having a high relevance to the sound detected by the noise detection/noise-cancellation effect detecting microphone with the largest average value of the sound pressure values.

Alternatively, for example, it may also be possible to calculate average values of the sound pressure levels detected by the noise detection/noise-cancellation effect detecting microphones 211 to 213, respectively, and to increase the rotation speed of the fan that emits noise having a high relevance to the sound detected by the noise detection/noise-cancellation effect detecting microphone with the smallest average value of the sound pressure levels. Of course, it may also be possible to perform both.

As above, in the indoor unit 100 according to Embodiment 87, the plurality of fans 20A to 20C are disposed and the controller 281 (more specifically, the air-sending fan control means 174) that individually controls the rotation speeds of the fans 20A to 20C is provided.

The air-sending fan control means 174 performs rotation speed control so as to increase the rotation speed of the fan that emits noise having a high relevance to the sound detected by the noise detection/noise-cancellation effect detecting microphone with a large noise cancellation amount from among the noise cancellation amounts in the noise detection/noise-cancellation effect detecting microphones 211 to 213, and to decrease the rotation speed of the fan that emits noise having a high relevance to the sound detected by the noise detection/noise-cancellation effect detecting microphone with a small noise cancellation amount.

Accordingly, in the area where the noise cancellation amount is large, noise cancellation effects become larger and in the area where the noise cancellation amount is small, noise becomes small. Accordingly, noise can be more reduced than an indoor unit that has a noise cancellation mechanism of the same structure and a single fan or an indoor unit that does not use fan individual control.

In the indoor unit 100 according to Embodiment 87, since the fan that emits noise having a high relevance to the sound detected by the noise detection/noise-cancellation effect detecting microphone with a large noise cancellation amount is identified, it is possible to perform accurate rotation speed control also when the plurality of fans 20A to 20C emitting different sound pressure levels are used.

Further, since the air-sending fan control means 174 controls the rotation speeds of the fans 20A to 20C, respectively, so that the air volume emitted from the air outlet 3 when fan individual control is used is the same as that when same rotation speed control is used, it is possible to reduce noise without degrading the aerodynamic performance.

Furthermore, by dividing the air passage of the indoor unit 100 into a plurality of areas by the partition plates 90 and 90a, it is possible to separate each noise emitted from the fans 20A to 20C, in which the noise cancellation mechanism D reduces only noise emitted from the fan 20A, the noise cancellation mechanism E reduces only noise emitted from the fan 20C, and the noise cancellation mechanism F reduces only noise emitted from the fan 20B. Accordingly, crosstalk noise components due to noise emitted to adjacent areas in each area are reduced.

In addition, since the structure of the air passage becomes similar to that of a duct by dividing the air passage of the indoor unit 100 into a plurality of areas using the partition plates 90 and 90a, noise can be handled one-dimensionally. Accordingly, since the phase of noise transferred in the indoor unit 100 becomes uniform and phase error during interference of control sound is reduced, larger noise reduction effects can be obtained compared to the structure of FIG. 206.

On the other hand, when there is an area not provided with the noise cancellation mechanism, by decreasing the rotation speed of the fan not provided with the noise cancellation mechanism, the noise in the area becomes small, and it is possible to similarly obtain noise cancellation effects.

Further, in Embodiment 87, since the noise detecting microphones 161 to 163 and the noise-cancellation effect detecting microphones 191 to 193 are combined integrally into the noise detection/noise-cancellation effect detecting microphones 211 to 213, the number of microphones can be reduced, the number of parts can be reduced, and the costs can be further reduced.

Embodiment 88

Air passage module coupling

Conventionally, when manufacturing air-conditioning apparatuses of different air conditioning capacities, by making each unit included in the air-conditioning apparatus differ in size from each other, the air conditioning capacity of the air-conditioning apparatus is adjusted. For example, in the case of the indoor unit 100 as indicated in each Embodiment described above, in accordance with a desired air conditioning capacity, the length in the width direction (the same direction as the width direction of the casing 1) of the heat exchanger 50 is adjusted.

Next, in order to mount the fans 20 in the number enough to secure a desired air-sending capacity in the casing 1, the number of the air inlets 2 and the length in the width direction are adjusted in the casing 1. Accordingly, when it is intended to provide a set of the indoor units 100 of different air conditioning capacities, it is necessary to manufacture units of various sizes to be included in the indoor unit 100 and in turn there is a case where the cost of the indoor unit 100 is raised.

In such a case, by manufacturing at least part of the units included in the indoor unit 100 in modules as below, the cost of the indoor unit 100 can be prevented from rising. Functions and structures in Embodiment 88 that are the same as in Embodiment 1 to Embodiment 87 are given the same reference characters in the following description.

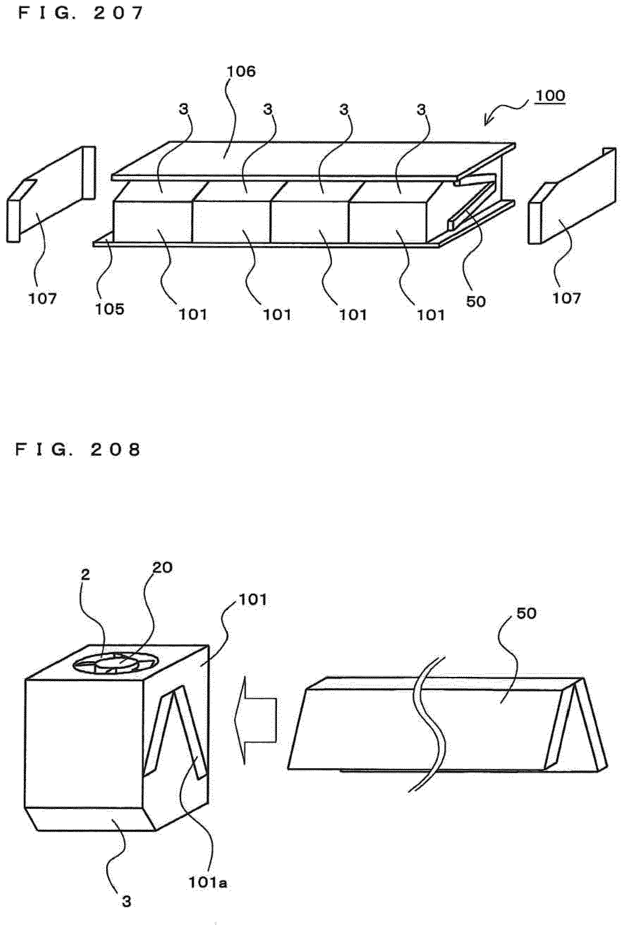

FIG. 207 is a perspective view showing an indoor unit according to Embodiment 88 of the present invention. FIG. 208 is a perspective view showing an air passage module of the indoor unit. FIG. 207 shows the indoor unit 100 on the way of assembling and the upper side of the figure corresponds to the front side of the indoor unit 100. In FIG. 208, the front side of the figure corresponds to the front side of the indoor unit 100.

The indoor unit 100 according to Embodiment 88 is structured by coupling a plurality of air passage modules 101 in the width direction of the indoor unit 100.

The air passage module 101 has substantially the shape of a hollow rectangular parallelepiped. In the top portion of the air passage module 101, the air inlet 2 is formed as an opening and in the bottom portion of the air passage module 101 (more specifically, at the lower side of the front part of the air passage module 101), the air outlet 3 is formed.

At the air inlet 2 of the air passage module 101, the fan 20 is provided. That is, within the air passage module 101, an air passage running from the air inlet 2 to the air outlet 3 is formed. In both the side parts (left side part and right side part) of the air passage module 101, an opening 101a into which the heat exchanger 50 is inserted is formed.

A plurality of the air passage modules 101 structured in this manner are coupled in the width direction of the indoor unit 100. When these air passage modules 101 are coupled, for example, as shown in FIG. 207, the air passage modules 101 are disposed transversely on one base member 105 and coupled. Then, when the heat exchanger 50 is inserted into the opening 101a of each of these air passage modules 101, the heat exchanger 50 is installed within the air passage of each of the air passage modules 101.

Within the air passage of each of the air passage modules 101, the heat exchanger 50 is provided in the position on the downstream side of the fan 20 and on the upstream side of the air outlet 3. That is, within the air passage of each of the air passage modules 101, the room air sucked to the inside of the air passage module 101 from the air inlet 2 by the fan 20 exchanges heat in the heat exchanger 50 disposed on the downstream side of the fan 20 and is blown off from the air outlet 3 as conditioned air.

These air passage modules 101 coupled in the width direction of the indoor unit 100 on the base member 105 are provided with one design panel 106 at the front part (the top portion of FIG. 207 showing the indoor unit 100 on the way of assembling) and are provided with side panels 107 at both side parts. With this, the indoor unit 100 is completed.

That is, in the state where the indoor unit 100 is attached to a wall surface, the base member 105 serves as a member to be attached to the wall surface, the design panel 106 serves as the front part of the indoor unit 100, and the side panel 107 serves as the side part of the indoor unit 100. In other words, in the indoor unit 100 according to Embodiment 88, the casing 1 as indicated in each Embodiment described above is formed by the base member 105, the design panel 106, the side panels 107, the top portion of the air passage module 101, and the bottom portion of the air passage module 101. The side part of the air passage module 101 functions as the partition plate 90 and the partition plate 90a.

Although not shown in FIG. 207 or FIG. 208, it is needless to say that parts necessary to structure the indoor unit 100 are provided, such as the up/down vane 70 and the left/right vane 80 to control the blow off direction of the air flow, circuits to drive each motor (for example, the fan motor 30 etc.) provided in the indoor unit 100, the refrigerant pile to connect the heat exchanger 50 and the outdoor unit, and the drain hose 117 to discharge the drain.

In the indoor unit 100 structured in this manner, by coupling the air passage modules 101 of the same structure in the width direction (width direction in front view) of the indoor unit, it is possible to manufacture the indoor units 100 of different air conditioning capacities in accordance with the number of the air passage modules 101. Accordingly, even when providing a set of the indoor units 100 of different air conditioning capacities (when constructing a line-up of the products of different air conditioning capacities), the number of parts to be manufactured can be reduced considerably and the cost of the indoor unit 100 can be reduced.

In the indoor unit 100 according to Embodiment 88, since the air passage is partitioned for each of the air passage modules 101, the interference of spiral flows between the neighboring fans 20 can be prevented as in the indoor unit 100 in which the air passage within the casing 1 is partitioned using the partition plates as described in Embodiment 1 etc.

In the indoor unit 100 according to Embodiment 88, by individually controlling the rotation speed (that is, air volume) of the fan 20 provided in each of the air passage modules 101, the air volume of the air flow blown off from the air outlet 3 can be controlled for each of the air passage modules 101. Accordingly, in the indoor unit 100 according to Embodiment 88, as in the indoor units 100 indicated in Embodiment 35 to Embodiment 38 and in the indoor units 100 indicated in Embodiment 59 to Embodiment 61, the air flow controllability is improved remarkably.

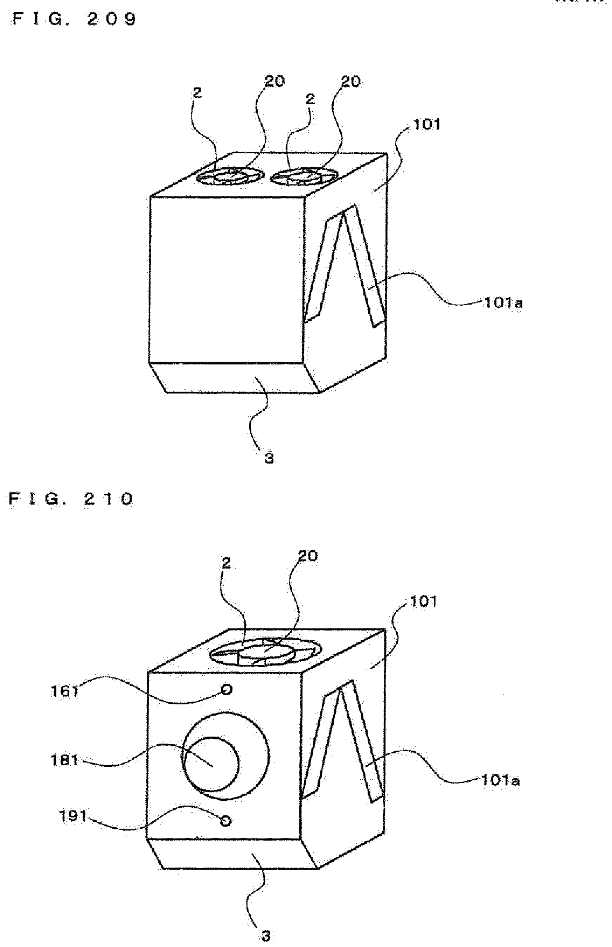

Although it is ideal to provide one fan 20 for one air passage module 101, it may also be possible, of course, to provide the plurality of fans 20 for one air passage module 101 as shown in FIG. 209. It is obvious that cost reduction effects and improvement of air flow controllability are not impaired even when the air passage module 101 is structured as in FIG. 209.

Embodiment 88 shows an example in which the heat exchanger 50, the base member 105, and the design panel 106 are not divided as modules. By not dividing the base member 105 as modules, the base member 105 elongated in the width direction (width direction in front view) of the indoor unit 100 can be provided and the strength of the indoor unit 100 after the assembly is increased.

When dividing the heat exchanger 50 as modules, it becomes necessary to connect the heat exchangers 50 by the refrigerant pipe when coupling each of the air passage modules 101, but, by integrally structuring the heat exchangers 50, it is no longer necessary to connect the heat exchangers 50 by the refrigerant pipe. Accordingly, by not dividing the heat exchanger 50 as modules, improvement of the ease of assembly and a reduction of connection parts are enabled. Further, by not dividing the design panel 106 as modules, the design property can be prevented from being lost at the connection part of the design panel 106.

However, of course, all the principal parts (units) included in the indoor unit 100, including these parts, may be divided into modules and arranged in combination. It is needless to say that even when all the principal parts (units) included in the indoor unit 100 are divided into modules and arranged in combination, the air conditioning capacity, which is the primary function of the indoor unit 100, is not impaired.

Embodiment 89

Even when at least part of the units included in the indoor unit 100 are divided into modules, by using the active noise cancellation mechanism, noise of the indoor unit 100 can be suppressed. Items in Embodiment 89 that are not particularly described are the same as in Embodiment 88, and functions and structures that are the same as in Embodiment 88 are given the same reference characters in the following description.

FIG. 210 is a perspective view showing an air passage module according to Embodiment 89 of the present invention.

The air passage module 101 according to Embodiment 89 is provided with a noise cancellation mechanism including the noise detecting microphone 161, the control speaker 181, and the noise-cancellation effect detecting microphone 191 in order to deaden noise in the air passage formed into substantially the shape of a duct within the air passage module 101. Further, the air passage (that is, the propagation path of noise) of the air passage module 101 according to Embodiment 89 has substantially the shape of a rectangle in top view. Then, the length of the shorter side is 17 cm (wavelength of a sound wave of about 2 kHz or less, which is harsh sound) or less.

The installation positions of the noise detecting microphone 161, the control speaker 181, and the noise-cancellation effect detecting microphone 191 are not limited to the positions of FIG. 210. The noise detecting microphone 161, the control speaker 181, and the noise-cancellation effect detecting microphone 191 may be installed in the positions as indicated in Embodiments described above, in accordance with desired effects. The process to manufacture the indoor unit 100 using the air passage module 101 according to Embodiment 89 is the same as that in Embodiment 88.

By structuring the air passage module 101 in this manner, plane wave conversion of the wavelength of a sound wave of about 2 kHz or less, which is harsh sound, is enabled within the air passage module 101 and noise cancellation effects of the noise cancellation mechanism can be improved.

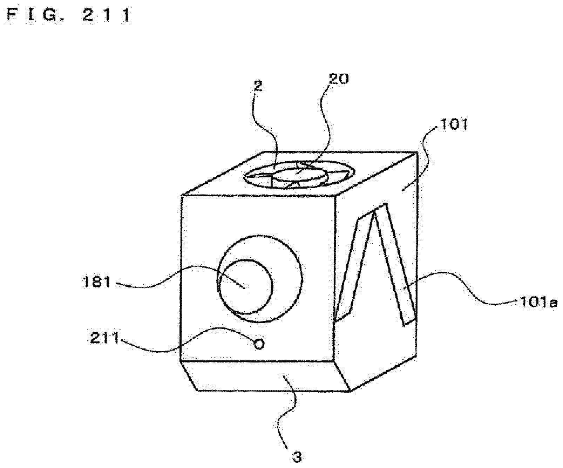

The active noise cancellation mechanism provided in the air passage module 101 is not limited to the noise cancellation mechanism including the noise detecting microphone 161, the control speaker 181, and the noise-cancellation effect detecting microphone 191. For example, as shown in FIG. 211, of course, the noise cancellation mechanism including the control speaker 181 and the noise detection/noise-cancellation effect detecting microphone 211 may also be provided in the air passage module 101. The installation positions of the control speaker 181 and the noise detection/noise-cancellation effect detecting microphone 211 may be set to the positions as indicated in Embodiments described above, in accordance with desired effects.

By structuring the air passage module 101 in this manner, since the noise cancellation mechanism becomes more inexpensive by an amount corresponding to the cost of the noise detecting microphone 161 that is no longer necessary, it is possible to obtain the air passage module 101 more inexpensive than the air passage module 101 shown in FIG. 210.

List of Reference Signs

| | |
|---|---|
| 1 | casing |
| 1a | slit |
| 1b | back part |
| 2 | air inlet |
| 3 | air outlet |
| 5 | bellmouth |
| 5a | top portion |
| 5b | middle portion |
| 5c | bottom portion |
| 5d | through hole |
| 6 | nozzle |
| 6a | back side curve |
| 6b | front side curve |
| 10 | filter |
| 15 | finger guard |
| 16 | motor stay |
| 17 | fixing member |

| 17a | through hole |
| 17b | fixing member |
| 18 | support member |
| 20 | fan |
| 20A | fan |
| ... | |
| 20F | fan |
| 20a | rotation shaft |
| 20b | fan |
| 21 | boss |
| 22 | annular member |
| 23 | blade (main blade) |
| 23a | projecting piece |
| 23b | annular member |
| 23c | projecting piece |
| 24 | sub-blade |
| 25 | bladed wheel |
| 26 | cabinet |
| 26a | upper cabinet |
| 26b | lower cabinet |
| 26c | rib |
| 27a | area |
| 27b | area |
| 30 | fan motor |
| 30a | circuit board |
| 31 | rotor |
| 32 | magnet |
| 33 | rotor core |
| 35 | supporting structure |
| 40 | stator |
| 50 | heat exchanger |
| 50a | symmetric line |
| 51 | front side heat exchanger |
| 51a | heat exchanger |
| 51b | heat exchanger |
| 51c | heat exchanger |
| 55 | back side heat exchanger |
| 55a | heat exchanger |
| 55b | heat exchanger |
| 55c | heat exchanger |
| 55d | heat exchanger |
| 56 | fin |
| 57 | heat transfer pipe |
| 58 | heat exchanger retaining fitting |
| 60 | branch unit |
| 61 | expansion device |
| 70 | up/down vane |
| 70a | up/down vane |
| 70b | up/down vane |
| 70c | up/down vane |
| 71 | auxiliary up/down vane |
| 71a | auxiliary up/down vane |
| ..... | |
| 71g | auxiliary up/down vane |
| 72 | linear actuator |
| 73 | motor |
| 74 | motor |
| 75 | arm |

| | |
|---|---|
| 80 | left/right vane |
| 80a | left/right vane |
| 80b | left/right vane |
| 80c | left/right vane |
| 81 | motor |
| 81a | motor |
| 81b | motor |
| 81c | motor |
| 82 | link bar |
| 82a | link bar |
| 82b | link bar |
| 82c | link bar |
| 90 | partition plate |
| 90a | partition plate |
| 91 | partition plate |
| 91a | upper edge |
| 92 | partition plate |
| 93 | sound absorbing material |
| 100 | indoor unit |
| 101 | air passage module |
| 101a | opening |
| 105 | base member |
| 106 | design panel |
| 107 | side panel |
| 110 | front side drain pan |
| 111 | discharge passage |
| 111a | ligulate part |
| 115 | back side drain pan |
| 116 | connection opening |
| 117 | drain hose |
| 118 | intermediate drain pan |
| 119 | discharge passage |
| 119a | ligulate part |
| 121 | multiplier |
| 122 | adder |
| 123 | delay element |
| 124 | multiplier |
| 130 | input section |
| 131 | CPU |
| 132 | memory |
| 133 | identical-rotation-speed determining means |
| 134 | fan-individual-control rotation speed determining means |
| 134A | fan-individual-control rotation speed determining means |
| 134B | fan-individual-control rotation speed determining means |
| 134C | fan-individual-control rotation speed determining means |
| 135 | switch |
| 136 | averaging means |
| 137 | coherence calculating means |
| 138 | noise cancellation amount calculating means |
| 139 | pre-control sound pressure level storage means |
| 140 | difference calculator |
| 151 | microphone amplifier |
| 152 | A/D converter |
| 153 | weighting means |
| 154 | D/A converter |
| 155 | amplifier |
| 158 | FIR filter |
| 159 | LMS algorithm |

| 160 | FIR filter |
|------|------------|
| 161 | noise detecting microphone |
| 162 | noise detecting microphone |
| 163 | noise detecting microphone |
| 171 | air-sending fan control means |
| 172 | air-sending fan control means |
| 173 | air-sending fan control means |
| 174 | air-sending fan control means |
| 181 | control speaker |
| 182 | control speaker |
| 183 | control speaker |
| 184 | box |
| 184a | back chamber |
| 191 | noise-cancellation effect detecting microphone |
| 192 | noise-cancellation effect detecting microphone |
| 193 | noise-cancellation effect detecting microphone |
| 201 | signal processor |
| ... | |
| . 208 | signal processor |
| 211 | noise detection/noise-cancellation effect detecting microphone |
| 212 | noise detection/noise-cancellation effect detecting microphone |
| 213 | noise detection/noise-cancellation effect detecting microphone |
| 250 | small wing |
| 251 | convex portion |
| 252 | recirculation flow |
| 253 | leak flow |
| 254 | convex portion |
| 255 | suction side guide |
| 256 | discharge side guide |
| 257 | insulating layer |
| 260 | sound absorbing material, |
| 270 | wall member |
| 280 | remote controller |
| 281 | controller |
| 282A | motor driver |
| 282B | motor driver |
| 282C | motor driver |
| 301 | boss (conventional) |
| 302 | annular member (conventional) |
| 303 | blade (conventional) |
| 305 | rotor (conventional) |
| 306 | casing 1 (conventional) |
| 309 | stator (conventional) |
| 401 | compressor |
| 402 | four-way valve |
| 403 | outdoor heat exchanger |
| 404 | expansion device |
| 405 | flow switching device |
| 405a | check valve |
| 405b | check valve |
| 405c | check valve |
| 405d | check valve |
| 406 | expansion device |
| 407 | four-way valve |
| 410 | infrared sensor |
| 411 | metal can |
| 412 | light distribution viewing angle |
| 413 | cabinet |

| 414 | motor |
|-----|-------|
| 415 | mounting part |
| 416 | housemaker |
| 417 | baby |
| 418 | window |

**Claims**

1. An indoor unit (100) of an air-conditioning apparatus, comprising:

   - a casing (1) having an air inlet (2) formed in a top portion thereof and an air outlet (3) formed at a bottom side of a front portion thereof;
   - a plurality of axial flow or diagonal flow fans (20) provided in parallel on a downstream side of the air inlet (2) in the casing (1); and
   - a heat exchanger (50) provided on a downstream side of the fans (20) in the casing (1) and on an upstream side of the air outlet (3) for exchanging heat between air blown out of the fans (20) and a refrigerant; **characterized by** further comprising:
   - a left/right vane provided in the air outlet (3) for controlling a left/right direction in which an air flow is blown; and
   - a controller controlling an air volume of each of the fans (20) individually.

2. The indoor unit (100) according to claim 1, wherein the air volumes generated by the fans (20) are such that an air volume at both ends of the air outlet (3) is greater than an air volume in the middle portion of the air outlet (3).

3. The indoor unit (100) according to claim 1, wherein the air volumes generated by the fans (20) are such that an air volume at both ends of the air outlet (3) is smaller than an air volume in the middle portion of the air outlet (3).

4. The indoor unit (100) according to claim 1, wherein the air volumes generated by the fans (20) are such that an air volume at one end of the air outlet (3) is smaller than an air volume at the other end of the air outlet (3).

5. The indoor unit (100) according to claim 1, wherein the fans (20) are arranged along a left/right direction of the casing (1), and wherein the air volumes of the fans (20) are individually controlled in accordance with the direction of the air flow bent by the left/right vane.

6. The indoor unit (100) according to claim 1, wherein the fans (20) are arranged along a left/right direction of the casing (1), wherein the apparatus further includes a sensor obtaining temperature information in a left/right direction of the room, and wherein the air volumes of the fans (20) are individually controlled based on the temperature information obtained by the sensor.

7. The indoor unit (100) according to claim 1, wherein the fans (20) are arranged along a left/right direction of the casing (1), wherein the left/right vane is divided into a plurality of left/right vanes so that each left/right vane divided is adapted to change a corresponding direction individually.

8. The indoor unit (100) according to claim 2, comprising:

   a noise cancellation mechanism at least including a control sound output device outputting control sound that is adapted to reduce noise emitted by the fans (20) and a noise cancellation effect detection device detecting the noise cancellation effect of the control sound;
   wherein the noise cancellation effect detection device is provided at both ends of the air outlet (3).

**9.** The indoor unit (100) according to any one of claims 1 to 8,
wherein each of the fans (20) can be operated at a different rotation speed.

**10.** The indoor unit (100) according to any one of claims 1 to 9,
wherein the fans (20) are individually operated in such a way that a product of a number of blades and a rotation speed of each fan (20) is 10 Hz or more different from another.

**11.** The indoor unit (100) according to any one of claims 1 to 10,
wherein adjacent fans (20) among the fans (20) are operated in such a way that a difference in air volume between each other is within 20 %.

**12.** The indoor unit (100) according to claim 11,
wherein the adjacent fans (20) are operated in such a way that the difference in air volume between each other is within 10 %.

**13.** The indoor unit (100) according to any one of claims 1 to 12,
wherein the plurality of fans (20) are configured to combine at least two types of fans (20) that are different in air-sending performance.

**14.** The indoor unit (100) according to any one of claims 1 to 13,
further comprising:

an up/down vane (70) provided in the air outlet (3) for controlling an up/down direction in which the air flow is blown, wherein the up/down vane (70) is divided into a plurality of up/down vanes in a horizontal direction and orientations of the divided up/down vanes are individually changeable.

**15.** An air-conditioning apparatus comprising the indoor unit (100) according to any one of claims 1 to 14.

**Patentansprüche**

**1.** Inneneinheit (100) eines Klimageräts, welches Folgendes umfasst:

- ein Gehäuse (1) mit einem in einem oberen Abschnitt desselben ausgestalteten Lufteinlass (2) und einem auf einer Unterseite eines vorderen Abschnitts desselben ausgestalteten Luftauslass (3);
- eine Vielzahl von Axial- oder Diagonalströmungslüftern (20), welche auf einer stromabwärtigen Seite des Lufteinlasses (2) im Gehäuse (1) parallel angeordnet sind; und
- einen Wärmetauscher (50), welcher auf einer stromabwärtigen Seite der Lüfter (20) im Gehäuse (1) und auf einer stromaufwärtigen Seite des Luftauslasses (3) angeordnet sind, um Wärme zwischen aus den Lüftern (20) ausgeblasener Luft und einem Kältemittel auszutauschen; **dadurch gekennzeichnet, dass** er darüber hinaus Folgendes umfasst:
- einen im Luftauslass (3) angeordneten linken/rechten Flügel zur Steuerung einer Links-/Rechtsrichtung, in welche ein Luftstrom geblasen wird; und
- eine Steuerung, welche das Luftvolumen jedes einzelnen Lüfters (20) individuell steuert.

**2.** Inneneinheit (100) gemäß Anspruch 1, wobei die von den Lüftern (20) erzeugten Luftvolumina sich so gestalten, dass ein Luftvolumen an beiden Enden des Luftauslasses (3) größer als ein Luftvolumen im mittleren Abschnitt des Luftauslasses (3) ist.

**3.** Inneneinheit (100) gemäß Anspruch 1, wobei die von den Lüftern (20) erzeugten Luftvolumina sich so gestalten, dass ein Luftvolumen an beiden Enden des Luftauslasses (3) kleiner ist als ein Luftvolumen im mittleren Abschnitt des Luftauslasses (3).

**4.** Inneneinheit (100) gemäß Anspruch 1, wobei die von den Lüftern (20) erzeugten Luftvolumina sich so gestalten, dass ein Luftvolumen an einem Ende des Luftauslasses (3) kleiner als ein Luftvolumen am anderen Ende des Luftauslasses (3) ist.

**5.** Inneneinheit (100) gemäß Anspruch 1, wobei die Lüfter (20) entlang einer Links-/Rechtsrichtung des Gehäuses (1) angeordnet sind, und wobei die Luftvolumina der Lüfter (20) individuell in Übereinstimmung mit der Richtung des vom linken/rechten Flügel gekrümmten Luftstroms gesteuert werden.

6.  Inneneinheit (100) gemäß Anspruch 1, wobei die Lüfter (20) entlang einer Links-/Rechtsrichtung des Gehäuses (1) angeordnet sind, wobei das Gerät darüber hinaus einen Sensor beinhaltet, welcher Temperaturdaten in einer Links-/Rechtsrichtung des Raums erhält, und wobei die Luftvolumina der Lüfter (20) basierend auf den vom Sensor erhaltenen Temperaturdaten individuell gesteuert werden.

7.  Inneneinheit (100) gemäß Anspruch 1, wobei die Lüfter (20) entlang einer Links-/Rechtsrichtung des Gehäuses (1) angeordnet sind, wobei der linke/rechte Flügel in eine Vielzahl von linken/rechten Flügeln unterteilt ist, so dass jeder unterteilte linke/rechte Flügel dazu geeignet ist, eine entsprechende Richtung individuell zu ändern.

8.  Inneneinheit (100) gemäß Anspruch 2, welche Folgendes umfasst: einen Rauschunterdrückungsmechanismus, welcher mindestens eine Kontrollton-Ausgabeeinheit beinhaltet, die einen zur Unterdrückung der von den Lüftern (20) emittierten Geräuschen geeigneten Kontrollton ausgibt, sowie ein Gerät zur Erfassung des Geräuschunterdrückungseffekts, welches den Geräuschunterdrückungseffekt des Kontrolltons erfasst; wobei das Gerät zur Erfassung des Geräuschunterdrückungseffekts an beiden Enden des Luftauslasses (3) angeordnet ist.

9.  Inneneinheit (100) gemäß einem der Ansprüche 1 bis 8, wobei jeder einzelne Lüfter (20) mit einer unterschiedlichen Rotationsgeschwindigkeit betrieben werden kann.

10. Inneneinheit (100) gemäß einem der Ansprüche 1 bis 9, wobei die Lüfter (20) einzeln so betrieben werden, dass sich ein Produkt aus einer Anzahl von Flügeln und eine Rotationsgeschwindigkeit jedes einzelnen Flügels (20) um 10 Hz oder mehr voneinander unterscheiden.

11. Inneneinheit (100) gemäß einem der Ansprüche von 1 bis 10, wobei unter den Lüftern (20) nebeneinander liegende Lüfter (20) so betrieben werden, dass sie untereinander eine innerhalb von 20% liegende Luftvolumendifferenz aufweisen.

12. Inneneinheit (100) gemäß Anspruch 11, wobei die nebeneinander liegenden Lüfter (20) so betrieben werden, dass sie untereinander eine Luftvolumendifferenz von 10% aufweisen.

13. Inneneinheit (100) gemäß einem der Ansprüche 1 bis 12, wobei die Vielzahl von Lüftern (20) dazu konfiguriert ist, dass sie mindestens zwei sich im Hinblick auf die Luftförderleistung unterscheidende Arten von Lüftern (20) in sich vereint.

14. Inneneinheit (100) gemäß einem der Ansprüche 1 bis 13, welche darüber hinaus Folgendes umfasst: einen Aufwärts-/Abwärts-Flügel (70), welcher zur Steuerung einer Aufwärts-/Abwärts-Richtung der Blasluft im Luftauslass (3) angeordnet ist,
    wobei der Aufwärts-/Abwärts-Flügel (70) in einer horizontalen Richtung in eine Vielzahl von Aufwärts-/Abwärts-Flügeln unterteilt ist, und Ausrichtungen der unterteilten Auswärts-/Abwärts-Flügel individuell gerändert werden kann.

15. Klimagerät, welches die Inneneinheit (100) gemäß einem der Ansprüche 1 bis 14 umfasst.


**Revendications**

1.  Unité d'intérieur (100) d'un appareil de conditionnement d'air, comprenant :

    - un boîtier (1) ayant une entrée d'air (2) formée dans une portion supérieure de celui-ci et une sortie d'air (3) formée au niveau d'un côté inférieur d'une portion avant de celui-ci ;
    - une pluralité de ventilateurs à flux axial ou à flux diagonal (20) prévus en parallèle sur un côté aval de l'entrée d'air (2) dans le boîtier (1) ; et
    - un échangeur de chaleur (50) prévu sur un côté aval du ventilateur (20) dans le boîtier (1) et sur un côté amont de la sortie d'air (3) pour échanger de la chaleur entre l'air soufflé hors des ventilateurs (20) et un réfrigérant ;

    **caractérisé en ce qu'**elle comprend en outre :

- une aube gauche/droite prévue dans la sortie d'air (3) pour commander une direction gauche/droite dans laquelle un flux d'air est soufflé ; et
- un contrôleur qui commande un volume d'air de chacun des ventilateurs (20) individuellement.

2. Unité d'intérieur (100) selon la revendication 1,
dans laquelle les volumes d'air générés par les ventilateurs (20) sont tels qu'un volume d'air aux deux extrémités de la sortie d'air (3) est plus élevé qu'un volume d'air dans la portion médiane de la sortie d'air (3).

3. Unité d'intérieur (100) selon la revendication 1,
dans laquelle les volumes d'air générés par les ventilateurs (20) sont tels qu'un volume d'air aux deux extrémités de la sortie d'air (3) est plus faible qu'un volume d'air dans la portion médiane de la sortie d'air (3).

4. Unité d'intérieur (100) selon la revendication 1,
dans laquelle les volumes d'air générés par les ventilateurs (20) sont tels qu'un volume d'air à une extrémité de la sortie d'air (3) est plus faible qu'un volume d'air à l'autre extrémité de la sortie d'air (3).

5. Unité d'intérieur (100) selon la revendication 1,
dans laquelle les ventilateurs (20) sont agencés le long d'une direction gauche/droite du boîtier (A), et
dans lequel les volumes d'air des ventilateurs (20) sont individuellement commandés en accord avec la direction du flux d'air dévié par l'aube gauche/droite.

6. Unité d'intérieur (100) selon la revendication 1,
dans laquelle les ventilateurs (20) sont agencés le long d'une direction gauche/droite du boîtier (1),
dans laquelle l'appareil inclut en outre un capteur obtenant une information de température dans une direction gauche/droite du local, et
dans laquelle les volumes d'air des ventilateurs (20) sont individuellement commandés sur la base de l'information de température obtenue par le capteur.

7. Unité d'intérieur (100) selon la revendication 1,
dans laquelle les ventilateurs (20) sont agencés le long d'une direction gauche/droite du boîtier (1),
dans laquelle l'aube gauche/droite est divisée en une pluralité d'aubes gauche/droite de sorte que chaque aube gauche/droite divisée est adaptée pour changer individuellement une direction correspondante.

8. Unité d'intérieur (100) selon la revendication 2, comprenant :

un mécanisme d'annulation de bruit incluant au moins un dispositif de sortie de son contrôlé qui sort un son contrôlé qui est adapté pour réduire le bruit émis par les ventilateurs (20), et un dispositif de détection d'effet d'annulation qui détecte l'effet d'annulation de bruit du son contrôlé ;
dans laquelle le dispositif de détection d'effet d'annulation de bruit est prévu aux deux extrémités de la sortie d'air (3).

9. Unité d'intérieur (100) selon l'une quelconque des revendications 1 à 8, dans laquelle chacun des ventilateurs (20) peut être amené à fonctionner à différentes vitesses de rotation.

10. Unité d'intérieur (100) selon l'une quelconque des revendications 1 à 9, dans laquelle les ventilateurs (20) sont amenés à fonctionner individuellement d'une manière telle qu'un produit d'un nombre d'aubes et d'une vitesse de rotation de chaque ventilateur (20) diffère d'un autre produit à raison de 10 Hz ou plus.

11. Unité d'intérieur (100) selon l'une quelconque des revendications 1 à 10, dans laquelle des ventilateurs adjacents (20) parmi les ventilateurs (20) sont amenés à fonctionner d'une manière telle qu'une différence de volume d'air entre les ventilateurs est dans une plage de 20 %.

12. Unité d'intérieur (100) selon la revendication 11,
dans laquelle les ventilateurs adjacents (20) sont amenés à fonctionner d'une manière telle que la différence de volume d'air entre les ventilateurs est dans une plage de 10 %.

13. Unité d'intérieur (100) selon l'une quelconque des revendications 1 à 12, dans laquelle la pluralité de ventilateurs (20) sont configurés pour combiner au moins deux types de ventilateurs (20) qui présentent des performances de propulsion d'air différentes.

14. Unité d'intérieur (100) selon l'une quelconque des revendications 1 à 13, comprenant en outre :

   une aube montante/descendante (70) prévue dans la sortie d'air (3) pour commander une direction montante/descendante dans laquelle le flux d'air est soufflé,
   dans laquelle l'aube montante/descendante (70) est divisée en une pluralité d'aubes montantes/descendantes dans une direction horizontale, et les orientations des aubes montantes/descendantes divisées peuvent être changées individuellement.

15. Appareil de conditionnement d'air comprenant l'unité d'intérieur (100) selon l'une quelconque des revendications 1 à 14.

F I G. 1

F I G. 2

F I G.  3

F I G. 4

F I G. 5

FIG. 6

EP 2 602 561 B1

F I G. 7

F I G. 8

FIG. 9

FIG. 10

FIG. 11

(a)

(b)

F I G. 1 2

F I G. 1 3

FIG. 14

FIG. 15

F I G. 1 6

F I G. 1 7

F I G. 1 8

F I G. 1 9

F I G. 2 0

(a)

(b)

F I G. 2 1

(a) <u>20</u>

(b)

F I G. 2 2

(a)

(b)

FIG. 23

(a)

(b)

FIG. 24

(a)

(b)

FIG. 25

(a)

301   303   302(305)   306

252

309

(b)

←

303

253

FIG. 26

20

21   23   31   22   26

25

254   40

FIG. 27

FIG. 28

F I G. 2 9

F I G. 3 0

F I G. 3 1

FIG. 32

$$A = \ell \times \pi b$$

FIG. 33

F I G. 3 4

F I G. 3 5

EP 2 602 561 B1

FIG. 36

(a)

(b)

(c)

(d)

161

FIG. 37

FIG. 38

FIG. 39

FIG. 40

FIG. 41

F I G. 4 2

F I G. 4 3

FIG. 44

FIG. 45

FIG. 46

FIG. 47

FIG. 48

F I G. 4 9

FIG. 50

FIG. 51

FIG. 52

FIG. 53

FIG. 54

FIG. 55

FIG. 56

FIG. 57

FIG. 58

FIG. 59

FIG. 60

F I G. 6 1

F I G. 6 2

F I G. 6 3

F I G. 6 4

FIG. 65

FIG. 66

EP 2 602 561 B1

FIG. 67

100

20B

20C

20A

1

55
51 } 50

80

3

FIG. 68

100

27a

27b

1

20A

20B

20C

50

178

F I G.  6 9

F I G.  7 0

FIG. 71

FIG. 72

FIG. 73

FIG. 74

(a)                    (b)

FIG. 75

FIG. 76

F I G. 7 7

F I G. 7 8

EP 2 602 561 B1

F I G. 7 9

F I G. 8 0

LATERAL-SURFACE NOISE CANCELLATION MECHANISM

NO WIDTHWISE-DIRECTION AIRFLOW AMOUNT CONTROL

NO NOISE CANCELLATION MECHANISM

−1dB

−2dB

−3dB

−4dB

−5dB

NOISE REDUCTION VOLUME (dB)

NOISE CANCELLATION EFFECTS PER FLOW CHANNEL

AIRFLOW REDUCTION RATIO OF CENTER FAN (%)

F I G. 8 1

F I G. 8 2

F I G. 8 3

FIG. 84

FIG. 85

F I G. 8 6

F I G. 8 7

F I G.  8 8

F I G.  8 9

FIG. 90

F I G. 9 1

FIG. 92

(a)　　　　　　　(b)　　　　　　　(c)　　　　　　　(d)

F I G. 9 3

FIG. 94

F I G. 9 5

FIG. 96

FIG. 97

FIG. 98

F I G. 9 9

FIG. 100

FIG. 101

FIG. 102

FIG. 103

FIG. 104

FIG. 105

FIG. 106

F I G. 1 0 7

F I G. 1 0 8

F I G . 1 0 9

SIGNAL PROCESSOR

FIG. 110

FIG. 111

EP 2 602 561 B1

F I G .  1 1 2

207

FIG. 113

FIG. 114

F I G. 1 1 5

1800mm

7°

37.5°

100

3600mm

F I G. 1 1 6

[THERMAL IMAGERY
COMPUTATION RESULTS]

417

418

416

26~30°C

21~25°C

16~20°C

10~15°C

FIG. 117

FIG. 118

FIG. 119

FIG. 120

F I G. 1 2 1

FIG. 122

FIG. 123

FIG. 124

FIG. 125

FIG. 126

FIG. 127

FIG. 128

FIG. 129

FIG. 130

F I G. 1 3 1

F I G. 1 3 2

FIG. 133

FIG. 134

F I G. 1 3 5

FIG. 136

FIG. 137

FIG. 138

FIG. 139

FIG. 140

F I G. 1 4 1

F I G. 1 4 2

FIG. 143

FIG. 144

FIG. 145

FIG. 146

FIG. 147

FIG. 148

FIG. 149

FIG. 150

F I G. 1 5 1

FIG. 152

(a)

(b) Y-Y

(c) X-X

F I G. 1 5 3

F I G. 1 5 4

(a)

W—W

(b)

FIG. 155

W-W

115

L2    L2    L2

1    6    110

FIG. 156

115

L5    L6

1    6    110

FIG. 157

FIG. 158

FIG. 159

FIG. 160

FIG. 161

FIG. 162

FIG. 163

FIG. 164

FIG. 165

(a)

(b)

FIG. 166

SIGNAL PROCESSOR

FIG. 167

FIG. 168

FIG. 169

FIG. 170

NOISE DETECTING MICROPHONE — 161

MICROPHONE AMPLIFIER — 151

207

A/D CONVERTER — 152

FIR FILTER — 158

D/A CONVERTER — 154

AMPLIFIER — 155

CONTROL SPEAKER — 181

LMS ALGORITHM — 159

WEIGHTING MEANS — 153

A/D CONVERTER — 152

MICROPHONE AMPLIFIER — 151

NOISE-CANCELLATION EFFECT DETECTING MICROPHONE — 191

EP 2 602 561 B1

243

FIG. 171

CYLINDER AREA S

17

20

FIG. 172

153

122    124

121

D

123

F I G .  1 7 3

F I G .  1 7 4

FIG. 175

FIG. 176

FIG. 177

FIG. 178

EP 2 602 561 B1

FIG. 179

FIG. 180

FIG. 181

FIG. 182

F I G .  1 8 3

F I G. 1 8 4

F I G. 1 8 5

FIG. 186

FIG. 187

F I G .   1 8 8

FIG. 189

F I G. 1 9 0

FIG. 191

FIG. 192

FIG. 193

FIG. 194

F I G. 1 9 5

FIG. 196

F I G.  1 9 7

FIG. 198

F I G. 1 9 9

FIG. 200

F I G.  2 0 1

FIG. 202

F I G. 2 0 3

FIG. 204

F I G. 2 0 5

FIG. 206

F I G. 2 0 7

F I G. 2 0 8

FIG. 209

FIG. 210

FIG. 211

**EP 2 602 561 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005003244 A